(19) Europäisches Patentamt
European Patent Office
Office européen des brevets

(11) EP 0 701 717 B1

(12) EUROPEAN PATENT SPECIFICATION

(45) Date of publication and mention of the grant of the patent:
**05.04.2000 Bulletin 2000/14**

(21) Application number: **93909697.0**

(22) Date of filing: **28.05.1993**

(51) Int. Cl.$^7$: **G06F 17/60**

(86) International application number:
**PCT/AU93/00250**

(87) International publication number:
**WO 94/28496 (08.12.1994 Gazette 1994/27)**

# (54) METHODS AND APPARATUS RELATING TO THE FORMULATION AND TRADING OF RISK MANAGEMENT CONTRACTS

VERFAHREN UND APPARAT FÜR DAS FORMULIEREN UND VERHANDELN VON VERTRÄGEN ÜBER RISIKOVERWALTUNG

PROCEDE ET APPAREIL DESTINES A L'ETABLISSEMENT ET A LA NEGOCIATION DES CONTRATS DE GESTION DE RISQUES

(84) Designated Contracting States:
**AT BE CH DE DK ES FR GR IE IT LI LU MC NL PT SE**

(43) Date of publication of application:
**20.03.1996 Bulletin 1996/12**

(73) Proprietor:
**SWYCHCO INFRASTRUCTURE SERVICES PTY LTD**
**Melbourne, Victoria (AU)**

(72) Inventor: **Shepherd, Kenneth**
**Toorak, Victoria (AU)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 434 224**
**WO-A-90/11571**
**WO-A-91/14231**
**US-A- 4 831 526**
**US-A- 4 903 201**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 701 717 B1

## Description

The present application is concerned with an apparatus for enabling parties to enter contracts related to future events having a number of possible quantifiable outcomes.

It is often desirable to be able to insure against future unpredictable outcomes. For example, a manufacturer of integrated circuits may wish to insure himself against batches of circuits failing to perform up to specified quality control criteria. If the integrated circuits are not of a sufficient standard, the manufacturer may require additional manufacturing capability to insure that an order is fulfilled. In these circumstances, a manufacturer may wish to ensure that such extra capacity is available in the event that a certain number of integrated circuits fail their specified criteria.

A further example of an event which an individual may wish to insure himself against is the fluctuations in the price of a share. It is possible to obtain a degree of insurance against the change of a share price by obtaining a futures contract to buy or sell a share at a certain price at a later date.

However, the available systems for dealing with unknown future outcomes are currently limited in their application. Where systems do exist, such as in the financial markets, it is only possible to obtain insurance for a wide variety of outcomes by entering into a large number of separate contracts for each of the individual outcomes.

The present invention provides a system which is suitable for processing data related to a wide variety of circumstances to facilitate parties to generate data related to contracts without undue technical overhead.

The present invention provides a computer system which defines the structure of interfaces which make this possible.

The present invention also provides a computer system which enables parties to enter a contract related to a future event having a number of different possible quantifiable outcomes in which the amount of network traffic may be reduced and hence the required computer overhead may also be reduced.

According to one aspect of the present invention there is provided a computer apparatus for enabling parties to enter contracts related to future events having a number of possible quantifiable outcomes, comprising data processing means, data storage means and data input and output means said data storage means having stored therein:

means defining an event definition interface for enabling a user to enter into said storage means through said data input means event data defining a future event having a number of possible quantifiable outcomes, said future event being determinable by the user thereby enabling the user to set the apparatus into a condition for processing data related to any future event of the user's choice;

means defining a first user input interface for enabling a first party to a potential contract to select, through said data input means, first input data comprising first data defining a plurality of different possible quantified outcomes of an event defined by said event data and a plurality of first numerical quantities associated respectively with said possible quantified outcomes defined by said first data;

means defining a second user input interface for enabling a second party to a potential contract to select, using said data input means, second input data comprising second data defining a plurality of different possible quantified outcomes of the event defined by said event data and a plurality of second numerical quantities associated respectively with said possible quantified outcomes defined by said second data, each of said second numerical quantity being related to an estimate, determinable by said second party, of the likelihood of the corresponding outcome occurring; and

means to process said first and second numerical quantities for generating output data relating to said potential contract.

According to a further aspect of the present invention there is provided a communication apparatus for enabling first and second parties to enter a contract related to a future event having a number of possible quantifiable outcomes, comprising:

a first terminal comprising data processing means, data storage means and data input and output means, said data storage means having stored therein means defining a first user input interface for enabling a first party to a potential contract to select, through said data input means, first input data comprising first data defining a plurality of possible quantified outcomes of an event and a plurality of first numerical quantities associated respectively with said possible quantified outcomes defined by said first data;

a second computer terminal comprising data processing means, data storage means and data input and output means, said data storage means having stored therein means defining a second user input interface for enabling a second party to a potential contract to select, using said data input means, second input data comprising second data defining a plurality of possible quantified outcomes of the event to which said first input data relates and a plurality of second numerical quantities associated respectively with said possible quantified outcomes defined by said second data, each of said second numerical quantity being related to an estimate, determinable by said second party, of the likelihood of the corresponding outcome occurring; and

means to process said first and second numerical quantities to derive a numerical value therefrom and, dependent upon said numerical value, to produce a command for generating output data relating to a potential contract.

BRIEF DESCRIPTION OF THE DRAWINGS AND APPENDICES

A number of embodiments of the invention will now be described with reference to the accompanying drawings, in which:

Fig. 1 shows a block diagram of a generic 'system' embodying the invention;
Fig. 2 shows a block diagram of an indicative hardware platform supporting the system of Fig. 1;
Fig. 3 shows a representation of INVENTCO and its main component parts;
Fig. 4 shows a block diagram of a subset of the components of an INVENTCO system's markets-depository (M-INVENTCO);
Fig. 5 shows a block diagram of the process components of a subset of one type of 'market' (termed CONTRACT APP) which can reside within M-INVENTCO;
Fig. 6 shows a timeline applicable to Example I;
Fig. 7 shows a timeline applicable to Example II;
Figs. 8 to 16 show flow diagrams of the contract pricing and matching methodology;
Fig. 17 shows a timeline applicable to Example III; and
Figs. 18 to 40 show flow diagrams of the first to ninth process components for a CONTRACT APP.

There are a number of 'appendices' supporting the described embodiments all of which form an integral part of this specification. The appendices are:

Appendix A is a glossary of non-conventional terms;
Appendix B is a detailed description of CONTRACT APPS, and the stakeholders thereto;
Appendix C is a detailed description of each of the nine processes of a CONTRACT APP;
Appendix D is a detailed description of the nature of risk management contracts;
Appendix E has tables and charts associated with Example I;
Appendix F has tables and charts associated with Example II;
Appendix G has tables and charts associated with Example III; and
Appendix H Is a listing of the main variables and data files used by process 2 of a CONTRACT APP.

DETAILED DESCRIPTION OF A BEST MODE FOR CARRYING OUT THE INVENTION

1. Introduction

The description firstly discusses the relation of the various users (stakeholders) of the 'system', followed by a consideration of a hardware data processing platform and peripheral input/output devices by which stakeholders interact with each other and the system.
This is followed by a discussion of the scope of the 'applications' that can be supported by the system in relation to the various stakeholders, and the interrelation of component parts thereof.
Details as to software methodologies for implementation of the applications supported by the system are also described, including a number of worked examples relating to the formulation and trading of risk management contracts.
In the course of the detailed description reference is made to a number of non-conventional expressions and terminologies. For convenience, an explanation of these is listed in Appendix A.

2. 'Systems' Configurations

Fig. 1 shows a block diagram of a generic 'system' embodying the invention. The various stakeholders or parties to the system 10 each have access to a centralised processing unit 20. The processing units 20 can be constituted by one or more data processing apparatus, with each one thereof providing access for any one or more of the various stakeholders to applications software supported by the system 10, as all the processing units would be interconnected. Access to the one or more data processing apparatus is controlled by a generic form of communications co-ordination and security processing unit 25.
Fig. 1 also indicates that there are a number of types of stakeholder, and a number of individual stakeholders within each stakeholder type. The basic types of stakeholder are described as: applications promoters 11, product sponsors 12, product ordering parties (buyers) 13, potential product counter-parties (sellers) 14, counter-party guarantors 15, regulators 16, consideration/entitlement transfer ('accounting') entities 17, and miscellaneous parties 18. The detailed roles of each of these stakeholders will be subsequently described in greater detail at a later time. The number of types of stakeholder represented In Fig. 1 is typically the largest that will be supported by the system 10.

An embodiment of a computer system for the system 10 is shown in Fig. 2. The core of the system hardware is a collection of data processing units. In the embodiment described, the processing unit 20 comprises three inter-linked data processors 93,97,104, such as the Sun 670 MP manufactured by Sun Microsystems, Inc. of the USA. Each processing unit 93,97,104 runs operational system software, such as Sun Microsystems OS 4.1.2, as well as applications software. The applications software is, in part, written around the flow diagrams subsequently described in Figs. 8 to 16, and Figs. 18 to 40, and accesses, or otherwise creates, the data files as summarised in Appendix H. The processor configuration shown in Fig. 1 represents a large system designed to handle the transactions of thousands of stakeholders, the input and output data generated by those stakeholders, and risk management contract pricing, matching and subsequent processing functions.

Each processing unit 93,97,104 is operably connected with it one or more mass data storage units 95,100,110 to store all data received from stakeholders, and other data relating to all other software operations generating or retrieving stored information. Suitable mass storage units are, for example, such as those commercially available from Sun Microsystems.

A number of communications controllers 80,84,87, forming the communications co-ordination and security processing unit 25, are coupled with the processing unit 20. These controllers effect communications between the processing units 93,97,104 and the various external hardware devices used by the stakeholders to communicate data or instructions to or from the processing units. The communications controllers are such as the Encore ANNEX II, the IBM AS/400 server or the CISCO Systems AGS +.

A large range of communications hardware products are supported, and collectively are referred to as the stakeholder input/output devices 70. One amongst many of the communication devices 70 are personal computers 51 and associated printers 52, which have communications connection with the communications controller 80 by means of a modem 50. There can also be an external host device 53, such as a mini or mainframe computer, again linked with the communications controller 80 by means of a modem 54. In other forms, communications can be established simply by means of a tone dialing telephone 56, which provides for the input of instructions or data by use of the tone dialing facility itself. In the alternative, a voice connection via an operator 75 can be effected by a conventional telephone 58. Both these external devices are shown connected with the communications controller 84. A further possibility is to have data transfer by means of a facsimile machine 65, in this case shown linked to the communications controller 87.

In all cases, users of the input devices are likely to be required to make use of system access password generation and encryption devices such as the Racal RG 500 Watchword Generator 66,67,68,69, (for personal use) and the Racal RG 1000, which is incorporated in a mainframe computer 53. The corresponding decoding units for these devices are incorporated in the communications controllers 80,84,87.

The generic processing unit 20 also includes a large number of 'portable' information recordal devices, such as printers, disc drives, and the like, which allow various forms of information to be printed or otherwise written to storage media to be transferable. This is particularly appropriate where confirmatory documentation of matched risk contracts is required to be produced, either for safekeeping as a hard copy record, else to be forwarded to any one or more of the stakeholders that are a party to each individual matched contract.

The generic system 10 shown in Fig. 1 encompasses many varied configurations, relating not only to the number and types of stakeholders, but also the 'architectures' realisable by the system hardware and software in combination. In that sense the arrangement shown in Fig. 2 is to be considered only as broadly indicative of one type of hardware configuration that may be required to put the invention into effect.

The 'virtual' level of the system 10 is termed INVENTCO. INVENTCO is a collection of one or more potentially interrelated systems, as shown in Fig. 3. Each INVENTCO system (INVENTCO SYSTEM #1 . . . INVENTCO SYSTEM #N) enables the formulation and trading of a wide range of contractual obligations, including risk management contracts. The hardware configuration shown in Fig. 2, is to be understood both as a realisation for a single INVENTCO system, and equally can represent a number of INVENTCO SYSTEMS, where the processing unit 20 is common to all and supports a number of communications co-ordination and security units 25, others of which are not shown, together with associated external communications devices 70, also not shown.

While INVENTCO allows the formulation and trading of risk management contracts, it is also responsible for processing of such contracts through to, and including, their maturity, and in some respects, subsequent to maturity.

Where there are a number of INVENTCO systems, those systems may be inter-dependent or stand-alone in nature. If inter-dependent, INVENTCO (10) is responsible for transactions between those systems.

INVENTCO and all of its component parts can be legally or geographically domiciled in separate countries or states. The supra-national nature of INVENTCO enables the stakeholders to avail themselves of the risk management mechanisms independently of legal domicile or other such restrictions that are often a feature of some conventional risk management mechanisms, subject to meeting certain criteria regarding credit worthiness and such. Indeed, the legal domicile, location, ownership and participating stakeholders of INVENTCO, or any of the sub-systems, can be continually changing.

Fig. 3 further shows that each INVENTCO SYSTEM comprises an infrastructure component, termed I-INVENTCO, and a markets depository component M-INVENTCO. I-INVENTCO is concerned with coordination of communications and other security considerations, that part termed AXSCO, and also provides a network and general management system, termed VIRPRO. M-INVENTCO is a depository of authorised product-market (applications) software residing within INVENTCO under the authorisation of VIRPRO, and as distributed using I-INVENTCO.

One or more local or wide area telecommunication networks may link VIRPRO and M-INVENTCO to AXSCO, and thus to each other. In this way both VIRPRO and M-INVENTCO effectively reside around AXSCO.

AXSCO therefore comprises multiple, uniquely addressed communications controllers linked together In a number of possible ways. In one embodiment, AXSCO is represented by the communications co-ordination and security processing unit 25 shown in Fig. 2. The component hardware, such as the three controllers 80,84,87 shown in Fig. 2, typically are responsible for three types of operational applications. The first Is In respect of time stamping data received from other parts of INVENTCO and data similarly transmitted to entitles external of INVENTCO. The second is in respect of protecting the identity and/or location of entitles within INVENTCO from one another, and from entitles external to INVENTCO. The third is responsible for overall management of the routing of data received and to be transmitted within INVENTCO and to external entitles thereto.

Referring now to Fig. 4, within M-INVENTCO reside different collections of system sponsored phenomena or 'markets', one collection of which is termed CONTRACT APPS. Each CONTRACT APP within the CONTRACT APPS 'markets' collection is essentially related to a specific type of risk management phenomenon. The purpose of individual CONTRACT APPS is two-fold. First, to effect the trading/exchange/transfer of risk management contracts (and derivatives of these transactions) between participating product ordering parties and counter-parties on terms acceptable to the parties involved, as well as to others within INVENTCO registered as having a legitimate interest in the nature, size and composition of these trades/exchanges/transfers. And second, to appropriately manage all matched/confirmed contracts through to their time of maturity.

Individual CONTRACT APPS are responsible for performing the above-described tasks according to the specific rules they embody, defined by their applicable stakeholders.

The role played by the various stakeholders to CONTRACT APPS, remembering that in many cases it would not be necessary to have the involvement of all the possible types of stakeholder, briefly stated is as follows:

(a) An application promoter is an entity having overall responsibility for the functioning of a CONTRACT APP, having being granted that responsibility by VIRPRO.

(b) A product sponsor is an entity which promotes and administers the rules of trading, and subsequent management of defined "products" selected for inclusion in a CONTRACT APP by its application promoter.

(c) An ordering party (buyer) is an entity seeking to acquire a CONTRACT APP product from a potential counter-party (seller).

(d) A counter-party (seller) Is an entity potentially prepared to satisfy the CONTRACT APP product needs of an ordering party (buyer).

(e) A guarantor is an entity guaranteeing a seller's ability to settle or meet obligations as a result of a CONTRACT APP effected match.

(f) Regulators are entitles overseeing the on-going performance of all other stakeholders involved in a CONTRACT APP, and especially guarantors.

(g) Consideration/entitlement transfer ('accounting') entities are those parties with which all other CONTRACT APP stakeholders maintain 'accounts' to transfer required considerations/entitlements to or from each other.

(h) Other miscellaneous parties are those having some other defined stake in the functioning of a CONTRACT APP.

In any implementation of the system, multiple numbers of each form of stakeholder are accommodated. A detailed consideration of the nature of CONTRACT APPS and the types of stakeholders to a CONTRACT APP is given in Appendix B.

As shown in Fig. 5, any one CONTRACT APP consists of a cluster of nine (and potentially more, or fewer) specific processes, these include:

(a) a process handling file administration and updating tasks supporting all other processes (termed Process 1);

(b) a process handling the receipt and processing of "primary" risk aversion contract transactions (termed Process 2);

(c) a process handling the receipt and processing of "secondary" risk aversion contract transactions (termed Process 3);

(d) a process handling the receipt and processing of "derivative-primary" risk aversion contract transactions (termed Process 4);

(e) a process handling the receipt and processing of "derivative-secondary" risk aversion contract transactions (termed Process 5);

(f) a process handling the "back office" management of all four types of risk aversion contract transactions, and transactions handled by Processes 7 to 9 (termed Process 6);

(g) a process handling non-CONTRACT APP-transaction related consideration, entitlement, and other "payment" obligation transfers between stakeholders (termed Process 7);

(h) a process handling CONTRACT APP (and authorised other INVENTCO) stakeholder access to specialist systems to assist the stakeholder concerned to decide how best to interface with a defined element of INVENTCO (termed Process 8); and

(i) a process handling CONTRACT APP (and authorised other INVENTCO) stakeholder access to a range of INVENTCO-facilitated "value added services" (termed Process 9).

A detailed discussion of the nine CONTRACT APP processes is given in Appendix C.

All these processes collectively access multiple data files and multiple records within these files. A description of the variables and data files used by Process 2, a key component process of a CONTRACT APP, is provided in Appendix H.

The foregoing description identifies the essential inter-reaction between the hardware platform and the applications computer software run thereon.

A first example of the life-cycle of a risk management contract will now be described. A further detailed discussion of the nature of risk management contracts is given in Appendix D.

3. <u>Life Cycle of Risk Management Contract: Example I</u>

The first example of a risk management contract describes a contract to manage risk associated with faults in microprocessors. In summary, the example shows how the system could enable one party, such as a supplier of military standard equipment seeking to avoid the adverse consequences of faulty microprocessors (specifically, 64-bit microprocessors) used in that equipment to make a contract with another party, such as a manufacturer of these microprocessors, who is seeking to exploit an opportunity based on their view of the future incidence of faults in the microprocessors they produce.

The specific offering is one which provides a contract ordering party with a specified contingent entitlement to "exclusive production warrants" (XPWs). That is, warrants providing the holder with priority access to a specified quantity of replacement and additional microprocessors sourced, immediately, from a defined, different, guaranteed high-quality, production line available to the supplier in consideration of payment of a money amount. The XPW entitlement is contingent on the value, at contract maturity date, of a percentage index of the proportion of 64-bit microprocessors shipped by the manufacturer, during a specified prior period, which are subsequently determined to be faulty to a defined degree. The defined degree, in this case, is the microprocessor being fault-free, as determined by successful completion of self-tests.

In this example, the relevant key stakeholders are: an application promoter (Demdata Inc); various product sponsors (the relevant one for the example being Demdata Inc itself); various primary product ordering parties (the relevant one for the example being Denisons); a single potential counterparty (Demdata Inc again); and an application regulator (the Department of Defence).

The timeline depicting the steps in the contract from the first step, Application Specification, to the final step, Contract Settlement, is shown in Fig. 6. Appendix E contains eight detailed explanatory charts supporting Fig. 6. This Appendix should be read together with the following description.

Looking at the first step in the timeline (Application Specification) in conjunction with chart E2, it can be seen that Demdata Inc established a Contract APP (Application ID 100) on 92.02.10.17.00.00 (that is, in inverse order, 5pm on February 10, 1992) to deal with defect liability management. Application ID 100 supports a range of products (Applicable Product ID's 1200-1250).

Looking at the second step in the timeline (Product Specification) in conjunction with chart E3, it can be seen that Demdata was also Product Sponsor of Product 1210 at the same time (92.02.10.17.00.00). This Product relates to the market termed: Factory Output Quality Indices, and to the sub-market termed 64-bit Microprocessor Fault Tolerance Index. The maturity date for Product 1210 is 95.02.10.17.00.00.00. The consideration for a specific contract involving Product 1210 is in the form of money (commercial bank deposits denominated in Australian dollars). The entitlement is in the form of Exclusive Product Warrants (XPWs); these entitle the contract ordering party to priority access over the forward production capacity of a defined, guaranteed-high-quality, 64-bit microprocessor production line. Product 1210 specifies a range of 0% to 100% in 2% increments in respect of the sub-market outcomes.

Looking at the third step in the timeline (Potential Counterparty Product Pricing Specifications), it can be found that Demdata is acting as the sole potential counterparty for forthcoming primary product orders dealing with Product 1210. At this point in the timeline (93.07.01.14.00.00.00), 17 months after the specification of Product 1210, Demdata has currently-specified parameters for pricing potentially forthcoming orders for the product.

Looking at the fourth step in the timeline (Primary Order Specification) in conjunction with chart E4, It can be seen that an Ordering Party, Denisons, is seeking a contract (from the offering party, Demdata) in Product 1210 at that time (93.07.01.14.25.30.00). chart E4 shows the specific 'pay-off' parameters that Denisons has defined for the contract it is seeking at this time, including a maximum acceptable contract consideration (premium) amount of 32,000 (denominated in commercial bank, Australian dollars).

Looking at the fifth step in the timeline (Order Specification Pricing) in conjunction with chart E5, it can be seen that Demdata (using the specified pricing parameters set at 93.07.01.14.00.00.00) prices the Denison order at 93.07.01.14.26.40.00. Demdata's pricing parameters indicate that their appropriate Defined Circumstances ID for Denisons is 14. As is shown, this ID in turn implies a Commission Rate of 1.10%, a Discount Rate of 9.90%, a particular set of Component product prices and a particular set of Assessed Probabilities of Occurrence over the range of feasible product values (outcomes).

The Contract Bid Price is calculated automatically by the application software in the following manner: The ordering party-specified desired contingent entitlement amounts, i.e. the "registered data", (covering the feasible product definition value range) are multiplied by the potential counterparty-specified component product prices (which will rarely add to "1" because each counterparty is endeavouring to 'game' potential ordering parties in different ways) to yield the corresponding number of implied contingent entitlement amounts. When added together, these figures sum to (34.110), where the brackets signify a negative value. This figure represents an expected future counterparty-entitlement payout amount (as at the designated contract maturity date of 95.02.10.17.00.00). The present day value of this figure, calculated using the specified discount rate of 9.90% per annum, is 29,220. To this amount is added the potential counterparty's desired flat commission amount of 1.10%, yielding a contract Bid Price (in the consideration/entitlement denomination of the product, commercial bank-denominated Australian dollars) of 29,540. No exchange rates are applicable in this case, because the ordering party, Denisons, is not seeking to deal in a consideration or entitlement denomination different to the denominations formally specified for the product. Demdata's parameters calculate that a consideration bid price of 29,540 will yield them a base margin on the contract of 3,180 (again denominated in commercial bank, Australian dollars).

This margin amount is calculated in the following manner : The ordering party-specified desired contingent entitlement amounts (covering the feasible product definition value range) are multiplied by the potential counterparty-specified assessed probabilities of occurrence to yield a corresponding number of net contingent entitlement valuation amounts. When added together, these sum to (30.770). This amount represents an expected future counterparty-entitlement loss-on the contract (as at the designated contract maturity date of 95.02.10.17.00.00). The present value of this amount, calculated using the specified discount rate of 9.90% per annum, is 26,360. Thus, (ignoring for this example the margin Demdata may gain from using, in some manner, the consideration amount of 29,540 through to the time the contract expires, and various transaction fees) the margin Demdata can expect from entering into this contract with Denisons is their calculated present-value indifference price of 29,540 less their calculated present-value expected loss on the contract of 26,360 (or 3,180).

The amounts in the last two rows of the table contained on E5 are used for checking that this contract, if entered into by Demdata, will not result in them violating any self imposed portfolio valuation or composition limits. This notion is explained in detail in Example III.

Looking at the sixth step in the timeline (Order Matching), it can be found that Demdata's contract bid price of 29,540 is below Denison's specified maximum consideration price of 32,000, leading to a matching of the order at 93.07.01.14.29.10.00.

The seventh step in the timeline (Order/Contract Confirmation) can be seen to take place twelve minutes later at 93.07.01.14.38.50.00, after the system has determined that Denisons is able to (and then does) immediately pay the required consideration funds amount of 29,540 to Demdata.

Looking at the eighth step in the timeline (Contract Valuation) in conjunction with chart E6, it can be seen that a contract valuation report for Denisons was published not much longer than one hour after confirmation of the contract, that is, at 93.07.01.16.00.00.00. As can be seen, the market estimate of the future product value of the 64BMFT Index at this moment is 38 (with a standard deviation of 4), which implies that this contract has an expected future value of 29,330 XPWs (with a standard deviation of 6,213).

On chart E7 it can be seen the equivalent report for Demdata Inc of their expected future entitlement payout is identical to Denisons' expected future entitlement receipt (ignoring future fee payments which may be netted against these payments/receipts). The above-described market estimate of the future product value is determined by the system applying a defined composite of contract-counterparty assessed probabilities of occurrence figures drawn from the collection of all like contracts recently matched/confirmed by the system.

The ninth step in the timeline (Contract Valuation) refers to a contract valuation report published for Denisons sixteen months later, at 94.11.15.10.00.00.00 (see chart E8). As can be seen, the market estimate of the future product value of the 64BMFT Index at this moment is 58 (with a standard deviation of 5), which implies that this contract now has an expected future value of 42,160 XPWs (with a standard deviation of 6,209). This is an increase in expected future value of 12,830 XPWs for Denisons since the former valuation date/time.

The tenth step in the timeline, Contract Maturity, refers to the actual determination of the product value at time of maturity, 95.02.10.17.00.00.00. As can be seen on chart E9, this product value of the 64BMFT Index was specified by Demdata (as Product Sponsor) to be 74, implying a contract value of 100,660 XPWs to Denisons and a corresponding obligation on Demdata. The amount of 74 represents the percentage of 64-bit microprocessors shipped by Demdata, during a specified period some time before the designated contract maturity date, which are subsequently determined (possibly by the application regulator, The Department of Defence) to be faulty.

The eleventh step in the timeline involves the formal assignment of 100,660 XPWs by Demdata to Denisons (ignoring possible fee payments by one or both parties).

4. <u>Life Cycle of Risk Management Contract: Example II</u>

The second example describes a risk management contract associated with the utilisation of telecommunications carrying capacity. In summary, the example shows how the system could enable one party (a telecommunications carrier) seeking to avoid the adverse consequences of under and over-committing their call carrying capacity between specified points (say, between the two cities, New York and Boston) to make a contract with another party (say, another telecommunications carrier with call carrying capacity between the same two cities) similarly prepared to hedge against the consequences of this occurring.

The specific offering is one which provides a contract ordering party with a specified contingent entitlement to transmission time units between the hours 1200-1800 daily on the NY-Boston link within a defined future period (termed, Prime TTU's) upon assignment by the ordering party - to the counterparty - of a calculated consideration amount of Prime TTUs on the ordering party's own NY-Boston line within another defined future period (these defined TTUs may or may not be convertible to TTUs on other city links). The TTU entitlement is contingent on the value, at contract maturity date, of the log of the difference between the ordering party's utilisation of the counterparty's network and the counterparty's utilisation of the ordering party's network, during a specified prior period ending on the contract maturity date.

In this example, the relevant key stakeholders are: an application promoter (Newcom Inc) ; various product sponsors (the relevant one for the example being Newcom Inc itself); various primary product ordering parties (the relevant one for the example being Basstel Co.); two potential counterparties (Tasnet and Aarcom) ; and an application regulator (ITT).

The timeline depicting the steps in the contract from the first step, Application Specification, to the final step, Contract Settlement, is shown in Fig. 7. Appendix F contains nine detailed explanatory charts supporting Fig. 7. This Appendix should be read together with the following description.

Looking at the first step in the timeline (Application Specification) in conjunction with chart F2, it can be seen that Newcom Inc established a Contract APP (Application ID 001) on 93.11.01.17.00.00 (that is, 5pm on November 1,1993) to deal with hardware capacity management. Application ID 001 supports a range of products (Applicable Product ID's 2001-2020).

Looking at the second step in the timeline (Product Specification) in conjunction with chart F3, it can be seen that Newcom Inc was also Product Sponsor of Product 2001 at the same time (93.11.01.17.00.00). This Product relates to the market termed Telecommunications Carrying Capacity and to the sub-market termed Prime TTUs. The maturity date for Product 2001 is 96.11.01.17.00.00.00. The consideration for a specific contract involving Product 2001 is in the form of "Ordering Party TTUs". The entitlement is in the form of "Counterparty TTUs"; these entitle the contract ordering party to "transmission time units between the hours 1200-1800 daily on the NY-Boston link (within a defined future period)". The feasible values of PRIME TTUs are normalised in the range of -1.0 to +1.0, respectively signifying the proportionate utilisation of respective networks as between the parties to a contract.

Looking at the third step in the timeline (Potential Counterparty Product Pricing Specifications), one can find two other carriers, Tasnet and Aarcom, acting as potential counterparties for forthcoming primary product orders dealing with Product 2001. At this point in the timeline (94.06.01.14.00.00.00), 7 months after the specification of Product 2001, both Tasnet and Aarcom have currently-specified parameters for pricing potentially forthcoming orders for the product.

Looking at the fourth step in the timeline (Primary Order Specification) in conjunction with chart F4, it can be seen that an Ordering Party, Basstel Co., is seeking a contract, from an offering party, in Product 2001 at that time (94.06.01.14.25.30.00). Chart F4 shows the specific parameters (entitlements) that Basstel Co. has defined for the contract it is seeking at this time, including a maximum acceptable contract consideration amount of 58,000 (denominated in its own TTUs).

Looking at the fifth step in the timeline (Order Specification Pricing) in conjunction with chart F5, it can be seen that Tasnet (using the specified pricing parameters set at 94.06.01.14.00.00.00) prices the Basstel Co. order at 94.06.01.14.26.40.00. Tasnet's pricing parameters indicate that their appropriate Defined Circumstances ID for Basstel Co. is 8. As is shown, this ID in turn implies a Commission Rate of 1.00%, a Discount Rate of 9.90% per annum, a particular set of Component product prices and a particular set of Assessed Probabilities of Occurrence. In a similar process to that described for Example I, this results in a Contract Bid Price of 55,180 (denominated in Basstel Co. TTUs), which Tasnet's parameters calculate will yield them a base margin on the contract of 10,760 (again denominated in Basstel Co. TTUs).

Still looking at the fifth step in the timeline, in conjunction with chart F6, it can be seen that Aarcom (again using the specified pricing parameters set at 94.06.01.14.00.00.00) also prices the Basstel Co. order at 94.06.01.14.26.40.00. Aarcom's pricing parameters indicate that their appropriate Defined Circumstances ID for Basstel Co. is 9. As is shown, this ID In turn implies a Commission Rate of 0.90%, a Discount Rate of 8.50% per annum, a particular set of Component product prices and a particular set of Assessed Probabilities of Occurrence. This results in a Contract Bid Price of 55,390 (denominated in Basstel Co. TTUs), which Aarcom's parameters calculate will yield them a base margin on the contract of 9,430 (again denominated in Basstel Co. TTUs).

Looking at the sixth step in the timeline (Order Matching) it can be found that Tasnet's price bid of 55,180 is below Aarcom's bid of 55,390 and, in turn, that the 55,180 amount is below Basstel Co.'s specified maximum consideration price of 58,000. This leads to a formal matching of Basstel Co,'s order by Tasnet at 94.06.01.14.29.10.00.

The seventh step in the timeline (Order/Contract Confirmation) can be seen to take place nearly ten seconds later at 94.06.01.14.38.50.00, after the system has determined that Basstel Co. is able to (and then does) immediately assign the required consideration amount of 55,180 TTUs to Tasnet.

Looking at the eighth step in the timeline (Contract Valuation) in conjunction with chart F7, one can see a contract valuation report for Basstel Co. published about two hours after confirmation of the contract, that is, at 94.06.01.16.00.00.00. As can be seen, the market estimate of the future product value of the log of the difference between Basstel Co.'s utilization of Tasnet's network and Tasnet's utilization of Basstel Co.'s network (during a specified prior period ending on the contract maturity date) at this moment is (0.150) (with a standard deviation of 0.023), which implies that this contract has an expected future value of 54,236 Tasnet TTUs (with a standard deviation of 9,207). On chart F8 one can see in the equivalent report for Tasnet that their required expected future entitlement payout is identical to Basstel Co.'s expected future entitlement receipt (ignoring future fee payments which may be netted against these payments/receipts).

The ninth step In the timeline (Contract Valuation) refers to a contract valuation report published for Basstel Co. five months later, at 94.11.22.10.00.00.00 (see chart F9). As can be seen, the market estimate of the future product value of the log of the difference between Basstel Co.'s utilization of Tasnet's network and Tasnet's utilization of Basstel Co.'s network (during a specified prior period ending on the contract maturity date) at this moment is (0.400) (with a standard deviation of 0.010), which implies that this contract now has an expected future value of 350,181 Tasnet TTUs (with a standard deviation of 74,200). This is an increase in expected future value of 295,945 TTUs for Basstel Co. since the former valuation date/time.

The tenth step in the timeline (Contract Maturity) refers to the actual determination of the product value at time of maturity, 96.11.01.17.00.00.00. As can be seen on chart F10, this product value of TTU's was specified by Newcom Inc (as Product Sponsor) to be (0.400), unchanged from the prior valuation date/time, implying a contract value of 368,340 Tasnet TTUs to Basstel Co. and a corresponding obligation on Tasnet. The amount is higher than the prior valuation figure due to the actual determination figure being naturally without a standard deviation element.

The eleventh step in the timeline involves the formal assignment of the 368,340 TTUs by Tasnet to Basstel Co. (ignoring possible fee payments by one or both parties).

5. PRIMARY PRODUCT ORDER PROCESSING

Before describing the third, and most detailed, example, consideration will be given to the 'core' product (contact) ordering, pricing and matching processes. Note that expressions such as (PORD NEW) represent file names.

The flow charts in FIGS 8 to 16 depict the processing flow of the matching system for primary product orders submitted by ordering party stakeholders to a CONTRACT APP, where this APP is based upon: an EV-CE counterparty pricing regime (assuming paid consideration amounts do not yield an income stream in their own right); a sequential order matching process; consideration/entitlement value dates which are immediately after a product sponsor-designated date/time; and matching rules which do three things: First, identify, for each ordering party's order, a counterparty offering the lowest price bid for an order, subject to this price being at or below the specified maximum price the ordering party has indicated it is prepared to pay. Second, accommodate portfolio expected loss constraints on an 'equivalent maturity date products', 'same-month maturity products', and 'all-products' basis. And third, apply the above-described matching rules on a pre-tax basis, with partial matching of product orders, and without conditional order matching rules.

As shown in Fig. 8, starting at block 610, and proceeding to block 625, the system determines which set of orders to process, authorises these orders, matches them with counterparties where possible, and then confirms them. As shown in blocks 1010 to 1070 in Fig. 9, the system holds newly submitted orders (PORD NEW), and all previously submitted, but as yet unmatched, orders which are defined as queued orders (PORD QUEUE). Parameters and algorithms can be implemented to give the system the ability to determine whether new or queued orders are to be processed at any time. For example, a simplistic algorithm would be to alternate between PORD NEW and PORD QUEUE one order at a time. Another example would be to load queued orders only when there is a change in the counterparty parameters. Test 1020 checks the decision made in block 1010.

For new orders, the system moves to block 1030. Details of the next recorded new order are loaded from the PORD NEW master file (block 1040). The order data fields include: the ordering party identification (BID); the ordering party's own reference (BREF); the product identification (PID) specified by the ordering party; the entitlement "payoff" function type (PAYFUNC); the parameters for the entitlement "pay off" function (PAYPARAM); a "deal type" identifier (DTID); the anonymous and manual deal identifiers (OANON and OMANUAL); the order retention time limit (RET LIM); the maximum consideration the ordering party is prepared to pay (MAXCONSID); the number of the account from which the consideration is to be "paid" (ACC CONSID); and the number of the account to which any entitlement "pay off" amount is to be paid (ACC ENTITL). With this information set, the system's next step is to authorise the order. This occurs at block 1050.

<u>Order Authorisation</u>

Blocks 1100 to 1162 in Fig. 10 provide an expansion of block 1050. Starting at block 1100 the order is assigned a unique identification, which is set in the order data field OID. Before verifying the order, additional information is required by the system. At block 1110, details of the product (order data field PID) are loaded from the master file PPRODUCT (block 1120). The information includes the product maturity date (PMAT); the product consideration/entitlement denomination (PC/ED); the product currency denomination (PCUR) and national currency denomination (PNCUR); and the product limits and parameters (PMIN, PMAX, and PSTEP). The test 1130 checks that the order parameters are consistent with the master file parameters implied by the defined product identification (PID). Orders which fail this test are rejected at block 1140, with details of these orders being stored in the master file PORD REJ (block 1150). In turn, the ordering party is informed of this event (block 1160). Processing then returns to the start of the flow chart (block 1010), ready to load the next order. When an order is authorised, processing continues at block 640.

In the case of a queued order being loaded (block 1060), the order fields are set using the details stored in the queue file PORD QUEUE (block 1070). This data is a combination of new order data (as described in block 1030) and the data loaded/set when the order was originally verified (block 1110). Authorised order processing continues with the order matching process at block 640.

<u>Order Matching</u>

Blocks 1200 to 1616 in Figs. 11 to 15 provide an explanation of block 640. Orders have retention time limits , stored in the order variable RET LIM. Test 1200 checks that the order retention time has not expired. If it has, the order is rejected at block 1210, with the order details copied to the rejected order file (PORD REJ). The ordering party is then informed of the rejection at block 1230, and processing returns to the main loop via connector "A". If the order is still valid, the order matching process proceeds. The aim now is to find a suitable counterparty (or counterparties) who "prices" the ordering party's "entitlement function" within the limits set by the ordering party. Starting at block 1240, the matching process described is one which seeks to identify, for each ordering party's order, a counterparty offering the lowest "price bid" for an order subject to this price being at or below the specified maximum "price" the ordering party has indicated it is prepared to pay.

Blocks 1300 to 1370 in Fig. 12 provide an explanation of block 1240. The first step is to narrow down a group of counterparties prepared to at least deal with the ordering party. This is described as obtaining the available counterparty short list. First the counterparty short list is wiped (block 1300). Next, the order data fields BID (ordering part identification) and PID (product identification) are used to search the PDEAL LIST master file (block 1320) for all counterparties prepared to consider dealing with the ordering party in the specified product. Any stakeholders who have set a MANUAL or ANON flag are also loaded. For each counterparty selected, SID is set to the corresponding identification. Test 1330 commences a loop which allows every counterparty available to be dealt with in turn. For any currently selected counterparty (with identification set in SID), the data flow proceeds to test 1365. Where the order data field OANON has been set by the ordering party and some stakeholder requires manual confirmation (MANUAL (SID)), the current potential counterparty is not included in the short list. Likewise if the ordering party set OMANUAL and some other stakeholder required anonymity (ANON (SID)). In both cases, data flow returns to test 1330. Otherwise, flow continues at block 1335. At this point, the system determines the applicable "defined circumstances" for the order. It uses the order data fields currently loaded and parameters set in the PSEL DC masterfile (block 1336) to determine this. At block 1340, pricing parameters including consideration/entitlement exchange rates (if applicable), commission rates, and discount rates are selected from the PSEL PRICE master file (block 1350). Using the "defined circumstances" identification (set in DCID) all potential counterparties can have different sets of pricing parameters specified based on any of the order data fields of each order. Test 1360 checks that all the necessary parameters have been found. It is possible that the counterparty, though prepared to deal with the ordering party, does not have a complete set of pricing parameters for the current order specifications. Such a counterparty is not included in the counterparty short list, and processing returns to test 1330. At block 1370, the counterparty is added to the counterparty short list by including the pricing details in the variables: PRICEFUNC(SID), CR(SID), DR(SID), C-C/EDXCHANG(SID), C-CXCHANG(SID), C-NCXCHANG(SID), E-C/EDEXCHANG(SID), E-CXCHANG(SID), E-NCXCHANG(SID), MANUAL(SID), and ANON(SID). Processing then returns to test 1330 where the next selected potential counterparty is dealt with. When all selected potential counterparties have been processed, program flow returns to block 1250. At this point a potential counterparty short list has been obtained.

Blocks 1400 to 1550 in Figs. 13 and 14 depict block 1250 in more detail, where every potential counterparty has its price offer calculated, based on their individual pricing parameters, for the currently loaded order. At block 1400 a loop commences allowing each potential counterparty in the potential counterparty shortlist to be dealt with in turn. SID is set to the identification of the counterparty currently selected. Test 1410 checks whether any counterparties are left for processing. At block 1420, the potential counterparty's price bid is calculated. Blocks 1490 to 1550 describe this calculation in more detail. At block 1490 the variable, INDEX, is assigned the starting value of the product value range (PMIN). Also, "price" is initialised to zero. Test 1500 commences a loop, where every index point in the product range is traversed. Block 1520 calculates the pricing value returned by the potential counterparty's pricing function, PRICEFUNC, as stored in (PRICEFUNC(SID)), at the current index point, and stores the value in P1. Block 1530 determines the pay-off amount required by the ordering party at the current index point and stores this value in P2. At block 1540, the total price at the current index point is calculated by multiplying P1 by P2. This value is added to the running total stored in PRICE(SID). At block 1550, the index counter (INDEX) is incremented by the product step size (PSTEP), and flow returns to the test 1500. When the end of the product range has been reached (PMAX), flow proceeds to block 1510, where the calculated price bid is modified by the following calculation:

PRICE(SID) = PRICE(SID) * E-C/EDXCHANG(SID) * E-CXCHANG(SID) * E-NCXCHANG(SID).

Returning to block 1430, the price bid stored in PRICE(SID) will be in the applicable product's consideration/entitlement denomination, currency denomination, and national currency denomination. The following steps (block 1430-1470) determine and apply the applicable discount rate to the calculated price bid (currently in future value terms) to yield a price bid in present value terms. This is done as follows: At block 1430 the number of days to product maturity is determined. Block 1440 initialises the loop counter and discount rate divisor. For each day (or appropriate part thereof) between the current date/time and the product maturity date/time, the divisor is changed according to the formula (block 1460):

DIV = DIV * (1 + ((DR(SID) / 100) / 365))

At block 1470, the price bid is adjusted according to the formula:

PRICE(SID) = PRICE(SID) / DIV

Once the price bid in present value terms is known, the potential counterparty's defined commission is added to the price (block 1480). Given that CR(SID) is a percentage commission rate, the formula is:

PRICE(SID) = PRICE(SID) + ((CR(SID) / 100) * PRICE (SID))

When test 1410 confirms that every potential counterparty has been priced, program flow continues at 1255.

The test at 1255 checks whether the order was a "quote only" order. If so, flow continues at block 1256 where one or more of the counterparty bid prices are selected. At block 1230, the ordering party is informed of the pricing information gathered. If the order was not a quote order (that is, it was a real product order), an attempt is now made to identify a counterparty from the potential counterparty short list matching the requirements of the current order. This is done at block 1260. Blocks 1560 to 1616 in Fig 15 describe this process in detail.

Starting at test 1560, a check is made to ensure the potential counterparty shortlist is not empty. If it is, no match is possible and flow continues at block 1612. At this point SID is assigned "0" to indicate that no counterparty was selected from the potential counterparty short list, before moving to block 1614 where the entire order (as no part was matched) is queued. When the list is not empty, program flow continues at block 1570, where the lowest priced counterparty is selected from the counterparty short list. This determination is done based upon each potential counterparty's bid price (PRICE(SID)), being converted to the consideration/entitlement type, currency, and national currency consideration "payment" denominations sought by the ordering party (that is, PRICE(SID) = PRICE(SID) * C-C/EDXCHANG(SID) * C-CXCHANG(SID) * C-NCXCHANG(SID)) . The counterparty identification is stored in SID, and its price offer is stored in BPRICE. At block 1580, the following check is made:

$$BPRICE > MAXCONSID$$

If the selected price is greater than the ordering party's specified maximum consideration payment (MAXCONSID) limit, a match with the current potential counterparty is not deemed possible. This must also be true for any of the remaining counterparties in the counterparty short list. This part of the matching process returns without any potential counterparty in the short list having been selected for a match (block 1612). Otherwise, the current price is acceptable, and the process proceeds to attempt a match with the current selected counterparty.

The next step (block 1590), requires all the applicable contract, product, and portfolio absolute loss, expected loss, expected value limits, and maximum composition limits to be read from the PSEL LIMIT master file (block 1600) and stored in ALL1(SID), ALL2(SID), ELL1(SID), ELL2(SID), ELL3(SID), ELL4(SID), ELL5(SID), EVL1(SID), MC(SID) and MCC(SID). The current absolute and expected losses accumulated are also read and stored in CAL2(SID), CEL2(SID), CEL3(SID), CEL4(SID), and CEL5(SID).The ELFUNC(SID) and EVFUNC(SID) values are also set for use when calculating the expected loss and expected value for the current order. Block 1602 calculates the price of the order entitlement function using the counterparty product expected loss and expected value parameters ELFUNC(SID) and EVFUNC(SID). The order's expected loss is stored in EL(SID); the order's expected value is stored in EV(SID). The absolute loss function is also determined at block 1602 and it is stored in AL(SID). Proceeding to block 1604, the portion of the order which will not violate the counterparty limits is calculated. This check is made at test 1606. If no part of the order is matched, process flow continues at block 1608. The potential counterparty is removed from the counterparty shortlist.

If some portion of the order is matched with the current counterparty, processing continues at block 1610. Here the SID is set to the identification of the matching counterparty. The unmatched portion (if any) is stored at block 1614 as a new order in the PORD QUEUE masterfile (block 1616). Flow then returns to test 1261 in Fig. 11. When a match occurs, program flow returns to block 650. The matched order must now be confirmed by carrying out a number of additional steps, as shown in Fig. 16, blocks 1620 to 1641. If no match occurred, processing of the current order steps, and program flow returns to the beginning via connector "A". The system is ready to load the next available order.

Matched Order Confirmation

For matched orders to become a contract, a number of additional actions are required. First, at test 1620, a check for manual authorisation is made. If required, program flow moves to block 1621 where authorisation requests are sent to the relevant stakeholders. Block 1623 then tests the replies for any rejections. If one or more rejections were received, program flow continues at block 1627 where the order is rejected. Otherwise, flow continues at 1624. Block 1624 effects the consideration payment by creating transactions in the payment shadow file (PAYACC SHADOW - block 1625). However, this may fail if the accounts specified do not exist or if at least the required consideration amount is shown not to be available. Test 1626 checks that "consideration payment" was effected successfully. If "consideration payment" fails, the matched order is rejected (block 1627), with details stored in the rejected order master file, PORD REJ (block 1628). The ordering party is then informed of this event at block 1640.

With successful payment, program flow proceeds to block 1630 where the counterparty's current accumulated absolute and expected loss figures are updated (masterfile PSEL LIMIT - block 1631). At block 1632, the order data field OPRICE is set to the price given by the counterparty PRICE(SID), and SPRICE set to the counterparty's identification, SID. At block 1634, the matched order is certified as confirmed, with full details recorded in the masterfile PORD CONF (block 1636). The next step, block 1638, reports details of the newly created contingent contract to all stakeholders concerned. Program flow then returns to the beginning, via connector "A". The system is now ready to start processing the next order submitted by a specified ordering party.

6. Life Cycle of Risk Management Contract: Example III

The third example of a risk management contract describes a contract to manage risk associated with potential future movements in the value of a specified index of share prices (termed the PTSE 75 index). In summary, the example shows how the system could enable one party (such as an institutional fund manager) seeking to avoid the adverse consequences of a significant decline in the future value of the PTSE 75 index (specifically a decline by June 1994, relative to the assumed current (January 1993) value of the index) to make a contract with another, as-yet-unknown, party, such as another fund manager seeking to avoid the adverse consequences of a significant corresponding increase in PTSE 75 index value.

The specific offering is one which provides a contract ordering party with a specified contingent entitlement to a compensatory Australian dollar future payout upon payment of a calculated up-front consideration money amount by the ordering party to the as-yet-unknown counterparty. The future money entitlement is contingent on the value, at contract maturity date, of the independently-determined value of the PTSE 75 index.

In this example, the relevant key stakeholders are: an application promoter (BLC Inc); various product sponsors (the relevant one for the example being BLC Inc itself); various product ordering parties (the relevant ones for the example being Abbotts & Taylor and Shearer & Associates); various potential counterparties (the relevant ones for the example being Abrahamsons and Carpenters Inc); a counterparty guarantor (CNZ Banking Corporation); and an application regulator (the Pacific Central Bank).

The timeline depicting the steps in the contract from the first step (Application Specification) to the final step (Contract Settlement) is shown in Fig.17. Appendix G contains thirteen detailed explanatory charts supporting Fig.17. This Appendix should be read together with the following description.

Looking at the first step in the timeline (Application Specification) in conjunction with chart G2, It can be seen that BLC Inc established a Contract APP (Application ID 001) on 91.06.03.17.00.00 (that is, 5pm on June 3, 1991) to deal with economic risk management. Application ID 001 supports a range of products (Applicable Product ID's 10020-11400).

Looking at the second step in the timeline (Product Specification) in conjunction with chart G3, it can be seen that BLC Inc was also Product Sponsor of Product 10061 at the same time (91.06.03.17.00.00). This Product relates to the Market termed Stock Indices and to the Sub-market termed PTSE 75. The maturity date for Product 10061 is 94.06.03.17.00.00.00. The consideration for a specific contract involving Product 10061 is in the form of money (commercial bank deposits denominated in Australian dollars). The entitlement is also in the form of commercial bank deposits denominated in Australian dollars, payable (if necessary) immediately after the Product's specified maturity date/time.

Looking at the third step in the timeline (Potential Counterparty Product Pricing Specifications), one can find two entities, Abrahamsons and Carpenters Inc, acting as potential counterparties for forthcoming primary product orders dealing with Product 10061. At this point in the timeline (93.01.01.17.00.00.00), 19 months after the specification of Product 10061, both Abrahamsons and Carpenters Inc have currently-specified parameters for pricing potentially forthcoming orders for the product.

Looking at the fourth step in the timeline (Primary Order Specification), in conjunction with chart G4, it can be seen that an Ordering Party, Abbotts & Taylor, is seeking a contract, from an offering party, in Product 10061 at that time (93.01.01.17.37.06.00). chart G4 shows the specific parameters (entitlement) that Abbotts & Taylor has defined for the contract it is seeking at this time, including a maximum acceptable contract consideration amount of 54,000 (denominated in commercial bank, Australian dollars).

In order to provide a more detailed explanation of the following fifth to seventh steps in the timeline, selected processing block numbers from Figs. 8-16 will be referred to in brackets as follows: "[ ]".

Looking at the fifth step in the timeline (Order Specification Pricing) in conjunction with chart G5, it can be seen that Abrahamsons' specified pricing parameters, as set at 93.01.01.17.37.06.00 are used to price the Abbotts & Taylor order at 93.01.01.17.38.02.00. Abrahamsons' pricing parameters indicate that their appropriate Defined Circumstances ID for Abbotts & Taylor is 26 [1240]. As is shown, this ID in turn implies a Commission Rate of 1.25%, a Discount Rate of 10.00% per annum, a particular set of Component product prices and a particular set of Assessed Probabilities of Occurrence. In a similar process to that described for Example I, this results in a Contract Bid Price of 51,920 (denominated in commercial bank, Australian dollars), which Abrahamsons' parameters calculate will yield them a base margin on the contract of 4,580 (again denominated in commercial bank, Australian dollars) [1250].

Still looking at the fifth step in the timeline, In conjunction with chart G6, it can be seen that Carpenters Inc specified pricing parameters, as set at 93.01.01.17.37.06.00, are also used to price the Abbotts & Taylor order at 93.01.01.17.38.02.00. Carpenters Inc's pricing parameters Indicate that their appropriate Defined Circumstances ID for Abbotts & Taylor is 17 [1240]. As is shown, this ID in turn implies a Commission Rate of 1.30%, a Discount Rate of 9.80% per annum, a particular set of Component product prices and a particular set of Assessed Probabilities of Occurrence. This results in a Contract Bid Price of 53,050 (denominated in commercial bank, Australian dollars), which Carpenters Inc's parameters calculate will yield them a base margin on the contract of 5,610 (again denominated in commercial bank, Australian dollars) [1250].

Again, still looking at the fifth step in the timeline, in conjunction with chart G7, it can be seen that Abrahamsons' pricing-related parameters (also set at 93.01.01.17.37.06.00) for determining the acceptability of ordered-contracts on the basis of their absolute loss, expected loss, expected value, and maximum portfolio composition attributes are satisfied by Abbotts & Taylor's order [1604]. From Abrahamsons' perspective, this qualifies Abbotts & Taylor's order for inclusion in their product/contract portfolio, as long as Abrahamsons' consideration price bid turns out to be lower than Carpenters Inc's price bid, and, in turn, this bid is below the maximum consideration price that Abbotts & Taylor has specified, in its order specification (chart G4), it is prepared to pay.

Finally, still looking at the fifth step in the timeline, but now in conjunction with chart G8, it can be seen that Carpenters Inc's pricing-related parameters (set at 93.01.01.17.37.06.00) for determining the acceptability of ordered-contract on the basis of their absolute loss, expected loss, expected value, and maximum portfolio composition attributes are also satisfied by Abbotts & Taylor's order. Now, from Carpenters Inc's perspective, this qualifies Abbotts & Taylor's order for inclusion in their product/contract portfolio, in this case, as long as Carpenters Inc's consideration price bid turns out to be lower than Abrahamsons' price bid, and, in turn, this bid is below the maximum consideration price that Abbotts & Taylor has specified, in its order specification (Page G4), it is prepared to pay.

Looking at the sixth step in the timeline (Order Matching), it can be found that Abrahamsons' price bid of 51,920 is below Carpenters Inc's bid of 53,050 and, in turn, that the 51,920 amount is below Abbotts & Taylor's specified maximum consideration price of 54,000. This leads to a formal matching of Abbotts & Taylor's order by Abrahamsons' at 93.01.01.17.38.07.00 [1260].

The seventh step in the timeline (Order/Contract Confirmation) takes place five seconds later at 93.01.01.17.38.11.00, after the system has determined that Abbotts & Taylor is able to (and then does) immediately pay the required consideration funds amount of 51,920 to Abrahamsons [650].

Looking at the eighth step in the timeline (Contract Valuation) in conjunction with chart G9, one can see a contract valuation report for Abbotts & Taylor published nearly six hours after confirmation of the contract, that is, at 93.01.01.23.00.00.00. As can be seen, the market estimate of the future product value of the PTSE 75 Index at this moment is 1970 (with a standard deviation of 333), which implies that this contract has an expected future value of 53,000 commercial bank-denominated Australian dollars (with a standard deviation of 21,160). On chart G10 one can see in the equivalent report for Abrahamsons that their required expected future entitlement payout is identical to Abbotts & Taylor's expected future entitlement receipt (ignoring future fee payments which may be netted against these payments/receipts).

The ninth step in the timeline (Secondary Order Specification), detailed on chart G11, occurs nearly six months after the above-described contract valuation event; that is, at 93.06.06.08.00.00.00. At this time, Abbotts & Taylor is seeking to sell its position in the contract which was matched/confirmed at 93.01.01.17.38.11.00 (and at that time assigned the Order ID of 9156515800 by the system) at a price better than 57,000. Shearer & Associates is prepared to pay 60,000 (commercial bank deposit-denominated Australian dollars) for this position. In all other respects the contract's attributes remain unchanged. On chart G12, the tenth step in the timeline, a contract sale is seen to have occurred at a price of 58,300, just below the above-described 60,000 upper limit purchase-price amount specified by Shearer & Associates. This amount is the current best estimate of the contract's expected future value, with the standard deviation of this expected future value calculated by the system, utilizing other recent transaction data, as being 10,610. Shearer & Associates has now formally taken the place of Abbotts & Taylor as a stakeholder to the contract.

The eleventh step in the timeline (Contract Valuation) refers to a contract valuation report published for Shearer & Associates seven months later, at 94.01.01.17.00.00.00 (see chart G13). As can be seen, the market estimate of the future product value of the PTSE 75 Index at this moment is 1800 (with a standard deviation of 283), which implies that this contract now has an expected future value of 162,360 commercial bank deposit-denominated Australian dollars (with a standard deviation of 35,160). This is an increase in expected future value of 104,060 for Shearer & Associates since the former valuation date/time. The above-described market estimate of the future product value is determined by the system applying a defined composite of contract-counterparty assessed probabilities of occurrence figures drawn from the collection of all like contracts recently matched/confirmed by the system.

The twelfth step in the timeline (Contract Maturity) refers to the actual determination of the product value at time of maturity, 94.06.03.17.00.00.00. As can be seen on chart G14, this product value of the PTSE Index was specified by BLC Inc (as Product Sponsor) to be 1820, implying a contract value of 187,200 (commercial bank deposit-denominated Australian dollars) to Shearer & Associates, and a corresponding obligation on Abrahamsons. The figure of 1820 represents the actual value of the PTSE share price index at 94.06.03.17.00.00.00 as obtained by BLC Inc from the independently verifiable information source, the identity of which they would have disclosed at the time they first announced their sponsorship of trading in the PTSE 75 share index product.

The thirteenth step in the timeline involves the formal payment of 187,200 (commercial bank deposit-denominated Australian dollars) by Abrahamsons to Shearer & Associates (ignoring possible fee payments by one or both parties).

7. Description of Consideration/Entitlement Payment Process

The purpose of the CONTRACT APP consideration/entitlement (and related transactions) payment/receipt process is to effect debits and credits to INVENTCO stakeholder accounts, typically at maturity of a contract, with participating consideration/entitlement transfer (or exchange) entities, reflecting payment/receipt entitlements and obligations originated within INVENTCO. The process effects these payments/receipts in a two-stage process. First, by debiting/crediting, on a real-time basis, the relevant shadow records (in the data file PAYACC SHADOW) of the applicable stakeholder accounts with a participating consideration/entitlement transfer entity (C/E entity), external to INVENTCO, with which they maintain an account. And second, by periodically effecting, via existing and potential payment mechanisms, corresponding payment instructions to the payment entities concerned. Details of the above-described mechanism are as follows.

All INVENTCO stakeholders maintain (a minimum of) two special-purpose (net-credit balance only) accounts with (at least) one selected, VIRPRO authorised, C/E transfer entity. The purpose of special-purpose accounts is to ensure that only INVENTCO-initiated debits and credits are capable of being effected to the accounts. Thus, at any time the balance of each PAYACC SHADOW file account record should be equivalent to the true, but usually unknown, time-of-day balance of the actual account maintained by the C/E transfer entity.

The purpose of two accounts is to enable only credits to be effected through one account and only debits through another account. And the purpose of "net-credit balance only" accounts is to ensure that accumulated debits to the debits-only account never exceed the account opening balance plus accumulated credits to the credits-only account.

C/E transfer entities will typically be (but do not need to be) institutions of any/all of six types: public/private record-registries of various types; credit card companies (typically for retail transactions only); commercial banks; central banks; taxation authorities; and non-bank clearing houses and depositories.

The resources transferred by these entities may be of any type. However, most typically, they will be deposits appropriate for the entity concerned: With respect to public/private record-registries - entitlement deposits (including shares in financial or physical assets, participation rights in wagers, and so on). With respect to credit/debit card companies - normal card company deposits (denominated in national currencies or synthetic currencies (for example, SDRs)). With respect to commercial banks - normal bank deposits (denominated in national currencies or synthetic currencies (for example, SDRs)). With respect to central banks - exchange settlement account (or equivalent) deposits. With respect to taxation authorities - taxation account deposits. And with respect to non-bank clearing houses and depositories - deposits of financial instruments, precious metals and the like. CONTRACT APP potential counterparties will also effectively be C/E transfer entities, as will ordering party guarantors (external to INVENTCO) where they offer credit to product ordering parties. Also, some accounts will be trust accounts maintained on behalf of potential counterparties (and some product ordering parties) involved in applications requiring the periodic payment of collateral to independent third parties to serve as an additional security device.

Immediately after the completion of its daily - or more frequent - transaction processing, and their associated settlement functions, each C/E transfer entity electronically notifies the applicable CONTRACT APP of the "opening balances" of all the debit and credit INVENTCO accounts it maintains (At this stage, the debit account balance should be zero and the credit account balance should be greater than or equal to zero). Where an INVENTCO stakeholder has an overdraft or line-of-credit with its C/E transfer entity, the credit value of this will be reflected in the non-zero balance of its credit account at this time.

Upon receipt of the above-described notifications, the applicable CONTRACT APP updates/confirms its stakeholder shadow balances. Thus, at this point-in-time, all credit and debit shadow account balances should be equivalent to their actual debit and credit account balances.

Progressively throughout the day (where "day" here is likely to be different for each C/E transfer entity due to a combination of differences in the time-zone locations of payment entities in relation to the applicable CONTRACT APP, and the likely different account processing cycles of these entities), INVENTCO-stakeholder- authorised debits and credits to INVENTCO stakeholder shadow accounts are effected on a real-time basis - debits to debit accounts and credits to credit accounts. At all times, the CONTRACT APP ensures that the cumulative debit balance of each stakeholder's debits account does not exceed the "opening balance" plus the cumulative credit balance of the stakeholder's credit account. Thus, at any time, for every INVENTCO stakeholder, the combination of each stakeholder's debit account and credit account will represent the "true", net, time-of-day value of the stakeholder's two actual special-purpose accounts maintained external to INVENTCO.

Debits and credits to INVENTCO stakeholder accounts are effected according to strict rules and conditions, being different for credits and debits. Credits can be made to any INVENTCO stakeholder's credit account with its nominated C/E transfer entity by any other INVENTCO stakeholder for any reason. Naturally, as INVENTCO stakeholders will not know the account details of other stakeholders, such credits will be effected either automatically, according to information and rules known by the applicable CONTRACT APP, or semi-automatically by way of an INVENTCO stakeholder requesting from VIRPRO, as they need to do so, a credit-account number of the stakeholder to which they wish to transfer assets. This account number may only be valid for a nominated period and would not typically be the specified stakeholder's actual account number with its nominated consideration/entitlement transfer entity - it would only be a reference to an INVENTCO file containing this number.

On the other hand, debits can only be made to an INVENTCO stakeholder's debit account with its nominated C/E transfer entity by the stakeholder itself, and by other stakeholders explicitly granted this right by each stakeholder, subject to these other stakeholders exercising this right according to the rules and conditions specified for them.

Where an INVENTCO stakeholder seeks to initiate/authorise debits to its nominated account(s) on its own, this can only be done through the stakeholder satisfactorily completing the identification and security procedures set down by their C/E consideration/entitlement transfer entity (and reflected in VIRPRO-specified INVENTCO communication procedures). The type of procedure set down by all participating C/E transfer entities involves (at least) the following: First, the consideration/entitlement transfer entity supplying VIRPRO with a confidential file of account Pin numbers corresponding to each of its INVENTCO stakeholder debit accounts, and a similarly confidential "black box" which, by initiating any of a number of possible proprietary password request-response processes involving any one of its customers possessing the appropriate device(s), confirms that remote messages received from that customer, and processed by the "black box", are authentic. Second, the consideration/entitlement transfer entity supplying their INVENTCO customers with a programmable smart card (or equivalent device) enabling each customer, remotely - via telephone or direct computer line, to unambiguously confirm their identity with their INVENTCO-maintained account, thereby having the capability to authorise debits to their account within predefined parameters concerning factors such as maximum transaction amounts, possible transaction types, account usage patterns and so on. Third, INVENTCO providing the mechanisms for direct, confidential, stakeholder communications with their C/E transfer entity shadow debit accounts, and the formal updating of these accounts, through non real-time processes, utilizing the unique time-stamped reference numbers created as/when stakeholders authorise access to their account records.

Where an INVENTCO stakeholder has authorised other INVENTCO stakeholders to initiate debits to (any of) its nominated account(s) according to a standing authority of some type, this can only be done through the authorised stakeholder itself satisfactorily completing the identification and security procedures set down by the authorisation-granting stakeholder's nominated C/E transfer entity (and reflected in VIRPRO-specified INVENTCO communication procedures). Once again, the type of procedure, set down by all participating C/E transfer entities in this respect, involves (at least) the following: First, the C/E transfer entity supplying VIRPRO with a confidential file of account Pin numbers corresponding to each of its INVENTCO stakeholder debit accounts and each other INVENTCO stakeholder which has been authorised to effect debits (within defined parameters) to these accounts. Second, the C/E transfer entity supplying VIRPRO with a similarly confidential black box which, by initiating any of a number of possible proprietary password request-response processes involving an entity nominated by any of its customers possessing the appropriate device(s), confirms that remote messages received from that authorised entity, and processed by the black box, are authentic. Third, the C/E transfer entity supplying their INVENTCO customers with a collection of programmable smart cards (or equivalent devices), for distribution to these authorised entities, enabling each authorised entity, remotely - via telephone or direct computer line - to unambiguously confirm their identity with the customer's PAYACC SHADOW account, thereby having the capability to authorise debits to this account (again, within predefined parameters concerning factors such as maximum transaction amounts, possible transaction types, account usage patterns and so on). And four, INVENTCO providing the mechanisms for direct, confidential, authorised stakeholder communications with a stakeholder's C/E transfer entity shadow debit account(s).

At the end of each C/E transfer entity's specified day (or part of a day), the applicable CONTRACT APP transfers (at least) two things to the entity: First, if required, a series of figures representing the exchange settlement (or equivalent) accounting entries it has or will communicate to the C/E transfer entity's appropriate clearing authority (for each of the applicable consideration/entitlement denomination, currency and national currency types of the payments/receipts involved) where these figures represent the balancing net debit or credit figure corresponding to the aggregation of all of the entity's INVENTCO customer transactions in the prior day. And second, a detailed file of all customer transactions effected during the day (corresponding, if required, to the above-described net figures). Upon their receipt of these transactions and summary figures, the C/E transfer entity then debits/credits each transaction to the appropriate actual customer accounts, enabling new "closing" account balances to be calculated (these "closing" balances should be exactly the same as the end-of-day balances commumicated by the applicable CONTRACT APPS with it's file of customer transactions). In turn, these "closing balances" become the C/E transfer entity's account "opening balances" for the next day. The CONTRACT APPS notification process then repeats itself.

Where applicable, at days-end for the "clearing house" of clusters of like C/E transfer entities (for example, a national central bank), CONTRACT APP transfers netted exchange settlement accounting entries to the clearing houses concerned. These entries serve to "balance the individual customer account entries transferred to each associated C/E transfer entity individually.

8. Industrial Applicability

The invention has industrial application in the use of electrical computing devices and data communications. The apparatus and methods described allow the management of risk in an automated manner by means of programming of the computing devices. The types of events associated with the risk management apparatus and methodologies includes physical and technical phenomena, and therefore have value in the field of economic endeavour.

APPENDIX A

GLOSSARY OF KEY TERMS

A.

Alpha (X)

The Ordering party-specified event value corresponding to the Xth future product event value contract entitlement payoff (payout) inflection point.

Application Promoter

An entity authorised by VIRPRO that specifies and administers defined rules and regulations underlying a defined CONTRACT APP - including the specific products offered for trading; categories of, and conditions of involvement, of stakeholders; nature of involvement and dispute resolution procedures of stakeholders.

Automatic/manual deal and no deal flags

Indicators notified by each stakeholder to CONTRACT APP specifying the manner in which that stakeholder wishes to deal with each other stakeholder.

AXSCO

A communications co-ordination and security system, linked to all stakeholders and component applications.

B.

Base Pricing probabilities

The prices set by sellers for unit entitlement payoffs of a

contract at each of its possible future index values denominated in the contract's formally specified consideration/entitlement, currency and national currency.

Beta (X)

The Ordering party-specified desired entitlement payoff (payout) amount in the desired currency denomination of contract entitlement payout (payoff) and national currency denomination of contract entitlement payout (payoff) corresponding to the Xth event value inflection point.
Bilateral Obligations Netting indicator

An indicator that individual 'rolling' net present values of future payment/receipt commitments to/from all pairs of participating stakeholders are to be netted.

Bilateral Payments Netting indicator

An indicator that individual end-of-day gross payments/receipts to/from all pairs of participating INVENTCO stakeholders are to be netted.

C.

Commission rate

The minimum required percentage profit margin required by a Potential Counterparty above the "breakeven" bid price for an Ordering party purchase order.

Consideration/Entitlement Transfer Entity

An entity acceptable to VIRPRO and the Application Promoter, satisfying defined minimum standards of financial strength, credit standing and integrity, able to maintain Consideration/entitlement

accounts on behalf of stakeholders and effect transfers of those assets as directed.

CONTRACT APP stakeholder types

Expected stakeholder types are Application Promoter, Product Sponsor, Product Ordering party, Counterparty, Counterparty-Guarantor, Regulator, Consideration/entitlement Transfer Entities and Miscellaneous other parties.

Contract and Product "absolute loss" limit

A value limit specified by a potential counterparty of the maximum absolute loss it is prepared to sustain on a contract/product irrespective of the assessment of the likelihood of any particular level of possible loss being incurred.

Contract and Product "expected loss" limit

A value limit specified by a potential counterparty of the maximum expected loss it is prepared to sustain on a contract/product based on the counterparty's assessment of the likelihood of all levels of possible loss being incurred.

Contract Authorisation

A process of verifying that an Ordering Party product purchase order contains data appropriate to the product being sought and that the Ordering Party is accurately identified and credentialled.

Contract Collateralisation indicator

A descriptor set by the Application Promoter specifying whether and on what basis, counterparties may be required to periodically transfer assets/monies (collateral) to an independent trust fund

to ensure they will be able to meet their potential entitlement payoff obligations on the maturity date of a contract.

Contract Confirmation

The process of securing the positive agreement of all affected stakeholders to a purchase order, including acknowledgement by the relevant Consideration/entitlement transfer entity of the Ordering party's ability to pay the required product consideration and fees, either automatically or through manual approvals.

Contract Matching

See Ordering party/Potential counterparty matching process.

Contractual Obligation

a. A binding commitment one entity (or group of entities) has to provide products or services or information to another entity (or group of entities) in exchange for an agreed quantity of other products, services or information.

b. A binding commitment all entities have to the network and general management system entity VIRPRO and thus to each other, to accept constraints on their activities imposed by other authorised entities on terms specified and agreed to by them as a condition of their participation in one or more of the component systems.

Contract Portfolio Netting

A term used to describe the process of "setting-off" or "netting", the future payment entitlement obligations between Ordering parties and Counterparties, either bi-laterally or multi-laterally.

Currency and National Currency exchange rates

The rates used to convert contract consideration/entitlement currency and national currency requirements into the product's consideration/entitlement currency and national currency denomination.

D.

Deal flag

An indicator or "flag" notified to CONTRACT APP signifying that the stakeholder is satisfied to deal unreservedly with the stakeholder against whom the flag has been set.

Defined Circumstances

The possible combinations of the categories of product-order information provided by Ordering parties.

Defined Probability Distributions

A set of pricing probability parameters specified by an Ordering party and including at least, a probability distribution type identifier, the expected value of the distribution, the standard deviation of the distribution and a probability distribution adjustment value or function.

Desired Currency Denomination of Contract Entitlement

A term indicating the currency in which an Ordering party wishes to receive potential entitlement payments from the sought contract.

Desired Currency Denomination of Consideration Payment

A term indicating the currency in which an Ordering party wishes to pay the required consideration for the contract sought.

Desired National currency Denomination of Contract Entitlement

A term indicating the National currency in which an Ordering party wishes to receive potential entitlement payments from the sought contract.

Desired National currency Denomination of Consideration Payment

A term indicating the National currency in which the Ordering party wishes to pay the required consideration for the contract being sought.

Discount rate

The rate used to determine the present value of a potential counterparty's expected future entitlements.

E.

Entitlement

The payout expected by the offering party at maturity as specified for each outcome in the range of outcomes. The payout can be both positive and negative in value over the range of outcomes, and can be in the form of money or other non-money types of goods, services, promises, credits or warrants.

EV-CE pricing

A price discovery mechanism for primary contracts meaning "expected value certainty equivalent pricing" being the calculated expected present value or future value of the contract.

Expected Value

A function in EV-CE pricing which means the sum of the products of all possible contract entitlement payoff/payout amounts and the Ordering party's/Counterparty's assessment of the probability of occurrence of the future events which would contractually give rise to these entitlement payoff amounts.

Expected value limits on a Counterparty's aggregate product portfolio

Optional value limits specified by a Potential counterparty at any one time, where time can be specified in terms including "equivalent maturity date"; "same-month maturity date" and "all possible maturity dates" including product expected loss limits and maximum (and possibly minimum) proportion of the expected total loss of the aggregate of the Counterparty's product portfolio that can be accounted for by the expected loss on the individual contract/product.

**G.**

Gamma(X)

The Ordering party-specified desired shape of the function between each of the co-ordinates Alpha(1), Beta(1) and Alpha(2), Beta(2) and so on; such that Gamma can represent all possible mathematically definable shapes.

**I.**

I-INVENTCO

The infrastructure component of INVENTCO.

INVENTCO

A collection of one or more (potentially interrelated) systems, where each system is the combination of a telecommunications, computing and other forms of infrastructure, and a variety of markets and support services distributed by this infrastructure.

**M.**

M-INVENTCO

A depository of VIRPRO authorised "markets" application software.

Manual deal flag

An indicator or "flag" notified to CONTRACT APP by a stakeholder signifying that the stakeholder wishes to manually approve a transaction involving the other stakeholder against whom the flag has been set.

Multilateral Payments Netting indicator

An indicator that individual end-of-day gross payments/receipts to/from all participating stakeholders from/to a specified third party trustee/clearing entity are to be netted.

Multilateral Obligations Netting indicator

An indicator that individual 'rolling' net present values of future payment/receipt commitments to/from all participating stakeholders from/to a third party trustee/clearing entity are to be netted.

**N.**

Negative Contract Payoffs

A type of contract in which the contract Ordering party may have a contingent payoff to the contract's Potential counterparty (i.e. the reverse of a normal contract).

No Deal flag

An indicator or "flag" notified to a CONTRACT APP by a stakeholder signifying that the stakeholder does not wish to deal in any way with the other stakeholder against whom the flag has been set.

**O.**

Ordering party Contingent Claims Function

Specifications of a product payoff or a mathematical function to calculate an Ordering party's product payoff requirement.

**P.**

Portfolio Product "expected loss" limit

A value limit, specified by a potential Counterparty, of the maximum expected loss the potential Counterparty is prepared to sustain on its product portfolio based on the Counterparty's assessment of the likelihood of all levels of possible loss being incurred.

Product Ordering party

An entity acceptable to VIRPRO and the Application Promoter, interested in and able to acquire a CONTRACT APP product.

Product Establishment date/time

The date/time an Application Promoter first offers a defined product for trading.

Product future event value "density" indicator

An indicator specifying the number of intermediate points between the minimum and maximum future event product definition values specified for the product by the Application Promoter/Product Sponsor.

Product event value "width" indicator

An indicator specifying the range (minimum-maximum) of future event values accommodated by the product as set by the Application Promoter/Product Sponsor.

Product future event value

A term used to indicate the actual value of a defined product at its date/time of maturity.

Product Maturity date/time

The date-time at which the Application Promoter is required to make a determination of the actual event value to enable entitlement and related payoffs on successful contracts.

Product Price Quote requests

A type of product purchase order for which the matching process is terminated and the result communicated to the Ordering party, when a desired price bid or range of price bids has been obtained.

Product Purchase Orders

Specific product purchase orders for which the Ordering party is seeking a potential Counterparty match, which may be of three types: automatic orders; manual orders and "hide" orders.

Product Purchase Order withdrawals

Ordering party-initiated requests to withdraw from processing pre-submitted but as yet unconfirmed product purchase orders.

Product potential Counterparty

An entity acceptable to VIRPRO and the Application Promoter, exceeding a defined minimum standard of financial strength, credit standing and integrity, offering defined CONTRACT APP products to product Ordering parties.

Product Sponsor

An entity acceptable to VIRPRO and the Application Promoter, having responsibility for detailed definition of product parameters including the continual determination of product values over time.

**R.**

Regulator

An entity acceptable to VIRPRO having local, state, national or international jurisdiction over one or more CONTRACT APPS.

S.

Set of Pricing Probabilities

The range of probabilities a potential Counterparty applies to a class of Ordering party order, specified by the value of "defined circumstances" and applying to every feasible future product event defined for that product by an Application Promoter.

Stakeholder

An entity that is a registered participant in one or more of INVENTCO's component parts.

V.

Value Dates

The respective dates/times at which matched contract consideration and entitlements are agreed to be made by the relevant Ordering party/Counterparty to a contract.

VIRPRO

The network and general management system component of INVENTCO.

X.

"X"

A term indicating the number of contract payoff (payout) inflection points the Ordering party is seeking within the allowable range of future product event values (including the value range extremity points).

APPENDIX B

## CONTRACT APPS

### Overview

CONTRACT APPS is a term used to refer to certain types of units of applications software which can, but do not need to, reside within an INVENTCO system's (M-INVENTCO) depository of "markets" software. The purpose of individual CONTRACT APPS is two-fold: First, to effect the trading/exchange/transfer of risk aversion transactions (and derivatives of these transactions) between participating ordering parties and counterparties on terms acceptable to the parties involved as well as to others within INVENTCO registered as having a legitimate interest in the nature, size and composition of these trades/exchanges/transfers. And second, to appropriately manage all matched/confirmed contracts through to their time of maturity, including their ultimate settlement.

Individual CONTRACT APPS perform theses tasks according to the specific rules they embody, defined by their own stakeholders. CONTRACT APPS effectively reside upon AXSCO and within M-INVENTCO.

### Stakeholder Types

CONTRACT APPS accommodate eight (and potentially fewer) generic types of their "own" stakeholders (as distinct from other INVENTCO stakeholders) termed: application promoter, product sponsors, product ordering parties, potential product counterparties, counterparty-guarantors, regulators, consideration/entitlement transfer entities, and other miscellaneous parties.

Some details of these stakeholders are as as follows: an application promoter is an entity having overall responsibility for the functioning of a CONTRACT APP (that responsibility having been granted by VIRPRO); a product sponsor is an entity which promotes and administers the rules of trading, and subsequent management, of defined contingent claims contracting product(s) selected for inclusion in a CONTRACT APP by its application promoter; a product ordering party is an entity seeking to acquire a CONTRACT APP product from a potential product counterparty (where a product ordering party can also be a product counterparty); a

potential product counterparty is an entity potentially prepared to satisfy the CONTRACT APP product needs of a product ordering party (where a potential product counterparty can also be a product ordering party); a counterparty-guarantor is an entity guaranteeing a product counterparty's ability to settle any/all of its potential entitlement transfer obligations to a product ordering party to which it has become a counterparty as a result of a CONTRACT APP effected "match"; regulators are entities overseeing the on-going performance of all other stakeholders involved in a CONTRACT APP, especially counterparty-guarantors; consideration/entitlement transfer entities are entities with which all other CONTRACT APP stakeholders maintain "accounts" to transfer required considerations/entitlements to/from all each other; and miscellaneous parties are all other entities having a defined stake in the functioning of a CONTRACT APP.

Miscellaneous parties include: independent entities contracted by application promoters or product sponsors to formally determine the "value" of products on their date-of-maturity; multilateral obligations and payment netting trustee/clearing entity organisations; independent (non-regulator) taxation and other governmental authorities; electronic "gateway" providers (external to INVENTCO); and host system organizations (in the case of CONTRACT APPS within INVENTCO systems linked to a common host system). CONTRACT APPS accommodate any number of their own stakeholders of each of the above-defined generic types.

Product Types

CONTRACT APPS can support risk aversion contract "product types" with any combination of values of multiple attributes, including: the fundamental nature/purpose of the product; the establishment/maturity date/time of the product; the consideration/entitlement denomination type, currency (if applicable), and national currency (if applicable) consideration/entitlement identifiers associated with the product; the "width" and "density" identifiers of possible future event values of the product; and miscellaneous other product descriptors.

The "fundamental nature/purpose of the product" attribute may incorporate identifiers including: a conditional entitlement-payoff dimensioins identifier; a market identifier; a sub-market identifier; and

a market-type identifier. The "conditional entitlement-payoff dimensions identifier" specifies the number of dimensions to an ordering party's sought-after conditional entitlement-payoffs. The market identifier specifies whether the product relates to an "actual" or "perceived" phenomenon (or phenomena), the number of such phenomena (if applicable), and the applicable phenomenon category (for example, industrial, scientific, financial market hedging, and so on). The sub-market identifier provides a more specific description of the product concerned. The market-type identifier specifies the applicable future period date/time (where this can be anything - for example, "at a defined contract maturity date/time", "at a specified time on or before contract maturity date/time", and so on), and type-of-future event involved (where, again, this can be anything - for example, as an indicator of some relative value of a phenomenon (spot value, average value and so on), or as an indicator of the "rate-of-change" of some value of a phenomenon.

The "establishment and maturity date/time of the product" attribute specifies, respectively, the date/time an application promoter first offered a product for trading, and the date/time at which the defined product matures (that is, the date/time at which the product sponsor is required to make a determination of the actual event value at that date/time so enabling contract entitlement transfers to be effected).

The "consideration/entitlement denomination type, currency (if applicable), and national currency (if applicable) consideration/entitlement identifiers associated with the product" attribute specify: the type of consideration/entitlement involved (where this can include rights and entitlements, physical assets, and "money" of all possible types); in the case of a "money" consideration/entitlement type, the currency of the consideration/entitlement (where such currency types can include: public/private record-depository deposits, commercial credit card company deposits, commercial bank deposits, central bank deposits, taxation authority deposits, and deposits in non-bank clearing houses and depositories, and the like); and, again, in the case of a "money" consideration/entitlement type, the national currency of the consideration/entitlement identifier (where such national currency types can be in any national currency, or form of synthetic currency).

The "width and density identifiers of possible future event values of the product" attribute specifies, respectively: the minimum and maximum values of the allowable range of future event values accommodated by a product; and the number of intermediate points between the defined minimum and maximum future event values accommodated by the product.

The "miscellaneous other product descriptors" attribute specifies such things as: the degree of stakeholder access granted the product by the application promoter in question; the forms of trading-services granted the product by the application promoter in question (where this product attribute specifies the accessibility of the product to a range of feasible "stakeholder services" with respect to such things as contract portfolio netting, contract collateralisation, consideration credit provision, ordering party ability to specify negative contract entitlements, and availability of secondary/derivative market product trading) ; and the degrees of trading, clearing and settlement "transparency" granted the product by the application promoter in question.

Transaction Types

A range of primary, secondary, derivative-primary, and derivative-secondary risk aversion contract transactions are accommodated by CONTRACT APPS.

The range of "primary" (and derivative-primary (options, for example)) risk aversion contract transaction-types (handled principally by Processes 2 and 4 - described in Appendix C) include: ordering party product orders (and option orders) for which the ordering party is seeking a counterparty "match", ordering-party price quote (and options price quote) requests; and ordering-party withdrawals of existing product orders (and withdrawal of options on product orders). Ordering party product orders consist of: automatic orders and manual orders. Automatic orders consist of: normal-automatic orders (being orders the ordering party is prepared to have matched automatically, subject only to the constraints defined in the ordering party's order, in addition to whatever "match" constraints other CONTRACT APP stakeholders have prespecified); and anonymous-automatic orders (being orders the ordering party is prepared to have matched automatically, subject to the

constraints defined in the ordering party's order, in addition to whatever "match" constraints other CONTRACT APP stakeholders have prespecified, provided that no CONTRACT APP stakeholder has sought to manually authorise the transaction and, through so doing, being able to potentially identify the ordering party). Manual orders consist of normal-manual orders (being orders the ordering party wishes to manually authorise before they are finalised - that is, after a counterparty "match" has been effected but before the contract has been "confirmed" - subject only to the constraints defined in the ordering party's order, in addition to whatever "match" constraints other CONTRACT APP stakeholders have prespecified); and anonymous-manual orders (being orders the ordering party wishes to manually authorise before they are finalised - that is, after a counterparty "match" has been effected but before the contract has been "confirmed" - subject to the constraints defined in the ordering party's order, in addition to whatever "match" constraints other CONTRACT APP stakeholders have prespecified, provided that no CONTRACT APP stakeholder has also sought to manually authorise the transaction and, through so doing, potentially identify the ordering party).

The range of "secondary" (and derivative-secondary (options, for example) risk aversion contract transaction-types (handled principally by Processes 3 and 5 - described in Appendix B) include: acquiring party product orders (and option orders) for which the acquiring party is seeking to "acquire" the position of a specified "risk counterparty" stakeholder in an existing contract; acquiring-party product price indications (and option price indications); and acquiring-party withdrawals of existing product orders (and option withdrawals).

Acquiring party product orders for which the acquiring party is seeking to "acquire" the position of a specified "risk counterparty" stakeholder in an existing contract, consist of automatic orders and manual orders.

Automatic orders consist of: normal-automatic orders (being orders the acquiring party is prepared to have matched automatically, subject only to the constraints defined in the acquiring party's order, in addition to whatever "match" constraints other CONTRACT APP stakeholders have prespecified); and anonymous-automatic orders (being orders the acquiring party is prepared to have matched automatically, subject to the

constraints defined in the acquiring party's order, in addition to whatever "match" constraints other CONTRACT APP stakeholders have prespecified, provided that no CONTRACT APP stakeholder has sought to manually authorise the transaction and, through so doing, being able to potentially identify the acquiring party).

Manual orders consist of normal-manual orders (being orders the acquiring party wishes to manually authorise before they are finalised - that is, after a "match" has been effected but before the contract "sale" is "confirmed" - subject only to the constraints defined in the acquiring party's order, in addition to whatever "match" constraints other CONTRACT APP stakeholders have prespecified); and anonymous-manual orders (being orders the acquiring party wishes to manually authorise before they are finalised - that is, after a "match" has been effected but before the contract "sale" is "confirmed" - subject to the constraints defined in the acquiring party's order, in addition to whatever "match" constraints other CONTRACT APP stakeholders have prespecified, provided that no CONTRACT APP stakeholder has also sought to manually authorise the transaction and, through so doing, potentially identify the acquiring party).

<u>Primary Product Pricing Process Types</u>

CONTRACT APPS enable potential counterparties to automatically establish "bids" on any defined (primary and derivative-primary) product order according to either an "expected value/utility-certainty equivalent" (EV/U-CE) pricing regime, or any other mathematically-definable pricing regime.

In the case of an "expected value-certainty equivalent" (EV-CE) pricing regime, each potential counterparty specifies, amongst other things: an indicator of certain defined attributes of an as-yet-unknown product order; a base commission rate; a base discount rate; (if applicable) a set of base consideration/entitlement denomination, currency, and national currency exchange rates; base unit product prices; and desired adjustments to the preceding base-bid-price determinants dependent on any specific order (submitted by a specified ordering party).

The above-described indicator of certain defined attributes of an as-yet-unknown product order (termed, defined circumstances) may reflect

any combination of the multiple characteristics of an order (irrespective of the ordering party concerned), including: the multiple attributes of the contingent claims function sought; the ordering party's interest or otherwise in being granted credit by a counterparty; the ordering party's interest or otherwise in participating in the possible netting and collateralisation features of the APP; and the maximum (and possibly minimum) consideration amount the ordering party is prepared to pay for their defined product. The above-described base commission rate specifies the minimum required percentage profit margin required by the counterparty above their breakeven consideration bid price for a product order.

The above-described base discount rate determines the present value of the counterparty's expected future entitlement associated with a contract (net of the ordering party's consideration, and making allowance for the future income stream this consideration is expected to generate). The above-described set of base consideration/entitlement denomination, currency and national currency exchange rates are used, where applicable, to convert an ordering party's contract requirements into the base consideration/entitlement denomination, currency and national currency of the product so enabling the contract matching process to make like comparisons of counterparty bids for product orders.

The above-described base unit product prices are prices set by potential counterparties for unit entitlement-payoffs of a contract at each of its possible future values, denominated in the contract's formally specified consideration/entitlement type and, if applicable, currency type and national currency type (where these unit prices can be specified as directly input figures for every feasible future product event (the sum of which may or may not add to 1), or as parameters of defined mathematical functions). The above-described desired adjustments to the preceding base-bid-price determinants dependent on the specific ordering party submitting a specific order can include: a commission rate adjustment; a discount rate adjustment; a consideration/denomination exchange rate adjustment; a currency exchange rate adjustment; and a national currency exchange rate adjustment.

In the case of an "expected utility-certainty equivalent" (EU-CE) pricing regime, each potential counterparty specifies all of the

above-described parameters applicable to a EV-CE pricing regime as well as "utility bench-mark" figures for all possible consideration and entitlement "payment amounts" which could, conceivably, be associated with a product/contract.

Primary Product Matching Process Types

CONTRACT APPS may similarly accommodate any of a number of possible (primary and derivative-primary) order matching processes where these processes can be of multiple types, including sequential processes and simultaneous processes.

Sequential order matching processes can be characterised according to the "sequence determining" and "matching" rules they embody, where "sequence" rules may be of various types: "last-in-first-out (LIFO)", "first-in-first-out" (FIFO)", priced priority, and so on; and matching rules may also be of various types - for example, a specific matching process could seek, for each product ordering party, a counterparty (or counterparties) offering a product price at or below the maximum price the ordering party is prepared to pay (where the determined contract price could be either the lowest price offered by a potential counterparty, the mid-point between the an ordering party's specified "maximum consideration amount" and the lowest price offered by a potential counterparty, and so on); or seek for each potential product counterparty an ordering party prepared to pay the maximum price above a price at which the counterparty is prepared to deal (here, the determined contract price could be either: the ordering party's "maximum consideration amount " price, the mid point between the minimum price the counterparty is prepared to receive and the ordering party's "maximum consideration amount" price, and so on).

Simultaneous order matching processes are those seeking some type of optimum solution according to pre-defined objectives. For example: "maximise the number of ordering party-counterparty matches"; "maximize the aggregate consideration and/or entitlement value of ordering party-counterparty matches"; or "minimize the value of a function specifying the sum of the differences (possibly weighted according to their perceived importance) between the actual and desired values of match attributes of ordering parties and counterparties".

Both of the above-described sequential and simultaneous matching processes can also accommodate conditional contract matching rules; and pre and post tax price optimisation mechanisms.

Application Types

CONTRACT APPS may be: "in-house" APPS or "public" APPS; "single potential counterparty" APPS or "multiple potential counterparty" APPS; APPS with differing degrees and forms of "regulator" oversight of other application stakeholders; and APPS with differing degrees and forms of "counterparty-guarantor" oversight of product potential counterparties.

CONTRACT APPS support consideration "payment" value dates being "immediate" (meaning exactly the time at which a contract match is confirmed); or deferred until a defined time in the future, measured in terms of seconds, minutes, hours, or days. Similarly, CONTRACT APPS support entitlement "payment" value dates being "immediate" (meaning exactly the time at which the applicable application promoter formally notifies other CONTRACT APP stakeholders of the "result" of a maturing contract); or deferred until a defined time after the "result" of a maturing contract is known.

CONTRACT APPS allow contracts to be modified and liquidated after their creation. Contracts can be modified through: direct negotiation by the relevant "risk counterparties" to a particular contract; or the purchase/sale of "derivative" secondary risk aversion contract transactions (See Process 5 description in Appendix C). Contracts can be similarly liquidated after their creation through sale of the contract (within or outside INVENTCO); and through direct negotiation between the initial ordering party and counterparties to the contract. They can also be effectively liquidated through the ordering party/counterparty acquiring a mirror image of the contract to which they are a party (within or outside of INVENTCO).

Post Order Process Types

CONTRACT APPS undertake various generic types of "post-order-process" management functions for all the above-described generic types of "transactions", including: a function which maintains a formal record of contractual commitments entered into by all CONTRACT APP

stakeholders with one another, and with VIRPRO-authorised entities external to either the applicable CONTRACT APP or INVENTCO overall; a function which effects the independent valuation of consideration and entitlement obligations between CONTRACT APP stakeholders, and between CONTRACT APP stakeholders and VIRPRO-authorised entities external to each applicable CONTRACT APP; a function which determines and effects "collateralisation" consideration/entitlement transfers between CONTRACT APP stakeholders, and between CONTRACT APP stakeholders and VIRPRO-authorised entities external to each applicable CONTRACT APP, based on above-described valuations of consideration and entitlement obligations associated with CONTRACT APP transactions; a function which determines and effects, as required, the bi-lateral netting of accumulated "consideration/entitlement" obligations " between CONTRACT APP stakeholders, and between CONTRACT APP stakeholders and VIRPRO-authorised entities external to each applicable CONTRACT APP; a function which determines and effects, as required, the multi-lateral netting of accumulated "consideration/entitlement" obligations" between CONTRACT APP stakeholders, and between CONTRACT APP stakeholders and VIRPRO-authorised entities external to each applicable CONTRACT APP (involving a nominated third-party "clearing house" entity); a function which manages the processing, accounting, reporting, and entitlement "payment" tasks associated with maturing contracts; a function which determines system usage and access fees payable to/from all CONTRACT APP (and other INVENTCO) stakeholders, and to/from VIRPRO-authorised entities external to INVENTCO; a function which determines and effects, as required, "bi-laterally netted" consideration/entitlement transfers from/to CONTRACT APP stakeholders themselves, and from/to CONTRACT APP stakeholders and VIRPRO-authorised entities external to each applicable CONTRACT APP; a function which determines and effects, as required, "multi-laterally netted" consideration/entitlement transfers from/to CONTRACT APP stakeholders themselves, and from/to CONTRACT APP stakeholders and VIRPRO-authorised entities external to each applicable CONTRACT APP (involving a nominated third-party "clearing house" entity); and a function which compiles and distributes CONTRACT APP (and other INVENTCO) stakeholder customised information.

Supplementary Process Types

CONTRACT APPS undertake various other types of support processes, including: enabling stakeholders to transfer consideration, entitlement and other "payment" obligations to and from one another, independently of transfers initiated by CONTRACT APP transactions (See Process 7 description in Appendix C); providing CONTRACT APP (and other INVENTCO) stakeholders with shared access to specialist systems to assist them to decide how best to interface with the multiple aspects of INVENTCO (See Process 8 description in Appendix C); and providing CONTRACT APP (and other INVENTCO) stakeholders with access to a range of INVENTCO-facilitated "value added services" (See Process 9 description in Appendix C).

Order Matching Constraint Types

For their operation, CONTRACT APPS require all stakeholders to a specific APP to specify, amongst other things, which other stakeholders they do and do not want to have interactions with, and the conditions under which they wish to manually authorise some aspect of a transaction involving any other CONTRACT APP stakeholder over which they have control authority of some form.

In specifying which other stakeholders they do and do not want to have interactions with, CONTRACT APP stakeholders have various options. Application promoters can specify acceptable product sponsors, products, ordering parties and potential counterparties within their application - individually and by type. Similarly, product sponsors can specify acceptable application promoters, products, ordering parties, potential counterparties and counterparty-guarantors within their application - individually and by type.

Product counterparties and ordering parties (collectively) can specify: ordering parties/potential counterparties they do and do not want to deal with - individually and by type; the extent of their preparedness to be involved in contract netting and collateralisation arrangements provided for by their application promoter; application promoters, product sponsors, products, and consideration/entitlement transfer entities they do and do not want to deal with - individually and by type; ordering parties/potential counterparties they prefer to deal

with, and those with which they wish to deal exclusively; the degree of trading transparency they require; and their wish or otherwise to manually authorise order matches before they are confirmed.

Potential counterparties can specify which ordering parties, or classes of ordering parties, they are prepared to offer credit to (and under what terms), and ones they are prepared to allow "ordering party-guarantors" to offer credit to and under what terms. Similarly, product ordering parties (uniquely) can specify: counterparty-guarantors with which they do and do not want to deal (individually and by type); counterparties with which they wish to deal exclusively or preferentially to obtain a particular form of counterparty-credit; and potential "ordering party-guarantors" (external to INVENTCO) with which they do and do not want to deal.

Counterparty-guarantors can specify which potential counterparties have their authority to operate and which application promoters, product sponsors and ordering parties they are prepared, indirectly, to have relationships with. Similarly, regulators can specify which counterparty-guarantors, potential counterparties, ordering parties, application promoters, product sponsors and products have their authority to operate. Finally, consideration/entitlement transfer entities can monitor and maintain up-to-date rules with respect to ordering parties, counterparties, application promoters, product sponsors, counterparty-guarantors, and regulators they are and are not prepared to deal with - individually and by type.

Ordering Party Requirements

For their operation, CONTRACT APPS require primary product ordering party stakeholders to a CONTRACT APP, in registering an order for a product of their choice, to specify: the above-described "product type" and "other stakeholder involvement" information; multiple attributes of the specific order they are seeking; their interest or otherwise in being granted credit by potential counterparties for their contract consideration amount, or in availing themselves of the possible netting and collateralisation features of the APP concerned; the maximum (and possibly minimum) consideration "price" they are prepared to pay for their defined product; and various other dimensions of their needs, where

these include: the name/title by which they wish to be identified by other APP stakeholders; the time at which they wish their order to be submitted; the period of time after an order has been submitted that they wish the order to be retained before it is automatically withdrawn; whether or not they are prepared to accept partial matches of their order; the degree of market transparency they wish to be exposed to; whether or not they wish wish to have the option of trading a matched contract on an authorised INVENTCO secondary market (See Process 5 description in Appendix C); whether or not they wish to manually consider/authorise potential counterparty quotes on an order; in the case where potential counterparty quotes are required to be manually considered/authorised, the maximum time after potential counterparty quote details are provided to the ordering party that the ordering party wishes to consider the quote(s); and the consideration/entitlement transfer entity accounts from which/to which they wish to have relevant "payments" made/received.

The above-mentioned multiple attributes of a specific primary order an ordering party is seeking include: their wish or otherwise to directly input the entitlement "coordinates" of their desired contingent claim order; their wish or otherwise to mathematically specify an entitlement function reflecting their desired product order, where such functions can be single or multidimensional (indicating a contingent contract entitlement conditional on two or more phenomena); the "consideration/entitlement unit", "currency" (if applicable), and "national currency" (if applicable) in which they wish to "pay"/"receive" their contract consideration/entitlement. Where an ordering party wishes to mathematically specify their desired primary product order as a single-dimensional entitlement function: the input term "X" can indicate the number of contract entitlement "inflection points" the ordering party is seeking within the allowable range of future product event values (including the value range extremity points); the input term "Alpha (X)" can indicate the ordering party-specified event value corresponding to the Xth future product event value contract entitlement inflection point; the input term "Beta (X)" can indicate the ordering party-specified desired entitlement amount (in the desired "consideration/entitlement form", "currency" and "national currency" entitlement denomination)

corresponding to the Xth event value inflection point; and the input term "Gamma (X-1)" can indicate the ordering party-specified desired shape of the function between each of the co-ordinates: [Alpha (1), Beta (1)] and [Alpha (2), Beta (2)], [Alpha (2), Beta (2)] and [Alpha (3), Beta (3)], and so on (as applicable), where Gamma can represent all possible, mathematically definable, shapes.

Potential Counterparty Requirements

For their operation, CONTRACT APPS also require primary product "potential counterparty" stakeholders to a CONTRACT APP to define various parameters on the basis of which they can automatically price orders, including parameters with which they wish to establish a "consideration bid" on a defined product order; possible individual contract and product constraints they require to be satisfied if they were to become a counterparty to a defined product ordering party order; and possible expected-value product-portfolio constraints they require to be satisfied if they were to become a counterparty to a defined product ordering party order.

In defining parameters with which they wish to establish a "consideration bid" on a defined product order under a "EV-CE" pricing regime (described above), each potential counterparty is required to specify, amongst other things: an indicator of the appropriate "defined circumstances" of all possible product orders; a base "commission rate"; a base "discount rate"; (if applicable), a set of base "consideration/entitlement denomination", "currency" and "national currency" exchange rates; base "unit product prices"; and desired adjustments to the base commission rate, discount rate, exchange rates, and unit product prices on specific product orders according to the determined-value of the "defined circumstances" indicator (based on a specific product order).

Possible individual contract and product constraints the potential counterparty requires to be satisfied if they were to become a counterparty to a defined product ordering party order, include: an absolute loss limit constraint (this constraint being specified as a single-figure constraint and/or as a function constraint); an expected loss limit constraint (this constraint defining the maximum "expected"

aggregate loss the potential counterparty is prepared to incur on a contract/product, taking into account their assessment of the likelihood of all feasible future product values occurring); and a constraint on the maximum proportion of the expected total loss of the aggregate of the potential counterparty's contracts/products that can be accounted for by the expected loss of the defined individual contract/product. Similarly, possible expected-value product-portfolio constraints the potential counterparty requires to be satisfied if they were to become a counterparty to a defined product ordering party order include the maximum (and possibly minimum) proportion of the expected total loss of the aggregate of the potential counterparty's product portfolio that can be acccounted for by the expected loss of an individual contract/product.

Communications

CONTRACT APP stakeholders communicate with their applicable APP via AXSCO. Individual "stakeholder-to/from-AXSCO" communications can be by way of any/all of the following: voice communications with an AXSCO-linked "live operator" or "recorded messaging" system; touch-telephone communication with AXSCO directly; or computer-to-computer link with AXSCO (via a dedicated or dial-up communications line). With all three forms of communication, CONTRACT APP stakeholders may be required to utilize specified computer hardware and/or software mechanisms in their communications with AXSCO (including "payments" authorisation "black box" devices referred to in Appendix H).

Component Processes

In their manifestation as telecommunications/computer software residing on telecommunications/computer hardware, individual CONTRACT APPS consist of a cluster of processes (detailed in Appendix C), utilizing a number of data files, residing on one or more processing units. A cluster of nine (and potentially more or fewer) specific processes and their related data files reside within a CONTRACT APP: a process handling file administration and updating tasks supporting all other processes (termed Process 1); a process handling the receipt and processing of "primary" risk management contract transactions (termed Process 2); a process handling the receipt and processing of "secondary"

risk management contract transactions (termed Process 3); a process handling the receipt and processing of"derivative-primary" risk management contract transactions (termed Process 4); a process handling the receipt and processing of "derivative-secondary" risk management contract transactions (termed Process 5); a process handling the "back office" management of all four types of risk management contract transactions (termed Process 6); a process handling non-transaction related consideration, entitlement, and other "payment" obligation transfers between stakeholders (termed Process 7); a process handling CONTRACT APP (and other INVENTCO) stakeholder access to specialist systems to assist these stakeholders decide how best to interface with the multiple aspects of INVENTCO (termed Process 8); and a process handling CONTRACT APP (and other INVENTCO) stakeholder access to a range of INVENTCO-facilitated "value added services" (termed Process 9). These processes may function concurrently.

## APPENDIX C

## DESCRIPTION OF CONTRACT APP PROCESSES

### Process 1

Process 1 handles file administration and updating tasks supporting all other processes (Fig. 18). The PRODUCT, PRODUCT TRANS, DEAL LIST and DEAL LIST TRANS files referred to in Fig. 18 are applicable, individually or collectively, to primary, secondary, derivative-primary, and derivative-secondary contract orders. The SEL PRICE, SEL PRICE TRANS, SEL LIMIT and SEL LIMIT TRANS files are applicable only to primary and derivative-primary contract orders. The TRADE PRICE, TRADE PRICE TRANS, TRADE LIMIT and TRADE LIMIT TRANS files are applicable only to secondary and derivative-secondary contract orders.

The file administration and updating tasks handled by Process 1 comprise: dealing with general data-file information received from CONTRACT APP stakeholders; dealing with general data-file and order processing information received from relevant other INVENTCO stakeholders, particularily VIRPRO and AXSCO; dealing with trading support information received directly from CONTRACT APP stakeholders; dealing with potential counterparty primary, and derivative primary, product order "consideration bid" parameters and order-match constraints; dealing with existing-contract offering party secondary, and derivative secondary, order match conditions; and dealing with miscellaneous information from entities external to INVENTCO.

Existing and prospective stakeholders are required to supply their applicable CONTRACT APP with specified identification and other information, and to continually maintain the integrity of this information. For each stakeholder, this information includes: applicable name(s), addresses, contact numbers, and references; their desired system access medium; their consideration/entitlement transfer entity account details; and, if applicable, their required schedule of fees and charges payable by other INVENTCO stakeholders.This information is maintained in the data file ADMIN, updated information being received by way of the transaction file ADMIN TRANS.

VIRPRO is required to supply the applicable CONTRACT APP with various forms of general data-file information including: identification data relating to the application promoter for (each) CONTRACT APP; details of the permitted types of system access mediums; and consideration/entitlement denominations available in each application. Again, this information is maintained in the data file ADMIN, updated information being received by way of the transaction file ADMIN TRANS.

VIRPRO is similarly required to supply the applicable CONTRACT APP with various forms of general data-file information including: information on all data received by and sent from the various parts of INVENTCO to one another and to entities external to INVENTCO; and statistical information of various types, including data traffic volumes, data file location information and so on.This information is continuously collected by AXSCO and maintained in the data file HISTORY.

Trading support information received directly from CONTRACT APP stakeholders comprises stakeholder relationship information of a general nature, and specific information from individual stakeholders (detailed in Appendix B).

Stakeholder relationship information of a general nature comprises "transaction communication parameters" and automatic/manual deal and no deal flags". Transaction communication parameters are parameters set by all (registered) CONTRACT APP stakeholders defining the bounds within which they wish, for security reasons, all of their communications within INVENTCO to fall. Automatic/manual deal and no deal flags are "flags" set, as required, by all (registered) CONTRACT APP stakeholders indicating their requirements with respect to dealing with other CONTRACT APP stakeholders. This information is maintained in the data file DEAL LIST, updated information being received by way of the transaction file DEAL LIST TRANS.

Specific information from individual stakeholders differs according to the category of stakeholder involved.

Application promoters provide, amongst other things: information for the data file, PRODUCT (updated transactions being received from the file, PRODUCT TRANS), and further information for the data file

ADMIN (updated transactions being received from the file, ADMIN TRANS). Information for the data file, PRODUCT includes details of the specific products application promoters offer for trading/exchange/transfer. Information for the data file, ADMIN includes: the order pricing and matching process upon which the application is based; the consideration/entitlement "value date" regime upon which their application is based; the categories of other stakeholders allowed to participate in the application and the conditions under which they can do this; the specific rules of engagement of counterparty-guarantors by potential counterparties; the availability and, in turn, the terms and conditions for CONTRACT APP stakeholder utilization of "consideration credit", "collateralisation", and "netting" features of the application (embodied in the various post-order-processing management routines); and details of the consideration/entitlement transfer entities involved in the application and relevant security information concerning account access.

Product sponsors provide full details of the product(s) they are sponsoring; product ordering parties and potential counterparties (collectively) indicate, with respect to each other, the parties they either prefer to deal with or wish to deal with exclusively. Potential counterparties (exclusively) provide a variety of specific information, including: details of the Application promoter, Product sponsor, and Counterparty-guarantor rules under which they have chosen to operate; data recording the lines of credit (if any) offered to ordering parties and the general and specific terms and conditions of these credit lines (applicable to ordering parties individually and/or to defined classes of ordering parties); parameters with which a potential counterparty wishes to determine its consideration "bids" on orders. Counterparty-guarantors provide details of the potential counterparties (if any) they have agreed to guarantee and the nature of such guarantees. Regulators provide details of: all entities having a stake in the application and their relationships to one another (for example, which counterparty-guarantors cover which counterparties, which potential counterparties offer which products, and so on); specific regulations developed for the regime; and parameters defining

the taxation treatment of all types of orders and related transactions. Consideration/entitlement transfer entities provide "set-up" and on-going account access and balance-updating services. All of the above-described information is maintained in the data file, ADMIN, updated information being received by way of the transaction file ADMIN TRANS.

In dealing with potential counterparty primary product order "consideration bid" parameters and order-match constraints, potential product order counterparties are required, amongst other things, to: define various parameters with which they wish to establish a "consideration bid" on a defined product order; and define parameters with which the potential counterparty wishes to determine adjustments to the "base-price" bids on product orders according to the specific ordering party involved (this information is maintained in the data file SEL PRICE; updated information is received by way of the transaction files SEL PRICE TRANS); define possible individual contract and product constraints the potential counterparty requires to be satisfied if they are to become a counterparty to a defined product ordering party order; and define possible expected-value product-portfolio constraints the potential counterparty requires to be satisfied if they are to become a counterparty to a defined product ordering party order (these latter two categories of information are maintained in the data files SEL LIMIT and BUY LIMIT; updated information being received by way of the transaction file SEL LIMIT TRANS) (See Appendix B for further details).

In dealing with existing-contract offering party secondary order match conditions, offering parties are required, amongst other things, to specify: the Order IDs of the contracts in which the entity concerned wishes to "sell" its position as a contract stakeholder, and, for each such contract, the pricing and other parameters it requires to be satisfied before a contract position "sale" is effected.This information is maintained in the data file TRADE PRICE; updated information is received by way of the transaction file TRADE PRICE TRANS.

In dealing with potential counterparty derivative-primary product order "consideration bid" parameters and order-match

constraints, potential product order counterparties are required to provide essentially the same information described above in relation to primary product orders. However, in addition, information directly applicable to the relevant type of derivative-primary transaction concerned (say, an option to establish a primary product order at a later date) is also required.

In dealing with existing-contract-offering party derivative-secondary order match conditions, offering parties are required to provide essentially the same information described above in relation to secondary product orders. However, in addition, information directly applicable to the relevant type of derivative-secondary transaction concerned (say, an option to sell a position in a primary product order at a later date) is also required.

In dealing with miscellaneous information from entities external to INVENTCO, this information can be of any type and may, potentially, be used by any part of INVENTCO; the information is maintained in the data-file ADMIN with updated information being received by way of the transaction file ADMIN TRANS

Process 2

Process 2 handles the receipt and processing of "primary" risk management contract transactions (this term being defined in Appendix D), such transactions being of multiple types (detailed in Appendix B). Various sub-processes of Process 2 handle the receipt and processing of all possible types of these transactions, including product order processing, price quote requests, and withdrawals of existing product orders.

Primary "product orders" constitute the core "primary" risk management contract transaction type (Fig. 19 provides a summary flow chart, and the document text provides a detailed flow chart and description of the processing of this transaction type).

Primary product orders incorporate the following key items of information: ordering party identification information; CONTRACT APP application and product identification information; "other stakeholder involvement" information; the ordering party's desired form of product specification (directly input as entitlement coordinates or as

mathematical function(s)); when the order specification is by way of a single-dimensional mathematical function, the parameters of such a function (which can include: the term "X", the term "Alpha (X)", the term "Beta (X)", the term "Gamma (X-1)"; the contract consideration and entitlement "denomination type", "currency (if applicable)" and "national currency (if applicable)"; the ordering party's interest or otherwise in being granted credit by potential counterparties for the yet-to-be-determined contract consideration amount; the ordering party's interest or otherwise in availing themselves of the possible netting and collateralisation features of the APP concerned; the consideration "price" range within which the ordering party is prepared to "pay" for their defined product; miscellaneous other dimensions of the ordering party's needs, and the consideration/entitlement transfer entity accounts from which/to which they wish to have relevant "payments" made/received). Upon its receipt, all of this information is written to - and subsequently processed from - the file PORD NEW.

Three sub-processes are involved in processing primary product orders - order authorisation, order matching, and matched order confirmation . In the case of the anticipated most typical form of order, termed a "normal-automatic" primary product order these sub-processes function as follows:

The primary product order authorisation sub-process verifies that all orders contain data appropriate to the product being sought and that each ordering party is accurately identified and credentialled (this sub-process draws principally on the data-file, PPRODUCT).

The primary product order matching sub-process locates the best possible counterparty(ies) for the ordering party's transaction according to the application promoter-specified"matching rules" embodied in the APP; it does this utilizing three component sub-processes, termed: short-listing of potential-counterparties, individual potential-counterparty "pricing" calculations, and counterparty selection.

The "short-listing of potential counterparties" sub-process component establishes a list of potential counterparties (if any)

willing to offer the product sought by the ordering party, upon their receipt from the ordering party of a consideration they deem to be appropriate (this sub-process draws principally on the data-file, PDEAL LIST).

The individual potential-counterparties pricing calculations sub-process component utilises the above-described pricing parameters pre-specified by each short-listed potential counterparty to calculate the "bid" each of them is prepared to make on the ordering-party's product order (or part thereof), and to add these to the potential counterparties short-list file (this sub-process draws principally on the data-file, PSEL PRICE).

The "counterparty selection" sub-process component extracts from the above-described "potential-counterparties short-list" file the best possible counterparty(ies) for the ordering party's transaction, according to the application promoter-specified "matching rules" embodied in the APP, taking into account whatever matching constraints all applicable APP stakeholders may have prespecified. This selection being made, and the price bid being within the allowable limits specified by the ordering party, and there being no requirements for manual-approval intervention by any relevant stakeholder, a matched order is deemed to be in existence (this sub-process draws principally on the data-file, PSEL LIMIT).

The matched order confirmation sub-process effectively secures, automatically, the positive agreement of all affected stakeholders to the contract, including confirmation of the product ordering party's ability to immediately pay (or be granted counterparty credit, or ordering party guarantor credit, for) the required contract consideration (and possible other applicable fees). Automatic approvals of contracts are made by the CONTRACT APP electronically transferring resources recorded in the ordering party's applicable consideration/entitlement transfer entity account to the account of the applicable counterparty (See Appendix H for a description of the consideration/entitlement "payment" process). In turn, automatic updates of the counterparty's matching constraints maintained in the file PSEL LIMIT are made.

Upon completion of the above-described processing steps: unmatched order transactions are written to the file, PORD QUEUE, for subsequent match attempts; matched and confirmed order transactions are confirmed to the relevant CONTRACT APP stakeholders (this process drawing principally on the data-file, ADMIN) and are written to the file PORD CONF for subsequent "back-office" processing; and relevant CONTRACT APP stakeholders are notified of rejected orders (again,this process drawing principally on the data-file, ADMIN), records of this being written to the file PORD REJ for subsequent "back-office" processing. A copy of all processing outputs is written to the file, HISTORY.

Process 3

Process 3 handles the receipt and processing of "secondary" risk management contract transactions (this term being defined in Appendix D). Like "primary" risk management contracts, "secondary" risk management contracts are of multiple types (detailed in Appendix B); various sub-processes of Process 3 handle the receipt and processing of all possible types of these transactions, including product order processing, product price indications, and withdrawals of existing product orders.

"Secondary product orders" constitute the core "secondary" risk management contract transaction type (Fig. 20 provides a summary flow chart of the processing of this transaction type).

"Secondary" product orders incorporate the following key items of information: potential acquiring party identification information; the pre-established Order ID reference to the sought-after primary contract; the potential acquiring party's interest or otherwise in being granted credit by offering parties for the yet-to-be-determined contract acquisition amount; the acquiring party's interest or otherwise in availing themselves of the possible netting and other features of the APP concerned; the acquisition "price" range within which the potential acquiring party is prepared to "pay" for the contract they have specified; other dimensions of the potential acquiring party's needs; and the consideration/entitlement transfer entity accounts from which/to which they wish to have relevant

"payments" made/received. The above-described information is, upon receipt, written to - and subsequently processed from - the file SORD NEW.

Three sub-processes are involved in processing secondary product orders -order authorisation, order matching, and matched order confirmation. In the case of the anticipated most typical form of order, termed a "normal-automatic" secondary product order these sub-processes function as follows:

The secondary product order authorisation sub-process verifies that all orders contain data appropriate to the contract sought and that each potential acquiring party is accurately identified and credentialled (this sub-process draws principally on the data-file, SPRODUCT).

The secondary product order matching sub-process locates sought-after contract records and, based on the contents of these records, determines whether a "sale" of the position of the specified stakeholder in the contract to the potential acquiring party is possible - in particular, whether the acquisition "price" range within which the potential acquiring party has specified it is prepared to "pay" for the position of the specified current stakeholder is equal to, or in excess of, the "allowable sale price" figure prespecified by the applicable contract stakeholder. If a contract "sale" is found to be possible, and there being no requirements for manual-approval intervention by any relevant stakeholder, a "match" is deemed to have occurred.

The secondary product matched order confirmation sub-process effectively secures, automatically, the positive agreement of all affected stakeholders to the contract position "sale", including confirmation of the contract acquiring party's ability to immediately pay (or be granted current stakeholder credit, or acquiring party guarantor credit, for) the required "sale price" consideration (and possible other applicable fees). Automatic approvals of such "sales" are made by the CONTRACT APP electronically transferring resources recorded in the acquiring party's applicable consideration/entitlement transfer entity account to the account of the applicable current contract stakeholder.

Upon completion of the above-described processing steps: unmatched order transactions are written to the file, SORD QUEUE, for subsequent match attempts; matched and confirmed order transactions are confirmed to the relevant CONTRACT APP stakeholders (this process drawing principally on the data-file, ADMIN), required records being written to the file SORD CONF for further "back-office" processing as required; and rejected order transactions are similarly notified to the relevant CONTRACT APP stakeholders (again, this process drawing principally on the data-file, ADMIN), required records being written to the file SORD REJ for further"back-office" processing. A copy of all processing outputs is written to the file, HISTORY.

Process 4

Process 4 handles the receipt and processing of "derivative-primary" risk management contract transactions (this term being defined in Appendix D). Like "primary" risk management contracts, "derivative-primary" risk management contracts are of multiple types (detailed in Appendix B); various sub-processes of Process 4 handle the receipt and processing of all possible types of these transactions, including product order processing, product price indications, and existing product order withdrawals.

"Product option orders" is one illustrative "derivative-primary" risk management contract transaction type (Fig. 21 provides a summary flow chart of the processing of this transaction type).

"Derivative-primary" product option orders incorporate the following key items of information (detailed in Appendix B): ordering party identification information; CONTRACT APP application and product identification information; "other stakeholder involvement" information; the ordering party's desired form of product specification (directly input as entitlement coordinates or as mathematical function(s)); when the order specification is by way of a single-dimensional mathematical function, the parameters of such a function (which can include: the term "X", the term "Alpha (X)", the term "Beta (X)", the term "Gamma (X-1)"; the contract consideration and entitlement "denomination type", "currency (if applicable)" and "national currency (if applicable)"; the ordering party's interest or

otherwise in being granted credit by potential counterparties for the yet-to-be-determined contract option consideration amount; the ordering party's interest or otherwise in availing themselves of the possible netting and collateralisation features of the APP concerned; the consideration "price" range within which the ordering party is prepared to "pay" for their defined product option; miscellaneous other dimensions of the ordering party's needs, and the consideration/entitlement transfer entity accounts from which/to which they wish to have relevant "payments" made/received). Upon its receipt, all of this information is written to - and subsequently processed from - the file DPORD NEW.

Three sub-processes are involved in processing derivative-primary product orders - order authorisation, order matching, and matched order confirmation . In the case of the most likely form of the above-mentioned illustrative option order, termed a "normal-automatic" derivative-primary product option order (see Appendix 5 for details) these sub-processes function as follows:

The primary product option order authorisation sub-process verifies that all orders contain data appropriate to the product option being sought and that each ordering party is accurately identified and credentialled (this sub-process draws principally on the data-file, DPPRODUCT).

The primary product option order matching sub-process locates the best possible counterparty(ies) for the ordering party's transaction according to the application promoter-specified "matching rules" embodied in the APP; it does this utilizing three component sub-processes, termed: short-listing of potential option-counterparties, individual potential option-counterparty "pricing" calculations, and option-counterparty selection.

The "short-listing of potential option-counterparties" sub-process component establishes a list of potential option-counterparties (if any) willing to offer the product option sought by the ordering party, upon their receipt from the ordering party of an option consideration they deem to be appropriate (this sub-process draws principally on the data-file, DPDEAL LIST).

The "individual potential option-counterparties pricing calculations" sub-process component utilises the above-described pricing parameters prespecified by each short-listed potential option-counterparty to calculate the "bid" each of them is prepared to make on the ordering-party's product option order (or part thereof), and to add these to the potential option-counterparties short-list file (this sub-process draws principally on the data-file, DPSEL PRICE).

The "option-counterparty selection" sub-process component extracts from the above-described "potential option-counterparties short-list" file the best possible counterparty(ies) for the ordering party's transaction, according to the application promoter-specified "matching rules" embodied in the APP, taking into account whatever matching constraints all applicable APP stakeholders may have prespecified. This selection being made, and the price bid being within the allowable limits specified by the ordering party, and there being no requirements for manual-approval intervention by any relevant stakeholder, a matched option order is deemed to be in existence (this sub-process draws principally on the data-file, DPSEL LIMIT).

The matched option order confirmation sub-process effectively secures, automatically, the positive agreement of all affected stakeholders to the options contract, including confirmation of the product-option-ordering party's ability to immediately pay (or be granted counterparty credit, or ordering party guarantor credit, for) the required option product consideration (and possible other applicable fees). Automatic approvals of contracts are made by the CONTRACT APP electronically transferring resources recorded in the ordering party's applicable consideration/entitlement transfer entity account to the account of the applicable counterparty (this process being detailed in Appendix H). In turn, automatic updates of the option-counterparty's matching constraints maintained in the file DPSEL LIMIT are made.

Upon completion of the above-described processing steps: unmatched option-order transactions are written to the file, DPORD QUEUE, for subsequent match attempts; matched and confirmed option-order transactions are confirmed to the relevant CONTRACT APP

stakeholders (this process drawing principally on the data-file, ADMIN) and are written to the reference file DP MSTR, and the file DPORD CONF for subsequent "back-office" processing; and relevant CONTRACT APP stakeholders are notified of rejected orders (again, this process drawing principally on the data-file, ADMIN), records of this being written to the file DPORD REJ for subsequent "back-office" processing. A copy of all processing outputs is written to the file, HISTORY.

If/when an option-holder wishes to exercise its option over a pre-established contract, it does so by appropriately notifying the CONTRACT APP which, in turn, retrieves the contract record from DPMSTR, effects the necessary additional consideration payments, and writes a new record to PORD CONF for subsequent back office processing. As described above, the appropriate HISTORY and other files are updated in this process.

Process 5

Process 5 handles the receipt and processing of "derivative-secondary" risk management contract transactions (this term being defined in Appendix D). Like "secondary" risk management contracts, "derivative-secondary" risk management contracts are of multiple types (detailed in Appendix B); various sub-processes of Process 5 handle the receipt and processing of all possible types of these transactions, including product order processing, product price indications, and withdrawals of existing product orders.

"Product option orders" is an illustrative "derivative-secondary" risk management contract transaction type (Fig. 22 provides a summary flow chart of the processing of this transaction type).

"Derivative-secondary" product option orders incorporate the following key items of information: potential acquiring party identification information; the pre-established Order ID reference to the sought-after primary contract (in relation to which an option is to be purchased or sold); the potential acquiring party's interest or otherwise in being granted credit by offering parties for the yet-to-be-determined option contract acquisition amount; the acquiring

party's interest or otherwise in availing itself of the possible netting and other features of the APP concerned; the acquisition "price" range within which the potential acquiring party is prepared to "pay" for the contract option they have specified; other dimensions of the potential acquiring party's needs; and the consideration/entitlement transfer entity accounts from which/to which they wish to have relevant "payments" made/received. The above-described information is, upon receipt, written to - and subsequently processed from - the file DSORD NEW.

The subprocesses involved in the processing of derivative-secondary product option orders are essentially a combination of the processes described above in the case of secondary product orders (Process 3) and derivative-primary product option orders (Process 4). At the completion of the matching process, matched orders are written to the reference file DSMSTR and the file DSORD CONF for subsequent back office processing.

If/when an option holder wishes to exercise its option over a pre-established contract, it does so by appropriately notifying the CONTRACT APP which, in turn, retrieves the contract record from DSMSTR, effects the necessary additional consideration payments, and writes a new record to SORD CONF for subsequent back office processing. As described above, the appropriate HISTORY and other files are updated in this process.

Process 6

Process 6 handles the "back office" management of "matched/confirmed" primary, secondary, derivative-primary, and derivative-secondary risk management contract transactions and transactions handled by Processes 7-9. The process incorporates multiple sub-processes, collectively accessing multiple data files (Fig. 23): primary risk management contract back office processing; secondary risk management contract back office processing; derivative-primary risk management contract back office processing; derivative-secondary risk management contract back office processing; "Process 7" transactions back office processing; "Process 8"

transactions back office processing; and "Process 9" transactions back office processing.

In relation to the back-office management of confirmed/matched primary risk management contracts - a number of sub-processes are involved, including: Receipt of the previous operating day's "matured-contract actual product event value" sub-process; "Start-of-day PAYACC management" sub-process; Contract maturity management sub-process; Confirmed contract processing sub-process; Information compilation and distribution sub-process; Information extraction from primary orders sub-process; Contract valuation sub-process; Contract collateralisation payments sub-process; System Access and usage fee determination and payments sub-process; Bilateral obligations netting sub-process; Multilateral obligations netting sub-process; Bilateral payments netting sub-process; Multilateral payments netting sub-process; and "end-of-day PAYACC management" sub-process.

Receipt of the previous operating day's "matured-contract actual product event value" details. This sub-process is flowcharted in Fig. 24; it involves the applicable CONTRACT APP receiving "matured-contract actual product event value" details from the relevant product sponsors (external to INVENTCO).The primary data-file, MAT PROD VALUES, is updated with this information. The support data-files, ADMIN, HISTORY, and INFO are similarly updated with applicable information.

"Start-of-day" PAYACC management. This sub-process is flowcharted in Fig. 25; it involves the applicable CONTRACT APP receiving consideration/entitlement "actual account" opening-balances from participating consideration/entitlement transfer entities (external to INVENTCO) (see Process 7 for details). The primary data-files, PAYACC SHADOW and PAYACC FINAL are updated with this information. The support data-files, HISTORY, INFO and ADMIN, are similarly updated with applicable information.

Contract maturity management. This subprocess is flowcharted in Fig. 26; it involves the applicable CONTRACT APP determining and giving effect to primary and related entitlement-transfers to/from applicable CONTRACT APP stakeholders, applicable other INVENTCO

stakeholders, where such transfers are principally reflected in entries to the data-file, PAYACC SHADOW. CONTRACT APP determines and gives effect to these transfers, principally by drawing upon product/contract information maintained in the data files, INTREG, MAT PROD VALUES, COLLAT, CREDIT MGMT, BILAT OBLIG NET, and MULTILAT OBLIG NET. These data-files are appropriately updated in the process as are the support data-files, ADMIN, HISTORY, TAX/SUB, PAYACC SHADOW and INFO.

Confirmed contract processing. This sub-process, flowcharted in Fig. 27, operates continually throughout each operating day. Details of new matched/confirmed contracts are read from the file PORD CONF and are then time-stamped and written to the file INTREG as two records - one record pertaining to the contract ordering party and the other to the contract counterparty. The support data files, INFO, ADMIN, and HISTORY are appropriately updated in the process.

Information compilation and distribution. This sub-process, flowcharted in Fig. 28, operates continually (beyond a defined operating day ), drawing on the data-file INFO. As already described, INFO is updated continually as CONTRACT APP and other INVENTCO events occur, including pertinent AXSCO message information written in the first instance to HISTORY. All relevant INVENTCO stakeholders have access to preauthorised parts of INFO.

Information extraction from primary orders. This sub-process, flowcharted in Fig. 29, is effected after the completion of the defined operating day. Essentially, it involves the single task of processing the data-file, HISTORY, to yield pertinent information for the data-file INFO. One of the most important items of information drawn from HISTORY is (confidential) information on all of the prior day's potential counterparty consideration bid parameters, in particular the data items termed "assessed probabilities of occurrence". This information yields "market" information for the subsequent contract valuation sub-process.

Contract valuation. This sub-process, flowcharted in Fig. 30, draws principally upon the above-described "markets" information previously written to INFO. Pertinent data from this file is "applied against" all outstanding contracts maintained in INTREG, thereby

yielding updated "future product value (FPV)", "expected value" and "distribution" value information for all contracts and, from this, revaluations of all future entitlement "expected values" and "distribution" values. All these revaluation figures are maintained in INTREG with applicable information also being written to INFO and HISTORY.

Contract collateralisation payments. This sub-process, flowcharted in Fig. 31, draws principally on the data-file INTREG. Following the contract valuation process, this collateralisation process involves relevant INTREG records being read and, depending (amongst other things) on the precalculated "present value" of the expected future entitlement associated with each relevant contract, a calculated portion of the present value of the expected future consideration amount is debited or credited to the PAYACC SHADOW file of the applicable collateralisation trustee entity, and the product ordering party and/or counterparty as is applicable.

Generally, if the most recent precalculated "present value" of the expected future entitlement associated with each relevant contract indicates a negative contract value, and if this negative value exceeds the prior contract valuation figure, the applicable entity's trust account is credited with the funds difference, with the entity's own consideration/entitlement transfer entity account being debited correspondingly. If this negative value does not exceed the prior contract valuation figure, the applicable entity's trust account is debited with the funds difference, with the entity's own consideration/entitlement transfer entity account being credited correspondingly. On the other hand, if the most recent precalculated "present value" of the expected future entitlement associated with each relevant contract indicates a positive contract value, the only collateralisation payment adjustment called for is one in which all funds (if any) in the applicable entity's trust account are transferred to the entity's own consideration/entitlement transfer entity account. In each of the above-described cases, a record of all entries effected is written to the data-file, COLLAT, and a subset of this information is written to the data-files HISTORY and INFO.

System Access and usage fee determination and payments. This subprocess, flowcharted in Fig. 32, deals with the determination and payment of system access and usage fees (as distinct from contract maturity date fee payments). The function draws principally on the data-files ADMIN, and HISTORY. Fee payment parameters are maintained in data-file ADMIN. These parameters are applied against the day's new records already written to HISTORY. Debits and credits for fees so determined are written to PAYACC SHADOW with summary information written to INFO and HISTORY.

Bilateral obligations netting. This subprocess, flowcharted in Fig. 33, effectively maintains an up-to-date matrix of the present values of expected future entitlement (and other) obligations between pairs of participating ordering parties and counterparties (as well as other participating CONTRACT APP and INVENTCO stakeholders), continually adjusted on the basis of required current consideration, entitlement and other payments/receipts as they occur. As required, the function updates the above-described matrix in two stages. First, with the most recent contract revaluation figures contained within INTREG. And second, with the end-of-day payment/receipt amounts contained within PAYACC SHADOW. Consideration/entitlement transfer entity transfers from/to applicable entities are determined (according to the application-promoter specified parameters for so doing) on the basis of whether or not any/all of the adjusted bilateral present value figures are in excess of their allowable limits. These entries are written to PAYACC SHADOW, with the data-files BILAT OBLIG NET, INTREG, HISTORY, and INFO being subsequently updated.

Multilateral obligations netting. This subprocess, flowcharted in Fig. 34, is essentially the same as the bilateral netting function except that a specified "clearing/trustee" entity is effectively interposed between all bilateral counterparties and, as such, netted obligations are only between the specified "clearing house/trustee" entity and each participating entity.

Bilateral payments netting. This subprocess, flowcharted in Fig. 35, is independent of the above-described bilateral and multilateral obligations netting subprocesses. The subprocess operates by producing a matrix of bilaterally netted payments/receipts based on

records contained in the data-file, PAYACC SHADOW. Single netted payment/receipt figures are then rewritten to PAYACC SHADOW, with the data-files BILAT PYMTS NET, ADMIN, HISTORY and INFO being subsequently updated.

Multilateral payments netting. Like bilateral payments netting, this subprocess, flowcharted in Fig. 36, is independent of the above-described bilateral and multilateral obligations netting subprocesses. The subprocess operates by producing a matrix of bilaterally netted payments/receipts to/from the applicable "clearing house/trustee" entity based on records contained in the data-file, PAYACC SHADOW. Single netted payment/receipt figures (to/from the "clearing house/trustee" entity) are then rewritten to PAYACC SHADOW, with the data-files MULTILAT PYMTS NET, ADMIN, HISTORY and INFO being subsequently updated.

"End-of-day" PAYACC management. This subprocess, flowcharted in Fig. 37, involves a three-stage process. First, the preparation of inter-consideration/entitlement transfer entity "balancing" transactions. Second, the transfer of the final contents of the PAYACC SHADOW data-file to the data-file, PAYACC FINAL. And third, the electronic transmission of the contents of PAYACC FINAL to the applicable consideration/entitlement transfer entities (external to INVENTCO). In turn, the subsidiary data-files, ADMIN, HISTORY, and INFO are updated.

Process 7

Process 7 handles non-CONTRACT APP-related obligation transfers between applicable INVENTCO stakeholders, that is, the transfer of ownership title over "assets" registered by INVENTCO - typically matched/confirmed contracts (recorded as CONTRACT APP INTREG records) and consideration/entitlement transfer entity resources (recorded as PAYACC records). Both of the above-mentioned items have value to their holder. This process enables holders of these items to assign or lend any portion of their holdings to others at their will through initiating the appropriate transactions as NCAROT TRANS. The process accesses a relatively small number of data files (See Fig. 38). NCAROT TRANS received result in appropriate updates to the primary

data-files, PAYACC SHADOW and INTREG. In turn, the subsidiary data files, HISTORY, ADMIN and INFO are updated.

Process 8

Process 8 (flowcharted in Fig. 39) handles CONTRACT APP (and other INVENTCO) stakeholder shared-access to specialist systems to assist them decide how best to interface with one or more aspects of INVENTCO. In the case of CONTRACT APP stakeholders, the most likely users of this process, one collection of such specialist systems are termed "decision support systems". The purpose of these systems is to guide a user-stakeholder as to how it should react to/deal with the continually changing circumstances within the CONTRACT APP with which they are dealing. Different clusters of systems are applicable for different CONTRACT APP stakeholders. These systems involve a hierarchy of potentially any number of value-added components.

An example of one such system, useful to primary product ordering parties, is a system which helps an ordering party determine which of its prespecified, but as yet un-matched, orders it should withdraw and which of its potential new product orders it should submit. This system is in the form of a "utility optimization" mechanism which seeks to identify the best possible composition of outstanding orders (and thus, which existing, unmatched orders should be withdrawn and which new orders should be submitted) based on two things. First, an objective function which seeks to minimize the difference between a weighted sum of actual and desired values of a series of attributes (involving single or multiple products, covering the ordering party's "real business exposure" to each product, the ordering party's portfolio of contracts which have been "matched" but are not yet confirmed, orders which have been submitted but not yet matched, and potential yet-to-be-submitted orders (collectively termed the "buyer's objective portfolio"), these attributes including, amongst other things: the "expected value" of the objective portfolio; the "standard deviation" of the objective portfolio; the "incremental cash outflow" attribute of the objective portfolio; the "maximum absolute loss" attribute of the objective portfolio; the "expected loss" attribute of the objective portfolio; the "implied minimum return on investment" of the objective portfolio; and the "implied

expected return on investment" of the objective portfolio. And second, a series of constraints specifying, amongst other things: the required "minimum values" of each objective function attribute; and required minimum product-shares in the ordering party's overall product portfolio. The mathematical form of this "optimization" could take any of a number of alternative forms.

An optimization mechanism similar to the one described above can also aid potential counterparties in defining their pricing parameters for application against incoming product orders.

Effectively, systems of the above-described type are collectively maintained as a software "library" within the applicable CONTRACT APP (although they may also be loaned by VIRPRO-authorised entities independent of INVENTCO and/or acquired by VIRPRO-authorised parties whether they are INVENTCO stakeholders or not). CONTRACT APP (and other INVENTCO) stakeholder requests to make use of software within this library are received by way of records in the file, SSA TRANS. These requests result in the appropriate records in the file SSA being accessed and made available for use via AXSCO and the applicable entity's authorised electronic link to INVENTCO. Appropriate records of the utilization of SSA records are written to the data-files HISTORY, ADMIN and INFO.

<u>Process 9</u>

Process 9 (flowcharted in Fig. 40) handles CONTRACT APP (and other INVENTCO) stakeholder shared-access to a range of INVENTCO-facilitated value added services. These services can include: accounting, reconciliation, and information services; value added information reseller services; financial services of multiple types; and data processing and telecommunications services. Effectively, software relating to these services is maintained as a software "library" within the applicable CONTRACT APP (although they may also be loaned by VIRPRO-authorised entities independent of INVENTCO and/or acquired by VIRPRO-authorised parties whether they are INVENTCO stakeholders or not ). CONTRACT APP (and other INVENTCO) stakeholder requests to make use of software within this library are received by way of records in the file, VAS TRANS. These requests result in the

appropriate records in the file VAS being accessed and made available for use via AXSCO and the applicable entity's authorised electronic link with INVENTCO. Appropriate records of the utilization of VAS records are written to the data-files HISTORY, ADMIN and INFO.

APPENDIX D

## RISK MANAGEMENT CONTRACTS

Risk management contracts is a term used to refer to one type of contractual obligation which can be, but does not need to be, traded/exchanged/transferred, and subsequently processed and settled, using an INVENTCO system. Risk management contracts consist of "primary" risk management contracts; "secondary" risk management contracts; "derivative-primary" risk management contracts; and "derivative-secondary" risk management contracts.

"Primary" risk management contracts can be "simple" and "complex" in nature ("simple" contracts being derivatives of "complex" contracts).

A "simple" primary risk management contract is a tradeable or untradeable contract conveying an obligation on an entity, upon that entity being granted a consideration by another entity (or accepting a pledge to be granted a consideration by the other entity), to make an entitlement to that other entity depending on the value of a defined phenomenon, determined at a defined time in the future.

A "complex" primary risk management contract is a tradeable or untradeable contract conveying an obligation on either or both of two entities, upon one entity [usually] being granted a consideration by the other entity (or accepting a pledge to be granted a consideration by the other entity), to make an entitlement to pay/receive an entitlement from one another, depending on the value of a defined phenomenon, determined at a defined time in the future. A "complex" contract may, in turn, be "basic" or "advanced" in nature: a "complex-basic" contract being one that does not involve ordering party and/or matched order counterparty "collateralisation payments" to a third-party trustee or clearing entity during the life of a contract; and a "complex-advanced" contract being one that does involve ordering party and/or matched order counterparty "collateralisation payments" to a third-party trustee or clearing entity during the life of a contract.

"Secondary" risk management contracts are pre-existing "primary" risk management contracts offered for trade (individually or as a

portfolio) by a "risk-counterparty" stakeholder to the underlying contract.

"Derivative-primary" risk management contracts are options contracts, or futures contracts, or forward contracts, or forward rate agreements, or swaps, or like financial instruments based on specified, but yet-to-be-established, primary risk management contracts.

"Derivative-secondary" risk management contracts are options contracts, or futures contracts, or forward contracts, or forward rate agreements, or swaps, or like financial instruments based on pre-existing primary risk management contracts (which may have been traded since they were first established), including instruments based on: specified, but yet-to-be established, secondary risk management contracts; and the intended tertiary trading/exchange/transfer of specified, established, secondary risk management contracts.

# APPENDIX E

SAMPLE PRODUCT ORDER/CONTRACT 'TIME LINE'

EXAMPLE I: MICRO PROCESSORS CASE

E2

# APPLICATION SPECIFICATION

AS AT 92.02.10.17.00.00.00

**Part A**

| **Application ID :** | **100** | **Applicable Product ID's** | *1200 - 1250* | **Application Access Limitations** |
|---|---|---|---|---|
| Application Promoter : | Demdata Inc | Preferred/preferential dealing? | Unavailable | |
| Primary Application Use : | Defect liability management | Pre or Post Tax Matching? | Pre tax | Contract Ordering Parties: |
| Feasible Counterparty No's: | Single counterparty | Tax deduction/subsidy at source? | Not Applicable | Nil |
| Public/private use? : | Public | Degree of Trading transparency : | Nil | |
| Acceptable comms mediums: | Computer to computer | Secondary trading allowed? | No | |
| Retail/Wholesale Use: | Wholesale | Derivative trading allowed? | No | |
| Pricing and Matching Process : | Minimise consideration payment under an EV/CB regime | Deferred Order Submissions possible? | Yes | |
| | | Partial Matches possible? | Yes | Contract Counterparties: |
| | | Settlement terms: | | Nil |
| | | - considerations | Immediate | |
| | | - entitlements | Immediate | |
| Contract Revaluation Frequency : | Daily | Manual Approvals possible? | No | |
| | | Ordering Party consideration credit? | No | |
| Ordering Parties allowed negative contract payoffs ? | No | Collateralisation Payments? | | Counterparty Guarantors: |
| | | - Counterparties | No | |
| Application Access Limitations: | Nil | - Ordering Parties | No | Nil |
| | | Bilateral Obligations Netting? | No | |
| | | Bilateral Payments Netting? | No | Others: |
| | | Multilateral Obligations Netting? | No | Nil |
| | | Multilateral Payments Netting? | No | |

| **Netting Details (if applicable)** | | **Collateralisation Details (if applicable)** | | **Valuation Details** | **Consideration Credit Details** |
|---|---|---|---|---|---|
| Applicable Discount Rate : | Not Applicable | Trustee: | Not Applicable | Applicable Discount Rate: 10 % p.a | Ordering Party Guarantor: Not Applicable |
| Obligation Netting trigger: | Not Applicable | | | | |
| Min required settlements: | Not Applicable | | | | |

**Ordering Party Consideration-Credit Options**

Counterparty provided?
- -- Participating Basis:
  - -- Ord. Party-guarantor protected
    - - Participating
    - - Non-participating
  - -- Unprotected
- -- Non-Participating basis:
  - -- Ord. Party-guarantor protected
    - - Participating
    - - Non-participating
  - -- Unprotected

Ordering Party Guarantor provided?
- -- Participating basis:
- -- Non-participating basis:

| 1 | 2 | 3 | 4 |
|---|---|---|---|
| | | | |
| | | | |
| | | | |
| | | | |
| | | | |
| | | | |
| | | | |
| | | | |

**Key:**

Counterparty:
1. Interest rate (% p.a.)
2. Participation rate (%)

Order Party-guarantor
1. Interest rate (% p.a.)
2. Participation rate (%)

E3

## PRODUCT SPECIFICATION

AS AT 92.02.10.17.00.00.00

PRODUCT ID : 1210

**Product Summary**

| | | | |
|---|---|---|---|
| Application ID : | 100 | Product Sponsor : | Demdata Inc |

**Product Specification**

| | | | |
|---|---|---|---|
| Market : | Factory Output Quality Indices | | |
| Sub-market : | 64-bit Microprocessor Fault Tolerance Index | Consideration denom. type : | Money |
| Market type : | Spot | Entitlement denom. type : | Exclusive Production Warrants(XPW's) |
| Establishment date/time : | 92.02.10.17.00.00.00 | Currency type (if applic.) : | Com Bnk Dep. |
| Maturity date/time : | 95.02.10.17.00.00.00 | | |
| | | National currency type (if applic.) : | AUD |

| | | | | | |
|---|---|---|---|---|---|
| Minimum Product Definition Value : | 0.00 | Maximum Product Definition Value: | 100 | Product Step Value: | 02 |

**Product Details**

| | | | | | |
|---|---|---|---|---|---|
| Conditional Payoff Dimensions ID : | One | Actual/Perceived Market Identifier : | Actual | Elemental/compound | |
| Market Phenomena Class Identifier : | Fault Tolerance Index | Specific Phenomenon : | Dept of Defence Reject Summaries | Market Identifier : | Single Market |
| Elemental/compound sub-market Identifier | – | Sub-market Phenomenon Class Identifier : | – | | |
| Future Period Date/time Identifier : | At Contract Maturity date/time | Event Type Identifier : | Spot value | | |
| Minimum Product Definition Value : | 0 | Maximum Product Definition Value : | 100 | Product Step Value : | 02 |
| Product Establishment Date/time : | 92.02.10.17.00.00.00 | Product Maturity Date/time : | 95.02.10.17.00.00.00 | | |
| Consideration denomination of Product : | Money | Currency type denomination of Product (if applic) | Com Bnk Dep. | National currency type denomination of Product (if applic.) | AUD |
| Entitlement denom. of Product : | Exclusive Production Warrants (XPW's) | | | | |

E4

# PRIMARY ORDER SPECIFICATION

**AS AT :** 93.07.01.14.25.30.00

| | |
|---|---|
| **Ordering Party :** | Denisons |
| **Own reference :** | 5096263 |
| **Product :** (ID : 1210 ) | |
| Market | Factory Output Quality Indices |
| Sub-Market | 64B.M.F.T.Index — Market Type: Spot |
| Estab. date/time | 92.02.10.17.00.00.00 |
| Maturity date/time | 95.02.10.17.00.00.00 |

| | |
|---|---|
| **Application ID :** | 100 |
| Application Promoter | Demdata Inc |
| Product Sponsor | Demdata Inc |
| Counterparty-guarantor | -- |
| Regulator | Dept of Defence |

| | Consideration/ Entitlement Denomination | Consideration | Entitlement |
|---|---|---|---|
| Consideration type | Money | Money | N.A. |
| Entitlement type | XPW's | N.A. | XPW's |
| Currency type (if applic.) | Com Bnk Dep | Com Bnk Dep | Com Bnk Dep |
| National Curr. type (if applic.) | AUD | AUD | AUD |
| Max. Consid. Amount | N.A. | 32,000 | As below |

"X" Value: 5

| X Range Value | 1 | 2 | 3 | 4 | 5 | 6 |
|---|---|---|---|---|---|---|
| Alpha (X) | 0 | 22 | 48 | 94 | 100 | |
| Beta (X) | 0 | 21.040 | 21.040 | 161.900 | 161.900 | |

| Gamma | | |
|---|---|---|
| | 1 | 6 |
| | 2 | 11 |
| | 3 | 3 |
| | 4 | 11 |
| | 5 | |

**Pricing and Matching Process**

Minimise consideration payment under an EV/CE regime

**SPECIAL**

**DEAL TYPE:** Not Applicable

## ORDER SUPPORT DETAILS

| | |
|---|---|
| Communications medium : | Computer-to-computer |
| Consideration Credit sought ? | No |
| Desired Form of Consideration Credit (if appl.) | Not Applicable |
| Counterparty Collateralisation payments required ? | No |
| Preparedness to make 'own' collateralisation payments (if applicable)? | Not Applicable |
| Applicable Marginal Tax rate (if applicable)? | |
| - Consideration : | Not Applicable |
| - Entitlements : | Not Applicable |
| Netting System Participation ? | |
| - Bilateral Obligations netting ? (if applic.) | No |
| - Bilateral Payments netting ? (if applic.) | No |
| - Multilateral Obligations netting ? (if applic.) | No |
| - Multilateral Payments netting ? (if applic.) | No |

| | |
|---|---|
| Partial Matches desired ? | No |
| Manual Approval of Matches desired ? | No |
| Desired degree of trading transparency (if applicable) | Not Applicable |
| Applicable Consid./Entitlement Transfer Entity | |
| Account details : | ABC Banking Corp |
| Operating A/c | 1-1-502026-617634-1 (and 2) |
| Desired date/time of Order Submission : | Immediate |
| Desired Order retention period : | 00.00.01.00.00.00 |
| Desired Max. time for counterparty manual order approval (if applic.) : | Not Applicable |

**Preferred/Preferential Dealing:**

Not Applicable

**Unacceptable Counterparties and Other Stakeholders**

Not Applicable

E5

# ORDER SPECIFICATION PRICING

By : Demdata Inc    AS AT 93.07.01.14.26.40.00

| COUNTERPARTY PRICING SPECIFICATION | Application ID : 100<br>Product ID : 1210 | Consideration Exchange Rates (if applic) : C/E ... Currency ... Nat Curr ... |
|---|---|---|

| Defined Circumstances ID | Commission Rate | Discount Rate | Entitlement Exchange Rates: (if applic) : C/E ... Currency ... Nat Curr ... |
|---|---|---|---|
| 14 | 1.10% | 9.90 % p.a. | |

| Feasible Product Definition Values | Gross Contingent Entitlement Amounts | OP/CP C/Credit Adjust. | Net Contingent Entitlement Amounts | Component Product Prices | Implied Contingent Entitlement Amounts | Assessed Probabilities of Occurrence | Net Contingent Entitlement (Valuation) Amts | Net Contingent Negative Entitlement (Valuation) Amounts | Maximum Absolute Negative Entitlement Amount |
|---|---|---|---|---|---|---|---|---|---|
| 0-20 | 0.000 | 0.00 | 0.000 | 0.149588 | 0.000 | 0.195375 | 0.000 | 0.000 | |
| 22-48 | (21.040) | 0.00 | (21.040) | 0.666056 | (14.014) | 0.620536 | (13.056) | (13.056) | |
| 50 | (27.160) | 0.00 | (27.160) | 0.020458 | (0.555) | 0.008358 | (0.227) | (0.227) | |
| 52 | (33.290) | 0.00 | (33.290) | 0.020396 | (0.678) | 0.008295 | (0.276) | (0.276) | |
| 54 | (39.410) | 0.00 | (39.410) | 0.020328 | (0.801) | 0.008228 | (0.324) | (0.324) | |
| 56 | (45.540) | 0.00 | (45.540) | 0.020258 | (0.923) | 0.008158 | (0.372) | (0.372) | |
| 58 | (51.660) | 0.00 | (51.660) | 0.020180 | (1.043) | 0.008084 | (0.418) | (0.418) | |
| 60 | (57.790) | 0.00 | (57.790) | 0.008007 | (0.463) | 0.008007 | (0.463) | (0.463) | |
| 62 | (63.910) | 0.00 | (63.910) | 0.007927 | (0.507) | 0.007927 | (0.507) | (0.507) | |
| 64 | (70.030) | 0.00 | (70.030) | 0.007844 | (0.549) | 0.007844 | (0.549) | (0.549) | |
| 66 | (76.160) | 0.00 | (76.160) | 0.007758 | (0.591) | 0.007758 | (0.591) | (0.591) | |
| 68 | (82.280) | 0.00 | (82.280) | 0.007669 | (0.631 | 0.007669 | (0.631) | (0.631) | |
| 70 | (88.410) | 0.00 | (88.410) | 0.007578 | (0.670) | 0.007578 | (0.670) | (0.670) | |
| 72 | (94.530) | 0.00 | (94.530) | 0.007484 | (0.707) | 0.007484 | (0.707) | (0.707) | |
| 74 | (100.660) | 0.00 | (100.660) | 0.007387 | (0.744) | 0.007387 | (0.744) | (0.744) | |
| 76 | (106.780) | 0.00 | (106.780) | 0.007288 | (0.778) | 0.007288 | (0.778) | (0.778) | |
| 78 | (112.910) | 0.00 | (112.910) | 0.007187 | (0.811) | 0.007187 | (0.811) | (0.811) | |
| 80 | (119.030) | 0.00 | (119.030) | 0.007084 | (0.843) | 0.007084 | (0.843) | (0.843) | |
| 82 | (125.150) | 0.00 | (125.150) | 0.006979 | (0.873) | 0.006979 | (0.873) | (0.873) | |
| 84 | (131.280) | 0.00 | (131.280) | 0.006872 | (0.902) | 0.006872 | (0.902) | (0.902) | |
| 86 | (137.400) | 0.00 | (137.400) | 0.006763 | (0.929) | 0.006763 | (0.929) | (0.929) | |
| 88 | (143.530) | 0.00 | (143.530) | 0.006653 | (0.955) | 0.006653 | (0.955) | (0.955) | |
| 90 | (149.650) | 0.00 | (149.650) | 0.006542 | (0.979) | 0.006542 | (0.979) | (0.979) | |
| 92 | (155.780) | 0.00 | (155.780) | 0.006429 | (1.002) | 0.006429 | (1.002) | (1.002) | |
| 94-100 | (161.900) | 0.00 | (161.900) | 0.019515 | (3.159) | 0.019515 | (3.159) | (3.159) | (161.900) |
| | | | | 1.06023 | (34.110) | 1.0000 | (30.770) | (30.770) | (161.900) |

x Applic. Entitle. Exchange Rates (..................) C/E (..................) Currency (..................) Nat Curr

= Base contract bid price (in Product Denom. terms) → 34.110

Net Present Value (at.............. 9.90 % p.a. ...) → 29.220 — 26.360

+ Flat Commission (.............. 1.10% ...) → 0.320

= Contract Bid Price (in Product Denom. terms) → 29.540

x Applic. Consid. Exchange Rates (..................) C/E (..................) Currency (..................) Nat. Curr.

= Contract Bid Price (in OP requested terms) (if applic.) → 29.540

Implied Base 'Margin' on Contract → 3.180

+ Exchange Rate and Consideration Investment Margin → ....

= Implied Contract Value (to CP) → 3.180

E6

# CONTRACT VALUATION

AS AT 93.07.01.16.00.00.00 **Report for:** Denisons

## CONTRACT SUMMARY (GRAPHICAL)

| | |
|---|---|
| **Ordering Party :** | Denisons |
| **Counterparty :** | Demdata Inc |
| **Product :** (ID 1210) | |
| Market | Factory Output Quality Indices |
| Sub-Market | 64B.M.F.T.Index Market Type Spot |
| Estab. date/time | 92.02.10.17.00.00.00 |
| Maturity date/time | 95.02.10.17.00.00.00 |

| | |
|---|---|
| **Application ID:** | 100 |
| **O.P.Own reference:** | 5096263 |
| Application Promoter | Demdata Inc |
| Product Sponsor | Demdata Inc |
| Counterparty-guarantor | -- |
| Regulator | Dept of Defence |

| | Consideration/ Entitlement Denomination | Consideration | Entitlement |
|---|---|---|---|
| Cons./Entitlement type | Money/XPW's | Money | XPW's |
| Currency type (if app) | Com Bnk dep. | Com Bnk dep. | N.A. |
| National Curr. type (if applic.) | AUD | AUD | N.A. |
| Amount | N.A. | 29.540 | As below |

| | |
|---|---|
| Order ID (if app.) | 85746235 |
| Conf. date/time (if app.) | 93.07.01.14.38.50.00 |
| Contract/Product context : | 1 of 1 |

| Valuations as at | 93.07.01.16.00.00.00 | |
|---|---|---|
| | F.P.V's | Contract |
| Expected Value | 38 | 29.330 |
| Std. Deviation | 4 | 6.213 |

**Pricing and Matching Process:** Minimise consideration payment under an EV/CE regime

**Special Deal Type :** Not Applicable

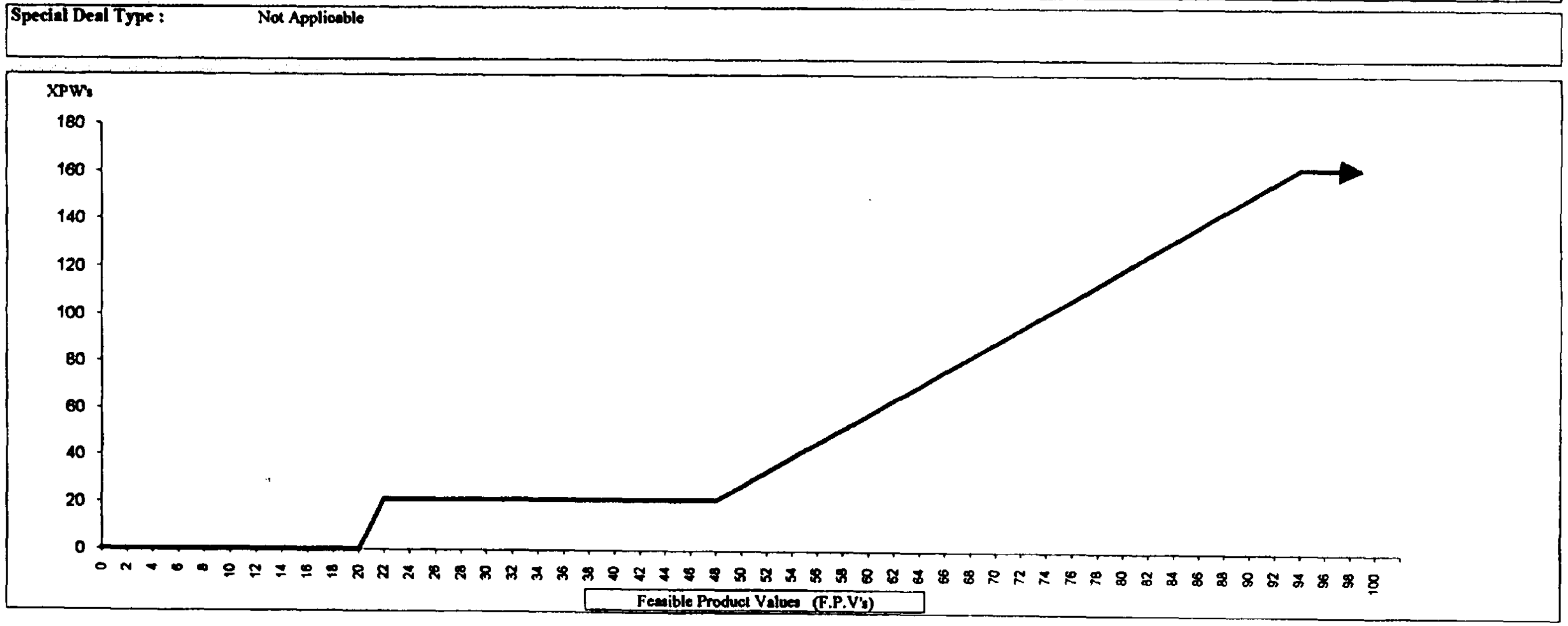

E7

# CONTRACT VALUATION

AS AT 93.07.01.16.00.00.00 **Report for:** Demdata Inc

## CONTRACT SUMMARY (GRAPHICAL)

| | |
|---|---|
| **Ordering Party :** | Denisons |
| **Counterparty :** | Demdata Inc |
| **Product :** (ID 1210 ) | |
| **Market** | Factory Output Quality Indices |
| **Sub-Market** | 64B.M.F.T.Index **Market Type** Spot |
| **Estab. date/time** | 92.02.10.17.00.00.00 |
| **Maturity date/time** | 95.02.10.17.00.00.00 |

| | |
|---|---|
| **Application ID:** | 100 |
| **C.P. Own Reference:** | MD2-D |
| **Application Promoter** | Demdata Inc |
| **Product Sponsor** | Demdata Inc |
| **Counterparty-guarantor** | – |
| **Regulator** | Dept of Defence |

| | Consideration/ Entitlement Denomination | Consideration | Entitlement |
|---|---|---|---|
| Cons./Entitlement type | Money/XPW's | Money | XPW's |
| Currency type (if app) | Com Bnk dep. | Com Bnk dep. | N.A. |
| National Curr. type (if applic.) | AUD | AUD | N.A. |
| Amount | N.A. | 29.540 | As below |

| | |
|---|---|
| **Order ID (if app.)** | 85746235 |
| **Conf. date/time (if app.)** | 93.07.01.14.38.50.00 |
| **Contract/Product context :** | 1 of 1 |

| Valuations as at | 93.07.01.16.00.00.00 | |
|---|---|---|
| | **F.P.V's** | **Contract** |
| **Expected Value** | 38 | (29.330) |
| **Std. Deviation** | 4 | (6.213) |

**Pricing and Matching Process:** Minimise consideration payment under an EV/CE regime

**Special Deal Type :** Not Applicable

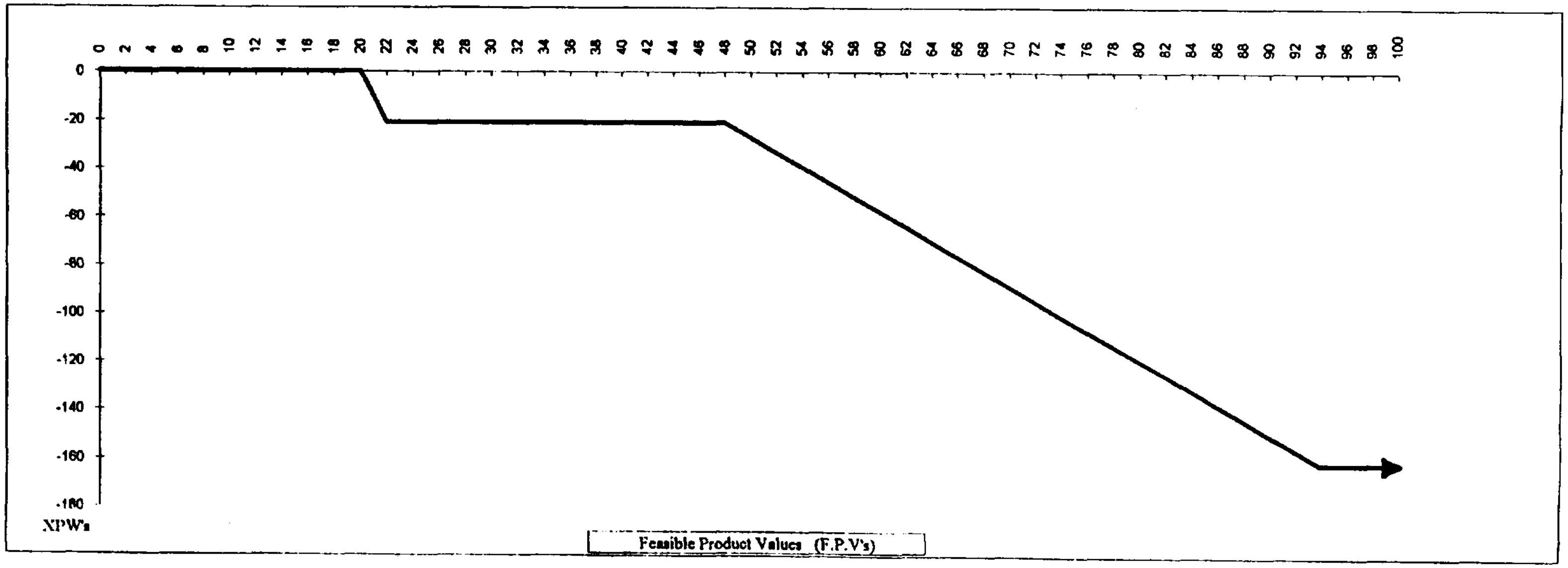

E8

# CONTRACT VALUATION

AS AT 94.11.15.10.00.00.00 **Report for:** Denisons

## CONTRACT SUMMARY (GRAPHICAL)

| | |
|---|---|
| **Ordering Party :** | Denisons |
| **Counterparty :** | Demdata Inc |
| **Product :** (ID 1210 ) | |
| Market | Factory Output Quality Indices |
| Sub-Market | 64B.M.F.T.Index  Market Type  Spot |
| Estab. date/time | 92.02.10.17.00.00.00 |
| Maturity date/time | 95.02.10.17.00.00.00 |

| | |
|---|---|
| **Application ID:** | 100 |
| **O.P.Own reference:** | 5096263 |
| Application Promoter | Demdata Inc |
| Product Sponsor | Demdata Inc |
| Counterparty-guarantor | -- |
| Regulator | Dept of Defence |

| | Consideration/ Entitlement Denomination | Consideration | Entitlement |
|---|---|---|---|
| Cons./Entitlement type | Money/XPW's | Money | XPW's |
| Currency type (if app) | Com Bnk dep. | Com Bnk dep. | N.A. |
| National Curr. type (if applic.) | AUD | AUD | N.A. |
| Amount | N.A. | 29.540 | As below |

| | |
|---|---|
| Order ID (if app.) | 85746235 |
| Conf. date/time (if app.) | 93.07.01.14.38.50.00 |
| Contract/Product context : | 1 of 1 |

| Valuations as at | 94.11.15.10.00.00 | |
|---|---|---|
| | F.P.V's | Contract |
| Expected Value | 58 | 42.160 |
| Std. Deviation | 5 | 6.209 |

Pricing and Matching Process: Minimise consideration payment under an EV/CE regime

**Special Deal Type :** Not Applicable

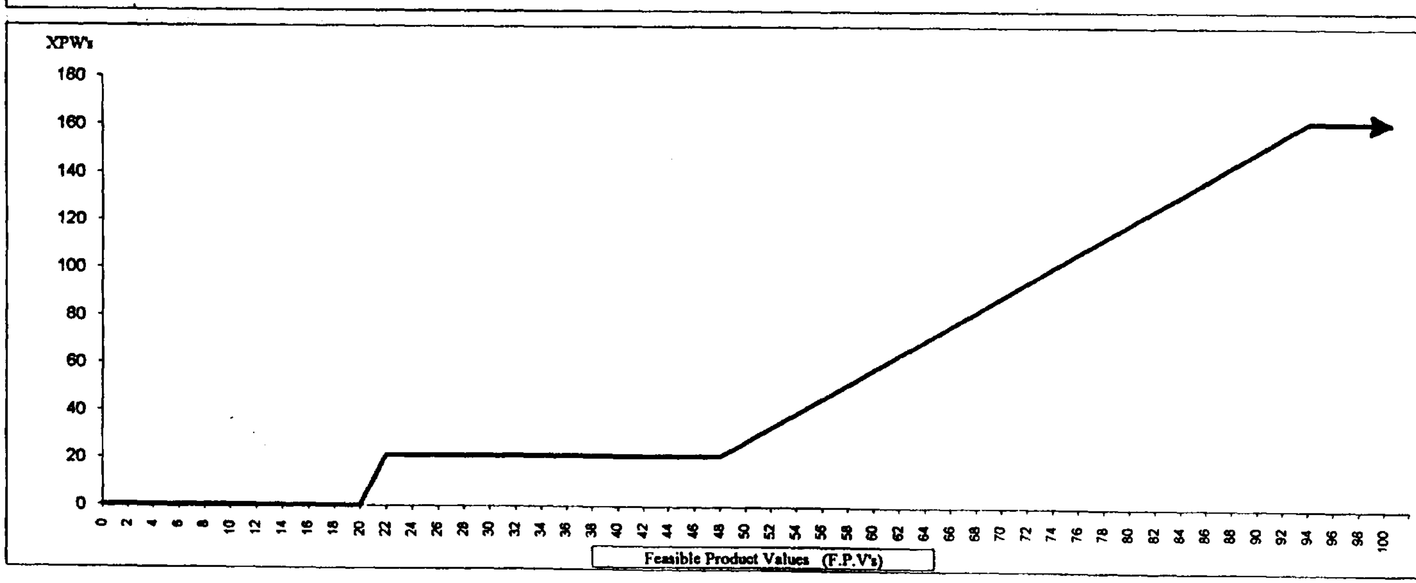

E9

# CONTRACT MATURITY

AS AT 95.02.10.17.00.00.00 **Report for:** Denisons

## CONTRACT SUMMARY (GRAPHICAL)

| | |
|---|---|
| **Ordering Party :** | Denisons |
| **Counterparty :** | Demdata Inc |
| **Product :** (ID | 1210 ) |
| Market | Factory Output Quality Indices |
| Sub-Market | 64B.M.F.T.Index Market Type Spot |
| Estab. date/time | 92.02.10.17.00.00.00 |
| Maturity date/time | 95.02.10.17.00.00.00 |

| | |
|---|---|
| Order ID (if app.) | 85746235 |
| Conf. date/time (if app.) | 93.07.01.14.38.50.00 |
| Contract/Product context : | 1 of 1 |

| | |
|---|---|
| Application ID: | 100 |
| O.P.Own reference: | 5096263 |
| Application Promoter | Demdata Inc |
| Product Sponsor | Demdata Inc |
| Counterparty-guarantor | -- |
| Regulator | Dept of Defence |

| Valuations as at | 95.02.10.17.00.00.00 | |
|---|---|---|
| | F.P.V's | Contract |
| Expected Value | 74 | 100.660 |
| Std. Deviation | 0 | 0 |

| | Consideration/ Entitlement Denomination | Consideration | Entitlement |
|---|---|---|---|
| Cons./Entitlement type | Money/XPW's | Money | XPW's |
| Currency type (if app) | Com Bnk dep. | Com Bnk dep. | N.A. |
| National Curr. type (if applic.) | AUD | AUD | N.A. |
| Amount | N.A. | 29.540 | As below |

Pricing and Matching Process: Minimise consideration payment under an EV/CE regime

**Special Deal Type :** Not Applicable

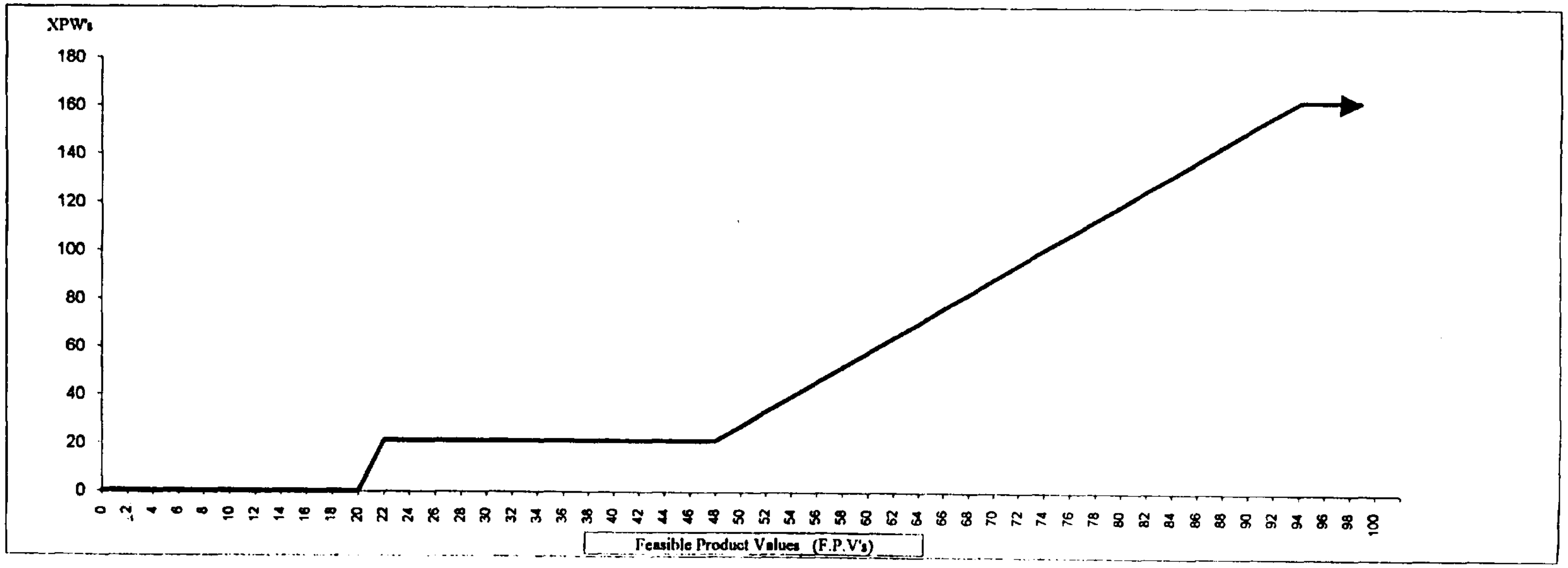

# APPENDIX F

## SAMPLE PRODUCT ORDER/CONTRACT 'TIME LINE'
## EXAMPLE II: TELECOMMUNICATIONS CAPACITY USE

F2

# APPLICATION SPECIFICATION

AS AT 93.11.01.17.00.00.00

**Part A**

| | | | | |
|---|---|---|---|---|
| **Application ID :** | **001** | **Applicable Product ID's** | 2001 - 2020 | **Application Access Limitations** |
| Application Promoter : | Newcom Inc | Preferred/preferential dealing? | Available | |
| Primary Application Use : | Hardware capacity management | Pre or Post Tax Matching? | Not applicable | Contract Ordering Parties: |
| Feasible Counterparty No's: | Multiple counterparties | Tax deduction/subsidy at source? | Not applicable | Nil |
| Public/private use? : | Private | Degree of Trading transparency : | Nil | |
| Acceptable comms mediums: | Computer to computer | Secondary trading allowed? | Yes | |
| Retail/Wholesale Use: | Wholesale | Derivative trading allowed? | Yes | |
| Pricing and Matching | Minimise consideration | Deferred Order Submissions possible? | Yes | |
| Process: | payment under an EV/CE regime | Partial Matches possible? | Yes | Contract Counterparties: |
| | | Settlement terms: | | Nil |
| | | - considerations | Immediate | |
| | | - entitlements | Immediate | |
| Contract Revaluation Frequency : | Daily | Manual Approvals possible? | No | |
| | | Ordering Party consideration credit? | No | |
| Ordering Parties allowed negative | | Collateralisation Payments? | | Counterparty Guarantors: |
| contract payoffs ? | Yes | - Counterparties | No | Nil |
| Application Access Limitations: | Nil | - Ordering Parties | No | |
| | | Bilateral Obligations Netting? | No | |
| | | Bilateral Payments Netting? | No | Others: |
| | | Multilateral Obligations Netting? | No | Nil |
| | | Multilateral Payments Netting? | No | |

| | | | |
|---|---|---|---|
| **Netting Details (If applicable)** | **Collateralisation Details (If applicable)** | **Valuation Details** | **Consideration Credit Details** |
| Applicable Discount Rate : Not applicable | Trustee: Not Applicable | Applicable Discount Rate: | Ordering Party Guarantor: |
| Obligation Netting trigger: Not applicable | | 6.50% | Not Applicable |
| Min required settlements: Not applicable | | | |

**Ordering Party Consideration-Credit Options**

| | | | | 1 | 2 | 3 | 4 |
|---|---|---|---|---|---|---|---|
| Counterparty provided? | -- Participating Basis: | -- Ord. Party-guarantor protected | - Participating | | | | |
| | | | - Non-participating | | | | |
| | | -- Unprotected | | | | | |
| | -- Non-Participating basis: | -- Ord. Party-guarantor protected | - Participating | | | | |
| | | | - Non-participating | | | | |
| | | -- Unprotected | | | | | |
| Ordering Party Guarantor provided? | -- Participating basis: | | | | | | |
| | -- Non-participating basis: | | | | | | |

**Key:**

Counterparty:
1. Interest rate (% p.a.)
2. Participation rate (%)

Order Party-guarantor
1. Interest rate (% p.a.)
2. Participation rate (%)

F3

# PRODUCT SPECIFICATION

AS AT 93.11.01.17.00.00.00

PRODUCT ID : 2001

**Product Summary**

| | | | |
|---|---|---|---|
| Application ID : | 001 | Product Sponsor : | Newcom Inc |

**Product Specification**

| | | | | | |
|---|---|---|---|---|---|
| Market : | Telecommunications Carrying Capacity | | | | |
| Sub-market : | Prime T.T.U.'s (Transmission time units 1200-1800 hrs daily NY-Boston link) | | | Consideration denom. type : | Ordering party T.T.U.'s |
| Market type : | Spot | | | Entitlement denom. type | Counterparty T.T.U.'s |
| Establishment date/time : | 93.11.01.17.00.00.00 | | | Currency type (if applic.) : | Not applicable |
| Maturity date/time : | 96.11.01.17.00.00.00 | | | National currency type (if applic.) : | Not applicable |
| Minimum Product Definition Value : | -1.000 | Maximum Product Definition Value: | 1.000 | Product Step Value: | 0.05 |

**Product Details**

| | | | | | |
|---|---|---|---|---|---|
| Conditional Payoff Dimensions ID : | One | Actual/Perceived Market Identifier : | Actual | Elemental/compound | |
| Market Phenomena Class Identifier : | Primary | Specific Phenomenon : | (Log of) difference in the OP's utilisation of the CP's network and the CP's utilisation of the OP's network | Market Identifier : | Single Market |
| Elemental/compound sub-market Identifier | -- | Sub-market Phenomenon Class Identifier : | – | | |
| Future Period Date/time Identifier : | At Contract Maturity date/time | Event Type Identifier : | Spot value | | |
| Minimum Product Definition Value : | -1.000 | Maximum Product Definition Value : | 1.000 | Product Step Value : | 0.05 |
| Product Establishment Date/time : | 93.11.01.17.00.00.00 | Product Maturity Date/time : | 96.11.01.17.00.00.00 | | |
| Consideration denomination of Product : | Ord Party T.T.U.'S | Currency type denomination of Product (if applic) | Not applicable | National currency type denomination of Product (if applic.) | Not applicable |
| Entitlement denom. of Product : | Counterparty T.T.U.'s (Transmission time units) | | | | |

F4

# PRIMARY ORDER SPECIFICATION

**AS AT :** 94.06.01.14.25.30.00

| | |
|---|---|
| **Ordering Party :** | Bastel Co |
| **Own reference :** | 06H582 |

**Application ID :** 001

| | | | |
|---|---|---|---|
| **Product :** | ( ID : 2001 ) | | |
| Market | Telecommunications Carrying Capacity | | |
| Sub-Market | Prime T.T.U.'s | Market Type | Spot |
| Estab. date/time | 93.11.01.17.00.00.00 | | |
| Maturity date/time | 96.11.01.17.00.00.00 | | |

| | |
|---|---|
| Application Promoter | Newcom Inc |
| Product Sponsor | Newcom Inc |
| Counterparty-guarantor | -- |
| Regulator | I.T.T. |

| | Consideration/ Entitlement Denomination | Consideration | Entitlement |
|---|---|---|---|
| Consideration type | T.T.U.'s | T.T.U.'s | T.T.U.'s |
| Entitlement type | T.T.U.'s | T.T.U.'s | T.T.U.'s |
| Currency type (if applic.) | N.A. | N.A. | N.A. |
| National Curr. type (if applic.) | N.A. | N.A. | N.A. |
| Max. Consid. Amount | N.A. | 58.000 | As below |

"X" Value: 4

| X Range Value | 1 | 2 | 3 | 4 | | |
|---|---|---|---|---|---|---|
| Alpha (X) | (1.00) | (0.35) | 0.20 | 1.00 | | |
| Beta (X) | 386.340 | 386.340 | (498.43) | (498.43) | | |

| Gamma | | |
|---|---|---|
| | 1 | 11 |
| | 2 | 8 |
| | 3 | 11 |
| | 4 | |
| | 5 | |

**Pricing and Matching Process:**
Minimise consideration payment under an EV/CE regime

SPECIAL DEAL TYPE: Ordering party negative entitlement allowed.

## ORDER SUPPORT DETAILS

| | |
|---|---|
| Communications medium : | Computer-to-computer |
| Consideration Credit sought ? | No |
| Desired Form of Consideration Credit (if appl.) | Not Applicable |
| Counterparty Collateralisation payments required ? | No |
| Preparedness to make 'own' collateralisation payments (if applicable)? | Not Applicable |
| Applicable Marginal Tax rate (if applicable)? | |
| - Consideration : | Not Applicable |
| - Entitlements : | Not Applicable |
| Netting System Participation ? | |
| - Bilateral Obligations netting ? (if applic.) | No |
| - Bilateral Payments netting ? (if applic.) | No |
| - Multilateral Obligations netting ? (if applic.) | No |
| - Multilateral Payments netting ? (if applic.) | No |

| | |
|---|---|
| Partial Matches desired ? | No |
| Manual Approval of Matches desired ? | No |
| Desired degree of trading transparency (if applicable) | Not Applicable |
| Applicable Consid./Entitlement Transfer Entity | |
| Account details : | ABC Banking Corp |
| Operating A/c | 1-1-502026- 345896 -0 |
| Desired date/time of Order Submission : | Immediate |
| Desired Order retention period : | 00.00.01.00.00.00 |
| Desired Max. time for counterparty manual order approval (if applic.) : | Not Applicable |
| Preferred/Preferential Dealing: | Nil |

**Unacceptable Counterparties and Other Stakeholders**

Not Applicable

F5

# ORDER SPECIFICATION PRICING

By : Tasnet    As At : 94.06.01.14.26.40.00

| COUNTERPARTY PRICING SPECIFICATION | | Application ID : 001<br>Product ID : 2001 | Consideration Exchange Rates (If applic) : C/E .....-...... Currency .......-.......... Nat. Curr. ......-.......... |
|---|---|---|---|
| Defined Circumstances ID 8 | Commission Rate : 1.00% | Discount Rate : 9.90% p.a. | Entitlement Exchange Rates: (If applic) : C/E .....-...... Currency ........-.......... Nat. Curr. .......-.......... |

| Feasible Product Definition Values | Gross Contingent Entitlement Amounts | OP/CP C/Credit Adjust. | Net Contingent Entitlement Amounts | Component Product Prices | Implied Contingent Entitlement Amounts | Assessed Probabilities of Occurence | Net Contingent Entitlement (Valuation) Amts. | Net Contingent Negative Entitlement (Valuation) Amounts | Maximum Absolute Negative Entitlement Amount |
|---|---|---|---|---|---|---|---|---|---|
| (1.00) - (0.35) | (386.340) | 0.00 | (386.340) | 0.567639 | (219.302) | 0.544514 | (210.3675) | (210.3675) | |
| (0.30) | (305.910) | 0.00 | (305.910) | 0.022156 | (6.777) | 0.016838 | (5.151) | (5.151) | |
| 0.25) | (225.470) | 0.00 | (225.470) | 0.021499 | (4.847) | 0.016793 | (3.786) | (3.786) | |
| (0.20) | (145.040) | 0.00 | (145.040) | 0.019544 | (2.8346) | 0.016718 | (2.425) | (2.425) | |
| (0.15) | (64.610) | 0.00 | (64.610) | 0.017349 | (1.1209) | 0.016614 | (1.073) | (1.073) | |
| (0.10) | 15.830 | 0.00 | 15.830 | 0.017241 | 0.2729 | 0.016481 | 0.261 | | |
| (0.05) | 96.260 | 0.00 | 96.260 | 0.016989 | 1.6354 | 0.016320 | 1.571 | | |
| 0 | 176.700 | 0.00 | 176.700 | 0.016258 | 2.8727 | 0.016132 | 2.851 | | |
| 0.05 | 257.130 | 0.00 | 257.130 | 0.016001 | 4.1143 | 0.015918 | 4.093 | | |
| 0.10 | 337.560 | 0.00 | 337.560 | 0.015847 | 5.3493 | 0.015678 | 5.292 | | |
| 0.15 | 418.000 | 0.00 | 418.000 | 0.015654 | 6.5433 | 0.015414 | 6.443 | | |
| 0.20 - 1.00 | 498.430 | 0.00 | 498.430 | 0.290238 | 144.6633 | 0.29257 | 145.825 | | (498.43) |
| | | | | 1.036416 | ( 69.432 ) | 1.0000 | ( 56.463 ) | (222.8025) | (498.430) |

| | | | | |
|---|---|---|---|---|
| x Applic. Entitle. Exchange Rates | (.........................) C/E | (.........................) Currency | (.....................) Nat Curr. | |
| = Base contract bid price (In Product Denom. terms) | | | 69.432 | |
| Net Present Value (at................. | 9.90% p.a...) | | 54.630 | 44.420 |
| + Flat Commission (.................. | 1.00% ..) | | 0.550 | |
| = Contract Bid Price (In Product Denom. terms) | | | 55.180 | |
| x Applic. Consid. Exchange Rates | (.........................) C/E | (.........................) Currency | (.....................) Nat Curr. | |
| = Contract Bid Price (In OP requested terms) (if applic.) | | | 55.180 | |
| Implied Base 'Margin' on Contract | | | | 10.760 |
| + Exchange Rate and Consideration Investment Margin | | | | ---- |
| = Implied Contract Value (to CP) | | | | 10.760 |

F6

# ORDER SPECIFICATION PRICING

By : Aarcom    As At : 94.06.01.14.26.40.00

COUNTERPARTY PRICING SPECIFICATION

| | | | |
|---|---|---|---|
| Application ID : 001 | Product ID : 2001 | Consideration Exchange Rates (If applic) : C/E .....-...... | Currency .......-.......... Nat. Curr. ......-.......... |
| Defined Circumstances ID 9 | Commission Rate : 0.90% | Discount Rate : 8.50% p.a. | Entitlement Exchange Rates: (If applic) : C/E .....-...... Currency ........-.......... Nat. Curr. .......-.......... |

| Feasible Product Definition Values | Gross Contingent Entitlement Amounts | OP/CP C/Credit Adjust. | Net Contingent Entitlement Amounts | Component Product Prices | Implied Contingent Entitlement Amounts | Assessed Probabilities of Occurrence | Net Contingent Entitlement (Valuation) Amts. | Net Contingent Negative Entitlement (Valuation) Amounts | Maximum Absolute Negative Entitlement Amount |
|---|---|---|---|---|---|---|---|---|---|
| (1.00) - (0.35) | (386.340) | 0.00 | (386.340) | 0.566603 | (218.901) | 0.545015 | (210.561) | (210.561) | |
| (0.30) | (305.910) | 0.00 | (305.910) | 0.018357 | (5.616) | 0.017545 | (5.3672) | (5.3672) | |
| 0.25) | (225.470) | 0.00 | (225.470) | 0.018492 | (4.169) | 0.017020 | (3.83749) | (3.83749) | |
| (0.20) | (145.040) | 0.00 | (145.040) | 0.018417 | (2.671) | 0.016978 | (2.4625) | (2.4625) | |
| (0.15) | (64.610) | 0.00 | (64.610) | 0.018313 | (1.183) | 0.016875 | (1.0902) | (1.0902) | |
| (0.10) | 15.830 | 0.00 | 15.830 | 0.016481 | 0.261 | 0.016754 | 0.265 | | |
| (0.05) | 96.260 | 0.00 | 96.260 | 0.016320 | 1.571 | 0.016256 | 1.565 | | |
| 0 | 176.700 | 0.00 | 176.700 | 0.016132 | 2.851 | 0.015689 | 2.772 | | |
| 0.05 | 257.130 | 0.00 | 257.130 | 0.015918 | 4.093 | 0.015456 | 3.974 | | |
| 0.10 | 337.560 | 0.00 | 337.560 | 0.015678 | 5.292 | 0.015625 | 5.274 | | |
| 0.15 | 418.000 | 0.00 | 418.000 | 0.015414 | 6.443 | 0.015401 | 6.438 | | |
| 0.20 - 1.00 | 498.430 | 0.00 | 498.430 | 0.292577 | 145.829 | 0.291395 | 145.240 | | (498.430) |
| | | | | 1.028702 | ( 66.200 ) | 1.0000 | ( 57.790 ) | (223.318) | (498.430) |

x Applic. Entitle. Exchange Rates (.........................) C/E (.........................) Currency (....................) Nat Curr.

= Base contract bid price (In Product Denom. terms) → 66.200

Net Present Value (at................. 8.50% p.a...) → 54.900 | 45.960

+ Flat Commission (.................. 0.90% ..) → 0.490

= Contract Bid Price (In Product Denom. terms) → 55.390

x Applic. Consid. Exchange Rates (.........................) C/E (.........................) Currency (......................) Nat. Curr.

= Contract Bid Price (In OP requested terms) (If applic.) → 55.390

Implied Base 'Margin' on Contract → 9.430

+ Exchange Rate and Consideration Investment Margin → ----

= Implied Contract Value (to CP) → 9.430

F7

# CONTRACT VALUATION

AS AT 94.06.01.16.00.00.00 **Report for:** Basstel Co

CONTRACT SUMMARY (GRAPHICAL)

| | | |
|---|---|---|
| **Ordering Party :** | Basstel Co | |
| **Counterparty :** | Tasnet | |
| **Product :** | (ID 2001 ) | |
| **Market** | Telecommunications carrying capacity | |
| **Sub-Market** | Prime T.T.U.'s | Market Type Spot |
| **Estab. date/time** | 93.11.01.17.00.00.00 | |
| **Maturity date/time** | 96.11.01.17.00.00.00 | |

| | |
|---|---|
| **Order ID (if app.)** | 92837465 |
| **Conf. date/time (if app.)** | 94.06.01.14.38.50.00 |
| **Contract/Product context :** | 1 of 1 |

| | |
|---|---|
| **Application ID:** | 001 |
| **C.P. Own reference:** | 17MO36 |
| **Application Promoter** | Newcom Inc |
| **Product Sponsor** | Newcom Inc |
| **Counterparty-guarantor** | – |
| **Regulator** | I.T.T. |

| Valuations as at | 94.06.01.16.00.00.00 | |
|---|---|---|
| | F.P.V's | Contract |
| Expected Value | (0.150) | 54.236 |
| Std. Deviation | 0.023 | 9.207 |

| | Consideration/ Entitlement Denomination | Consideration | Entitlement |
|---|---|---|---|
| Cons./Entitlement type | T.T.U.'s | T.T.U's | T.T.U.'s |
| Currency type (if app) | N.A. | N.A. | N.A. |
| National Curr. type (if applic.) | N.A. | N.A. | N.A. |
| Amount | N.A. | 55,180 | As below |

**Pricing and Matching Process:** Minimise consideration payment under an EV/CE regime

**Special Deal Type :** Ordering party negative entitlement allowed

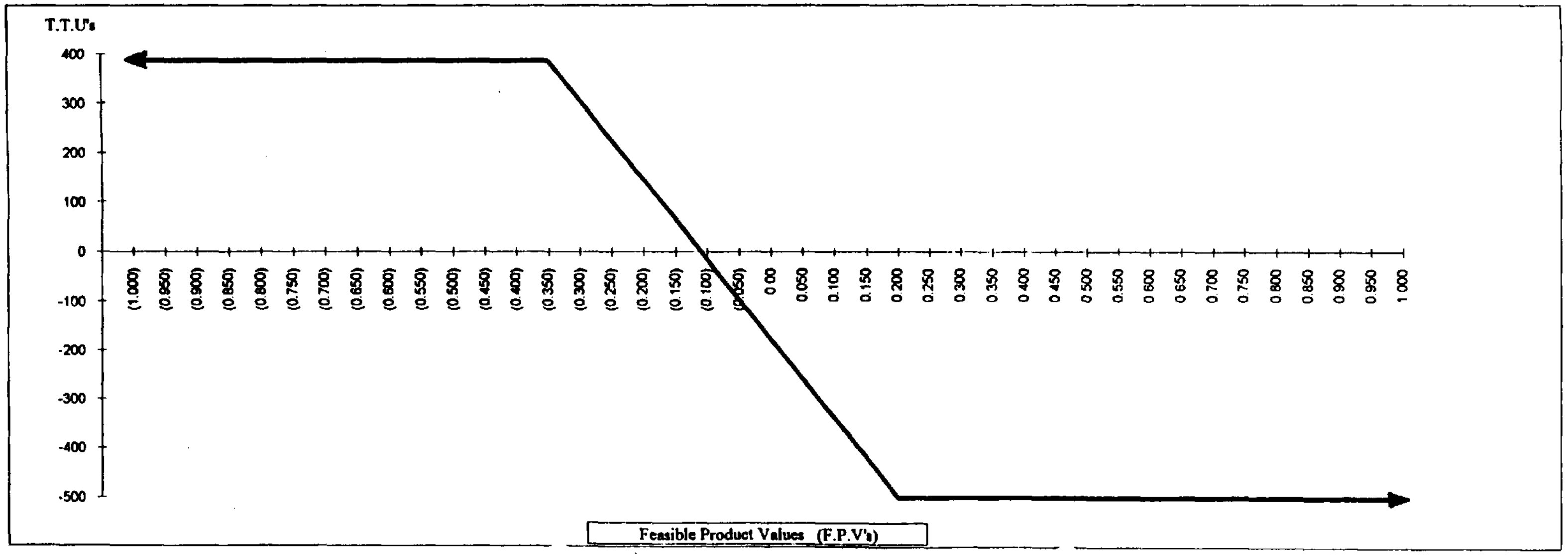

# CONTRACT VALUATION

AS AT 94.06.01.16.00.00.00 **Report for:** Tasnet

F8

CONTRACT SUMMARY (GRAPHICAL)

| | |
|---|---|
| **Ordering Party :** | Basstel Co |
| **Counterparty :** | Tasnet |
| **Product :** (ID 2001 ) | |
| **Market** | Telecommunications carrying capacity |
| **Sub-Market** | Prime T.T.U.'s **Market Type** Spot |
| **Estab. date/time** | 93.11.01.17.00.00.00 |
| **Maturity date/time** | 96.11.01.17.00.00.00 |

| | |
|---|---|
| **Application ID:** | 001 |
| **O.P. Own Reference:** | 06H582 |
| **Application Promoter** | Newcom Inc |
| **Product Sponsor** | Newcom Inc |
| **Counterparty-guarantor** | – |
| **Regulator** | I.T.T. |

| | Consideration/ Entitlement Denomination | Consideration | Entitlement |
|---|---|---|---|
| Cons./Entitlement type | T.T.U.'s | T.T.U's | T.T.U.'s |
| Currency type (if app) | N.A. | N.A. | N.A. |
| National Curr. type (if applic.) | N.A. | N.A. | N.A. |
| Amount | N.A. | 55,180 | As below |

| | |
|---|---|
| **Order ID (if app.)** | 92837465 |
| **Conf. date/time (if app.)** | 94.06.01.14.38.50.00 |
| **Contract/Product context :** | 1 of 1 |

| Valuations as at 94.06.01.16.00.00.00 | F.P.V's | Contract |
|---|---|---|
| **Expected Value** | (0.150) | (54.236) |
| **Std. Deviation** | 0.023 | (9.207) |

**Pricing and Matching Process:** Minimise consideration payment under an EV/CE regime

**Special Deal Type :** Ordering party negative entitlement allowed

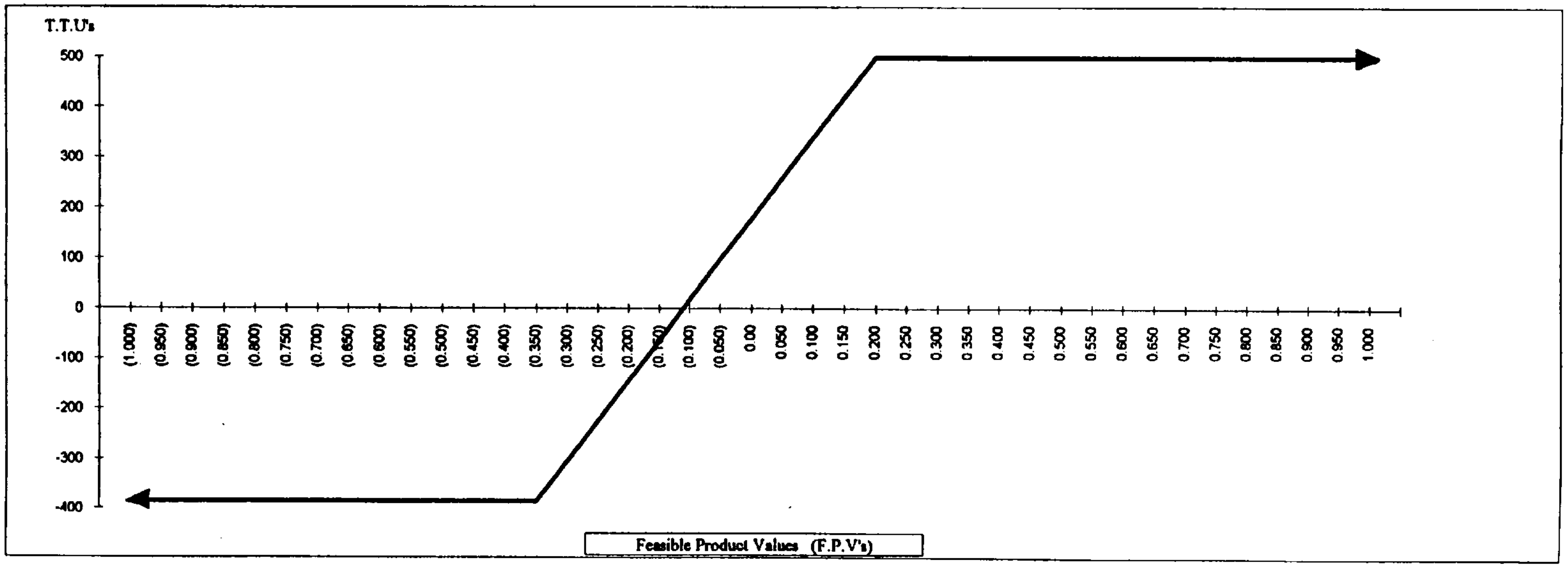

F9

# CONTRACT VALUATION

AS AT 94.11.22.10.00.00.00 **Report for:** Basstel Co

## CONTRACT SUMMARY (GRAPHICAL)

| | |
|---|---|
| **Ordering Party :** | Basstel Co |
| **Counterparty :** | Tasnet |
| **Product :** (ID | 2001 ) |
| **Market** | Telecommunications carrying capacity |
| **Sub-Market** | Prime T.T.U.'s Market Type Spot |
| **Estab. date/time** | 93.11.01.17.00.00.00 |
| **Maturity date/time** | 96.11.01.17.00.00.00 |

| | |
|---|---|
| **Application ID:** | 001 |
| **C.P. Own reference:** | 17MO36 |
| **Application Promoter** | Newcom Inc |
| **Product Sponsor** | Newcom Inc |
| **Counterparty-guarantor** | – |
| **Regulator** | I.T.T. |

| | Consideration/ Entitlement Denomination | Consideration | Entitlement |
|---|---|---|---|
| Cons./Entitlement type | T.T.U.'s | T.T.U's | T.T.U.'s |
| Currency type (if app) | N.A. | N.A. | N.A. |
| National Curr. type (if applic.) | N.A. | N.A. | N.A. |
| Amount | N.A. | 55,180 | As below |

| | |
|---|---|
| **Order ID (if app.)** | 92837465 |
| **Conf. date/time (if app.)** | 94.06.01.14.38.50.00 |
| **Contract/Product context :** | 1 of 1 |

| Valuations as at | 94.11.22.10.00.00.00 | |
|---|---|---|
| | **F.P.V's** | **Contract** |
| **Expected Value** | **(0.400)** | **350.810** |
| **Std. Deviation** | **0.010** | **74.200** |

**Pricing and Matching Process:** Minimise consideration payment under an EV/CE regime

**Special Deal Type :** Ordering party negative entitlement allowed

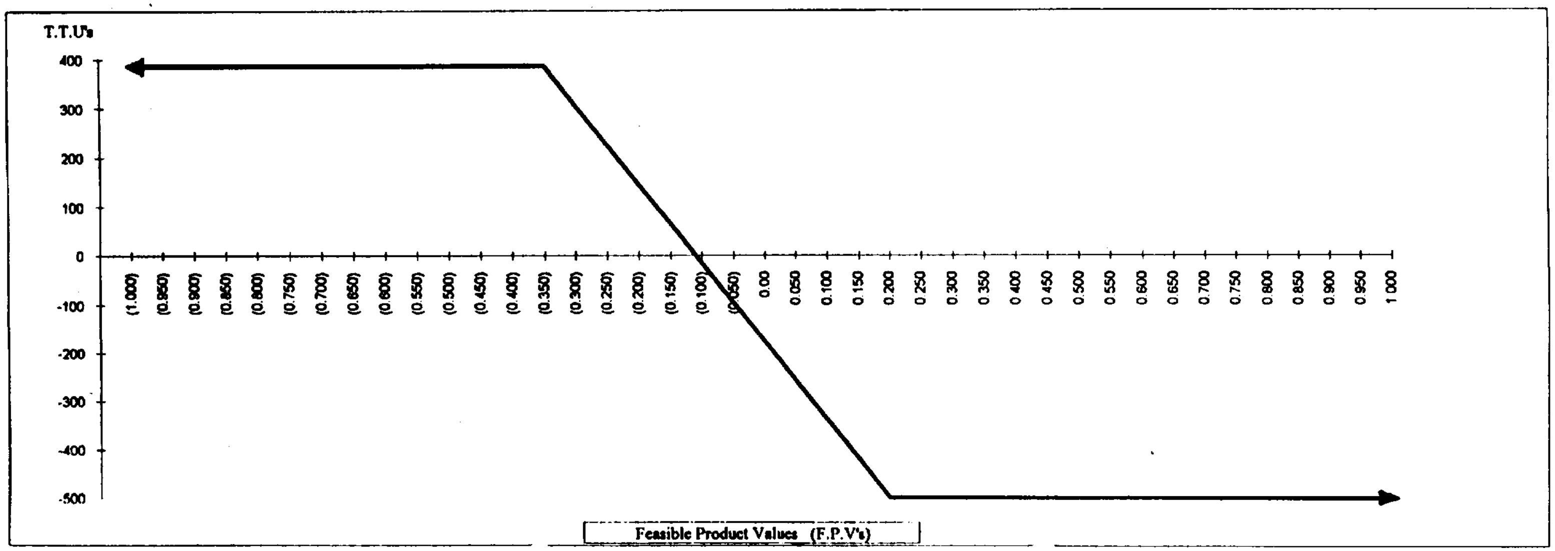

F10

# CONTRACT MATURITY

AS AT 96.11.01.17.00.00.00 **Report for:** Basstel Co

CONTRACT SUMMARY (GRAPHICAL)

| | | |
|---|---|---|
| **Ordering Party :** | Basstel Co | |
| **Counterparty :** | Tasnet | |
| **Product :** | (ID 2001 ) | |
| Market | Telecommunications carrying capacity | |
| Sub-Market | Primo T.T.U.'s | Market Type Spot |
| Estab. date/time | 93.11.01.17.00.00.00 | |
| Maturity date/time | 96.11.01.17.00.00.00 | |

| | |
|---|---|
| Application ID: | 001 |
| C.P. Own reference: | 17MO36 |
| Application Promoter | Newcom Inc |
| Product Sponsor | Newcom Inc |
| Counterparty-guarantor | -- |
| Regulator | I.T.T. |

| | Consideration/ Entitlement Denomination | Consideration | Entitlement |
|---|---|---|---|
| Cons./Entitlement type | T.T.U.'s | T.T.U's | T.T.U.'s |
| Currency type (if app) | N.A. | N.A. | N.A. |
| National Curr. type (if applic.) | N.A. | N.A. | N.A. |
| Amount | N.A. | 55.180 | As below |

| | |
|---|---|
| Order ID (if app.) | 92837465 |
| Conf. date/time (if app.) | 94.06.01.14.38.50.00 |
| Contract/Product context : | 1 of 1 |

| Valuations as at | 96.11.01.17.00.00.00 | |
|---|---|---|
| | F.P.V's | Contract |
| Expected Value | (0.400) | 386.340 |
| Std. Deviation | 0 | 0 |

Pricing and Matching Process: Minimise consideration payment under an EV/CE regime

**Special Deal Type :** Ordering party negative entitlement allowed

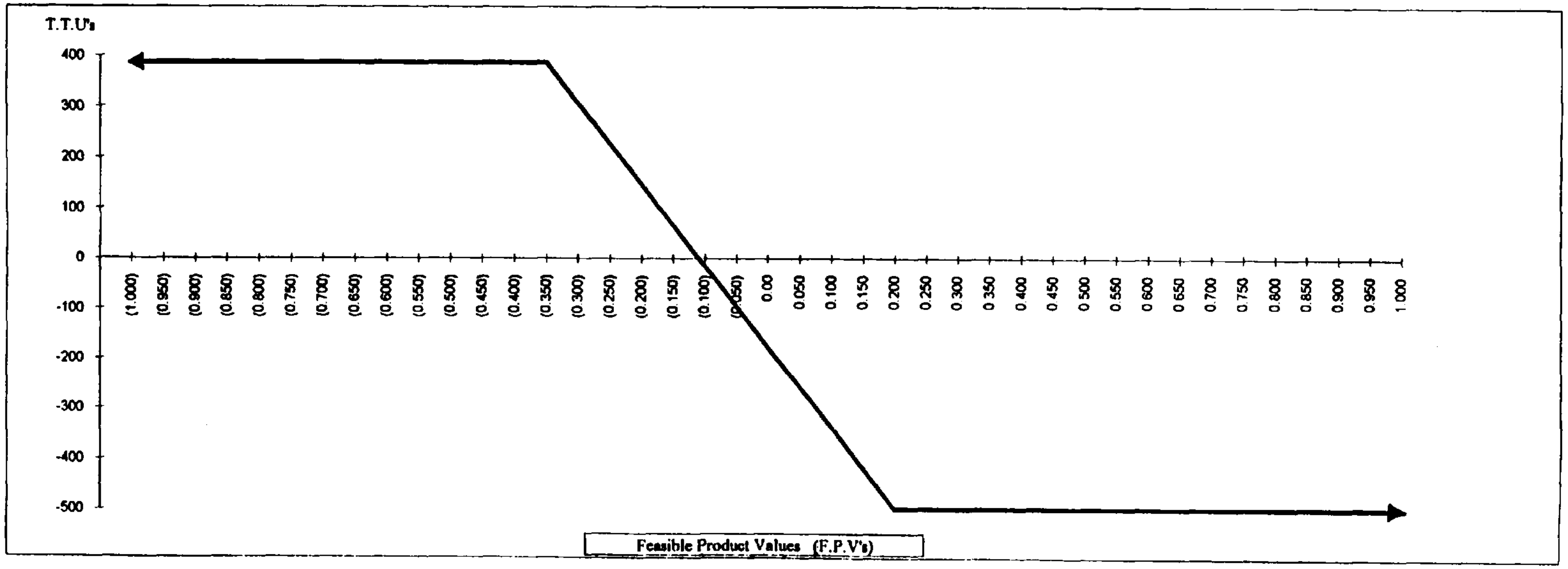

SAMPLE PRODUCT ORDER/CONTRACT 'TIME LINE'

EXAMPLE III: SHARE PRICE INDICES

G2

# APPLICATION SPECIFICATION

AS AT 91.06.03.17.00.00.00

## Part A

| Application ID : | 001 | Applicable Product ID's: | 10020 - 11400 | Application Access Limitations |
|---|---|---|---|---|
| Application Promoter : | B.L.C. Inc | Preferred/Preferential dealing ? | Available | Contract Ordering Parties |
| Primary Application Use : | Economic risk management | Pre or Post Tax Matching ? | Pre-Tax | |
| Feasible Counterparty numbers: | Multiple counterparties | Tax deduction/subsidy at source ? | Not Applicable | NIL |
| Public/private use : | Public Use | Degree of Trading Transparency : | NIL | |
| Acceptable comms mediums : | Computer-computer link | Secondary trading Allowed ? | Yes | |
| Retail/Wholesale Use: | Wholesale | Derivative trading Allowed ? | Yes | |
| Pricing & Matching | Minimise pre-tax consideration | Deferred Order Submissions possible ? | Yes | |
| Process : | payment under an EV/CE regime | Partial Matches possible ? | Yes | Contract Counterparties |
| | | Settlement terms : | | |
| Contract revaluation frequency : | Daily | - Considerations | Immediate | NIL |
| | | - Entitlements : | Immediate | |
| Ordering Parties allowed negative | | Manual Approvals possible ? | No | |
| contract payoffs ? | Yes | Ordering Party consideration credit available? | Yes | |
| Application Access limitations: | Nil | Collateralisation payments required? | | Counterparty Guarantors |
| | | - Counterparties | Yes | |
| | | - Ordering Parties | Yes | NIL |
| | | Bilateral Obligations Netting ? | Yes | |
| | | Bilateral Payments Netting ? | Yes | Others : |
| | | Multilateral Obligations Netting ? | No | |
| | | Multilateral Payments Netting ? | No | NIL |

| Netting Details (if applic.) | | Collateralisation Details (if applic.) | Valuation Details | Consideration Credit Details (if applicable) |
|---|---|---|---|---|
| Applicable Discount rate: | 9.80% p.a. | Trustee : | Applicable discount rate: | Ordering Party guarantor: |
| Obligation netting trigger : | 100.000 | NOT APPLICABLE | 9.80% | ADVENTCO Inc |
| Min required settlements : | 5.000 | | | |

## Ordering Party Consideration-Credit Options

| | | | |
|---|---|---|---|
| Counterparty provided ? | -- Participating basis : | - Ord. Party-guarantor protected | - Participating |
| | | | - non-part. basis |
| | | - Unprotected | |
| | -- Non-participating basis : | - Ord. Party-guarantor protected | - Participating |
| | | | - non-part. basis |
| | | - Unprotected | |
| Ordering Party Guarantor provided ? | -- Participating basis : | | |
| | -- Non-participating basis : | | |

| 1 | 2 | 3 | 4 |
|---|---|---|---|
| 7 | 1 | 0.5 | 0.3 |
| 7 | 1 | 0.5 | |
| 8 | 1 | | |
| 11 | | 0.5 | 0.3 |
| 11 | | 0.5 | |
| 19 | | | |
| | | 16 | 1 |
| | | 20 | |

Key:
Counterparty:
1. Interest rate (% p.a.)
2. Participation rate (% )

Ord. Party-Guarantor
3. Interest rate (% p.a.)
4. Participation rate (%)

G3

## PRODUCT SPECIFICATION

**AS AT** 91.06.03.17.00.00.00

**PRODUCT ID:** 10061

### Product Summary

| | | | |
|---|---|---|---|
| **Application ID:** | 001 | **Product Sponsor:** | B.L.C. Inc |

### Product Specification

| | | | |
|---|---|---|---|
| Market: | Stock Indices | | |
| Sub-market: | PTSE 75 | Consideration/entitlement denom. type: | Money |
| Market type: | Spot | | |
| Establishment date/time: | 91.06.03.17.00.00.00 | Currency type (if applic.): | Com Bnk Dep. |
| Maturity date/time: | 94.06.03.17.00.00.00 | | |
| | | National currency type (if applic.): | AUD |

| | | | | | |
|---|---|---|---|---|---|
| Minimum Product Definition Value: | 1600 | Maximum Product Definition Value: | 2200 | Product Step Value: | 0010 |

### Product Details

| | | | | | |
|---|---|---|---|---|---|
| Conditional Payoff Dimensions ID: | One | Actual/Perceived Market Identifier: | Actual | | |
| Market Phenomena Class Identifier: | Share Price Index | Specific Phenomenon: | PTSE 75 | Elemental/compound Market Identifier: | Single Market |
| Elemental/compound sub-market Identifier | – | Sub-market Phenomenon Class Identifier: | – | | |
| Future Period Date/time Identifier: | At Contract Maturity date/time | Event Type Identifier: | Spot Value | | |
| Minimum Product Definition Value: | 1600 | Maximum Product Definition Value: | 2200 | Product Step Value: | 0010 |
| Product Establishment Date/time: | 91.06.03.17.00.00.00 | Product Maturity Date/time: | 94.06.03.17.00.00.00 | | |
| Cons./entitlement denomination of Product: | Money | Currency type denomination of Product (if applic) | Com Bnk Dep. | National currency type denomination of Product (if applic.) | AUD |

G4

# PRIMARY ORDER SPECIFICATION

AS AT : 93.01.01.17.37.06.00

| | |
|---|---|
| **Ordering Party :** | Abbotts & Taylor |
| **Own reference :** | PQZ260 |

**Product : (ID : 10061 )**

| | | | |
|---|---|---|---|
| Market | Stock Indices | | |
| Sub-Market | PTSE 75 | Market Type | Spot |
| Estab. date/time | 91.06.03.17.00.00.00 | | |
| Maturity date/time | 94.06.03.17.00.00.00 | | |

| | |
|---|---|
| **Application ID :** | 001 |
| Application Promoter | B.L.C. Inc |
| Product Sponsor | B.L.C. Inc |
| Counterparty-guarantor | CNZ Banking Corporation |
| Regulator | Pacific Central Bank |

| | Consideration/ Entitlement Denomination | Consideration | Entitlement |
|---|---|---|---|
| Cons./Entitlement type | Money | Money | Money |
| Currency type (if applic.) | Com Bnk Dep | Com Bnk Dep | Com Bnk Dep |
| National Curr. type (if applic.) | AUD | AUD | AUD |
| Max. Consid. Amount | N.A. | 54,000 | See Below |

"X" Value: 4

| X Range Value | 1 | 2 | 3 | 4 | 5 | 6 |
|---|---|---|---|---|---|---|
| Alpha (X) | 1600 | 1930 | 1990 | 2200 | | |
| Beta (X) | 187.200 | 187.200 | 37.440 | 37.440 | | |
| Gamma 1 | 11 | | | | | |
| Gamma 2 | | 8 | | | | |
| Gamma 3 | | | 11 | | | |
| Gamma 4 | | | | | | |
| Gamma 5 | | | | | | |

**Pricing and Matching Process :**
Minimise pre-tax consideration payment under an EV/CE regime

**SPECIAL DEAL TYPE :** Collateralisation Payments

## ORDER SUPPORT DETAILS

Communications medium : Computer-to-computer
Consideration Credit sought ? No
Desired Form of Consideration Credit (if appl.) Not Applicable
Counterparty Collateralisation payments required ? Yes
Preparedness to make 'own' collateralisation payments (if applicable)? Not Applicable
Applicable Marginal Tax rate (if applicable)?
- Consideration : Not Applicable
- Entitlements : Not Applicable

Netting System Participation ?
- Bilateral Obligations netting ? (if applic.) No
- Bilateral Payments netting ? (if applic.) No
- Multilateral Obligations netting ? (if applic.) No
- Multilateral Payments netting ? (if applic.) No

Partial Matches desired ? Yes
Manual Approval of Matches desired ? No
Desired degree of trading
Transparency (if applicable) Not Applicable
Applicable Consid./Entitlement Transfer Entity
Account details : ABC Banking Corp
Operating A/c 1-1-502026-619930-0
Desired date/time of Order Submission : Immediate
Desired Order retention period : 00.00.01.00.00.00
Desired Max. time for counterparty manual order approval (if applic.) : Not Applicable
**Preferred/Preferential Dealing:**
NIL

**Unacceptable Counterparties and Other Stakeholders**
NIL

G5

# ORDER SPECIFICATION PRICING

By : Abrahamsons (Potential Counterparty No. 1) As At 93.01.01.17.38.02.00

| COUNTERPARTY PRICING SPECIFICATION | Application ID : 001<br>Product ID : 10061 | Consideration Exchange Rates (if applic) : C/E .....-...... Currency .......-.......... Nat. Curr. ......-.......... |
|---|---|---|
| Defined Circumstances ID 26 / Commission Rate 1.25% | Discount Rate 10.00% p.a. | Entitlement Exchange Rates: (if applic) : C/E .....-...... Currency .......-.......... Nat. Curr. .......-.......... |

| Feasible Product Definition Values | Gross Contingent Entitlement Amounts | OP/CP C/Credit Adjust. | Net Contingent Entitlement Amounts | Component Product Prices | Implied Contingent Entitlement Amounts | Assessed Probabilities of Occurrence | Net Contingent Entitlement (Valuation) Amts. | Net Contingent Negative Entitlement (Valuation) Amounts | Maximum Absolute Negative Entitlement Amount |
|---|---|---|---|---|---|---|---|---|---|
| < | 0.00 | 0.00 | 0.00 | | | | | | |
| 1600 | (187.200) | 0.00 | (187.200) | 0.000220 | (0.041) | 0.000020 | (0.004) | (0.004) | (187.200) |
| 1610 | (187.200) | 0.00 | (187.200) | 0.000227 | (0.042) | 0.000027 | (0.005) | (0.005) | |
| 1620 | (187.200) | 0.00 | (187.200) | 0.000237 | (0.044) | 0.000037 | (0.007) | (0.007) | |
| 1630 | (187.200) | 0.00 | (187.200) | 0.000249 | (0.047) | 0.000049 | (0.009) | (0.009) | |
| 1640 | (187.200) | 0.00 | (187.200) | 0.000266 | (0.050) | 0.000066 | (0.012) | (0.012) | |
| 1650 | (187.200) | 0.00 | (187.200) | 0.000287 | (0.054) | 0.000087 | (0.016) | (0.016) | |
| 1660 | (187.200) | 0.00 | (187.200) | 0.000314 | (0.059) | 0.000114 | (0.021) | (0.021) | |
| 2130 | (37.440) | 0.00 | (37.440) | 0.029642 | (1.110) | 0.029442 | (1.102) | (1.102) | |
| 2140 | (37.440) | 0.00 | (37.440) | 0.028625 | (1.072) | 0.028425 | (1.064) | (1.064) | |
| 2150 | (37.440) | 0.00 | (37.440) | 0.027469 | (1.028) | 0.027269 | (1.021) | (1.021) | |
| 2160 | (37.440) | 0.00 | (37.440) | 0.026193 | (0.981) | 0.025993 | (0.973) | (0.973) | |
| 2170 | (37.440) | 0.00 | (37.440) | 0.024819 | (0.929) | 0.024619 | (0.922) | (0.922) | |
| 2180 | (37.440) | 0.00 | (37.440) | 0.023369 | (0.875) | 0.023169 | (0.867) | (0.867) | |
| 2190 | (37.440) | 0.00 | (37.440) | 0.021865 | (0.819) | 0.021665 | (0.811) | (0.811) | |
| 2200 | (37.440) | 0.00 | (37.440) | 0.020330 | (0.761) | 0.020130 | (0.754) | (0.754) | |
| > | 0.000 | 0.000 | 0.000 | 0.146635 | 0.000 | 0.158835 | 0.000 | 0.000 | |
| | | | | 1.0402 | (59.580) | 1.0000 | (55.000) | (55.000) | (187.200) |

x Applic. Entitle. Exchange Rates (........................) C/E (........................) Curr. (....................) Nat. Curr

= Base contract bid price (in Product Denom. terms) → 59.580

Net Present Value (at................ 10.00% p.a.) → 51.280 (47.340)

+ Flat Commission (.................. 1.25% ) → 0.640

= Contract Bid Price (in Product Denom. terms) → 51.920

x Applic. Consid. Exchange Rates (..........................) C/E (..........................) Curr. (......................) Nat. Curr.

= Contract Bid Price (in OP requested terms) (if applic.) → 51.920

Implied Base 'Margin' on Contract → 4.580

+ Exchange Rate and Consideration Investment Margin → ----

= Implied Contract Value (to CP) → 4.580

G6

**ORDER SPECIFICATION PRICING** By : Carpenters Inc (Potential Counterparty No. 2) As At 93.01.01.17.38.02.00

COUNTERPARTY PRICING SPECIFICATION

Application ID : 001
Product ID : 10061

Consideration Exchange Rates (if applic) : C/E .....-....... Currency .......-.......... Nat. Curr. ......-..........

| Defined Circumstances ID | Commission Rate | Discount Rate |
|---|---|---|
| 17 | 1.30% | 9.8% p.a. |

Entitlement Exchange Rates: (if applic) : C/E .....-...... Currency ........-.......... Nat. Curr. .......-..........

| Feasible Product Definition Values | Gross Contingent Entitlement Amounts | OP/CP C/Credit Adjust. | Net Contingent Entitlement Amounts | Component Product Prices | Implied Contingent Entitlement Amounts | Assessed Probabilities of Occurence | Net Contingent Entitlement (Valuation) Amts. | Net Contingent Negative Entitlement (Valuation) Amounts | Maximum Absolute Negative Entitlement Amount |
|---|---|---|---|---|---|---|---|---|---|
| < | 0.00 | 0.00 | 0.00 | | | | | | |
| 1600 | (187.200) | 0.00 | (187.200) | 0.000220 | (0.041) | 0.000020 | (0.004) | (0.004) | (187.200) |
| 1610 | (187.200) | 0.00 | (187.200) | 0.000226 | (0.042) | 0.000028 | (0.005) | (0.005) | |
| 1620 | (187.200) | 0.00 | (187.200) | 0.000237 | (0.044) | 0.000037 | (0.007) | (0.007) | |
| 1630 | (187.200) | 0.00 | (187.200) | 0.000249 | (0.047) | 0.000049 | (0.009) | (0.009) | |
| 1640 | (187.200) | 0.00 | (187.200) | 0.000265 | (0.050) | 0.000065 | (0.012) | (0.012) | |
| 1650 | (187.200) | 0.00 | (187.200) | 0.000287 | (0.054) | 0.000087 | (0.016) | (0.016) | |
| 1660 | (187.200) | 0.00 | (187.200) | 0.000314 | (0.059) | 0.000114 | (0.021) | (0.021) | |
| 2130 | (37.440) | 0.00 | (37.440) | 0.029641 | (1.110) | 0.029442 | (1.102) | (1.102) | |
| 2140 | (37.440) | 0.00 | (37.440) | 0.028625 | (1.072) | 0.028425 | (1.064) | (1.064) | |
| 2150 | (37.440) | 0.00 | (37.440) | 0.027469 | (1.028) | 0.027266 | (1.021) | (1.021) | |
| 2160 | (37.440) | 0.00 | (37.440) | 0.026192 | (0.981) | 0.025993 | (0.973) | (0.973) | |
| 2170 | (37.440) | 0.00 | (37.440) | 0.024819 | (0.929) | 0.024619 | (0.922) | (0.922) | |
| 2180 | (37.440) | 0.00 | (37.440) | 0.023369 | (0.875) | 0.023169 | (0.867) | (0.867) | |
| 2190 | (37.440) | 0.00 | (37.440) | 0.021864 | (0.819) | 0.021666 | (0.811) | (0.811) | |
| 2200 | (37.440) | 0.00 | (37.440) | 0.020330 | (0.761) | 0.020130 | (0.754) | (0.754) | |
| > | 0.00 | 0.00 | 0.00 | 0.146635 | 0.000 | 0.158834 | 0.000 | 0.000 | |
| | | | | 1.0300 | (60.840) | 1.0000 | (55.120) | (55.120) | (187.200) |

x Applic. Entitle. Exchange Rates (........................) C/E (........................) Curr. (...................) Nat. Curr.

= Base contract bid price (in Product Denom. terms) → (60.840)

Net Present Value (at................ 9.8% p.a. ) → 52.370 47.440

+ Flat Commission (.................. 1.30% ) → 0.680

= Contract Bid Price (in Product Denom. terms) → 53.050

x Applic. Consid. Exchange Rates (..........................) C/E (..........................) Curr. (.......................) Nat. Curr.

= Contract Bid Price (in OP requested terms) (if applic.) → 53.050

Implied Base 'Margin' on Contract → 5.610

+ Exchange Rate and Consideration Investment Margin → ----

= Implied Contract Value (to CP) → 5.610

G7

## CONTRACT SPECIFICATION LIMITS

By: Abrahamsons AS AT 93.01.01.17.38.02 00

### COUNTERPARTY CONSTRAINTS VERIFICATION

| Details / Measure | Incremental Impact | Individual Contract Constraint Impact: Min/max required Incremental impact of contract | Individual Contract Constraint Impact: Status Check | Single Product Portfolio Constraint Impact: Allowable Incremental impact of contract | Single Product Portfolio Constraint Impact: Status Check | "Equivalent" Maturity Date Total Product Portfolio Constraint Impact: Allowable Incremental Impact of Contract | "Equivalent" Maturity Date Total Product Portfolio Constraint Impact: Status Check | "Same Month" Mat. Date Total Product Portfolio Constraint Impact: Allowable Incremental Impact of Contract | "Same Month" Mat. Date Total Product Portfolio Constraint Impact: Status Check |
|---|---|---|---|---|---|---|---|---|---|
| Absolute Loss | 187.200 | 500.000 (max) | Y | NOT APPLICABLE | | NOT APPLICABLE | | NOT APPLICABLE | |
| Expected Loss | 55.000 | 100.000 (max) | Y | 600.000 (max) | Y | 497.000 (max) | Y | 1046.000 (max) | Y |
| Exp. Incr. Value | 4.580 | 300.000 (min) | Y | NOT APPLICABLE | | NOT APPLICABLE | | NOT APPLICABLE | |

| Details / Measure | Incremental Impact | All Mat. Dates Total Product Portfolio Constraint Impact: Allowable Incremental Impact of Contract | All Mat. Dates Total Product Portfolio Constraint Impact: Status Check |
|---|---|---|---|
| Absolute Loss | | NOT APPLICABLE | |
| Expected Loss | 55.000 | 210.000 (max) | Y |
| Exp. Incr. Value | | NOT APPLICABLE | |

| | Current | Limit | Status Check |
|---|---|---|---|
| Contract expected loss as a proportion of the expected loss of all contracts/products | 6 % | 7 % | Y |
| Product expected loss as a proportion of the expected loss of all contracts/products | 62 % | 65 % | Y |

G8

**CONTRACT SPECIFICATION LIMITS** By: Carpenters Inc AS AT 93.01.01.17.38.02.00

**COUNTERPARTY CONSTRAINTS VERIFICATION**

| Details / Measure | Incremental Impact | Individual Contract Constraint Impact: Min/max required incremental impact of contract | Status Check | Single Product Portfolio Constraint Impact: Allowable incremental impact of contract | Status Check | "Equivalent" Maturity Date Total Product Portfolio Constraint Impact: Allowable Incremental Impact of Contract | Status Check | "Same Month" Mat. Date Total Product Portfolio Constraint Impact: Allowable Incremental Impact of Contract | Status Check |
|---|---|---|---|---|---|---|---|---|---|
| Absolute Loss | 187.200 | 460.000 (max) | Y | NOT APPLICABLE | | NOT APPLICABLE | | NOT APPLICABLE | |
| Expected Loss | 55.200 | 93.000 (max) | Y | 414.000 (max) | Y | 280.000 (max) | Y | 370.000 (max) | Y |
| Exp. Incr. Value | 5.610 | 280.000 (min) | Y | NOT APPLICABLE | | NOT APPLICABLE | | NOT APPLICABLE | |

| Details / Measure | Incremental Impact | All Mat. Dates Total Product Portfolio Constraint Impact: Allowable Incremental Impact of Contract | Status Check |
|---|---|---|---|
| Absolute Loss | | NOT APPLICABLE | |
| Expected Loss | 55.120 | 661.000 (max) | Y |
| Exp.Incr. Value | | NOT APPLICABLE | |

| | Current | Limit | Status Check |
|---|---|---|---|
| Contract expected loss as a proportion of the expected loss of all contracts/products | 4.5% | 5 % | Y |
| Product expected loss as a proportion of the expected loss of all contracts/products | 50 % | 55 % | Y |

G9

# CONTRACT VALUATION

AS AT 93.01.01.23.00.00.00 **Report for:** Abbotts & Taylor

## CONTRACT SUMMARY (GRAPHICAL)

| | |
|---|---|
| **Ordering Party :** | Abbotts & Taylor |
| **Counterparty :** | Abrahamsons |
| **Product :** (ID 10061 ) | |
| **Market** Stock Indices | |
| **Sub-Market** PTSE 75 | **Market Type** Spot |
| **Estab. date/time** | 91.06.03.17.00.00.00 |
| **Maturity date/time** | 94.06.03.17.00.00.00 |

| | |
|---|---|
| **Order ID (if app.)** | 9156515899 |
| **Conf. date/time (if app.)** | 93.01.01.17.38.11.00 |
| **Contract/Product context :** | 1 of 1 |

| | |
|---|---|
| **Application ID:** | 001 |
| **O.P. Own reference:** | PQZ260 |
| **Application Promoter** | B.L.C. Inc |
| **Product Sponsor** | B.L.C. Inc |
| **Counterparty-guarantor** | CNZ Banking Corp. |
| **Regulator** | Pacific Central Bank |

| **Valuations as at** 93.01.01.23.00.00.00 | F.P.V's | Contract |
|---|---|---|
| **Expected Value** | 1970 | 53.000 |
| **Std. Deviation** | 333 | 21.160 |

| | Consideration/ Entitlement Denomination | Consideration | Entitlement |
|---|---|---|---|
| **Cons./Entitlement type** | Money | Money | Money |
| **Currency type (if app)** | Com Bnk dep. | Com Bnk dep. | Com Bnk dep. |
| **National Curr. type (if applic.)** | AUD | AUD | AUD |
| **Amount** | N.A. | 51,920 | As below |

**Pricing and Matching Process :** Minimise pre-tax consideration payment under an EV/CE regime

**Special Deal Type :** Collateralisation Payments

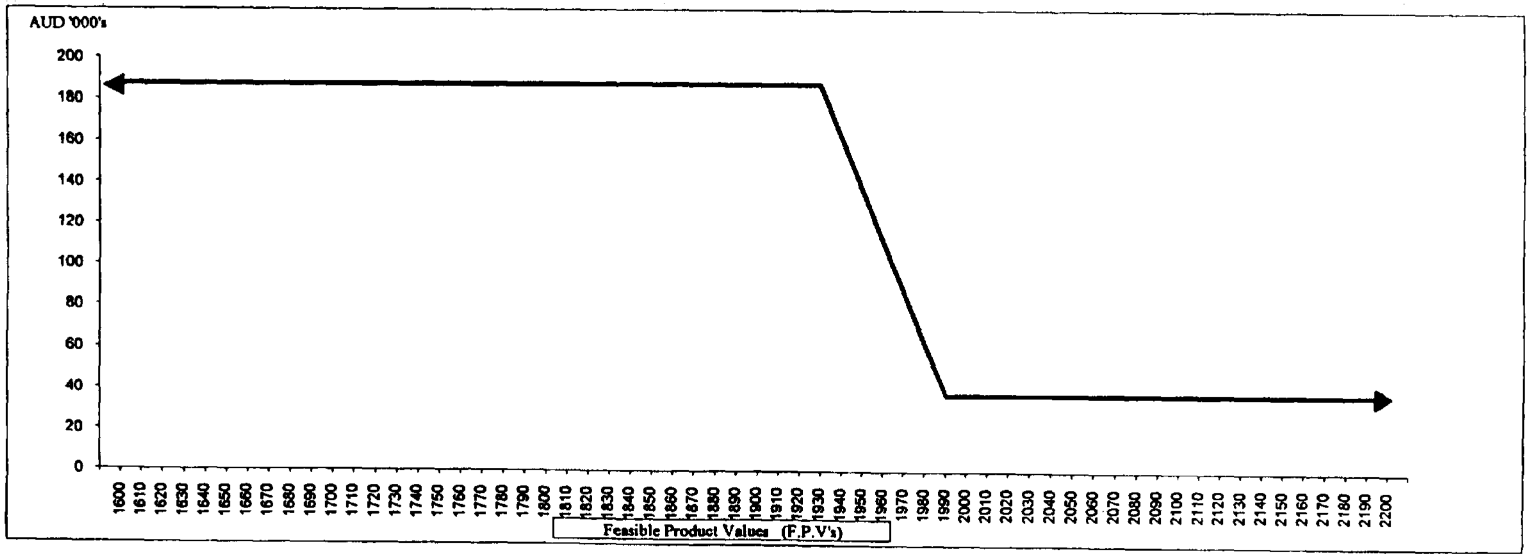

G10

# CONTRACT VALUATION

AS AT 93.01.01.23.00.00.00 **Report for:** Abrahamsons

**CONTRACT SUMMARY (GRAPHICAL)**

| | |
|---|---|
| **Ordering Party :** | Abbotts & Taylor |
| **Counterparty :** | Abrahamsons |

| | | | |
|---|---|---|---|
| **Product :** | (ID | 10061 | ) |
| **Market** | Stock Indices | | |
| **Sub-Market** | PTSE 75 | **Market Type** | Spot |
| **Estab. date/time** | | 91.06.03.17.00.00.00 | |
| **Maturity date/time** | | 94.06.03.17.00.00.00 | |

| | |
|---|---|
| **Application ID:** | 001 |
| **C.P. Own reference:** | FFR-263 |

| | |
|---|---|
| **Application Promoter** | B.I.C. Inc |
| **Product Sponsor** | B.L.C. Inc |
| **Counterparty-guarantor** | CNZ Banking Corp. |
| **Regulator** | Pacific Central Bank |

| | Consideration/ Entitlement Denomination | Consideration | Entitlement |
|---|---|---|---|
| Cons./Entitlement type | Money | Money | Money |
| Currency type (if app) | Com Bnk dep. | Com Bnk dep. | Com Bnk dep. |
| National Curr. type (if applic.) | AUD | AUD | AUD |
| Amount | N.A. | 51,920 | As below |

| | |
|---|---|
| **Order ID (if app.)** | 9156515899 |
| **Conf. date/time (if app.)** | 93.01.01.17.38.11.00 |
| **Contract/Product context :** | 1 of 1 |

| **Valuations as at** | 93.01.01.23.00.00.00 | |
|---|---|---|
| | **F.P.V's** | **Contract** |
| **Expected Value** | 1970 | (53.000) |
| **Std. Deviation** | 333 | (21.160) |

**Pricing and Matching Process:** Minimise pre-tax consideration payment under an EV/CE regime

**Deal Type :** Collateralisation Payments

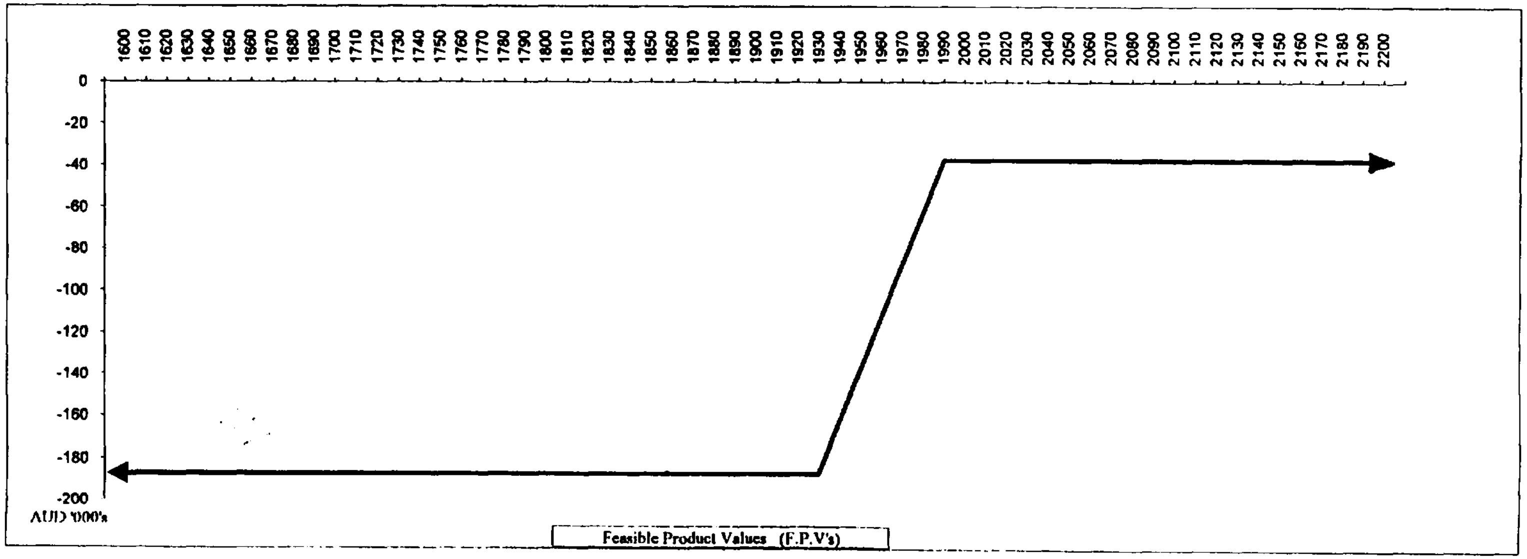

G11

## SECONDARY ORDER SPECIFICATION

**AS AT :** 93.06.06.08.00.00.00

| | | | |
|---|---|---|---|
| **Acquiring Party :** | Shearer & Associates | | |
| **Own reference :** | 61932076 | | |
| **Product :** | (ID: 10061 ) | | |
| **Market** | Stock Indices | | |
| **Sub-Market** | PTSE 75 | **Market Type** | Spot |
| **Estab. date/time** | 91.06.03.17.00.00.00 | | |
| **Maturity date/time** | 94.06.03.17.00.00.00 | | |

| | |
|---|---|
| **Application ID:** | 001 |
| **Order ID :** | 9156515899 |
| **Acq. P. Own reference:** | 667-3 |
| **Application Promoter** | B.L.C. Inc |
| **Product Sponsor** | B.L.C. Inc |
| **Counterparty-guarantor** | CNZ Banking Corporation |
| **Regulator** | Pacific Central Bank |

| | Consideration/ Entitlement Denomination | Consideration | Entitlement |
|---|---|---|---|
| **Cons./Entitlement type** | Money | Money | Money |
| **Currency type (if applic.)** | Com Bnk Dep | Com Bnk Dep | Com Bnk Dep |
| **National Curr. type (if applic.)** | AUD | AUD | AUD |
| **Max. Consid. Amount** | N.A. | 60.000 | See Below |

"X" Value: 4

| **X Range Value** | 1 | 2 | 3 | 4 | 5 | 6 |
|---|---|---|---|---|---|---|
| **Alpha (X)** | 1600 | 1930 | 1990 | 2200 | | |
| **Beta (X)** | 187.200 | 187.200 | 37.440 | 37.440 | | |

| Gamma | | | | | | | |
|---|---|---|---|---|---|---|---|
| | 1 | 11 | | | | | |
| | 2 | | 8 | | | | |
| | 3 | | | 11 | | | |
| | 4 | | | | | | |
| | 5 | | | | | | |

**Pricing and Matching Process:**
Minimise pre-tax consideration payment under an EV/CE regime

SPECIAL DEAL TYPE : Collateralisation Payments

### CONTRACT CONDITIONS

| | |
|---|---|
| Communications medium : | Computer-to-computer |
| Consideration Credit sought ? | No |
| Desired Form of Consideration Credit (if appl.) | Not Applicable |
| Counterparty Collateralisation payments required ? | Yes |
| Preparedness to make 'own' collateralisation payments (if applicable)? | Not Applicable |
| Applicable Marginal Tax rate (if applicable)? | |
| - Consideration : | Not Applicable |
| - Entitlements : | Not Applicable |
| Netting System Participation ? | |
| - Bilateral Obligations netting ? (if applic.) | No |
| - Bilateral Payments netting ? (if applic.) | No |
| - Multilateral Obligations netting ? (if applic.) | No |
| - Multilateral Payments netting ? (if applic.) | No |

| | |
|---|---|
| Partial Matches desired ? | Yes |
| Manual Approval of Matches desired ? | No |
| Desired degree of trading | |
| Transparency (if applicable) | Not Applicable |
| Applicable Consid./Entitlement Transfer Entity | |
| Account details : | ABC Banking Corp |
| Operating A/c | 1-1-502026-846752-0 (and 1) |
| Desired date/time of Order Submission : | Immediate |
| Desired Order retention period : | 00.00.01.00.00.00 |
| Desired Max. time for counterparty manual order approval (if applic.) : | Not Applicable |
| Preferred/Preferential Dealing: | |
| NIL | |

**Unacceptable Counterparties and Other Stakeholders**

NIL

G12

# CONTRACT VALUATION

AS AT 93.06.06.09.00.00.00 **Report for:** Shearer & Associates

CONTRACT SUMMARY (GRAPHICAL)

| | |
|---|---|
| **Ordering Party :** | Shearer & Associates |
| **Counterparty :** | Abrahamsons |
| **Product :** (ID | 10061 ) |
| **Market** Stock Indices | |
| **Sub-Market** PTSE 75 | **Market Type** Spot |
| **Estab. date/time** | 91.06.03.17.00.00.00 |
| **Maturity date/time** | 94.06.03.17.00.00.00 |

| | |
|---|---|
| **Order ID (if app.)** | 9156515899 |
| **Conf. date/time (if app.)** | 93.01.01.17.38.11.00 |
| **Contract/Product context :** | 1 of 1 |

| | |
|---|---|
| **Application ID:** | 001 |
| **A.P. Own Reference:** | 667-3 |
| **Application Promoter** | B.L.C. Inc |
| **Product Sponsor** | B.L.C. Inc |
| **Counterparty-guarantor** | CNZ Banking Corp. |
| **Regulator** | Pacific Central Bank |

| **Valuations as at** | 93.06.06.09.00.00.00 | |
|---|---|---|
| | **F.P.V's** | **Contract** |
| **Expected Value** | 1960 | 58.300 |
| **Std. Deviation** | 306 | 10.610 |

| | **Consideration/ Entitlement Denomination** | **Consideration** | **Entitlement** |
|---|---|---|---|
| **Cons./Entitlement type** | Money | Money | Money |
| **Currency type (if app)** | Com Bnk dep. | Com Bnk dep. | Com Bnk dep. |
| **National Curr. type (if applic.)** | AUD | AUD | AUD |
| **Amount** | N.A. | 58,300 | As below |

**Pricing and Matching Process:** Minimise pre-tax consideration payment under an EV/CE regime

**Special Deal Type :** Collateralisation Payments

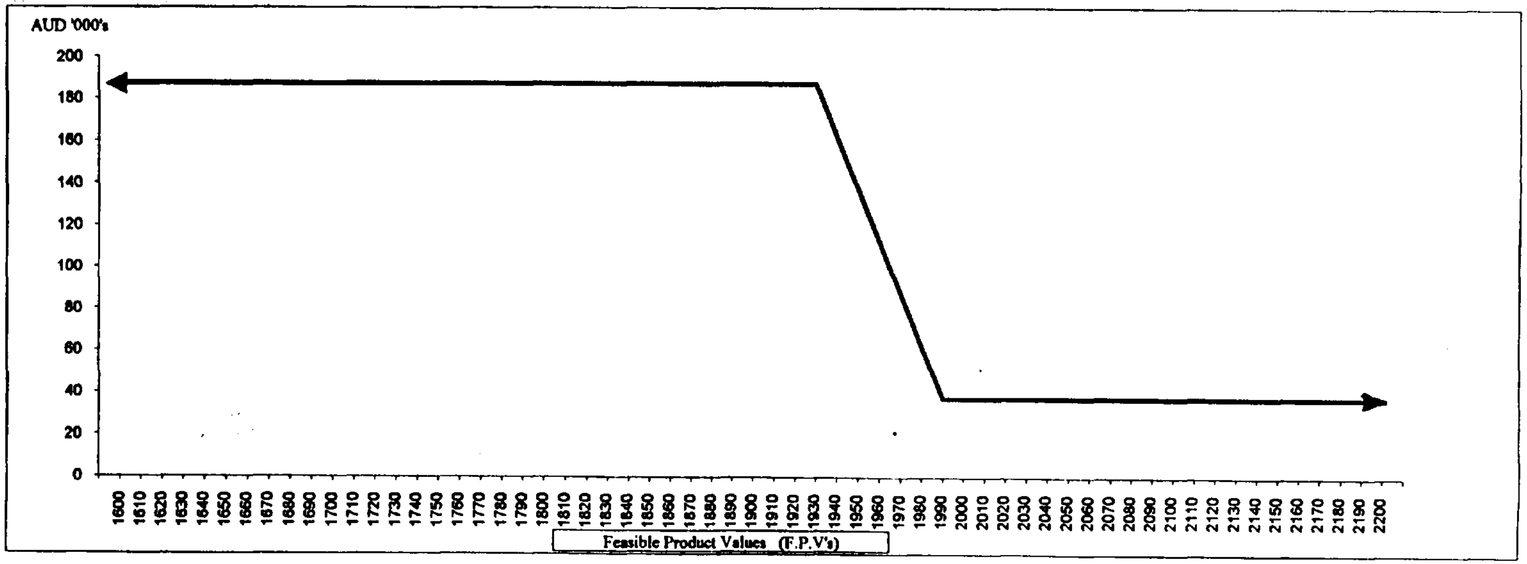

G13

# CONTRACT VALUATION

AS AT 94.01.01.17.00.00.00 **Report for:** Shearer & Associates

## CONTRACT SUMMARY (GRAPHICAL)

| | |
|---|---|
| **Ordering Party :** | Shearer & Associates |
| **Counterparty :** | Abrahamsons |
| **Product :** (ID | 10061 ) |
| **Market** | Stock Indices |
| **Sub-Market** | PTSE 75 **Market Type** Spot |
| **Estab. date/time** | 91.06.03.17.00.00.00 |
| **Maturity date/time** | 94.06.03.17.00.00.00 |

| | |
|---|---|
| **Application ID:** | 001 |
| **A.P. Own Reference:** | 667-3 |
| **Application Promoter** | B.L.C. Inc |
| **Product Sponsor** | B.L.C. Inc |
| **Counterparty-guarantor** | CNZ Banking Corp. |
| **Regulator** | Pacific Central Bank |

| | Consideration/ Entitlement Denomination | Consideration | Entitlement |
|---|---|---|---|
| Cons./Entitlement type | Money | Money | Money |
| Currency type (if app) | Com Bnk dep. | Com Bnk dep. | Com Bnk dep. |
| National Curr. type (if applic.) | AUD | AUD | AUD |
| Amount | N.A. | 58,300 | As below |

| | |
|---|---|
| **Order ID (if app.)** | 9156515899 |
| **Conf. date/time (if app.)** | 93.01.01.17.38.11.00 |
| **Contract/Product context :** | 1 of 1 |

| Valuations as at | 94.01.01.17.00.00.00 | |
|---|---|---|
| | F.P.V's | Contract |
| Expected Value | 1800 | 162.360 |
| Std. Deviation | 283 | 35.160 |

**Pricing and Matching Process:** Minimise pre-tax consideration payment under an EV/CE regime

**Special Deal Type :** Collateralisation Payments

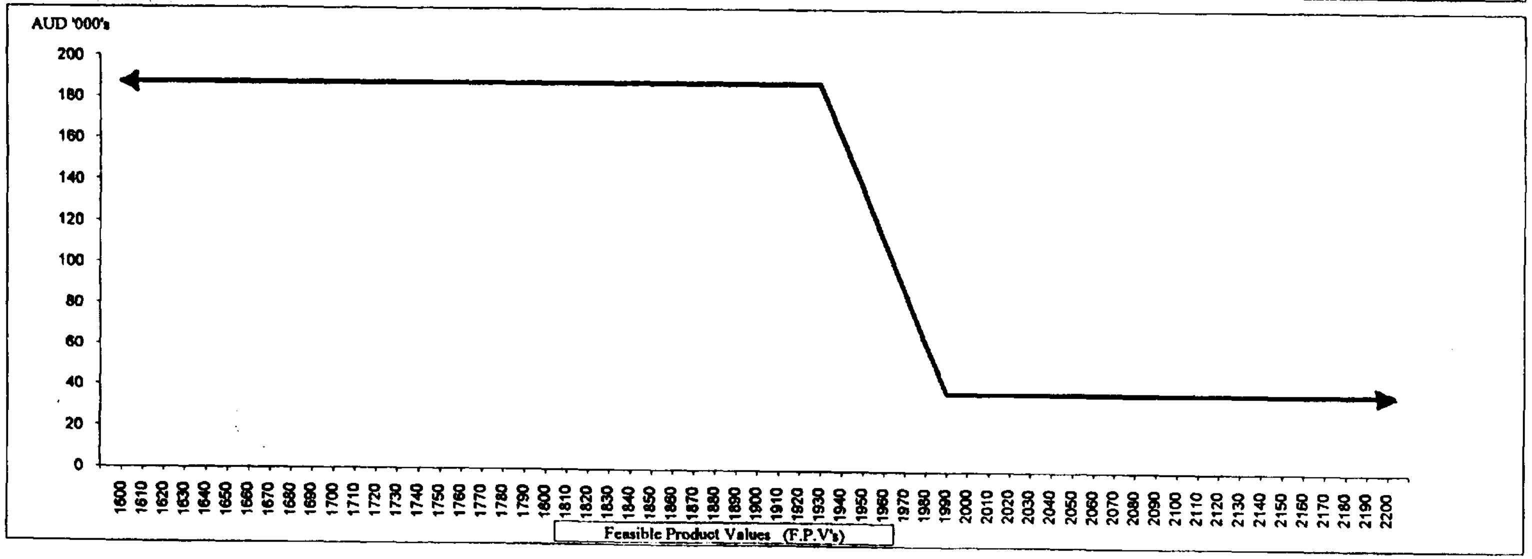

G14

# CONTRACT MATURITY

AS AT 94.06.03.17.00.00 **Report for:** Shearer & Associates

CONTRACT SUMMARY (GRAPHICAL)

| | |
|---|---|
| **Ordering Party :** | Shearer & Associates |
| **Counterparty :** | Abrahamsons |
| **Product :** (ID 10061 ) | |
| **Market** Stock Indices | |
| **Sub-Market** PTSE 75 | **Market Type** Spot |
| **Estab. date/time** | 91.06.03.17.00.00.00 |
| **Maturity date/time** | 94.06.03.17.00.00.00 |

| | |
|---|---|
| **Application ID:** | 001 |
| **A.P. Own Reference:** | 667-3 |
| **Application Promoter** | B.L.C. Inc |
| **Product Sponsor** | B.L.C. Inc |
| **Counterparty-guarantor** | CNZ Banking Corp. |
| **Regulator** | Pacific Central Bank |

| | Consideration/ Entitlement Denomination | Consideration | Entitlement |
|---|---|---|---|
| Cons./Entitlement type | Money | Money | Money |
| Currency type (If app) | Com Bnk dep. | Com Bnk dep. | Com Bnk dep. |
| National Curr. type (If applic.) | AUD | AUD | AUD |
| Amount | N.A. | 58.300 | As below |

| | |
|---|---|
| **Order ID (If app.)** | 9156515899 |
| **Conf. date/time (If app.)** | 93.01.01.17.38.11.00 |
| **Contract/Product context :** | 1 of 1 |

| Valuations as at 94.06.03.17.00.00.00 | F.P.V's | Contract |
|---|---|---|
| **Expected Value** | 1820 | 187.200 |
| **Std. Deviation** | 0 | 0 |

**Pricing and Matching Process:** Minimise pre-tax consideration payment under an EV/CE regime

**Special Deal Type :** Collateralisation Payments

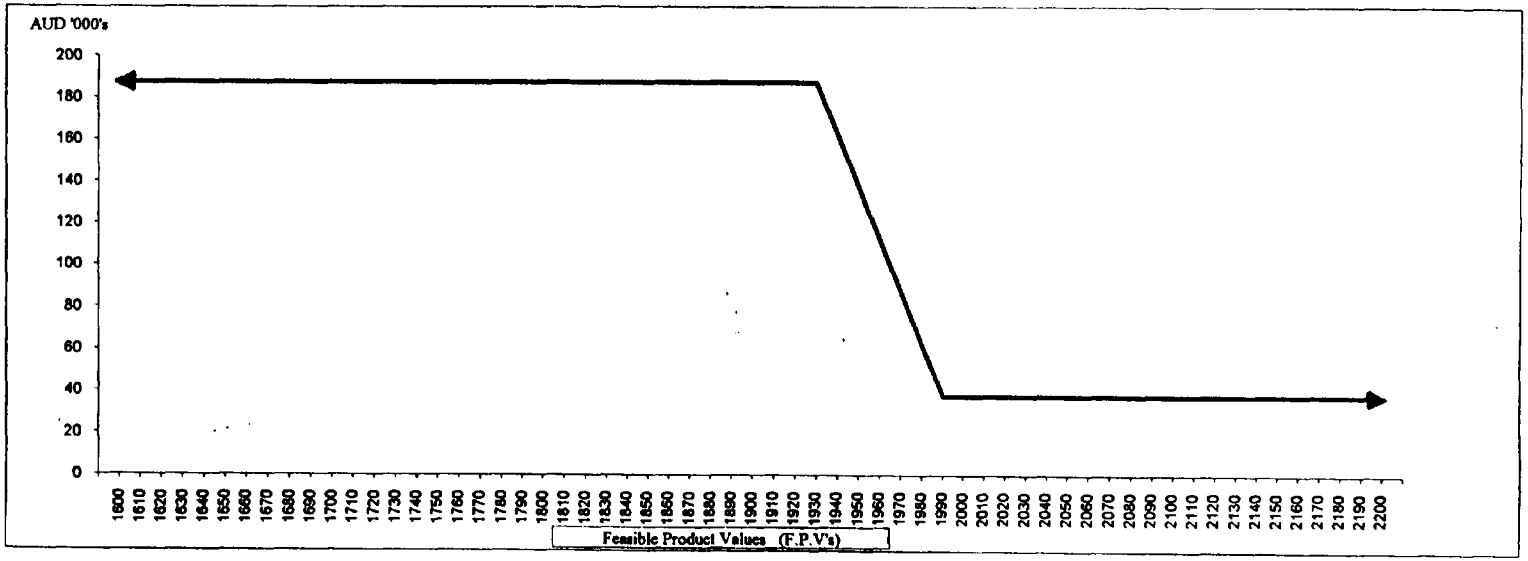

# APPENDIX H

PROCESS 2 VARIABLES AND DATA FILES

This Appendix lists the file name and description therefor.

Order Data Fields

| | |
|---|---|
| OID | Unique identification assigned by CONTRACT APP to every new order submitted. |
| BID | Ordering party identification. |
| BREF | Ordering party's own reference for this order. |
| PID | Order field specifying the required product. |
| PMAT | Product maturity date. |
| PC/ED | Product consideration/entitlement denomination. |
| PCUR | Product currency denomination. |
| PNCUR | Product national currency denomination. |
| PPARAM | Product specification parameters (eg. minimum value (PMIN), maximum value (PMAX), and the step size (PSTEP)). |
| MAXCONSID | Maximum consideration the ordering party will pay for this contract. |
| PAYFUNC | Pay-off function type, contingent on one or more index variables. |
| PAYPARAM | Parameters associated with the PAYFUNC. |
| ACC CONSID | The ordering party account the consideration is to be paid from. Implied is the account consideration/entitlement, currency, national currency. |
| ACC ENTITL | The ordering party account the contract entitlement is to be paid into. Implied is the account consideration/entitlement, currency, national currency. |
| RET LIM | Retention time limit for the order, which sets an expiration time for the order whilst remaining un-matched. |
| OPRICE | Price calculated and selected for this order (this value will be the matching price). |

| | |
|---|---|
| SPRICE | Counterparty identification with which the order was matched. |
| PAY TRAN | Payment transaction number. |
| DCID | Defined circumstances identification. |
| OANON | Anonymous flag, set by the ordering party when seeking to avoid manual authorisation requests by other stakeholders. |
| OMANUAL | Manual authorisation request flag. If set, the ordering party requires manual authorisation before the matched order is fully confirmed. |
| DTID | Deal type identification which codes a combination of miscellaneous flags such as collateralisation, bilateral and multilateral netting requirements. |

<u>Counterparty Short List Arrays</u>

| | |
|---|---|
| PRICEFUNC(SID) | Pricing function: function type and associated parameters. |
| ELFUNC(SID) | Expected loss determination function: function type and associated parameters. |
| EVFUNC(SID) | Expected value determination function: function type and associated parameters. |
| CR(SID) | Commission rate to be used for the current defined circumstances. |
| DR(SID) | Discount rate to be used for the current defined circumstances. |
| PRICE(SID) | Price calculated by each counterparty. |
| EL(SID) | Expected loss calculated for the current order by each counterparty. |
| AL(SID) | Absolute loss calculated for the current order by each counterparty. |
| EV(SID) | Expected values determined for the current order by each counterparty. |
| MCC(SID) | Maximum composition any contract (as an expected loss) can have of the entire portfolio. |

| | |
|---|---|
| MC(SID) | Maximum composition the product (as an expected loss) can have of the entire portfolio. |
| ELL1(SID) | Order expected loss limit. |
| ELL2(SID) | Expected loss limits set by the counterparty for the product. |
| ELL3(SID) | Expected loss limits set by the counterparty for equivalent maturity date products. |
| ELL4(SID) | Expected loss limits set by the counterparty for same month maturity products. |
| ELL5(SID) | Expected loss limits set by the counterparty for orders in all products. |
| CEL2(SID) | Current accumulated expected losses for the product. |
| CEL3(SID) | Current accumulated expected losses for equivalent maturity date products. |
| CEL4(SID) | Current accumulated expected losses for same month maturity products. |
| CEL5(SID) | Current accumulated expected losses for orders in all products. |
| ALL1(SID) | Absolute loss limit function for each contract. |
| ALL2(SID) | Absolute loss limit function set for the product. |
| CAL2(SID) | Current absolute limit function accumulated for the product. |
| EVL1(SID) | Expected value limit on each order. |
| C-C/EDXCHANG(SID) | Counterparty consideration/entitlement denomination exchange rates which convert the ordering party's consideration denomination of ACC CONSID (and MAXCONSID) into the product's consideration denomination. |
| C-CXCHANG(SID) | Counterparty currency exchange rates which covert the ordering party's currency of ACC CONSID (and MAXCONSID) into the product's denominated currency. |
| C-NCXCHANG(SID) | Counterparty national currency exchange rates which convert the ordering party's national currency of ACC CONSID (and MAXCONSID) into the product's denominated national currency. |

| | |
|---|---|
| E-C/EDXCHANG(SID) | Counterparty consideration/entitlement denomination exchange rates which convert the ordering party's consideration denomination of ACC ENTITLinto the product's consideration denomination. |
| E-CXCHANG(SID) | Counterparty currency exchange rates which covert the ordering party's currency of ACC ENTITL into the product's denominated currency. |
| E-NCXCHANG(SID) | Counterparty national currency exchange rates which convert the ordering party's national currency of ACC ENTITL into the product's denominated national currency. |

Miscellaneous Variables

| | |
|---|---|
| BPRICE | Best price selected from the PRICE(SID) array. |
| SID | The currently selected or viewed counterparty identification. |
| INDEX | Index counter variable required for calculating order prices. |
| P1 | Value calculated by a pricing function at an index point. |
| P2 | Value calculated by a pay-off function at an index point. |

Master Files

| FILE | DESCRIPTION/CONTENTS |
|---|---|
| PORD NEW | Holds details of all new orders submitted by ordering parties: |
| BID | Ordering party identification. |
| BREF | Ordering party's own reference for this order. |
| PID | Order field specifying the required product. |
| MAXCONSID | Maximum consideration the ordering party will pay for this contract. |

| | |
|---|---|
| PAYFUNC | Pay-off function type, contingent on one or more index variables. |
| PAYPARAM | Parameters associated with the PAYFUNC. |
| ACC CONSID | The ordering party account the consideration is to be paid from. |
| ACC C/ED | The ordering party account consideration/entitlement. |
| ACC CUR | The ordering party account currency. |
| ACC NCUR | The ordering party account national currency. |
| ACC ENTITL | The ordering party account the contract entitlement is to be paid into. |
| RET LIM | Retention time limit for the order, which sets an expiration time for the order whilst remaining un-matched. |
| OANON | Anonymous flag, set by the ordering party when seeking to avoid manual authorisation requests by other stakeholders. |
| OMANUAL | Manual authorisation request flag. If set, the ordering party requires manual authorisation before the matched order is fully confirmed. |
| DTID | Deal type identification which codes a combination of miscellaneous flags such as collateralisation, bilateral and multilateral netting requirements. |

| | |
|---|---|
| PORD QUEUE | This master file holds details of orders which have already been authorised, and have attempted to match once before. Fields as in ORD NEW plus some additional fields: |
| OID | Unique identification assigned by P-CONTRACT to every new order submitted. |
| PMAT | Product maturity date. |
| C/ED | Product consideration/entitlement denomination. |
| PCUR | Product currency denomination. |
| PNCUR | Product national currency denomination. |
| PPARAM | Product specification parameters (eg. minimum value (PMIN), maximum value (PMAX), and the step size (PSTEP)). |
| DCID | Defined circumstances identification. |

| | |
|---|---|
| PORD REJ | All rejected orders reside in this file. Fields as in ORD QUEUE plus some additional fields: |
| ERRCODE | Error code indicating why the order was rejected. |
| | |
| PORD CONF | When an order is matched and fully confirmed, full details are stored in this master file. Fields as in ORD QUEUE plus some additional fields: |
| OPRICE | Price calculated and selected for this order. This value will be the matching price. |
| SPRICE | Counterparty identification with which the order was matched. |
| PAY TRAN | Payment transaction number. |
| | |
| PPRODUCT | This master file holds information (definition details) about each product known to the system: |
| PID | Product identification. |
| PMAT | Product maturity date. |
| PC/ED | Product consideration/entitlement denomination. |
| PCUR | Product currency denomination. |
| PNCUR | Product national currency denomination. |
| PPARAM | Product specification parameters (eg. minimum value (PMIN), maximum value (PMAX), and the step size (PSTEP)). |
| | |
| PDEAL LIST | This file holds a list of the ordering party/product/counterparty tuples of allowable deals to occur. Thus by specifying an ordering party (BID) and product (PID), a list of counterparties who are prepared to enter into a deal with the ordering party/product combination, can be obtained: |
| BID | Ordering party identification |
| PID | Product identification |
| SID | Counterparty identification |
| ANON | All stakeholder identifications requiring anonymous confirmation. |
| MANUAL | All stakeholder identifications requiring manual authorisation |

| | |
|---|---|
| PSEL DC | This file allows counterparties to define identifications for sets of potential order parameters. Any order data field can be used to define an order. Each defined circumstance identification is then used to set unique pricing parameters: |
| DCID | Defined circumstances identifications. |
| BID | Ordering party identification |
| PAYFUNC | Pay-off function type, contingent on one or more index variables. |
| PAYPARAM | Parameters associated with the PAYFUNC. |
| ACC CONSID | The ordering part account the consideration is to be paid from. |
| ACC ENTITL | The ordering party account the contract entitlement is to be paid into. |
| DTID | Deal type identification. |
| PC/ED | Product consideration/entitlement denomination. |
| PCUR | Product currency denomination. |
| PNCUR | Product national currency denomination. |

| | |
|---|---|
| PSEL PRICE | Contains all counterparty pricing parameters, including commission rates, discount rates and exchange rates: |
| SID | Counterparty identification |
| PID | Product identification |
| DCID | Defined circumstances identification |
| PRICEFUNC | Pricing function: function type and associated parameters. |
| CR | Commission rate to be used for the current ordering party in the current product. |
| DR | Discount rate to be used for the current ordering party in the current product. |
| C-C/EDXCHANG | Counterparty consideration/entitlement denomination exchange rates which convert the ordering party's consideration denomination of ACC CONSID (and MAXCONSID) into the product's consideration denomination. |
| C-CXCHANG | Counterparty currency exchange rates which covert the ordering party's currency of ACC CONSID (and MAXCONSID) |

| | |
|---|---|
| | into the product's denominated currency. |
| C-NCXCHANG | Counterparty national currency exchange rates which convert the ordering party's national currency of ACC CONSID (and MAXCONSID) into the product's denominated national currency. |
| E-C/EDXCHANG | Counterparty consideration/entitlement denomination exchange rates which convert the ordering party's consideration denomination of ACC ENTITL into the product's consideration denomination. |
| E-CXCHANG | Counterparty currency exchange rates which covert the ordering party's currency of ACC ENTITL into the product's denominated currency. |
| E-NCXCHANG | Counterparty national currency exchange rates which convert the ordering party's national currency of ACC ENTITL into the product's denominated national currency. |

| | |
|---|---|
| PSEL LIMIT | Holds all counterparty portfolio limits and current accumulated exposures in the various mathematical forms allowed by the system: |
| SID | Counterparty identification |
| PID | Product identification |
| DATE | Product maturity date. |
| MCC | Maximum composition any contract (as an expected loss) can have of the entire portfolio. |
| MC | Maximum composition the product (as an expected loss) can have of the entire portfolio. |
| ELL1 | Order expected loss limit. |
| ELL2 | Expected loss limits set by the counterparty for the product. |
| ELL3 | Expected loss limits set by the counterparty for equivalent maturity date products. |
| ELL4 | Expected loss limits set by the counterparty for same month maturity products. |
| ELL5 | Expected loss limits set by the counterparty for orders in all products. |

| | |
|---|---|
| CEL2 | Current accumulated expected losses for the product. |
| CEL3 | Current accumulated expected losses for equivalent maturity date products. |
| CEL4 | Current accumulated expected losses for same month maturity products. |
| CEL5 | Current accumulated expected losses for orders in all products. |
| ALL1 | Absolute loss limit function for each contract. |
| ALL2 | Absolute loss limit function set for the product. |
| CAL2 | Current absolute limit function accumulated for the product. |
| EVL1 | Expected value limit on each order. |
| PAYACC | Payment accounts for all registered stakeholders (inc. balances and previous SHADOWtransactions), are stored in this master file: |
| ID | Stakeholder identification. |
| NO | Account number. |
| ACC C/ED | The ordering party account consideration/entitlement. |
| ACC CUR | The ordering party account currency. |
| ACC NCUR | The ordering party account national currency. |
| BALANCE | Available funds. |
| GID | Stakeholder identification guaranteeing the account. |

## Claims

**1.** A computer apparatus for enabling parties to enter contracts related to future events having a number of possible quantifiable outcomes, comprising data processing means (20), data storage means (95, 100; 110) and data input (51) and output means (51, 52) said data storage means (95, 100, 110) having stored therein:

means defining an event definition interface (E2, E3; F2, F3; G2, G3) for enabling a user to enter into said storage means (95, 100, 110) through said data input means (51) event data defining a future event having a number of possible quantifiable outcomes, said future event being determinable by the user thereby enabling the user to set the apparatus into a condition for processing data related to any future event of the user's choice;

means defining a first user input interface (E4; F4; G4) for enabling a first party to a potential contract to select, through said data input means (51), first input data comprising first data defining a plurality of possible quantified outcomes of an event defined by said event data and a plurality of first numerical quantities associated respectively with said possible quantified outcomes defined by said first data;

means defining a second user input interface (E5; F5; G5) for enabling a second party to a potential contract to select, using said data input means (51), second input data comprising second data defining a plurality of possible quantified outcomes of the event defined by said event data and a plurality of second numerical quantities associated respectively with said possible quantified outcomes defined by said second data, each of said second numerical quantity being related to an estimate, determinable by said second party, of the likelihood of the corresponding outcome occurring; and

means (93; 97; 104) to process said first and second numerical quantities for generating output data relating to said potential contract.

**2.** Communication apparatus for enabling first and second parties to enter a contract related to a future event having a number of possible quantifiable outcomes, comprising:

a first terminal (51) comprising data processing means (20), data storage means (95, 100; 110) and data input (51) and output means (51, 52), said data storage means (95, 100, 110) having stored therein means defining a first user input interface (E4; F4; G4) for enabling a first party to a potential contract to select, through said data input means (51), first input data comprising first data defining a plurality of possible quantified outcomes of an event and a plurality of first numerical quantities associated respectively with said possible quantified outcomes defined by said first data;

a second computer terminal (51) comprising data processing means (20), data storage means (95, 100; 110) and data input (51) and output means (51, 52), said data storage means (95, 100, 110) having stored therein means defining a second user input interface (E5; F5; G5) for enabling a second party to a potential contract to select, using said data input means (51), second input data comprising second data defining a plurality of possible quantified outcomes of the event to which said first input data relates and a plurality of second numerical quantities associated respectively with said possible quantified outcomes defined by said second data, each of said second numerical quantity being related to an estimate, determinable by said second party, of the likelihood of the corresponding outcome occurring; and

means (20) to process said first and second numerical quantities to derive a numerical value therefrom and, dependent upon said numerical value, to produce a command for generating output data relating to a potential contract.

**3.** A communication apparatus in accordance with claim 2 wherein

said data storage means (95,100,110) has stored therein means defining an event definition interface (E2, E3; F2, F3; G2, G3) for enabling a user to enter data into said storage means (95, 100, 110), through said data input means (51), defining a future event having a number of possible quantifiable outcomes; and

said first and said second user input interfaces (E4, E5; F4, F5; G4, G5) are adapted to select said first and said second data defining a plurality of possible outcomes from data defining a future event having a number of possible quantifiable outcomes stored in said data storage means (95, 100, 110).

**4.** An apparatus in accordance with any preceding claim wherein

said second user input interface (E5, F5, G5) is operable to permit plural selections of second input data; and

said means to process said first and second numerical quantities (20) is adapted to process said plural selections of second numerical quantities of said second input data with said first numerical quantities to derive a numeral value therefrom and to generate output data in accordance with the numerical values derived from said plural selections of second input data.

**5.** An apparatus in accordance with claim 4, wherein the means to process said first and second numerical quantities is adapted to select one of said plural selections of second input data based upon a comparison of the said numerical values derived from said second input data.

**6.** An apparatus in accordance with claim 5, wherein said second user interface (E5; F5; G5) further comprises identification generation means for generating identification data identifying the party inputting said selections of second input data.

**7.** An apparatus in accordance with claim 6, wherein said means to process said first and second numerical quantities (20) is operable to generate output data based on a numerical value generated by said processing means and the identification data identifying the party inputting said selection of second input data.

**8.** An apparatus in accordance with claim 6 or 7, wherein said first user interface (E4; F4; G4) is adapted to permit entry of party constraint data and said means to process said first and second numerical quantities (20) is adapted to compare said party constraint data and identification data identifying a party inputting a selection of second input data and to determine whether to process the plurality of second numerical quantities of said second input data associated with said identification data based upon said comparison.

**9.** An apparatus in accordance with any preceding claim, wherein said means to process said first and second numerical quantities (20) is arranged to process said first and said second numerical quantities to derive a numerical value by multiplying the first numerical quantity associated with a possible quantified outcome by said first data by a second numerical quantity associated with the same possible quantified outcome by said second data and obtaining the sum of each of said products for each of the possible quantified outcomes defined by said first data.

**10.** An apparatus in accordance with any preceding claim, wherein said first user input interface (E4; F4; G4) further comprises means for inputting party identification data relating to the first party; and

said second user input interface (E5; F5; G5) further comprises discount rate and commission rate input means and wherein said means to process said first and second numerical quantities (20) is adapted to further process said numerical value derived from said first and said second numerical quantities in accordance with said discount rate and commission rate associated with the identification data related to said first input data.

**11.** An apparatus in accordance with any preceding claim, wherein said first user interface (E4; F4; G4) is operable to permit entry of numerical constraint data and said means to process said first and second numerical quantities (20) is adapted to generate output data based upon a comparison of said numerical constraint data and numerical values derived by processing said first and said second numerical quantities.

**12.** An apparatus in accordance with claim 10 wherein said means to process said first and second numerical quantities (20) is adapted to control said output means (51,52) to display said numerical quantities processed in accordance with said discount rate and commission rate as price information relating to said potential contract.

**13.** An apparatus in accordance with claim 11, as dependent on claim 10 wherein said means to process said first and second numerical quantities (20) is adapted to control said output means (51) to output said numerical values processed by said discount rate and commission rate dependent upon the relative values of said processed values and said numerical constraint data.

**14.** An apparatus in accordance with any preceding claim wherein said data storage means (95,100,110) is adapted to store account data in respect of each party and wherein said means to process said first and second numerical quantities (20) is arranged to update said account data in accordance with said numerical value derived from said first and said second data.

**15.** An apparatus in accordance with claim 14 wherein said first and said second user input interface (E4,E5;F4;F5;G4,G4) each include confirmation means and wherein said means to process said first and second numerical quantities (20) is adapted to update said account data in accordance with said derived numerical values only upon the receipt of confirmation input by said confirmation means.

**16.** An apparatus in accordance with claim 14 or 15 further comprising means for inputting the outcome of an event having a number of possible quantifiable outcomes, wherein said means to process said first and second numerical quantities (20) is adapted to update said account data in accordance with a first numerical quantity associated with said outcome.

**Patentansprüche**

**1.** Computervorrichtung, um Parteien zu ermöglichen, Verträge abzuschließen, die in der Zukunft liegende Ereignisse mit einer Anzahl möglicher quantifizierbarer Ergebnisse betreffen, mit einen Datenverarbeitungsmittel (20), einem Datenspeichermittel (95, 100; 110) und einen Dateneingabemittel (51) und einem Datenausgabemittel (51, 52), wobei in dem Datenspeichermittel (95, 100, 110) folgendes gespeichert ist:

ein Mittel, das eine Ereignisdefinitionsschnittstelle (E2, E3; F2, F3; G2, G3) definiert, um einem Benutzer zu ermöglichen, durch das Dateneingabemittel (51) Ereignisdaten in das Speichermittel (95, 100, 110) einzugeben, die ein in der Zukunft liegendes Ereignis mit einer Anzahl möglicher quantifizierbarer Ergebnisse definieren, wobei das in der Zukunft liegende Ereignis durch den Benutzer bestimmt werden kann, was es dem Benutzer ermöglicht, die Vorrichtung in einen Zustand zum Verarbeiten von Daten zu versetzen, die irgendein in der Zukunft liegendes Ereignis nach Wahl des Benutzers betreffen;

ein Mittel, das eine erste Benutzereingabeschnittstelle (E4; F4; G4) definiert, um es einer ersten Partei an einem möglichen Vertrag zu ermöglichen, durch das Dateneingabemittel (51) erste Eingabedaten zu wählen, die erste Daten umfassen, die mehrere mögliche quantifizierte Ergebnisse eines durch die Ereignisdaten definierten Ereignisses und mehrere erste numerische Größen, die jeweils den durch die ersten Daten definierten möglichen quantifizierten Ergebnissen zugeordnet sind, definieren;

ein Mittel, das eine zweite Benutzereingabeschnittstelle (E5; F5; G5) definiert, um es einer zweiten Partei an einem möglichen Vertrag zu ermöglichen, unter Verwendung des Dateneingabemittels (51) zweite Eingabedaten zu wählen, die zweite Daten umfassen, die mehrere mögliche quantifizierte Ergebnisse des durch die Ereignisdaten definierten Ereignisses und mehrere zweite numerische Größen, die jeweils den durch die zweiten Daten definierten möglichen quantifizierten Ergebnissen zugeordnet sind, definieren, wobei jede der zweiten numerischen Größe eine durch die zweite Partei bestimmbare Schätzung der Wahrscheinlichkeit des Eintretens des entsprechenden Ergebnisses betrifft; und

ein Mittel (93; 97; 104) zum Verarbeiten der ersten und zweiten numerischen Größe zum Erzeugen von den möglichen Vertrag betreffenden Ausgabedaten.

**2.** Kommunikationsvorrichtung, um einer ersten und zweiten Partei zu ermöglichen, einen Vertrag abzuschließen, der ein in der Zukunft liegendes Ereignis mit einer Anzahl möglicher quantifizierbarer Ergebnisse betrifft, umfassend:

ein erstes Terminal (51) mit einem Datenverarbeitungsmittel (20), einem Datenspeichermittel (95, 100; 110) und einem Dateneingabemittel (51) und einem Datenausgabemittel (51, 52), wobei in dem Datenspeichermittel (95, 100, 110) folgendes gespeichert ist: ein Mittel, das eine erste Benutzereingabeschnittstelle (E4; F4; G5) definiert, um es einer ersten Partei an einem möglichen Vertrag zu ermöglichen, durch das Dateneingabemittel (51) erste Eingabedaten zu wählen, die erste Daten umfassen, die mehrere mögliche quantifizierte Ergebnisse eines Ereignisses und mehrere erste numerische Größen, die jeweils den durch die ersten Daten definierten möglichen quantifizierten Ergebnissen zugeordnet sind, definieren;

ein zweites Computerterminal (51) mit einem Datenverarbeitungsmittel (20), einem Datenspeichermittel (95, 100; 110) und einem Dateneingabemittel (51) und einem Datenausgabemittel (51, 52), wobei in dem Datenspeichermittel (95, 100. 110) folgendes gespeichert ist: ein Mittel, das eine zweite Benutzereingabeschnittstelle (E5; F5; G5) definiert, um es einer zweiten Partei an einem möglichen Vertrag zu ermöglichen, unter Verwendung des Dateneingabemittels (51) zweite Eingabedaten zu wählen, die zweite Daten umfassen, die mehrere mögliche quantifizierte Ergebnisse des Ereignisses, auf das sich sich die ersten Eingabedaten beziehen, und mehrere zweite numerische Größen, die jeweils den durch die zweiten Daten definierten möglichen quantifizierten Ergebnissen zugeordnet sind, definieren, wobei jede der zweiten numerischen Größe eine durch die zweite Partei bestimmbare Schätzung der Wahrscheinlichkeit des Eintretens des entsprechenden Ergebnisses betrifft; und

ein Mittel (20) zum Verarbeiten der ersten und zweiten numerischen Größe zum Ableiten eines numerischen Werts daraus und, in Abhängigkeit von dem numerischen Wert, zum Erzeugen eines Befehls zum Erzeugen von einen möglichen Vertrag betreffenden Ausgabedaten.

**3.** Kommunikationsvorrichtung nach Anspruch 2, bei der

in dem Datenspeichermittel (95, 100, 110) ein eine Ereignisdefinitionsschnittstelle (E2, E3; F2, F3; G2, G3) definierendes Mittel gespeichert ist, um es einem Benutzer zu ermöglichen, durch das Dateneingabemittel (51) Daten in das Speichermittel (95, 100, 110) einzugeben, die ein in der Zukunft liegendes Ereignis mit einer Anzahl möglicher quantifizierbarer Ergebnisse definieren; und

die erste und zweite Benutzereingabeschnittstelle (E4, E5; F4, F5; G4, G5) ausgelegt sind, um die mehrere mögliche Ergebnisse definierenden ersten und zweiten Daten aus in dem Datenspeichermittel (95, 100, 110) gespeicherten Daten zu wählen, die ein in der Zukunft liegendes Ereignis mit einer Anzahl von möglichen quantifizierbaren Ergebnissen definieren.

**4.** Vorrichtung nach einem der vorhergehenden Ansprüche, wobei

die zweite Benutzerschnittstelle (E5, F5, G5) dahingehend betätigt werden kann, mehrere Auswahlvorgänge von zweiten Eingabedaten zu gestatten; und

das Mittel zum Verarbeiten der ersten und zweiten numerischen Größe (20) ausgelegt ist, um die mehreren Auswahlvorgänge von zweiten numerischen Größen der zweiten Eingabedaten mit den ersten numerischen Größen zu verarbeiten, um daraus einen numerischen Wert abzuleiten und gemäß den von den mehreren Auswahlvorgängen von zweiten Eingabedaten abgeleiteten numerischen Werten Ausgabedaten zu erzeugen.

**5.** Vorrichtung nach Anspruch 4, bei der das Mittel zum Verarbeiten der ersten und zweiten numerischen Größe ausgelegt ist, um eine der mehreren Auswahlvorgänge von zweiten Eingabedaten auf der Grundlage eines Vergleichs der von den zweiten Eingabedaten abgeleiteten numerischen Größen zu wählen.

**6.** Vorrichtung nach Anspruch 5, bei der die zweite Benutzerschnittstelle (E5; F5; G5) weiterhin ein Identifikationserzeugungsmittel zum Erzeugen von Identifikationsdaten umfaßt, die die Partei identifizieren, die die Auswahlvorgänge von zweiten Eingabedaten eingibt.

**7.** Vorrichtung nach Anspruch 6, bei der das Mittel zum Verarbeiten der ersten und zweiten numerischen Größe (20) dahingehend betätigt werden kann, Ausgabedaten auf der Grundlage eines von dem Verarbeitungsmittel erzeugten numerischen Werts und der Identifikationsdaten, die die Partei identifizieren, die die Auswahlvorgänge von zweiten Eingabedaten eingibt, zu erzeugen.

**8.** Vorrichtung nach Anspruch 6 oder 7, bei der die erste Benutzerschnittstelle (E4; F4; G4) ausgelegt ist, um die Eingabe von Parteieinschränkungsdaten zu gestattet, und das Mittel zum Verarbeiten der ersten und zweiten numerischen Größe (20) ausgelegt ist, um die Parteieinschränkungsdaten und Identifikationsdaten, die eine Partei identifizieren, die einen Auswahlvorgang von zweiten Eingabedaten eingibt, zu vergleichen und auf der Grundlage des Vergleichs zu bestimmen, ob die mehreren zweiten numerischen Größen der zweiten Eingabedaten, die den Identifikationsdaten zugeordnet sind, verarbeitet werden sollen.

**9.** Vorrichtung nach einem der vorhergehenden Ansprüche, bei der das Mittel zum Verarbeiten der ersten und zweiten numerischen Größe (20) angeordnet ist, um die erste und zweite numerische Größe zu verarbeiten, um einen numerischen Wert abzuleiten, indem die erste numerische Größe, die durch die ersten Daten einem möglichen quantifizierten Ergebnis zugeordnet ist, mit einer zweiten numerischen Größe multipliziert wird, die durch die zweiten Daten dem gleichen quantifizierten Ergebnis zugeordnet ist, und die Summe jedes der Produkte für jedes der möglichen, durch die ersten Daten definierten quantifizierten Ergebnisse erhalten wird.

**10.** Vorrichtung nach einem der vorhergehenden Ansprüche, bei der die erste Benutzerschnittstelle (E4; F4; G4) weiterhin ein Mittel umfaßt zum Eingeben von die erste Partei betreffenden Parteiidentifikationsdaten; und

die zweite Benutzerschnittstelle (E5; F5; G5) weiterhin ein Rabattraten- und Kommissionsrateneingabemittel umfaßt und wobei das Mittel zum Verarbeiten der ersten und zweiten numerischen Größe (20) ausgelegt ist, um weiter der, von der ersten und zweiten numerischen Größe abgeleiteten numerischen Wert gemäß der Rabattrate und der Kommissionsrate, die den die ersten Eingabedaten betreffenden Identifikationsdaten zugeordnet sind, zu verarbeiten.

**11.** Vorrichtung nach einem der vorhergehenden Ansprüche, bei der die erste Benutzerschnittstelle (E4; F4; G4) dahingehend betätigt werden kann, die Eingabe von numerischen Einschränkungsdaten zu gestatten, und das Mittel zum Verarbeiten der ersten und zweiten numerischen Größe (20) ausgelegt ist, um auf der Grundlage eines Vergleichs der numerischen Einschränkungsdaten und von durch Verarbeiten der ersten und zweiten numerischen Größe abgeleiteten numerischen Werten Ausgabedaten zu erzeugen.

**12.** Vorrichtung nach Anspruch 10, bei der das Mittel zum Verarbeiten der ersten und zweiten numerischen Größe (20) ausgelegt ist, um das Ausgabemittel (51, 52) zu steuern, die gemäß der Rabattrate und Kommissionsrate verarbeiteten numerischen Größen als den möglichen Vertrag betreffende Preisinformation anzuzeigen.

**13.** Vorrichtung nach Anspruch 11 und abhängig von Anspruch 10, bei der das Mittel zum Verarbeiten der ersten und zweiten numerischen Größe (20) ausgelegt ist, um das Ausgabemittel (51) zu steuern, die durch die Rabattrate und Kommissionsrate in Abhängigkeit von den relativen Werten der verarbeiteten Werte und den numerischen Einschränkungsdaten verarbeiteten numerischen Werte auszugeben.

**14.** Vorrichtung nach einem der vorhergehenden Ansprüche, bei der das Datenspeichermitel (95, 100, 110) ausgelegt ist, um Kontendaten hinsichtlich jeder Partei zu speichern, und wobei das Mittel zum Verarbeiten der ersten und zweiten numerischen Größe (20) ausgelegt ist, um die Kontendaten gemäß dem von den ersten und zweiten Daten abgeleiteten numerischen Wert zu aktualisieren.

15. Vorrichtung nach Anspruch 14, bei der die erste und zweite Benutzereingabeschnittstelle (E4, E5; F4, F5; G4, G5) jeweils ein Bestätigungsmittel enthalten und wobei das Mittel zum Verarbeiten der ersten und zweiten numerischen Größe (20) ausgelegt ist, um die Kontendaten erst bei Erhalt einer Bestätigungseingabe durch das Bestätigungsmittel gemäß den abgeleiteten numerischen Werten zu aktualisieren.

16. Vorrichtung nach Anspruch 14 oder 15, weiterhin mit einem Mittel zum Eingeben des Ergebnisses eines Ereignisses mit einer Anzahl möglicher quantifizierbarer Ergebnisse, wobei das Mittel zum Verarbeiten der ersten und zweiten numerischen Größe (20) ausgelegt ist, um Kontendaten gemäß einer ersten numerischen Größe, die dem Ergebnis zugeordnet ist, zu aktualisieren.

**Revendications**

1. Appareil informatique pour permettre à des parties de souscrire des contrats relatifs à des événements futurs comportant un certain nombre de résultats quantifiables possibles, comprenant des moyens de traitement de données (20), des moyens de stockage de données (95, 100, 110) et des moyens d'entrée (51) et de sortie (51, 52) de données, lesdits moyens de stockage de données (95, 100, 110) contenant, stockés dans ceux-ci :

   des moyens formant une interface de définition d'événement (E2, E3 ; F2, F3 ; G2, G3) pour permettre à un utilisateur d'entrer dans lesdits moyens de stockage (95, 100, 110), à l'aide desdits moyens d'entrée de données (51), des données d'événement définissant un événement futur comportant un certain nombre de résultats quantifiables possibles, ledit événement futur pouvant être déterminé par l'utilisateur, ce qui permet à l'utilisateur de configurer l'appareil dans un état pour le traitement de données relatives à un événement futur au choix de l'utilisateur ;
   des moyens formant une première interface d'entrée utilisateur (E4 ; F4 ; G4) pour permettre à une première partie d'un contrat potentiel de sélectionner, à l'aide desdits moyens d'entrée de données (51), des premières données d'entrée comprenant des premières données formant une pluralité de résultats quantifiés possibles d'un événement et une pluralité de premières quantités numériques associées respectivement auxdits résultats quantifiés possibles définis par lesdites premières données ;
   des moyens formant une deuxième interface d'entrée utilisateur (E5 ; F5 ; G5) pour permettre à une deuxième partie d'un contrat potentiel de sélectionner, à l'aide desdits moyens d'entrée de données (51), des deuxième données d'entrée comprenant des deuxièmes données formant une pluralité de résultats quantifiés possibles de l'événement défini par lesdites données d'événement et une pluralité de deuxièmes quantités numériques associées respectivement auxdits résultats quantifiés possibles définis par lesdites deuxièmes données, chacune desdites deuxièmes quantités numériques étant associée à une estimation, pouvant être déterminée par ladite deuxième partie, de la probabilité de réalisation du résultat correspondant ; et
   des moyens (93; 97; 104) pour traiter lesdites premières et deuxièmes quantités numériques pour générer des données de sortie relatives audit contrat potentiel.

2. Appareil de communication pour permettre auxdites première et deuxième parties d'entrer un contrat relatif à un événement futur comportant un certain nombre de résultats quantifiables possibles, comprenant :

   un premier terminal (51) comprenant des moyens de traitement des données (20), des moyens de stockage de données (95, 100, 110) et des moyens d'entrée (51) et de sortie (51, 52) de données, lesdits moyens de stockage de données (95, 100, 110) contenant, stockés dans ceux-ci des moyens formant une première interface d'entrée utilisateur (E4 ; F4 ; G4) pour permettre à une première partie d'un contrat potentiel de sélectionner, à l'aide desdits moyens d'entrée de données (51), des premières données d'entrée comprenant des premières données formant une pluralité de résultats quantifiés possibles d'un événement défini par lesdites données d'événement et une pluralité de premières quantités numériques associées respectivement auxdits résultats quantifiés possibles définis par lesdites premières données ;
   un deuxième terminal informatique (51) comprenant des moyens de traitement des données (20), des moyens de stockage de données (95, 100, 110) et des moyens d'entrée (51) et de sortie (51, 52) de données, lesdits moyens de stockage de données (95, 100, 110) contenant, stocké dans celui-ci des moyens formant une deuxième interface d'entrée utilisateur (E5 ; F5 ; G5) pour permettre à une deuxième partie d'un contrat potentiel de sélectionner, à l'aide desdits moyens d'entrée de données (51), des deuxièmes données d'entrée comprenant des deuxièmes données formant une pluralité de résultats quantifiés possibles de l'événement auquel se rapportent les premières données d'entrée définies par lesdites données d'événement et une pluralité de deuxièmes quantités numériques associées respectivement auxdits résultats quantifiés possibles définis par lesdites deuxièmes données, chacune desdites deuxièmes quantités numériques étant associée à une estimation, pouvant être déterminée par ladite deuxième partie, de la probabilité de réalisation du résultat correspondant ; et

des moyens (20) pour traiter lesdites premières et deuxièmes quantités numériques pour en déduire une valeur numérique et, suivant ladite valeur numérique, pour produire une commande pour générer des données de sortie relatives à un contrat potentiel.

**3.** Appareil de communication selon la revendication 2, dans lequel

lesdits moyens de stockage de données (95, 100, 110) contiennent, stocké dans ceux-ci, des moyens formant une interface de définition d'événement (E2, E3 ; F2, F3 ; G2, G3) pour permettre à un utilisateur d'entrer des données dans lesdits moyens de stockage (95, 100, 110), à l'aide desdits moyens d'entrée de données (51), définissant un événement futur comportant un certain nombre de résultats quantifiables possibles ; et
ladite première et ladite deuxième interfaces d'entrée utilisateur (E4, E5 ; F4, F5 ; G4, G5) sont adaptées pour sélectionner lesdites premières et deuxièmes données définissant une pluralité de résultats possibles à partir des données définissant un événement futur comportant un certain nombre de résultats quantifiables possibles stockés dans lesdits moyens de stockage de données (95, 100, 110).

**4.** Appareil selon l'une quelconque des revendications précédentes, dans lequel

ladite deuxième interface d'entrée utilisateur (E5, F5, G5) peut être utilisée pour permettre des sélections multiples de deuxièmes données d'entrée ; et
lesdits moyens pour traiter lesdites premières et deuxièmes quantités numériques (20) sont adaptés pour traiter lesdites sélections multiples de deuxièmes quantités numériques desdites deuxièmes données d'entrée avec lesdites premières quantités numériques pour en déduire une valeur numérique et générer des données de sortie en fonction des valeurs numériques déduites desdites sélections plurielles de deuxièmes données d'entrée.

**5.** Appareil selon la revendication 4, dans lequel les moyens pour traiter lesdites premières et deuxièmes quantités numériques est adapté pour sélectionner une desdites sélections plurielles de deuxièmes données d'entrée sur la base d'une comparaison desdites valeurs numériques déduites desdites deuxièmes données d'entrée.

**6.** Appareil selon la revendication 5, dans lequel ladite deuxième interface utilisateur (E5 ; F5 ; G5) comprend en outre des moyens de génération d'identification pour générer des données d'identification identifiant la partie entrant lesdites sélections de deuxièmes données d'entrée.

**7.** Appareil selon la revendication 6, dans lequel lesdits moyens pour traiter lesdites premières et deuxièmes quantités numériques (20) peuvent être utilisés pour générer des données de sortie sur la base d'une valeur numérique générée par lesdits moyens de traitement et des données d'identification identifiant la partie entrant ladite sélection de deuxièmes données d'entrée.

**8.** Appareil selon la revendication 6 ou 7, dans lequel ladite première interface utilisateur (E4 ; F4 ; G4) est adaptée pour permettre l'entrée des données de contrainte de partie et lesdits moyens pour traiter lesdites premières et deuxièmes quantités numériques (20) sont adaptés pour comparer lesdites données de contrainte de partie et données d'identification identifiant une partie entrant une sélection de deuxièmes données d'entrée et pour déterminer s'il faut traiter la pluralité de deuxièmes quantités numériques desdites deuxièmes données d'entrée associées auxdites données d'identification sur la base de ladite comparaison.

**9.** Appareil selon l'une quelconque des revendications précédentes, dans lequel lesdits moyens pour traiter lesdites premières et deuxièmes quantités numériques (20) sont disposés pour traiter lesdites premières et deuxièmes quantités numériques pour déduire une valeur numérique en multipliant la première quantité numérique associée à un résultat quantifiable possible desdites premières données par une deuxième quantité numérique associée au même résultat quantifié possible desdites deuxièmes données et en obtenant la somme de chacun des deux produits pour chacun des résultats quantifiés possibles définis par lesdites premières données.

**10.** Appareil selon l'une quelconque des revendications précédentes, dans lequel ladite première interface utilisateur (E4 ; F4 ; G4) comprend en outre des moyens pour entrer des données d'identification de partie relatives à la première partie ; et

ladite deuxième interface d'entrée utilisateur (E5 ; F5 ; G5) comprend en outre des moyens d'entrée de taux de remise et de taux de commission et dans lequel lesdits moyens pour traiter lesdites premières et deuxièmes quantités numériques (20) sont adaptés pour traiter plus avant ladite valeur numérique déduite desdites premières et deuxièmes quantités numériques en fonction desdits taux de remise et taux de commission associés aux données d'identification relatives auxdites premières données d'entrée.

**11.** Appareil selon l'une quelconque des revendications précédentes, dans lequel ladite première interface d'entrée utilisateur (E4 ; F4 ; G4) peut être utilisée pour permettre l'entrée de données de contrainte numérique et lesdits moyens pour traiter lesdites premières et deuxièmes quantités numériques (20) sont adaptés pour générer des données de sortie sur la base d'une comparaison desdites données de contrainte numérique et des valeurs numériques obtenues en traitant lesdites premières et deuxièmes quantités numériques.

**12.** Appareil selon la revendication 10, dans lequel lesdits moyens pour traiter lesdites premières et deuxièmes quantités numériques (20) sont adaptés pour contrôler lesdits moyens de sortie (51, 52) pour afficher lesdites quantités numériques traitées en fonction desdits taux de remise et taux de commission comme informations de prix relatives audit contrat potentiel.

**13.** Appareil selon la revendication 11, rattachée à la revendication 10, dans lequel lesdits moyens pour traiter lesdites premières et deuxièmes quantités numériques (20) sont adaptés pour contrôler lesdits moyens de sortie (51) pour produire lesdites valeurs numériques traitées avec lesdits taux de remise et taux de commission dépendant des valeurs relatives desdites valeurs traitées et desdites données de contrainte numériques.

**14.** Appareil selon l'une quelconque des revendications précédentes dans lequel lesdits moyens de stockage (95, 100, 110) sont adaptés pour stocker des données comptables concernant chaque partie et dans lequel lesdits moyens pour traiter lesdites premières et deuxièmes quantités numériques (20) sont adaptés pour mettre à jour lesdites données comptables en fonction de la valeur numérique déduite desdites premières et desdites deuxièmes données.

**15.** Appareil selon la revendication 14, dans lequel ladite première et ladite deuxième interfaces d'entrée utilisateur (E4, E5 ; F4, F5 ; G4, G5) comprennent chacune des moyens de confirmation et dans lequel lesdits moyens pour traiter lesdites premières et deuxièmes quantités numériques (20) sont adaptés pour mettre à jour lesdites données comptables en fonction desdites valeurs numériques déduites uniquement lors de la réception de l'entrée de confirmation par lesdits moyens de confirmation.

**16.** Appareil selon la revendication 14 ou 15, comprenant également des moyens pour entrer le résultat d'un événement comportant un certain nombre de résultats quantifiables possibles, dans lequel lesdits moyens pour traiter lesdites premières et deuxièmes quantités numériques (20) sont adaptés pour mettre à jour lesdites données comptables en fonction d'une première quantité numérique associée audit résultat.

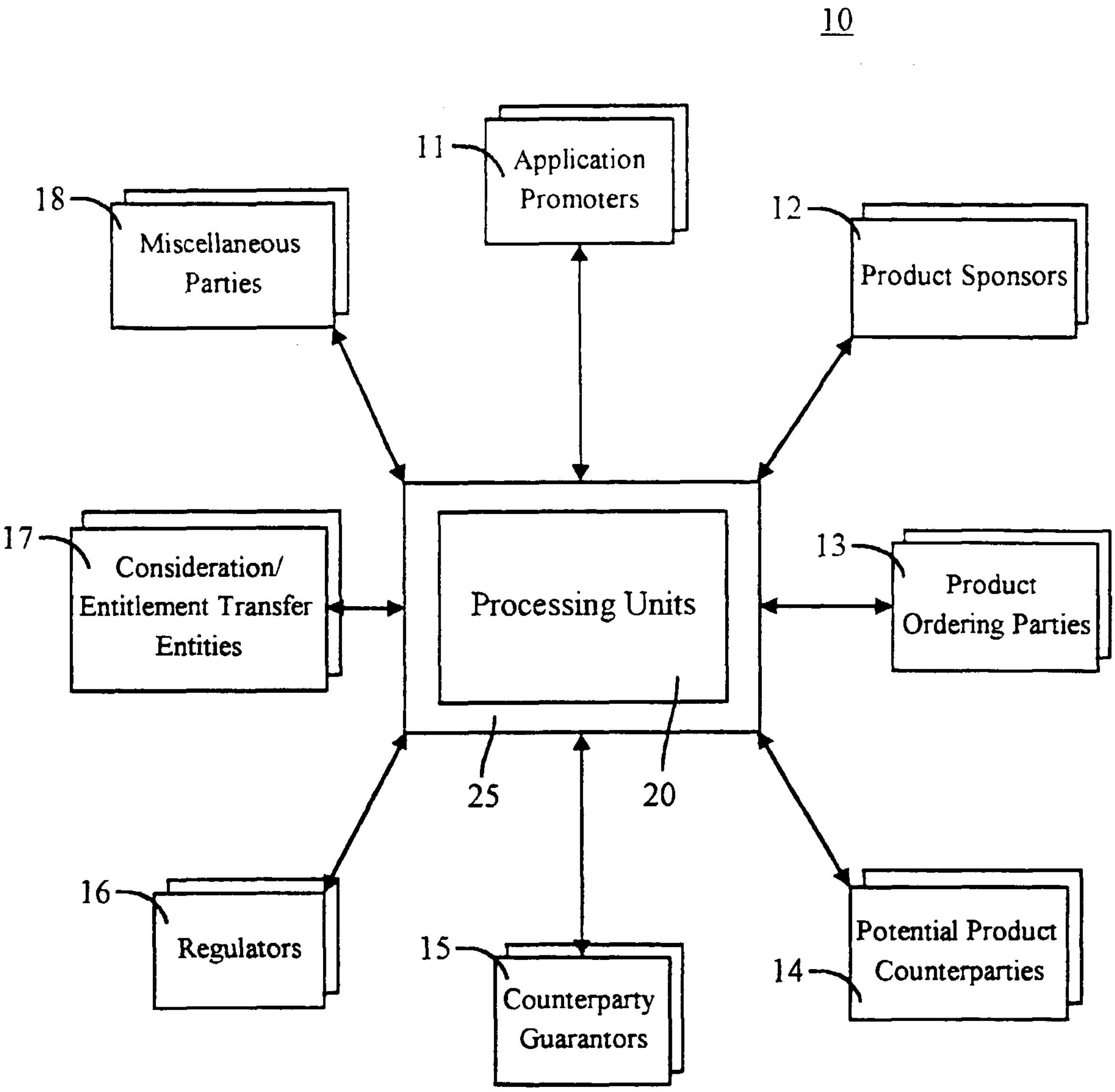
10
11
Application Promoters
18
Miscellaneous Parties
12
Product Sponsors
17
Consideration/ Entitlement Transfer Entities
Processing Units
13
Product Ordering Parties
25
20
16
Regulators
15
Counterparty Guarantors
Potential Product Counterparties
14

**Fig. 1**

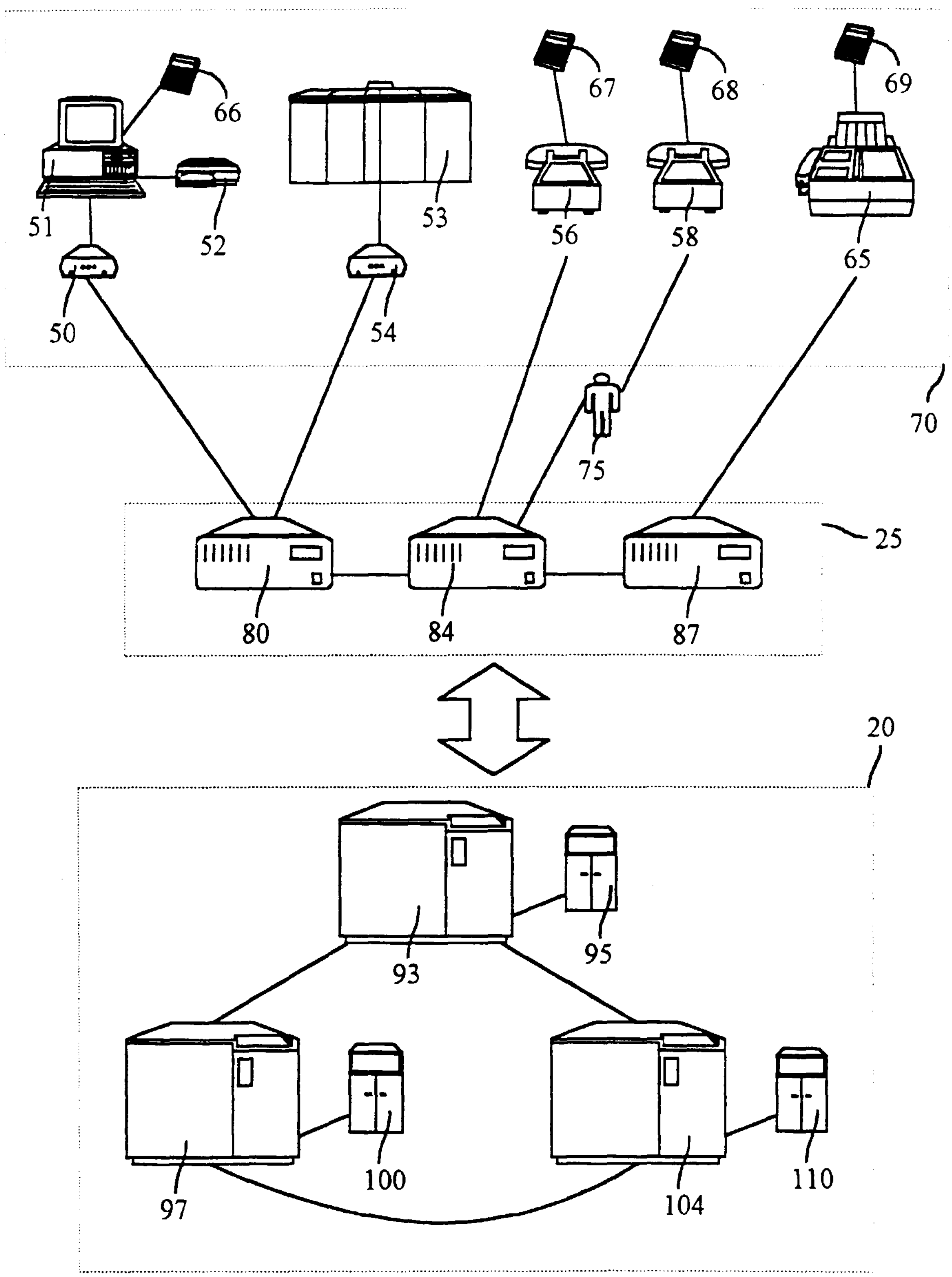
66
67
68
69
51
52
53
56
58
65
50
54
70
75
25
80
84
87
20
93
95
97
100
104
110

**Fig. 2**

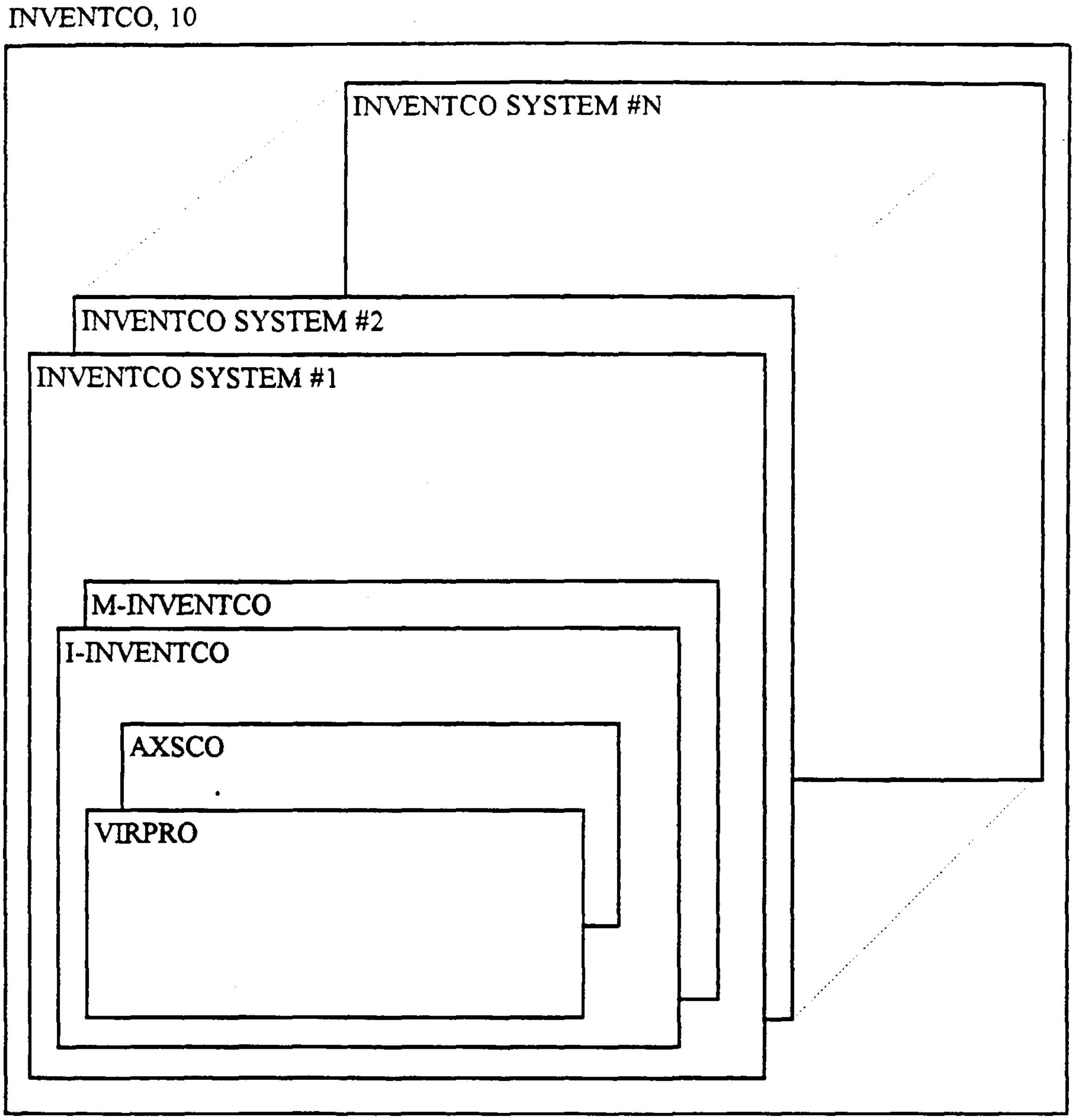
INVENTCO, 10
INVENTCO SYSTEM #N
INVENTCO SYSTEM #2
INVENTCO SYSTEM #1
M-INVENTCO
I-INVENTCO
AXSCO
VIRPRO

Fig. 3

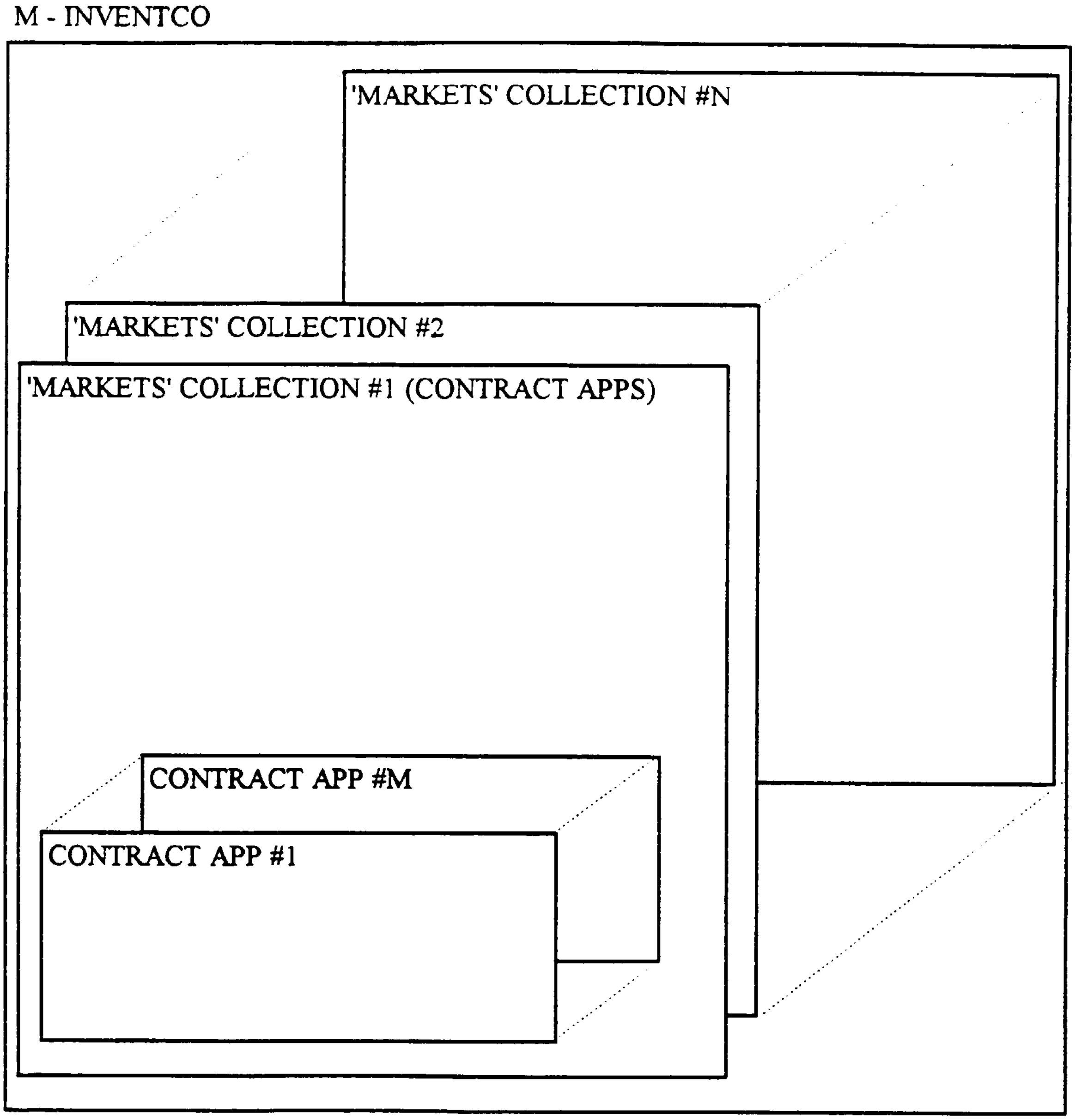
M - INVENTCO
'MARKETS' COLLECTION #N
'MARKETS' COLLECTION #2
'MARKETS' COLLECTION #1 (CONTRACT APPS)
CONTRACT APP #M
CONTRACT APP #1

Fig. 4

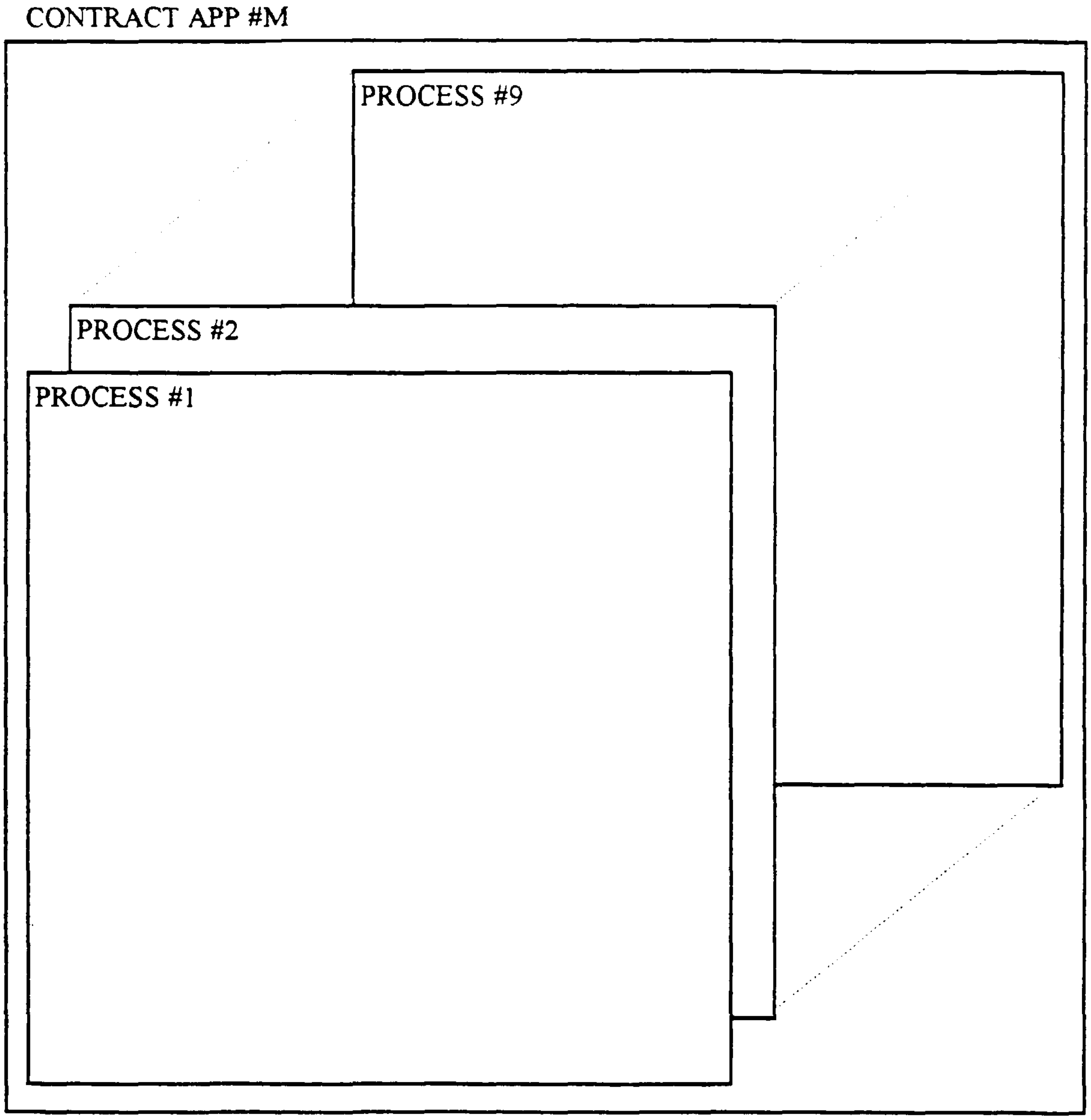


Fig. 5

EXAMPLE I

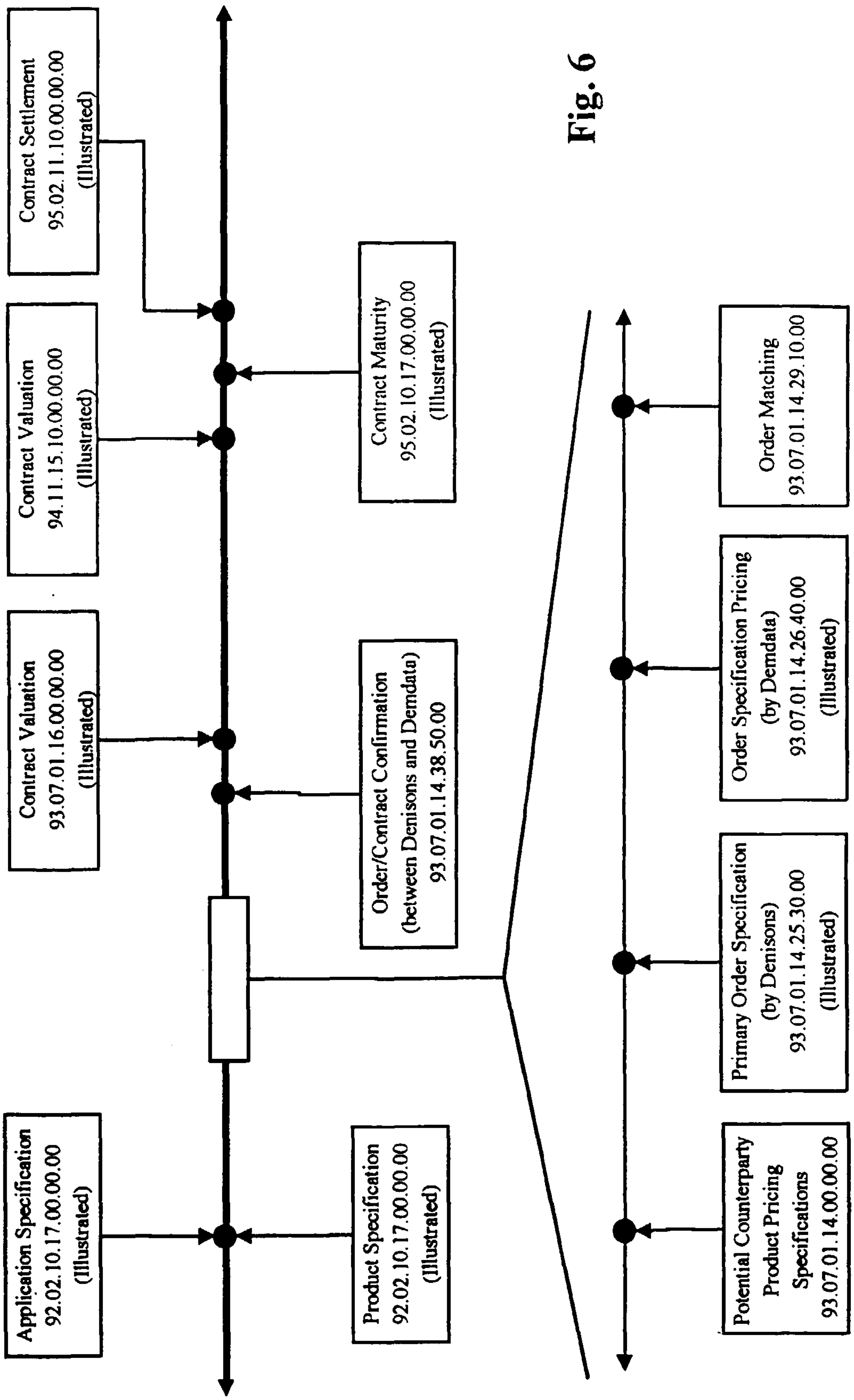


Fig. 6

EXAMPLE II

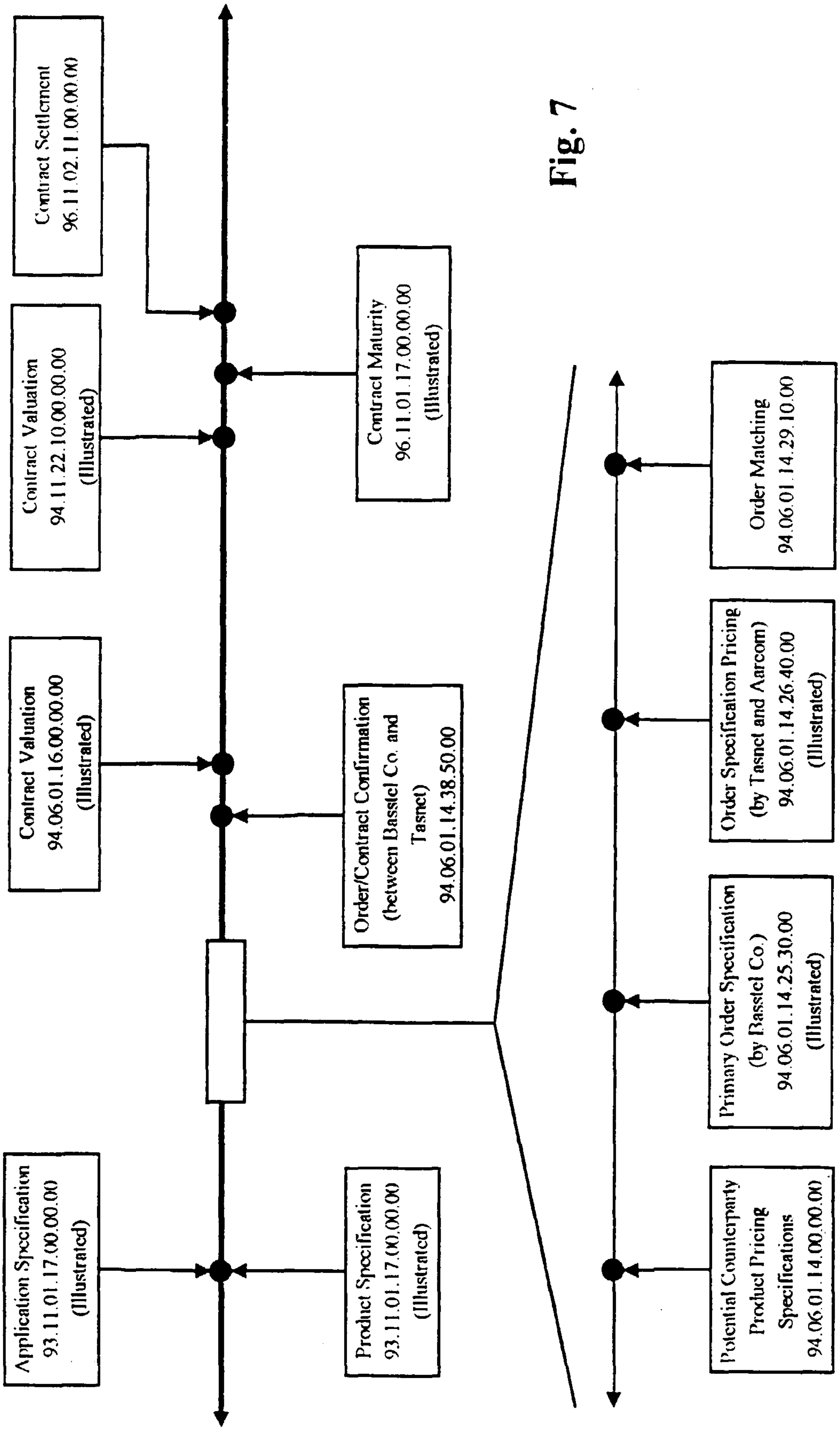


Fig. 7

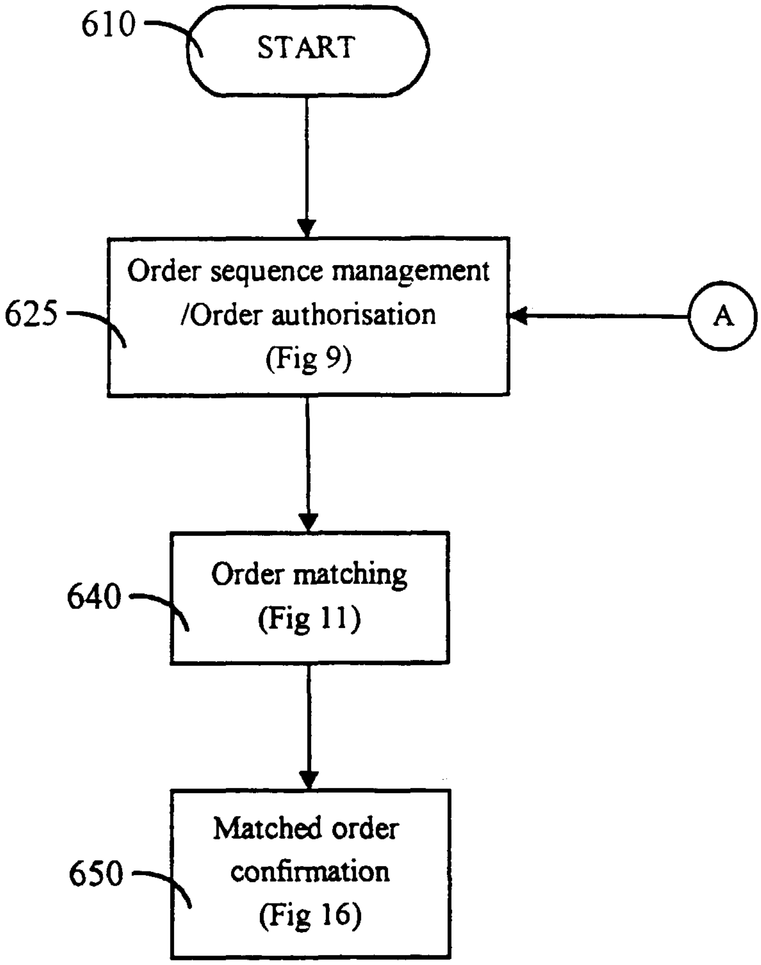
610
START
625
Order sequence management
/Order authorisation
(Fig 9)
A
640
Order matching
(Fig 11)
650
Matched order
confirmation
(Fig 16)

Fig. 8

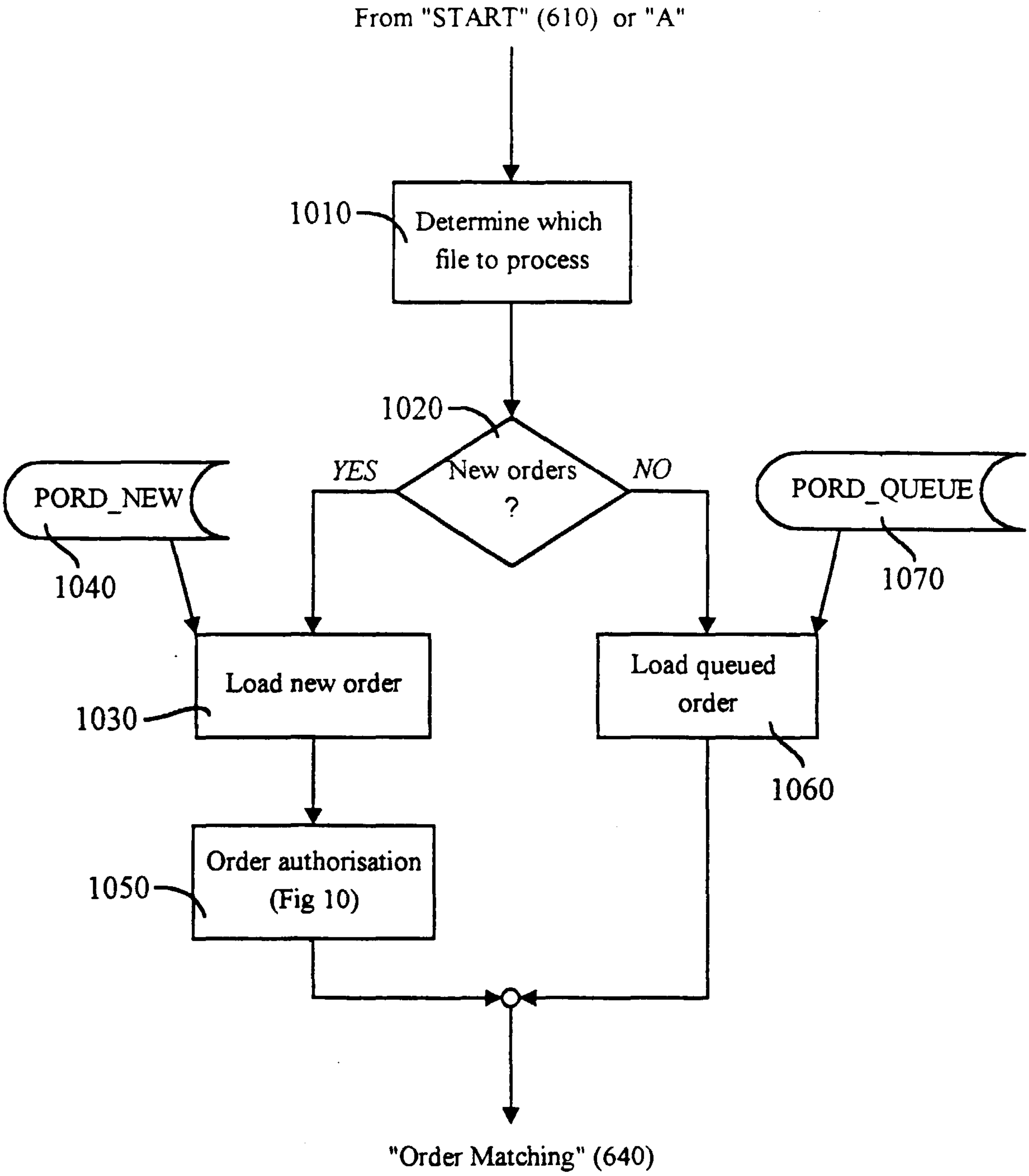
From "START" (610) or "A"
1010
Determine which file to process
1020
New orders ?
YES
NO
PORD_NEW
1040
PORD_QUEUE
1070
Load new order
1030
Load queued order
1060
Order authorisation (Fig 10)
1050
"Order Matching" (640)

Fig. 9

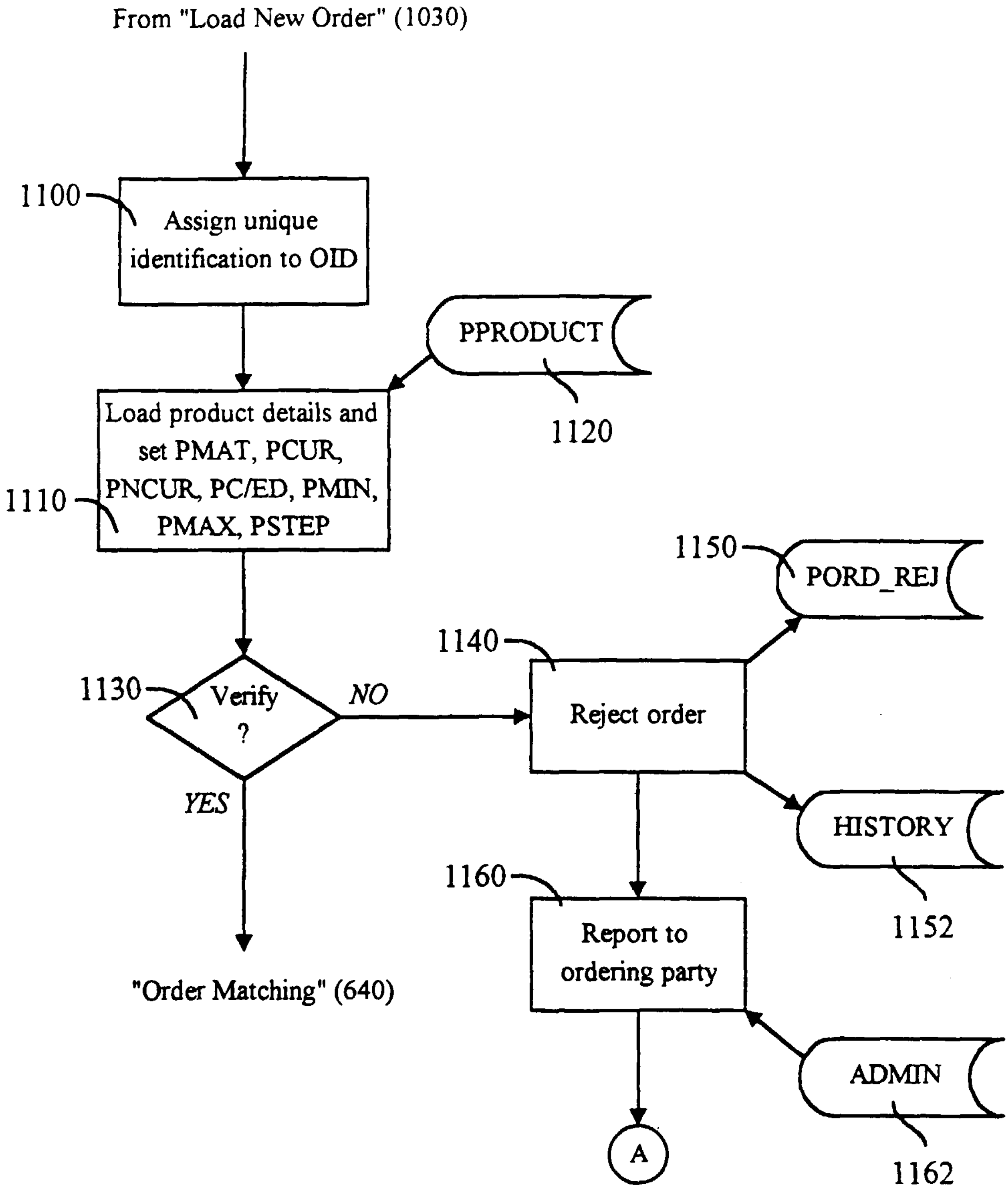
From "Load New Order" (1030)
1100
Assign unique identification to OID
PPRODUCT
1120
Load product details and set PMAT, PCUR, PNCUR, PC/ED, PMIN, PMAX, PSTEP
1110
1150
PORD_REJ
1140
1130
Verify ?
NO
Reject order
YES
HISTORY
1160
1152
Report to ordering party
"Order Matching" (640)
ADMIN
A
1162

Fig. 10

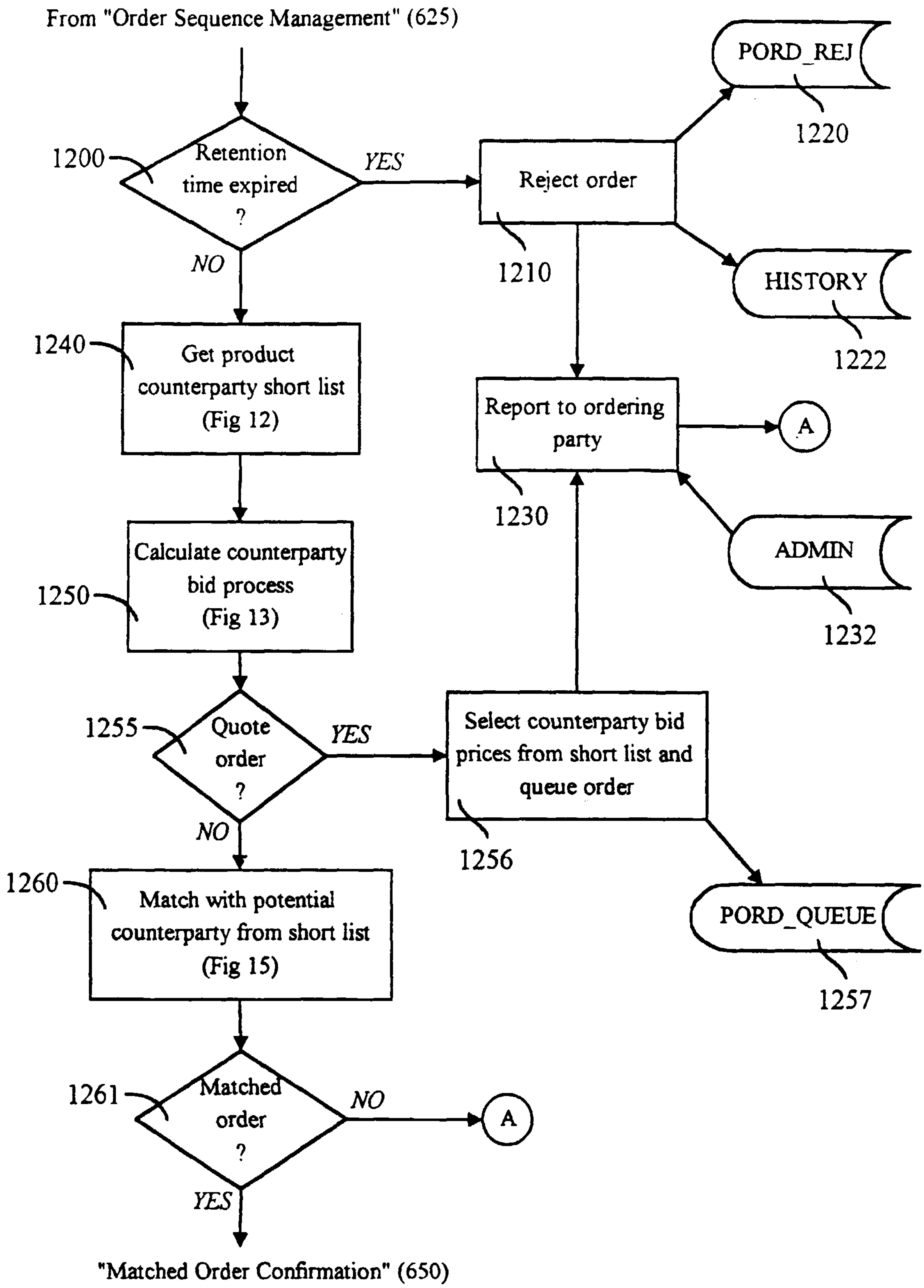
From "Order Sequence Management" (625)
1200
Retention time expired ?
YES
NO
Reject order
1210
PORD_REJ
1220
HISTORY
1222
1240
Get product counterparty short list (Fig 12)
Report to ordering party
1230
A
ADMIN
1232
1250
Calculate counterparty bid process (Fig 13)
1255
Quote order ?
YES
NO
Select counterparty bid prices from short list and queue order
1256
PORD_QUEUE
1257
1260
Match with potential counterparty from short list (Fig 15)
1261
Matched order ?
NO
A
YES
"Matched Order Confirmation" (650)

Fig. 11

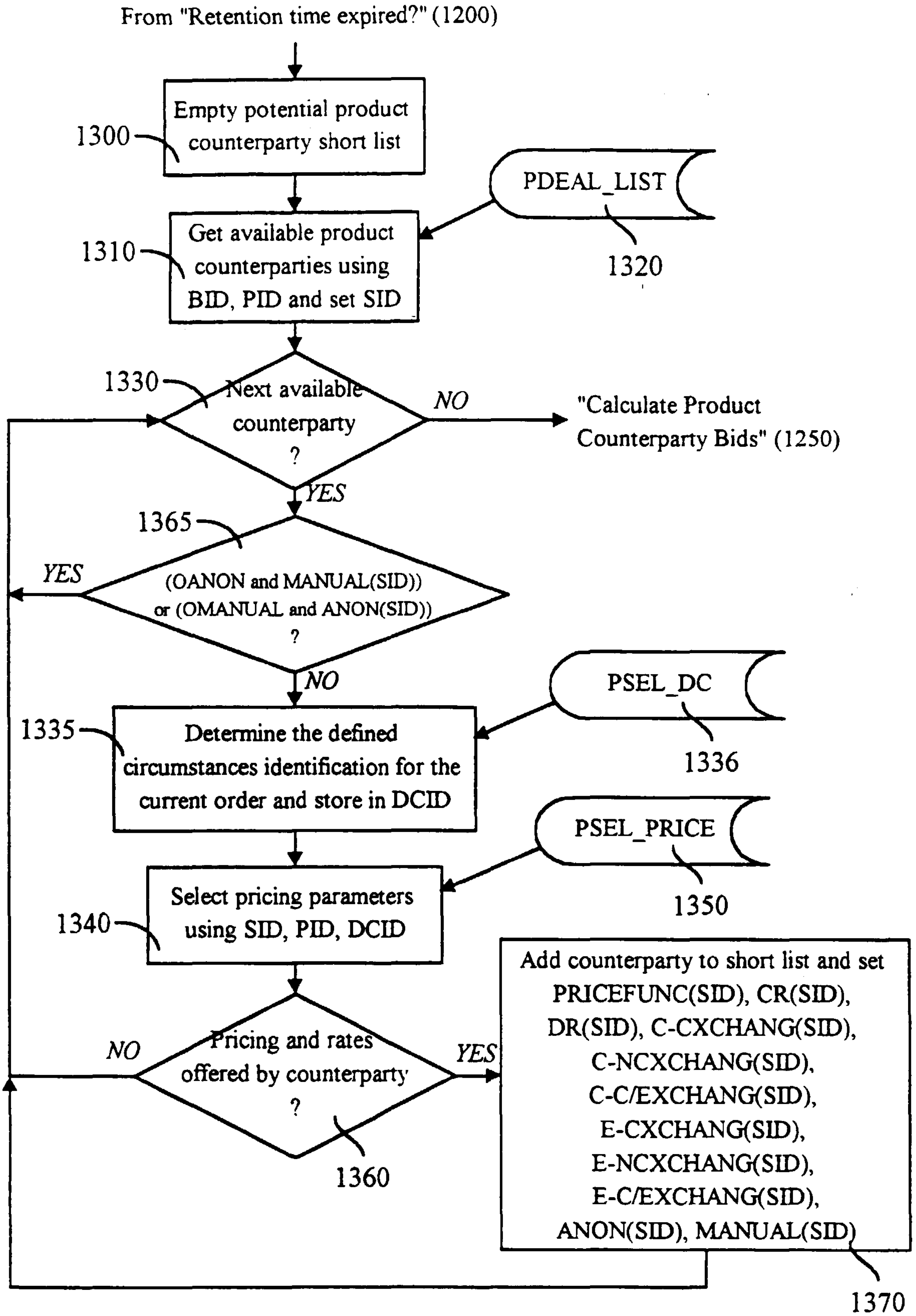
From "Retention time expired?" (1200)
Empty potential product counterparty short list
1300
Get available product counterparties using BID, PID and set SID
1310
PDEAL_LIST
1320
Next available counterparty ?
1330
NO
"Calculate Product Counterparty Bids" (1250)
YES
(OANON and MANUAL(SID)) or (OMANUAL and ANON(SID)) ?
1365
YES
NO
Determine the defined circumstances identification for the current order and store in DCID
1335
PSEL_DC
1336
PSEL_PRICE
1350
Select pricing parameters using SID, PID, DCID
1340
Pricing and rates offered by counterparty ?
1360
NO
YES
Add counterparty to short list and set PRICEFUNC(SID), CR(SID), DR(SID), C-CXCHANG(SID), C-NCXCHANG(SID), C-C/EXCHANG(SID), E-CXCHANG(SID), E-NCXCHANG(SID), E-C/EXCHANG(SID), ANON(SID), MANUAL(SID)
1370

Fig. 12

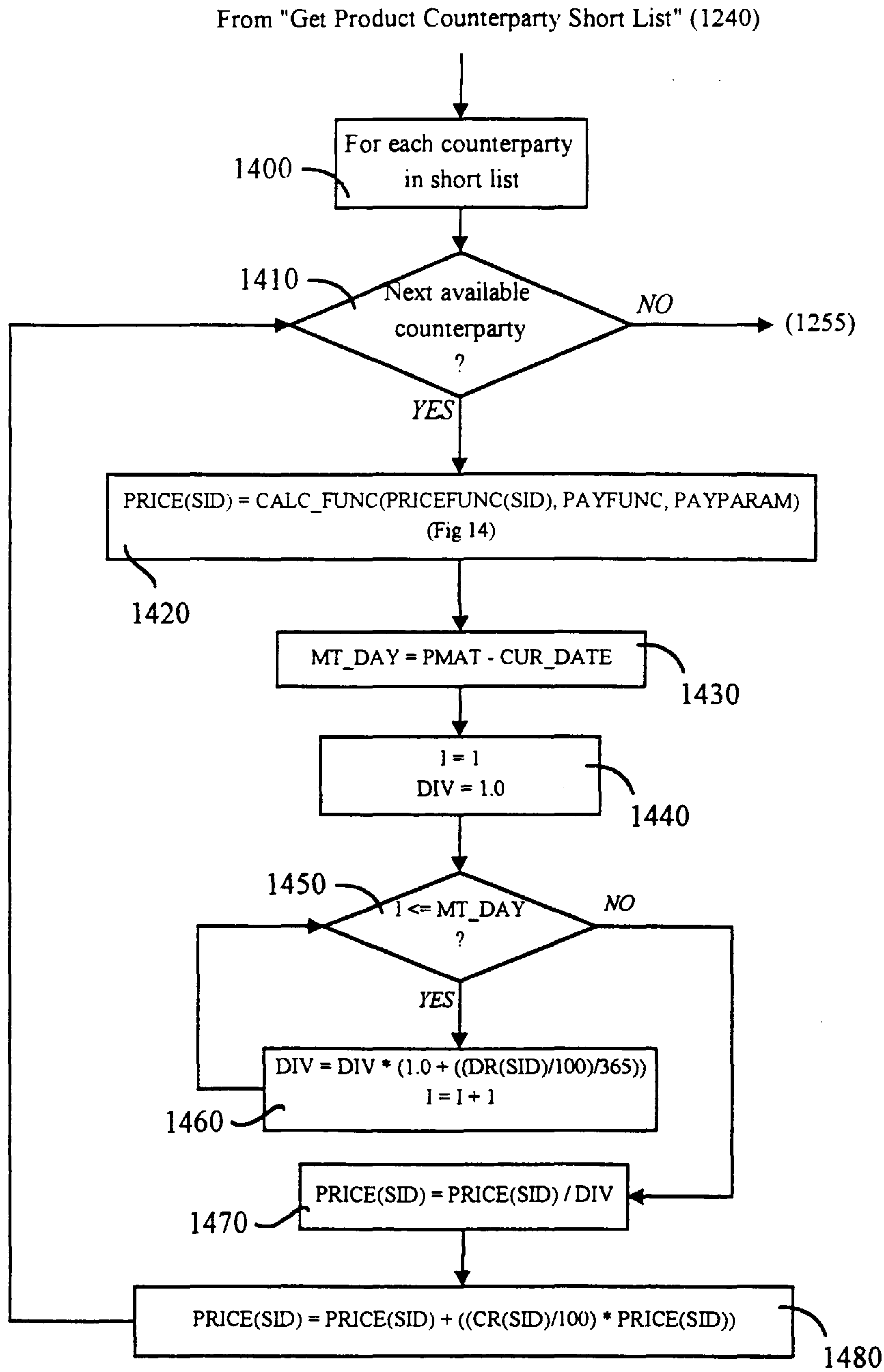

From "Get Product Counterparty Short List" (1240)
For each counterparty in short list
1400
Next available counterparty ?
1410
NO
(1255)
YES
PRICE(SID) = CALC_FUNC(PRICEFUNC(SID), PAYFUNC, PAYPARAM) (Fig 14)
1420
MT_DAY = PMAT - CUR_DATE
1430
I = 1
DIV = 1.0
1440
I <= MT_DAY ?
1450
NO
YES
DIV = DIV * (1.0 + ((DR(SID)/100)/365))
I = I + 1
1460
PRICE(SID) = PRICE(SID) / DIV
1470
PRICE(SID) = PRICE(SID) + ((CR(SID)/100) * PRICE(SID))
1480


Fig. 13

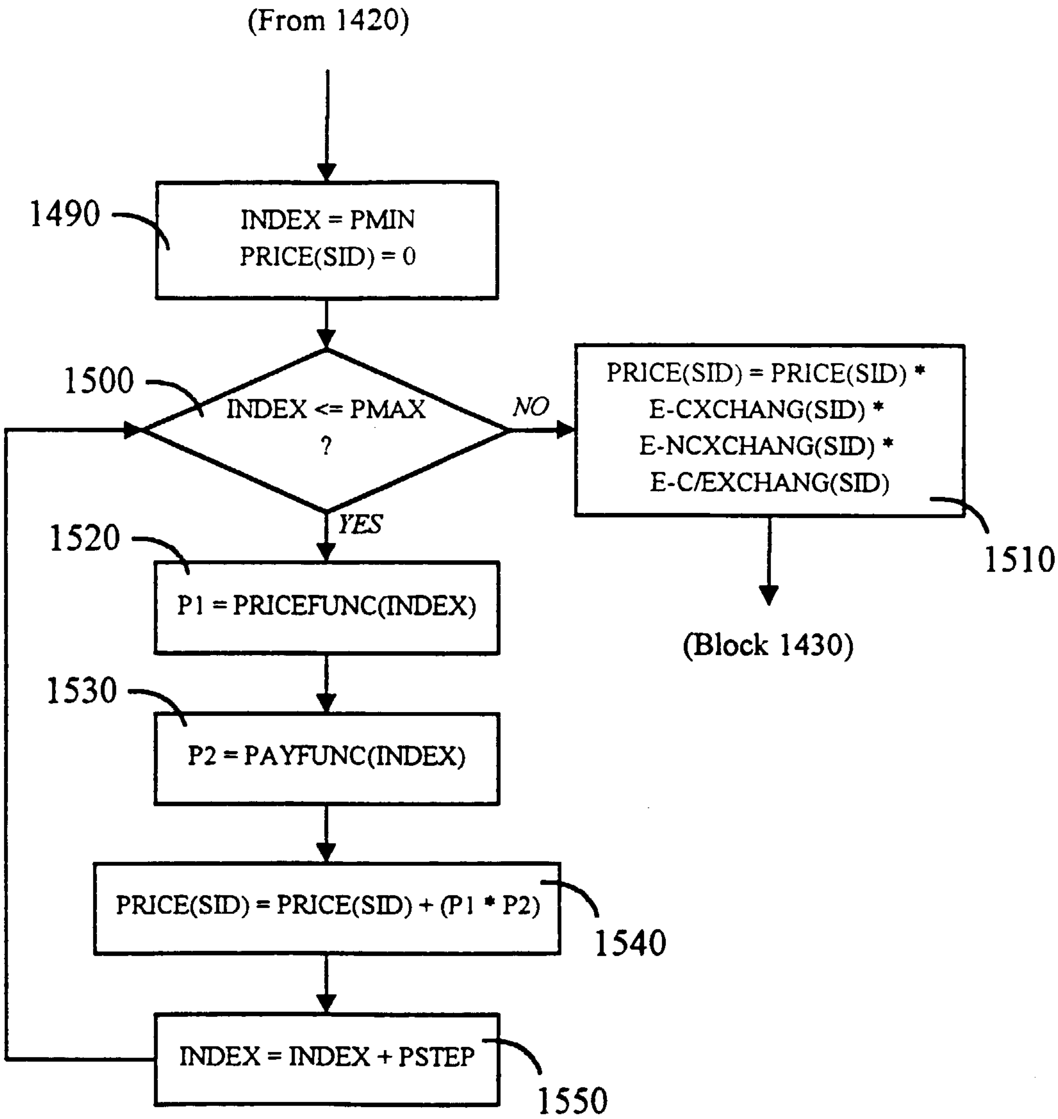
(From 1420)
1490
INDEX = PMIN
PRICE(SID) = 0
1500
INDEX <= PMAX
?
NO
PRICE(SID) = PRICE(SID) *
E-CXCHANG(SID) *
E-NCXCHANG(SID) *
E-C/EXCHANG(SID)
1510
(Block 1430)
YES
1520
P1 = PRICEFUNC(INDEX)
1530
P2 = PAYFUNC(INDEX)
PRICE(SID) = PRICE(SID) + (P1 * P2)
1540
INDEX = INDEX + PSTEP
1550

Fig. 14

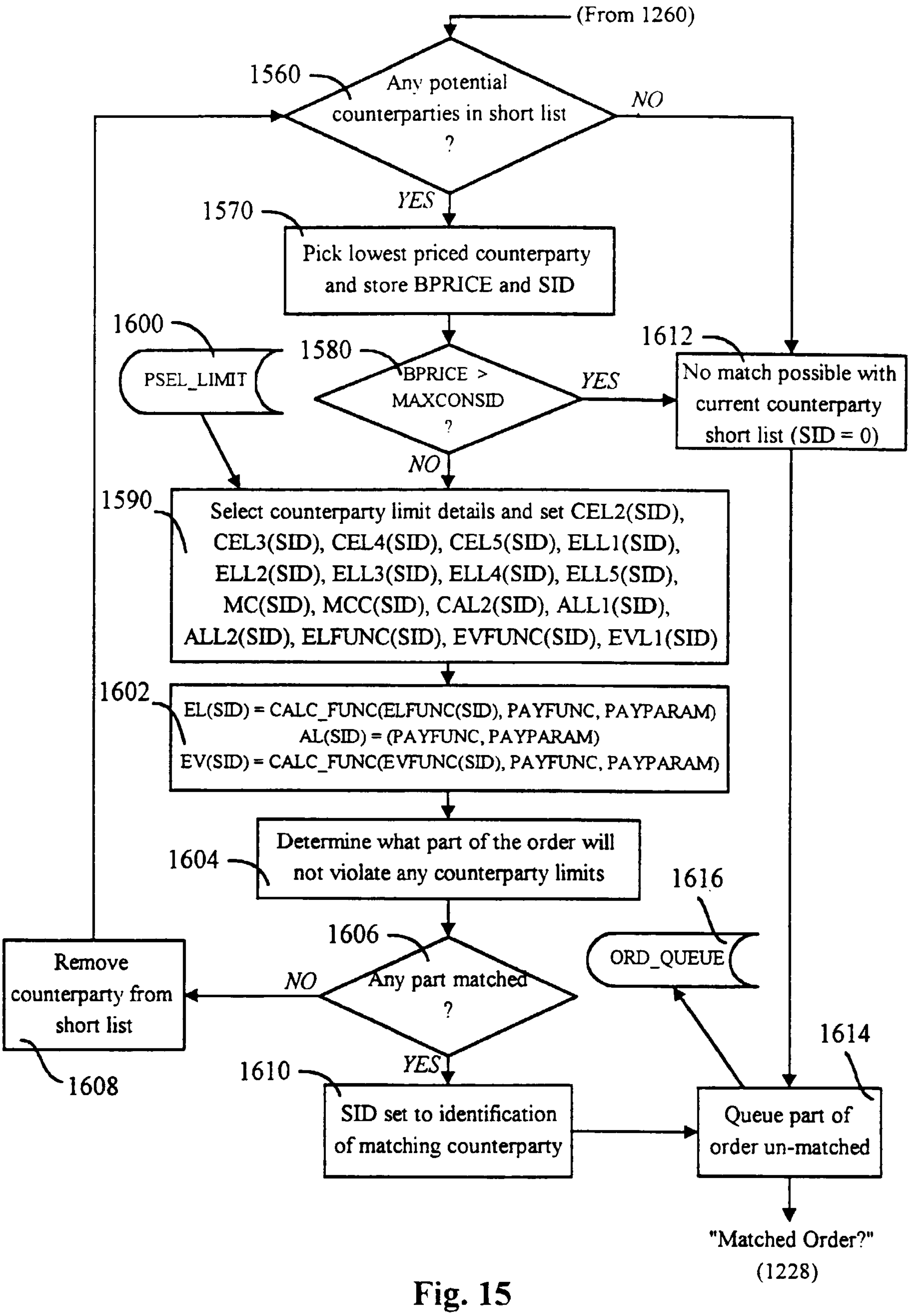

(From 1260)
1560
Any potential counterparties in short list ?
NO
YES
1570
Pick lowest priced counterparty and store BPRICE and SID
1600
PSEL_LIMIT
1580
BPRICE > MAXCONSID ?
YES
1612
No match possible with current counterparty short list (SID = 0)
NO
1590
Select counterparty limit details and set CEL2(SID), CEL3(SID), CEL4(SID), CEL5(SID), ELL1(SID), ELL2(SID), ELL3(SID), ELL4(SID), ELL5(SID), MC(SID), MCC(SID), CAL2(SID), ALL1(SID), ALL2(SID), ELFUNC(SID), EVFUNC(SID), EVL1(SID)
1602
EL(SID) = CALC_FUNC(ELFUNC(SID), PAYFUNC, PAYPARAM)
AL(SID) = (PAYFUNC, PAYPARAM)
EV(SID) = CALC_FUNC(EVFUNC(SID), PAYFUNC, PAYPARAM)
1604
Determine what part of the order will not violate any counterparty limits
1616
ORD_QUEUE
1606
Remove counterparty from short list
NO
Any part matched ?
1614
1608
1610
YES
SID set to identification of matching counterparty
Queue part of order un-matched
"Matched Order?" (1228)


Fig. 15

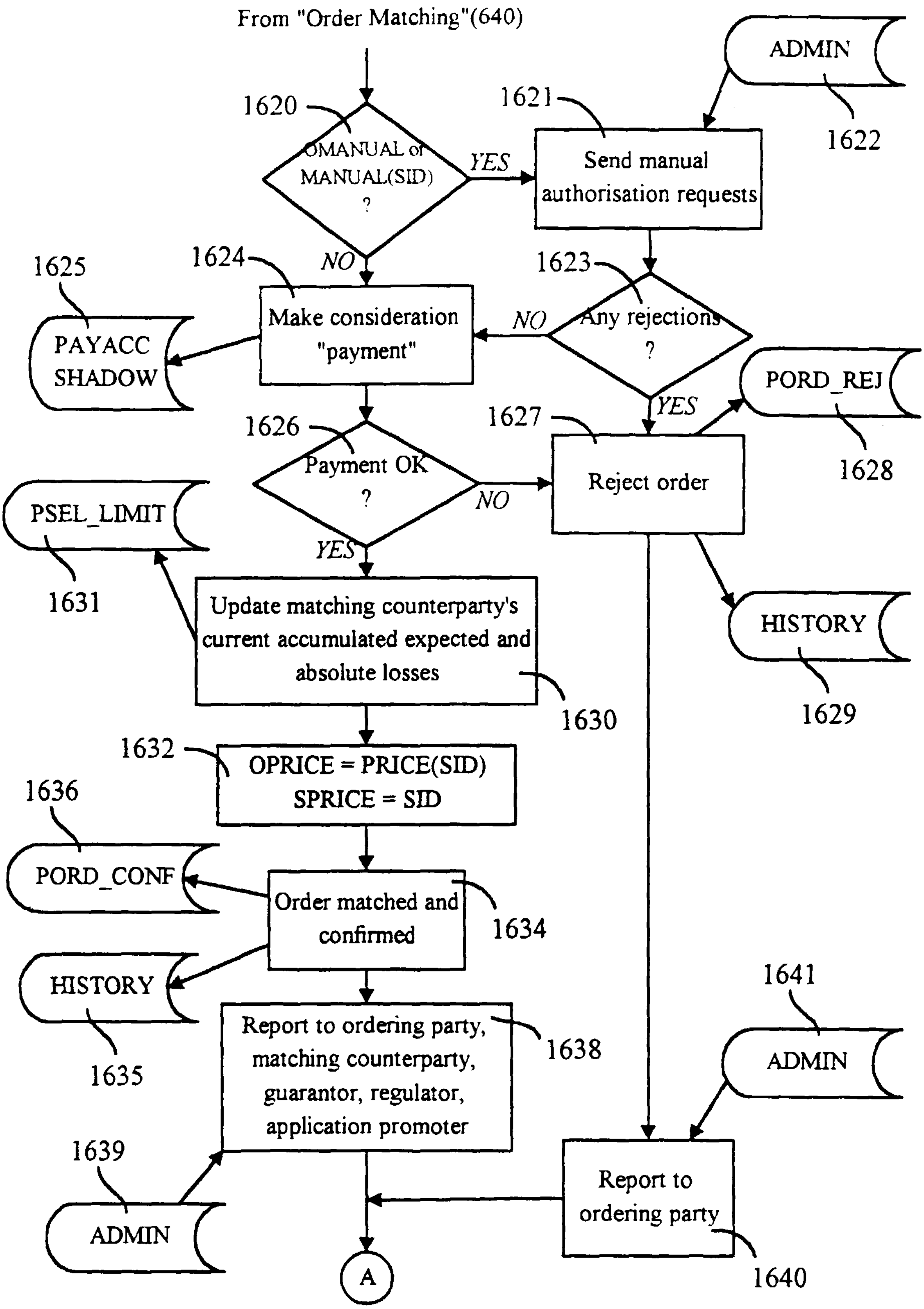
From "Order Matching"(640)
ADMIN
1622
1620
1621
OMANUAL or MANUAL(SID) ?
YES
Send manual authorisation requests
1625
1624
NO
1623
Make consideration "payment"
NO
Any rejections ?
PAYACC SHADOW
PORD_REJ
YES
1626
1627
Payment OK ?
Reject order
1628
NO
PSEL_LIMIT
YES
1631
Update matching counterparty's current accumulated expected and absolute losses
HISTORY
1630
1629
1632
OPRICE = PRICE(SID) SPRICE = SID
1636
PORD_CONF
Order matched and confirmed
1634
HISTORY
1641
Report to ordering party, matching counterparty, guarantor, regulator, application promoter
1638
1635
ADMIN
1639
ADMIN
Report to ordering party
A
1640

Fig. 16

EXAMPLE III

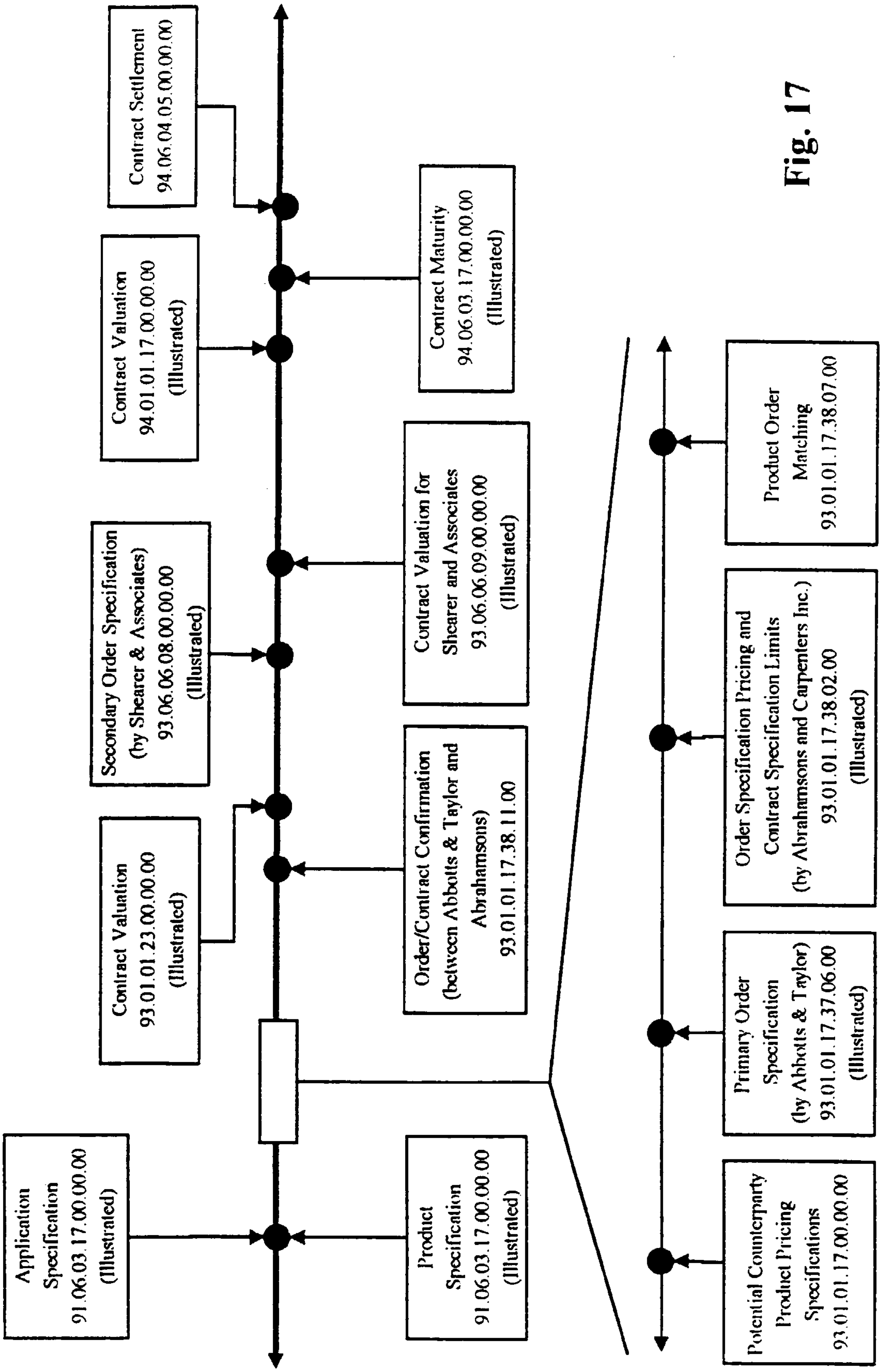


Fig. 17

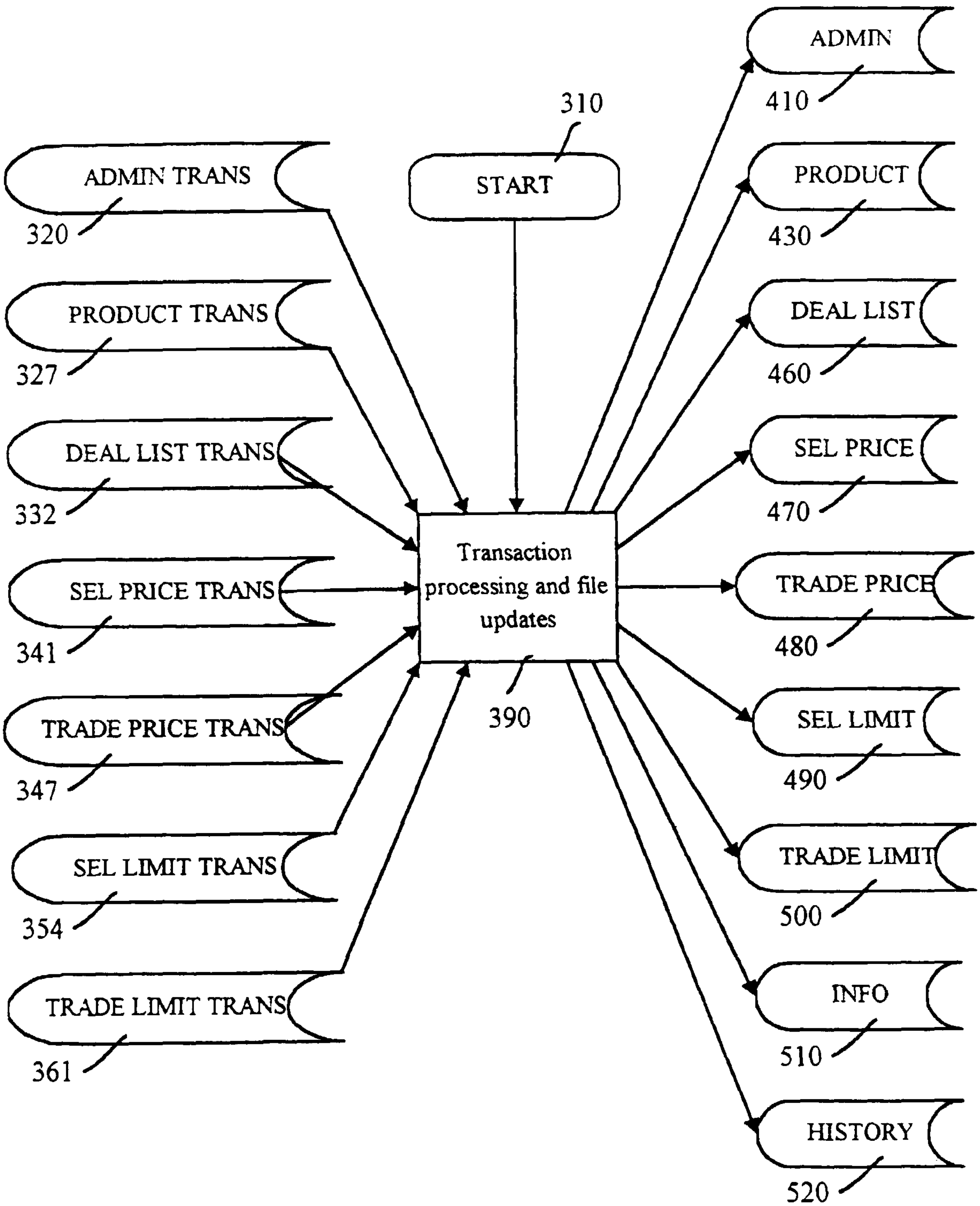
START
310
ADMIN TRANS
320
PRODUCT TRANS
327
DEAL LIST TRANS
332
SEL PRICE TRANS
341
TRADE PRICE TRANS
347
SEL LIMIT TRANS
354
TRADE LIMIT TRANS
361
Transaction processing and file updates
390
ADMIN
410
PRODUCT
430
DEAL LIST
460
SEL PRICE
470
TRADE PRICE
480
SEL LIMIT
490
TRADE LIMIT
500
INFO
510
HISTORY
520

Fig. 18

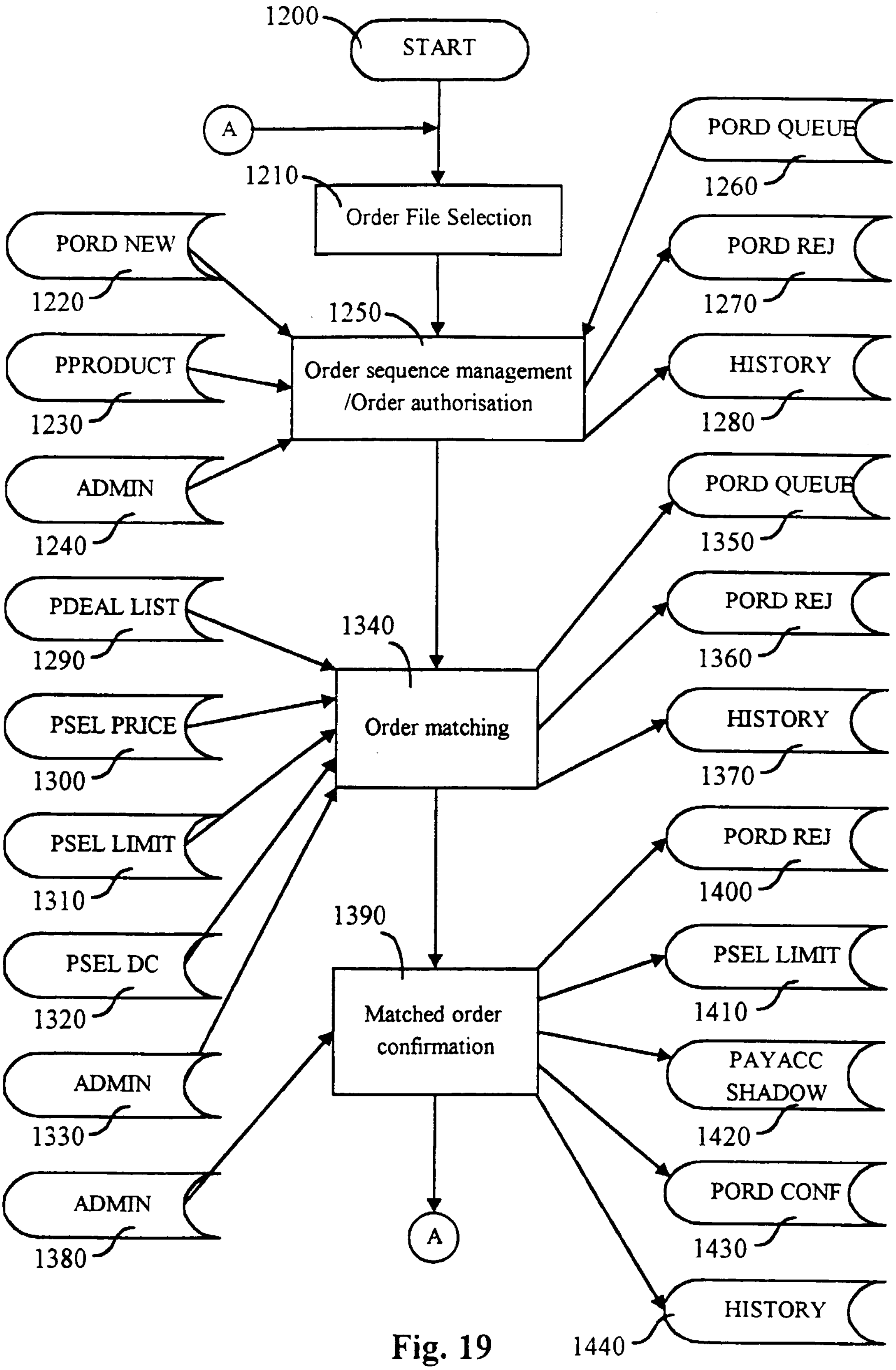
1200
START
A
1210
Order File Selection
PORD NEW
1220
1250
PPRODUCT
1230
Order sequence management
/Order authorisation
ADMIN
1240
PORD QUEUE
1260
PORD REJ
1270
HISTORY
1280
PDEAL LIST
1290
1340
PSEL PRICE
1300
Order matching
PSEL LIMIT
1310
PSEL DC
1320
ADMIN
1330
ADMIN
1380
PORD QUEUE
1350
PORD REJ
1360
HISTORY
1370
1390
Matched order
confirmation
PORD REJ
1400
PSEL LIMIT
1410
PAYACC
SHADOW
1420
PORD CONF
1430
HISTORY
1440
A

Fig. 19

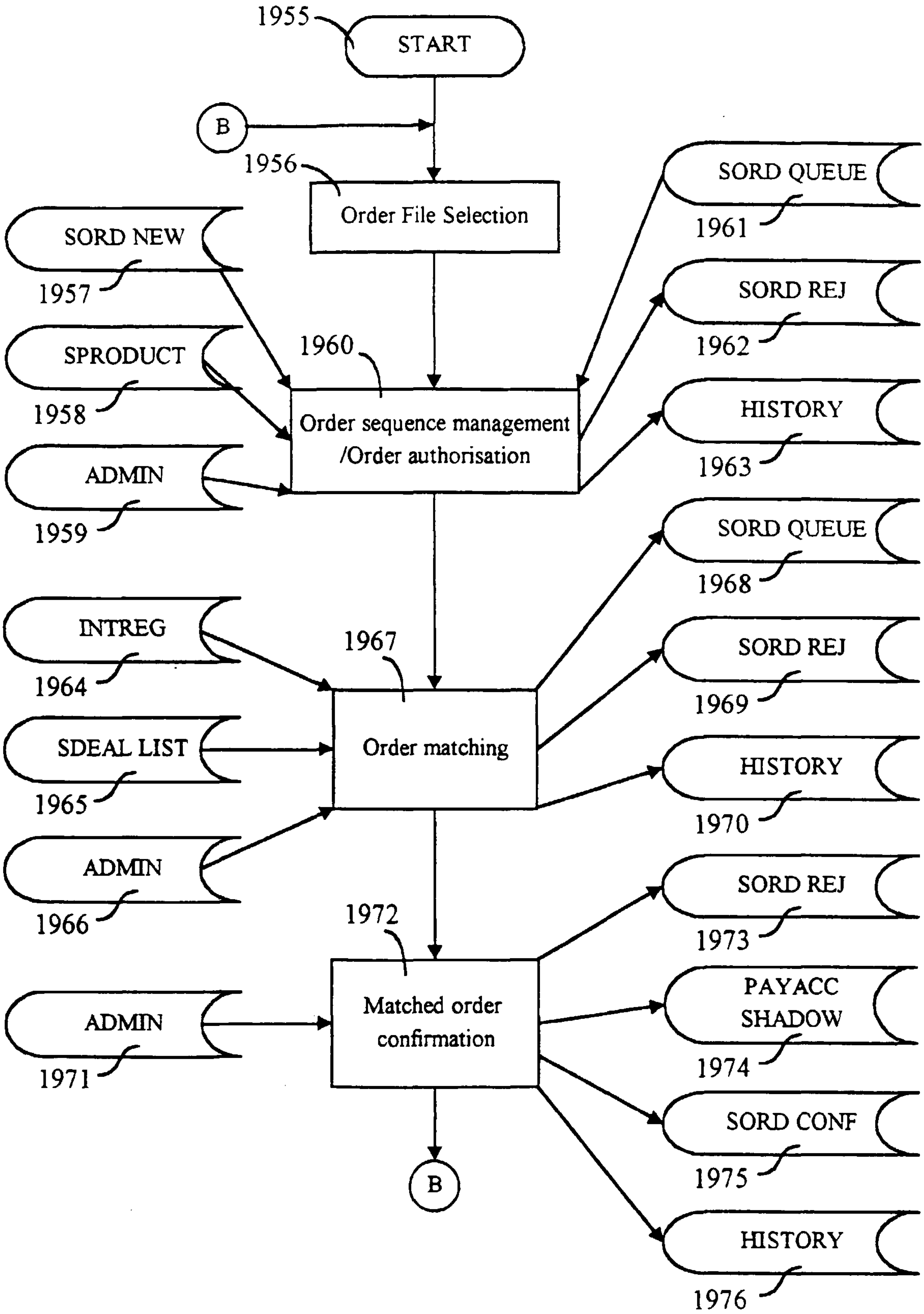
1955
START
B
1956
Order File Selection
SORD NEW
1957
SPRODUCT
1958
ADMIN
1959
1960
Order sequence management
/Order authorisation
SORD QUEUE
1961
SORD REJ
1962
HISTORY
1963
INTREG
1964
SDEAL LIST
1965
ADMIN
1966
1967
Order matching
SORD QUEUE
1968
SORD REJ
1969
HISTORY
1970
1972
ADMIN
1971
Matched order
confirmation
SORD REJ
1973
PAYACC
SHADOW
1974
SORD CONF
1975
HISTORY
1976
B

Fig. 20

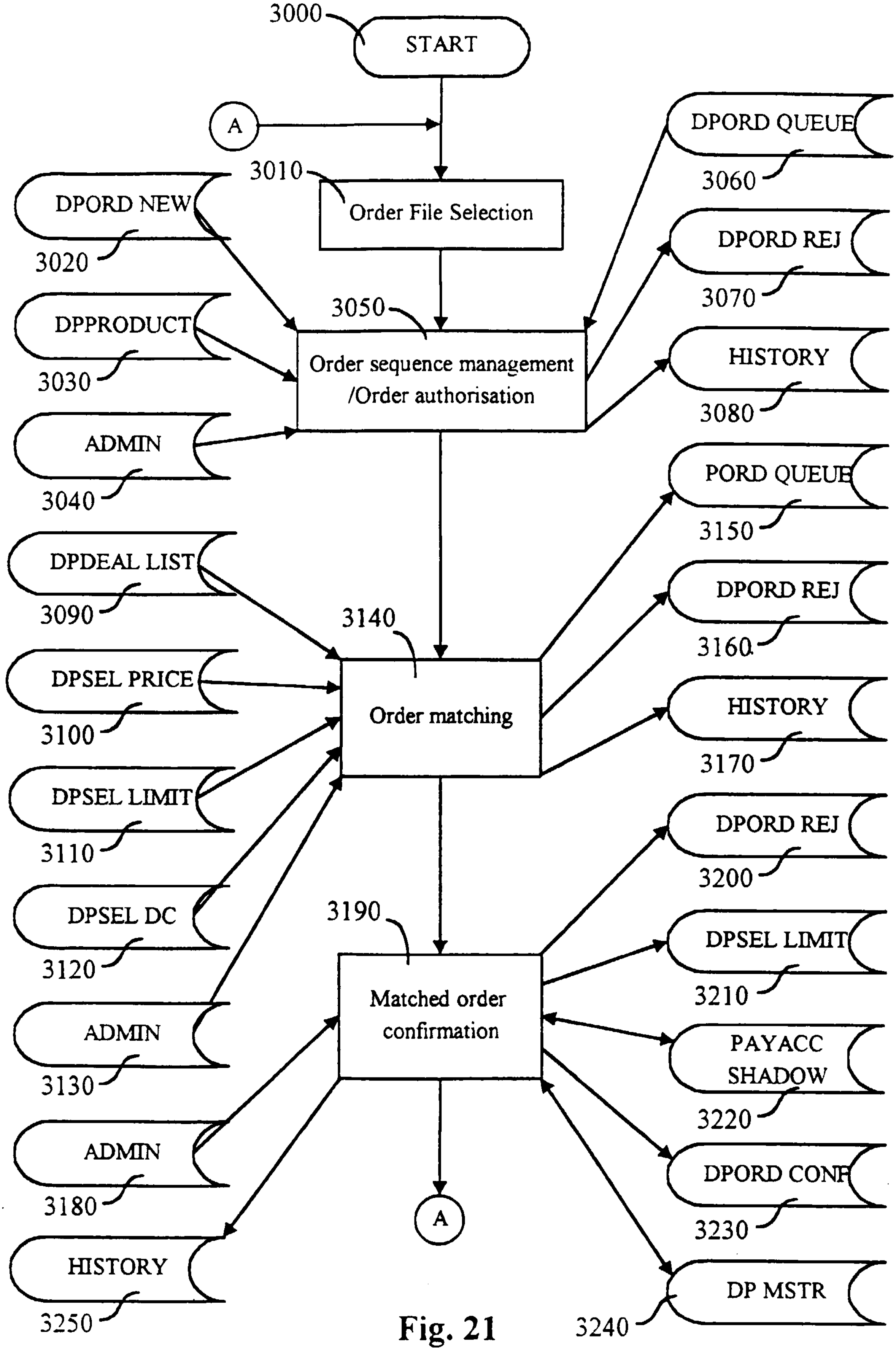
3000
START
A
3010
Order File Selection
DPORD NEW
3020
DPPRODUCT
3030
ADMIN
3040
3050
Order sequence management
/Order authorisation
DPORD QUEUE
3060
DPORD REJ
3070
HISTORY
3080
DPDEAL LIST
3090
DPSEL PRICE
3100
DPSEL LIMIT
3110
DPSEL DC
3120
ADMIN
3130
3140
Order matching
PORD QUEUE
3150
DPORD REJ
3160
HISTORY
3170
3190
Matched order
confirmation
DPORD REJ
3200
DPSEL LIMIT
3210
PAYACC
SHADOW
3220
DPORD CONF
3230
ADMIN
3180
HISTORY
3250
A
DP MSTR
3240

Fig. 21

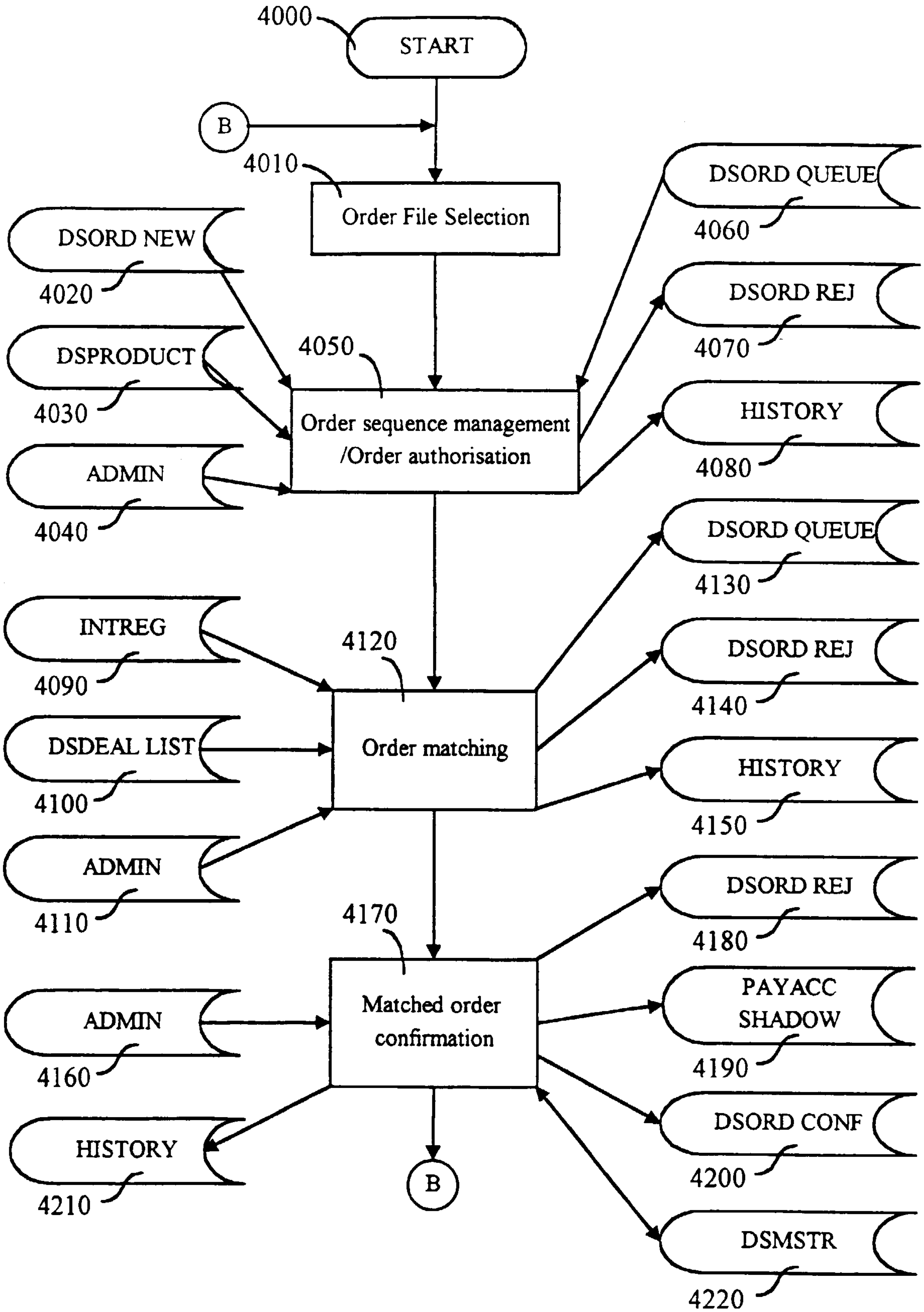
4000
START
B
4010
Order File Selection
DSORD NEW
4020
DSPRODUCT
4030
ADMIN
4040
4050
Order sequence management /Order authorisation
DSORD QUEUE
4060
DSORD REJ
4070
HISTORY
4080
INTREG
4090
DSDEAL LIST
4100
ADMIN
4110
4120
Order matching
DSORD QUEUE
4130
DSORD REJ
4140
HISTORY
4150
4170
Matched order confirmation
ADMIN
4160
HISTORY
4210
B
DSORD REJ
4180
PAYACC SHADOW
4190
DSORD CONF
4200
DSMSTR
4220

Fig. 22

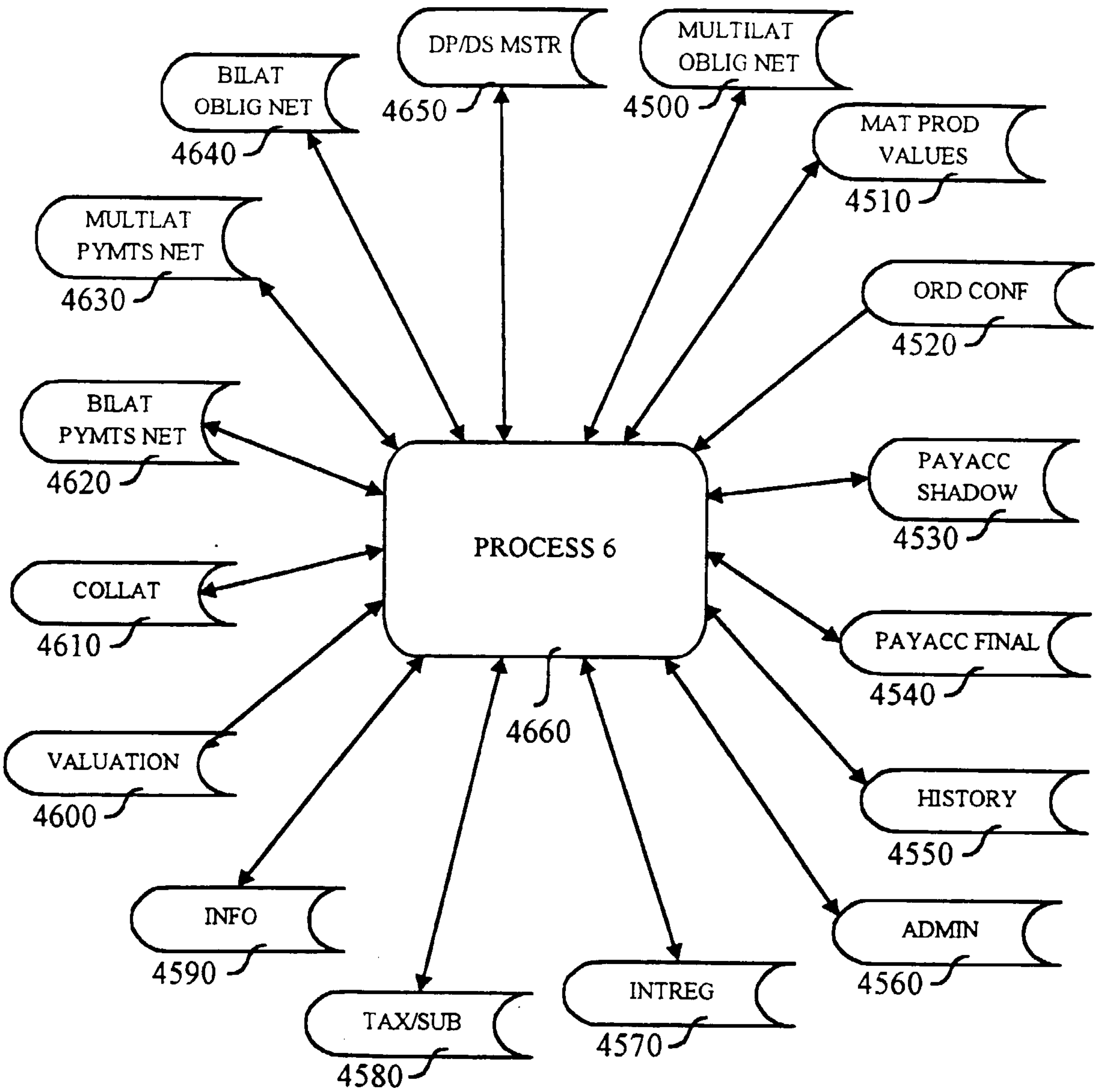
BILAT
OBLIG NET
4640
DP/DS MSTR
4650
MULTILAT
OBLIG NET
4500
MAT PROD
VALUES
4510
MULTLAT
PYMTS NET
4630
ORD CONF
4520
BILAT
PYMTS NET
4620
PROCESS 6
PAYACC
SHADOW
4530
COLLAT
4610
PAYACC FINAL
4540
4660
VALUATION
4600
HISTORY
4550
INFO
4590
ADMIN
4560
INTREG
4570
TAX/SUB
4580

Fig. 23

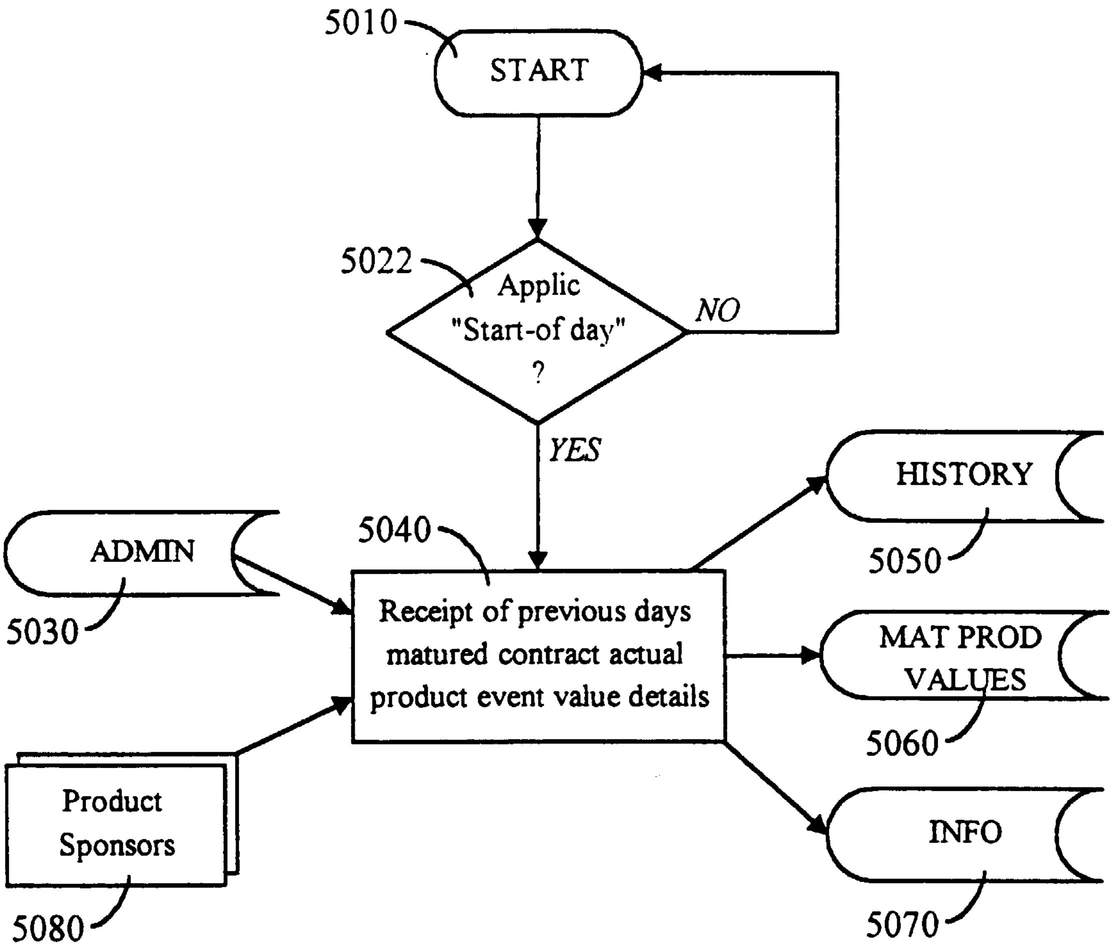
5010
START
5022
Applic
"Start-of day"
?
NO
YES
ADMIN
5030
5040
Receipt of previous days
matured contract actual
product event value details
HISTORY
5050
MAT PROD
VALUES
5060
Product
Sponsors
5080
INFO
5070

Fig. 24

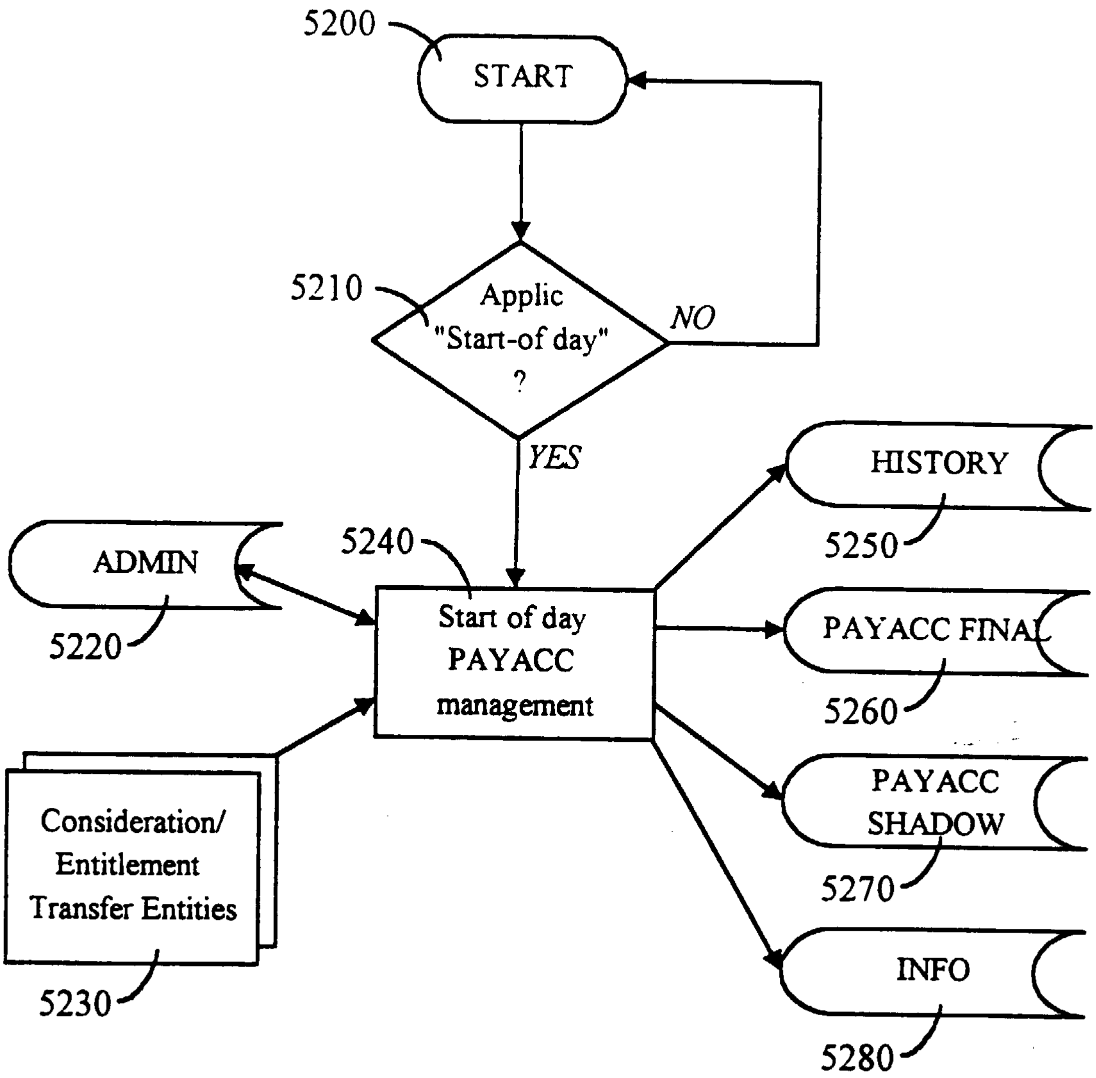
5200
START
5210
Applic
"Start-of day"
?
NO
YES
ADMIN
5220
5240
Start of day
PAYACC
management
Consideration/
Entitlement
Transfer Entities
5230
HISTORY
5250
PAYACC FINAL
5260
PAYACC
SHADOW
5270
INFO
5280

Fig. 25

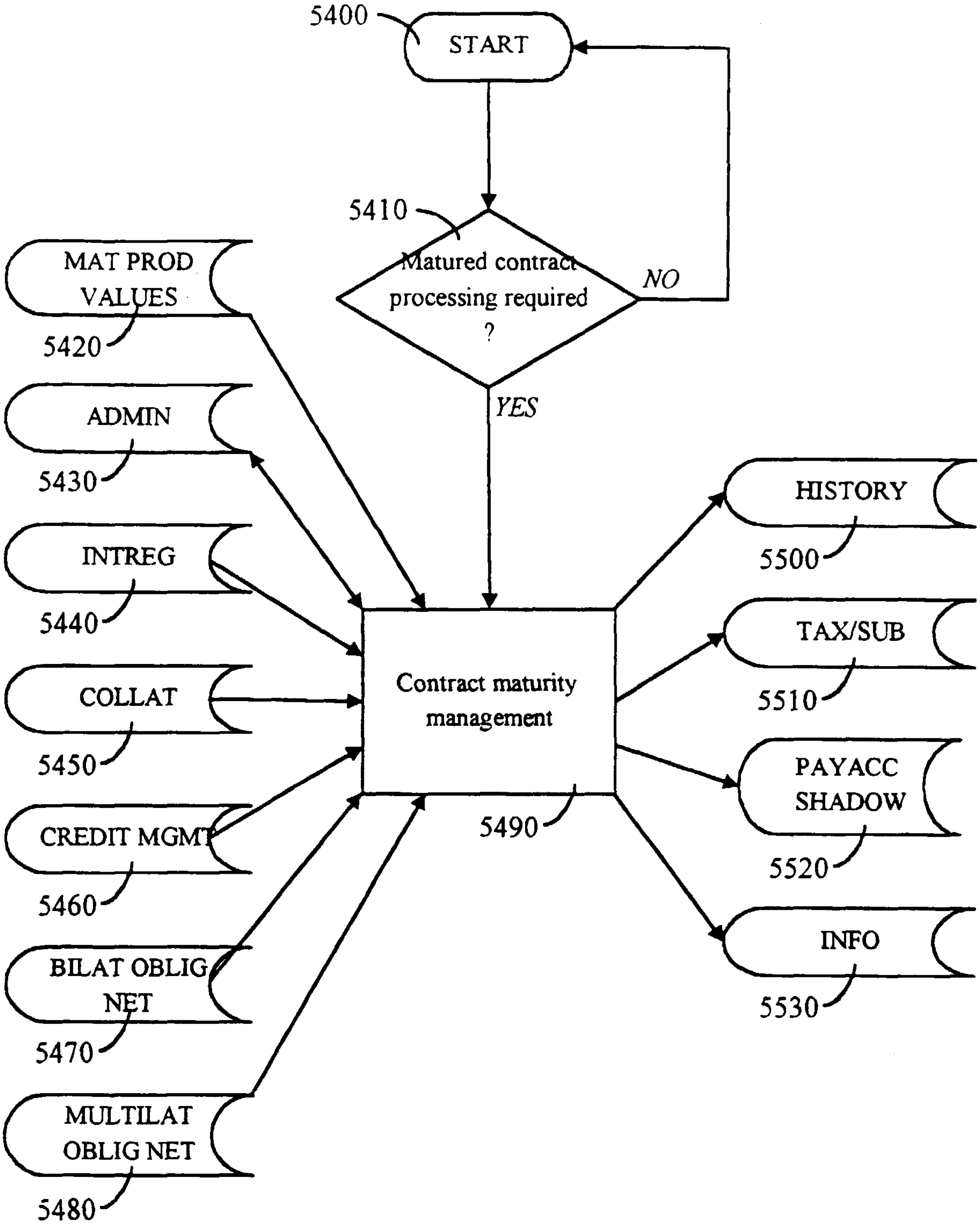
5400
START
5410
Matured contract processing required ?
NO
YES
MAT PROD VALUES
5420
ADMIN
5430
INTREG
5440
COLLAT
5450
CREDIT MGMT
5460
BILAT OBLIG NET
5470
MULTILAT OBLIG NET
5480
Contract maturity management
5490
HISTORY
5500
TAX/SUB
5510
PAYACC SHADOW
5520
INFO
5530

Fig. 26

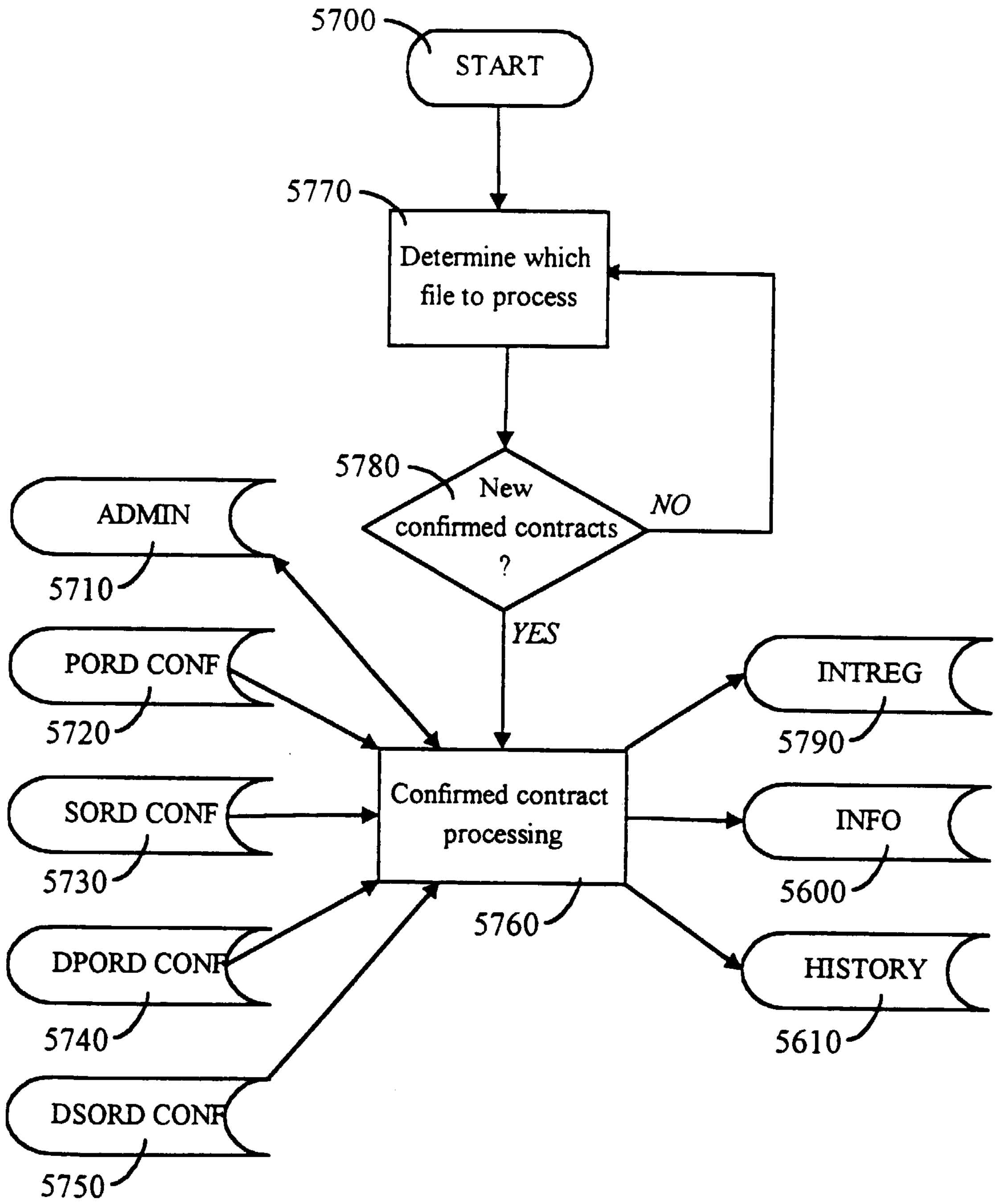
5700
START
5770
Determine which file to process
5780
New confirmed contracts ?
NO
YES
ADMIN
5710
PORD CONF
5720
SORD CONF
5730
DPORD CONF
5740
DSORD CONF
5750
Confirmed contract processing
5760
INTREG
5790
INFO
5600
HISTORY
5610

Fig 27

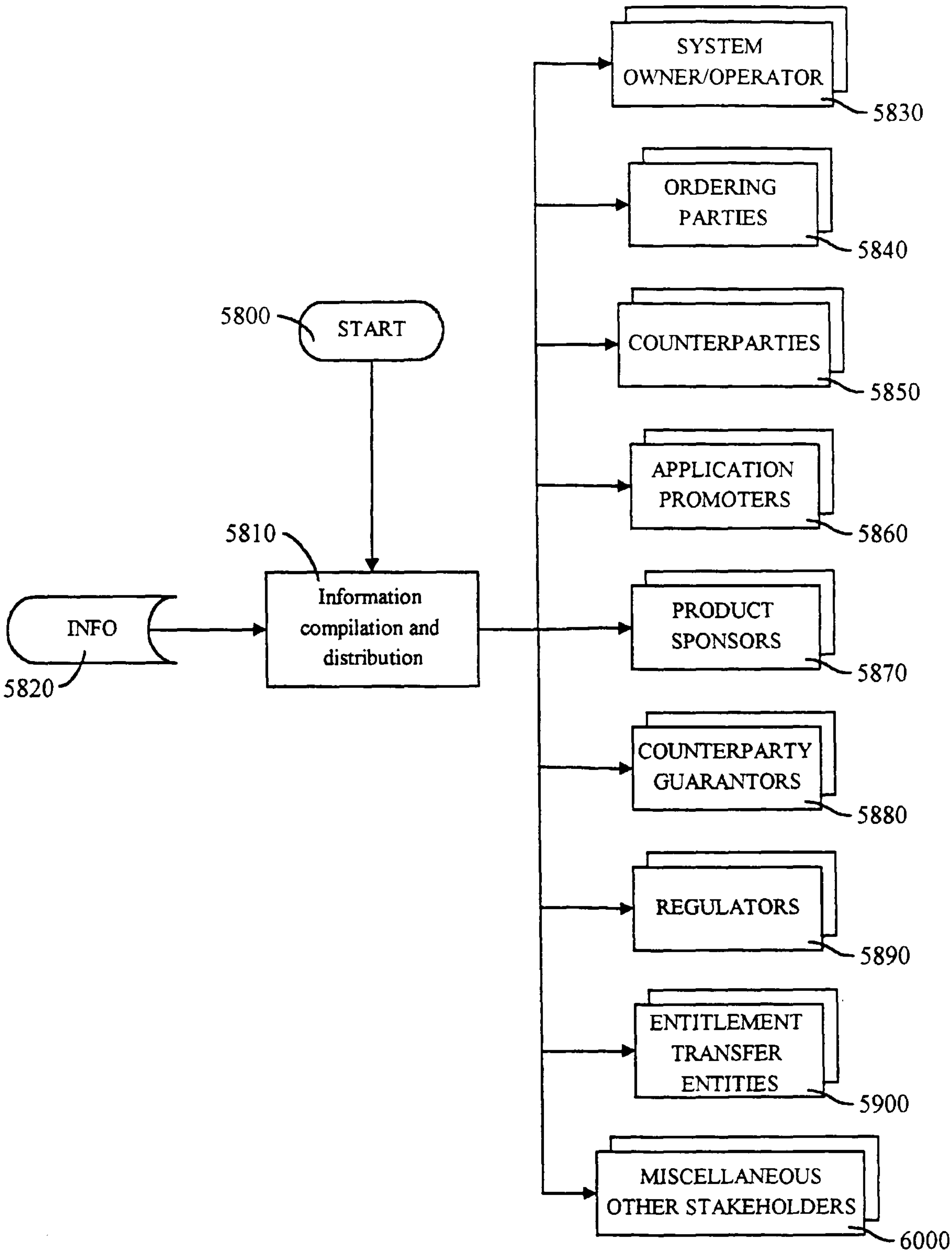

SYSTEM OWNER/OPERATOR
5830
ORDERING PARTIES
5840
5800
START
COUNTERPARTIES
5850
APPLICATION PROMOTERS
5860
5810
INFO
Information compilation and distribution
PRODUCT SPONSORS
5870
5820
COUNTERPARTY GUARANTORS
5880
REGULATORS
5890
ENTITLEMENT TRANSFER ENTITIES
5900
MISCELLANEOUS OTHER STAKEHOLDERS
6000


Fig. 28

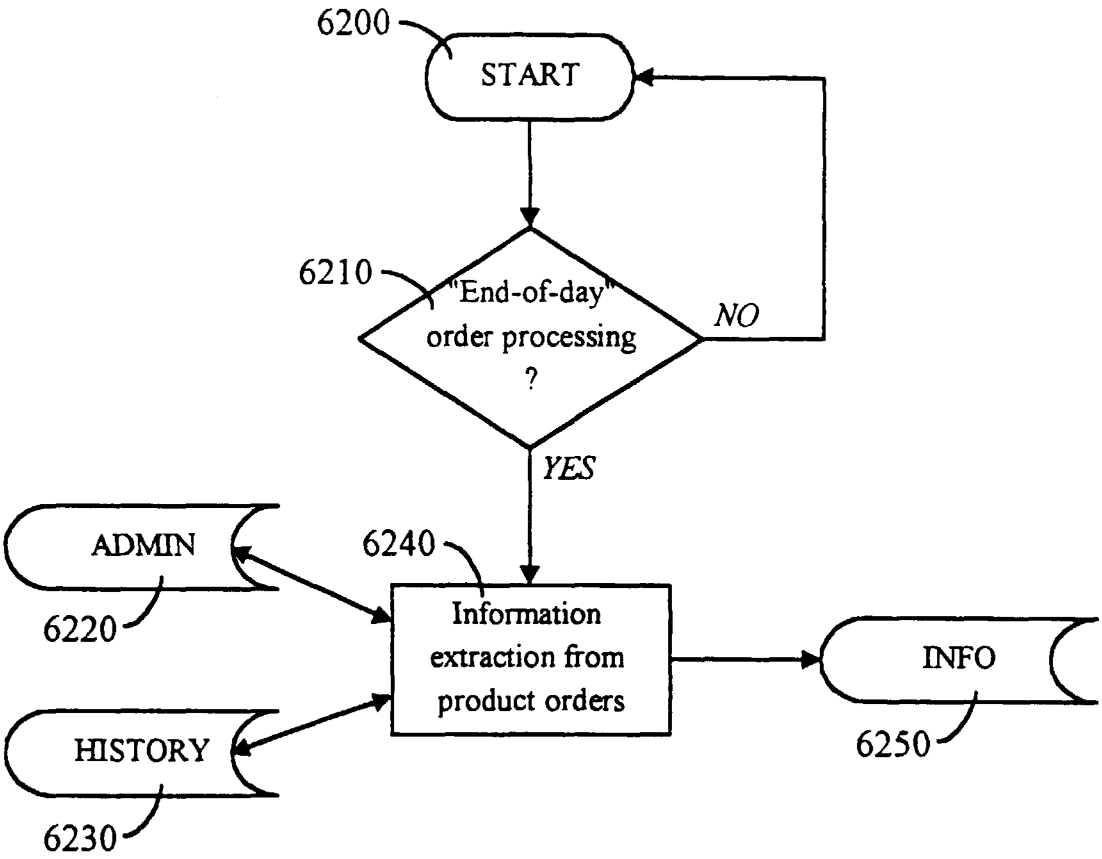
6200
START
6210
"End-of-day"
order processing
?
NO
YES
ADMIN
6220
HISTORY
6230
6240
Information
extraction from
product orders
INFO
6250

Fig. 29

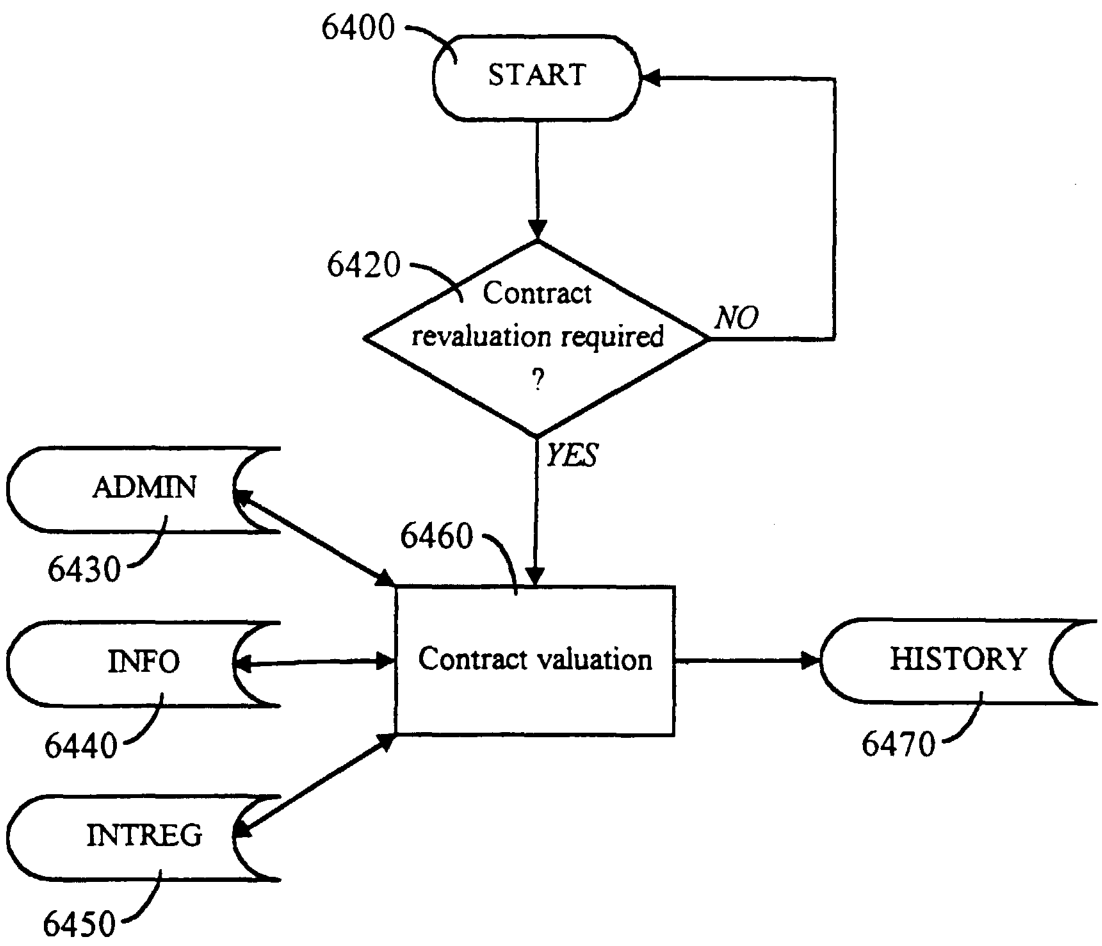
6400
START
6420
Contract revaluation required ?
NO
YES
ADMIN
6430
6460
Contract valuation
INFO
6440
HISTORY
6470
INTREG
6450

Fig. 30

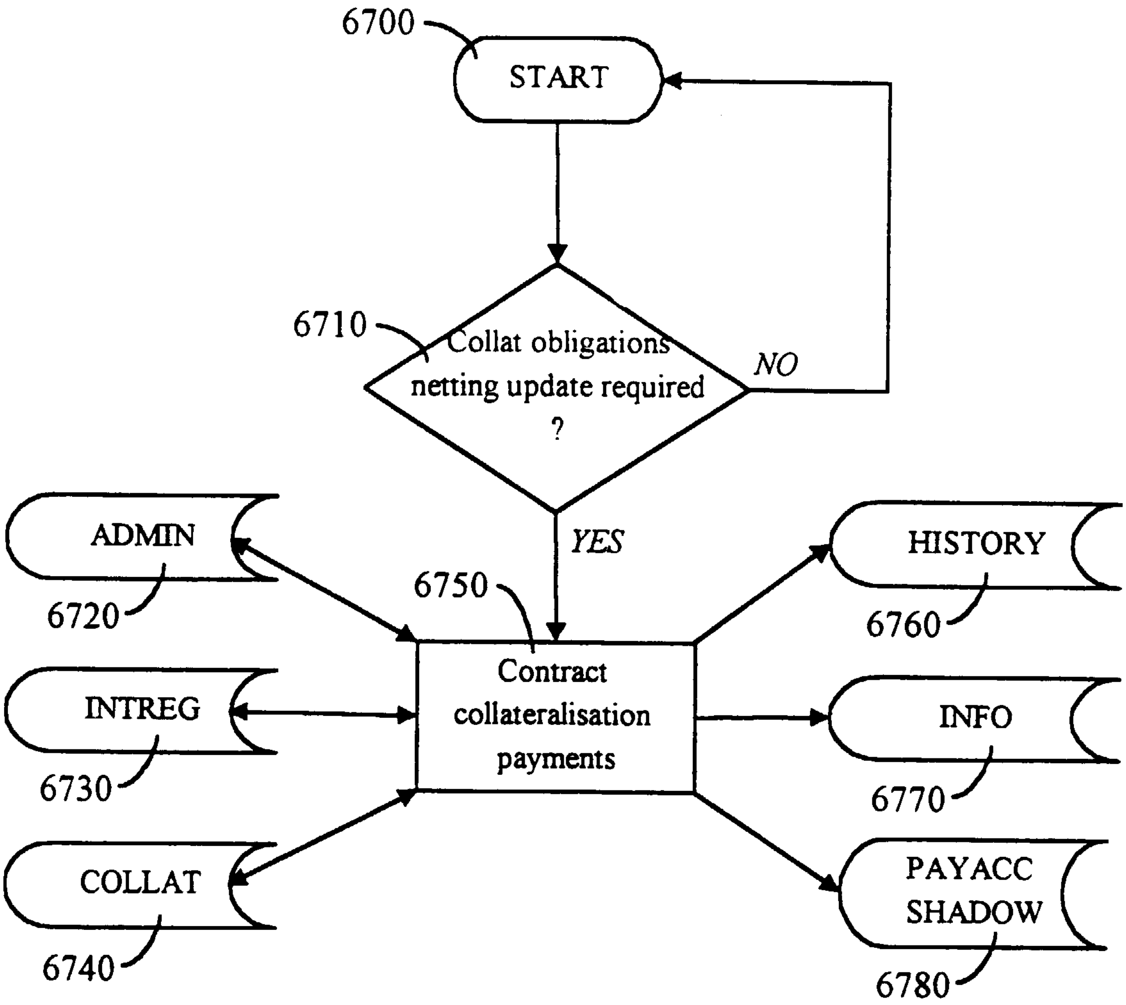
6700
START
6710
Collat obligations netting update required ?
NO
YES
ADMIN
6720
INTREG
6730
COLLAT
6740
6750
Contract collateralisation payments
HISTORY
6760
INFO
6770
PAYACC SHADOW
6780

Fig. 31

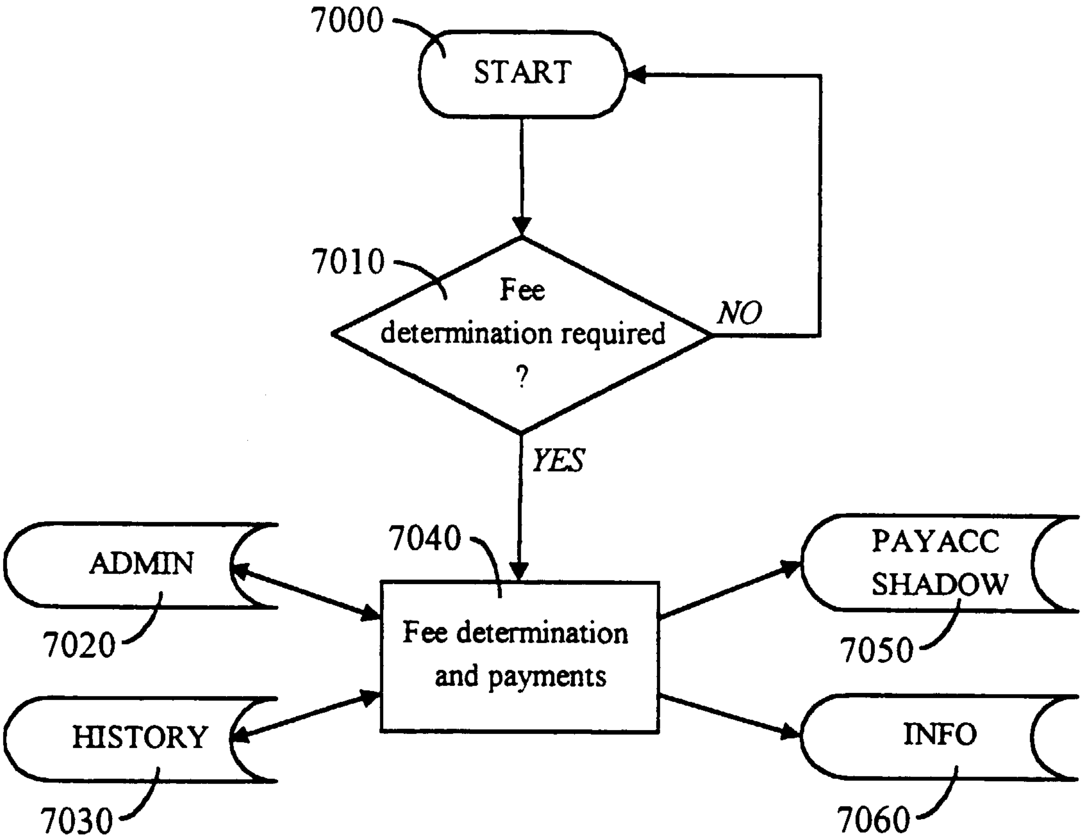
7000
START
7010
Fee
determination required
?
NO
YES
7040
ADMIN
7020
HISTORY
7030
Fee determination
and payments
PAYACC
SHADOW
7050
INFO
7060

Fig. 32

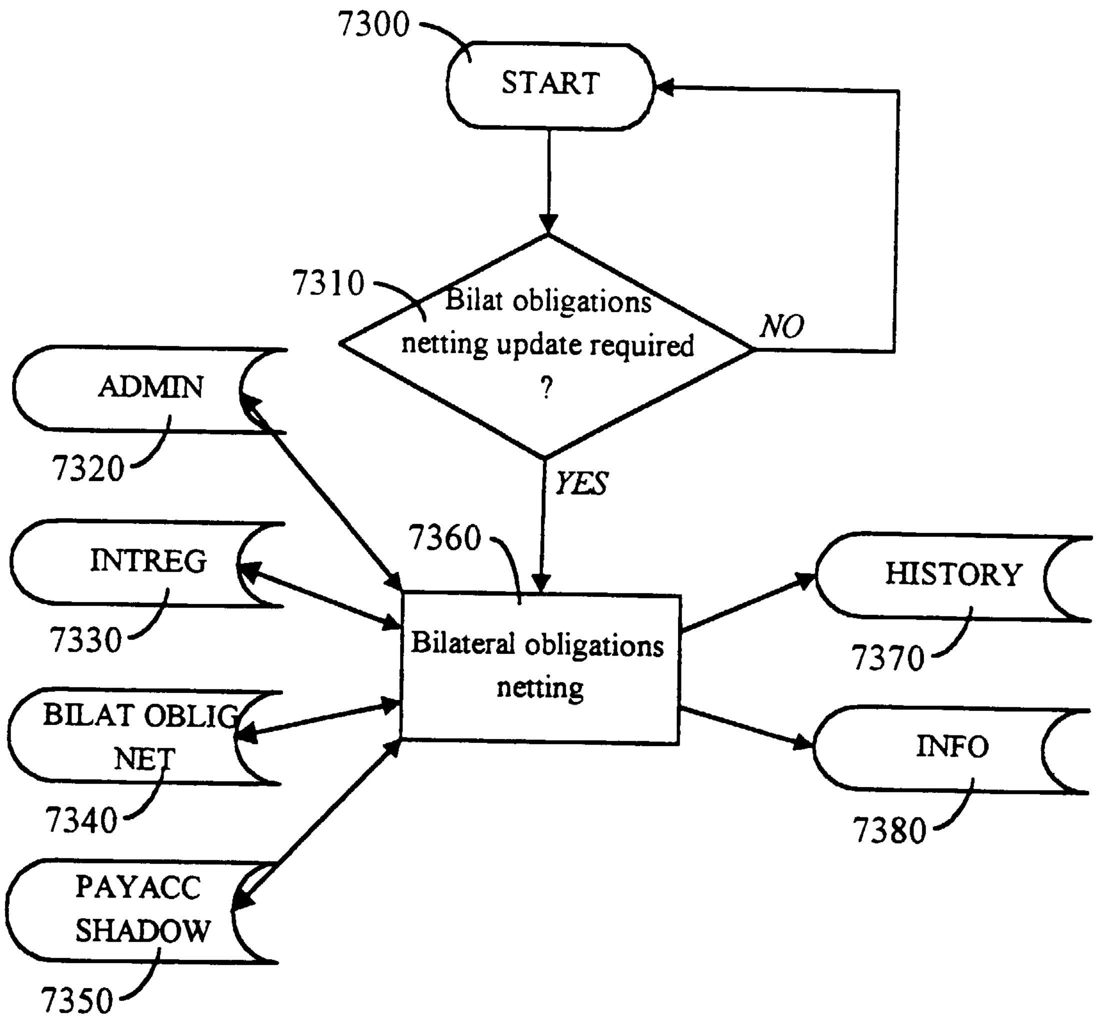
7300
START
7310
Bilat obligations netting update required ?
NO
YES
ADMIN
7320
INTREG
7330
BILAT OBLIG NET
7340
PAYACC SHADOW
7350
7360
Bilateral obligations netting
HISTORY
7370
INFO
7380

Fig. 33

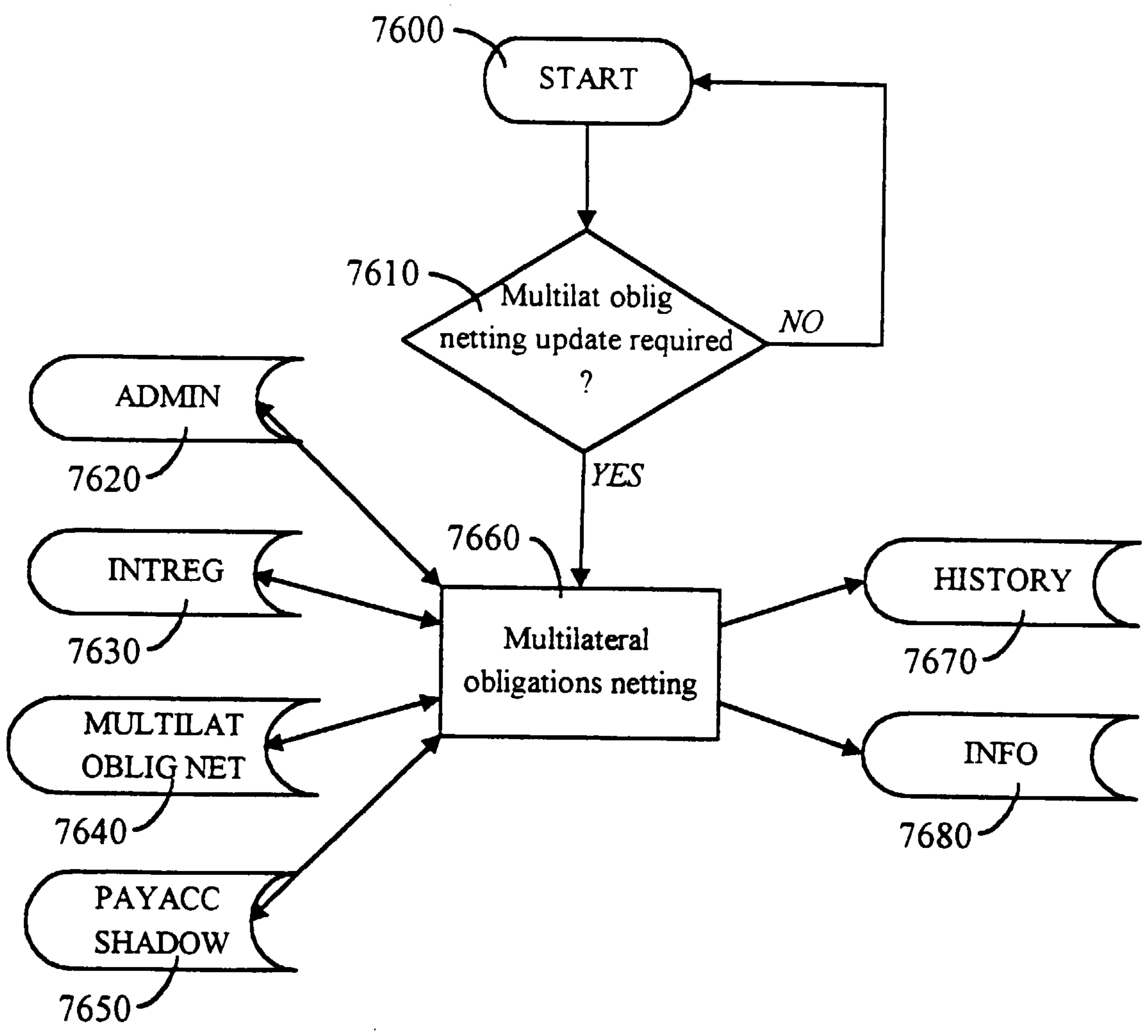
7600
START
7610
Multilat oblig netting update required ?
NO
YES
ADMIN
7620
INTREG
7630
MULTILAT OBLIG NET
7640
PAYACC SHADOW
7650
7660
Multilateral obligations netting
HISTORY
7670
INFO
7680

Fig. 34

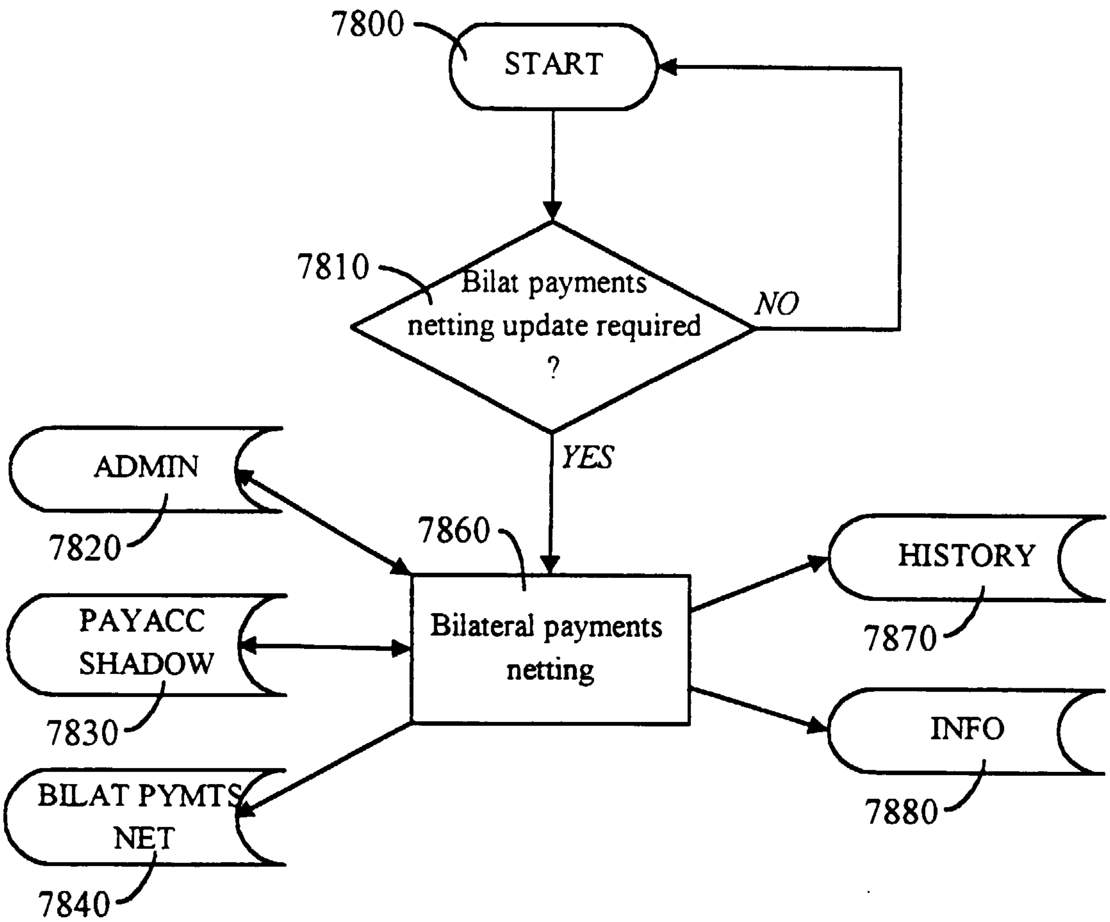
7800
START
7810
Bilat payments netting update required ?
NO
YES
ADMIN
7820
7860
PAYACC SHADOW
7830
Bilateral payments netting
BILAT PYMTS NET
7840
HISTORY
7870
INFO
7880

Fig. 35

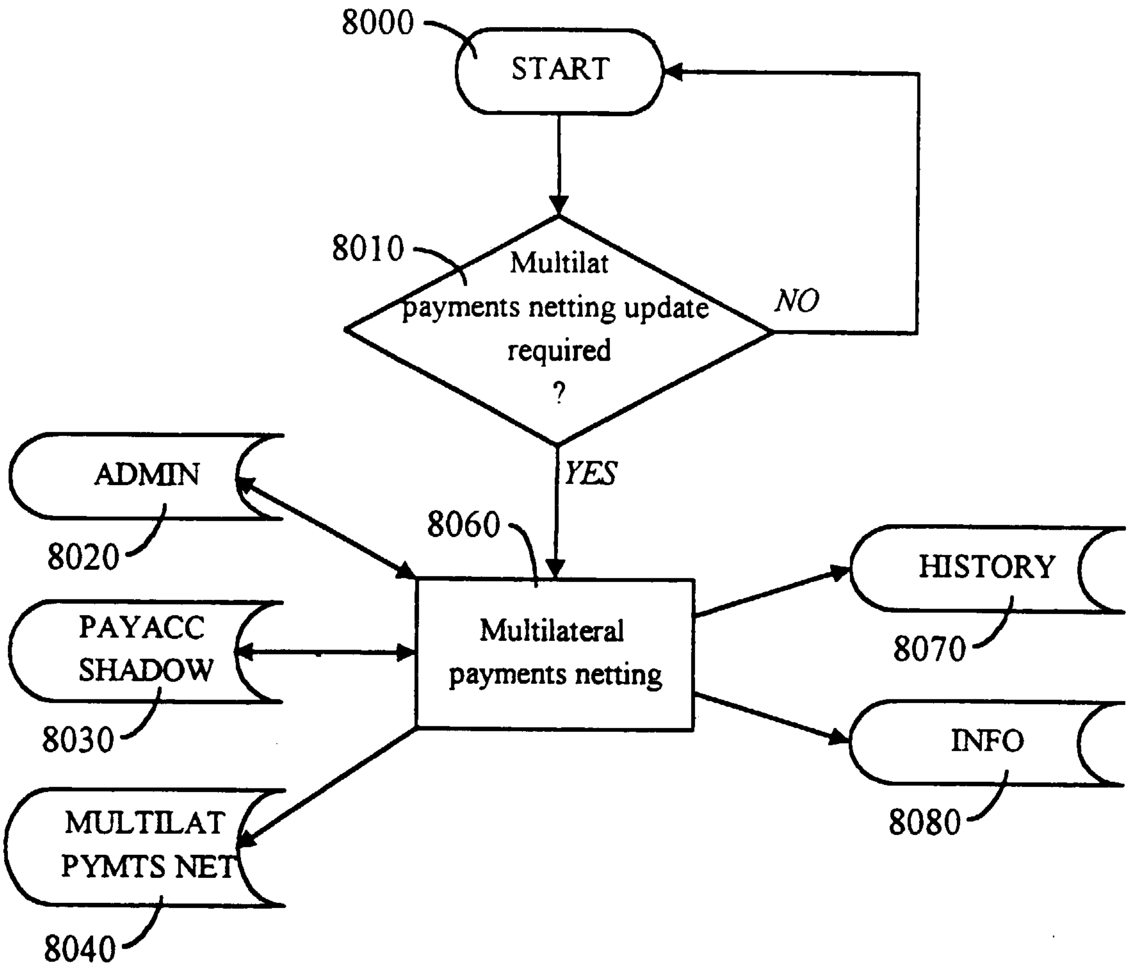
8000
START
8010
Multilat
payments netting update
required
?
NO
YES
ADMIN
8020
PAYACC
SHADOW
8030
MULTILAT
PYMTS NET
8040
8060
Multilateral
payments netting
HISTORY
8070
INFO
8080

Fig. 36

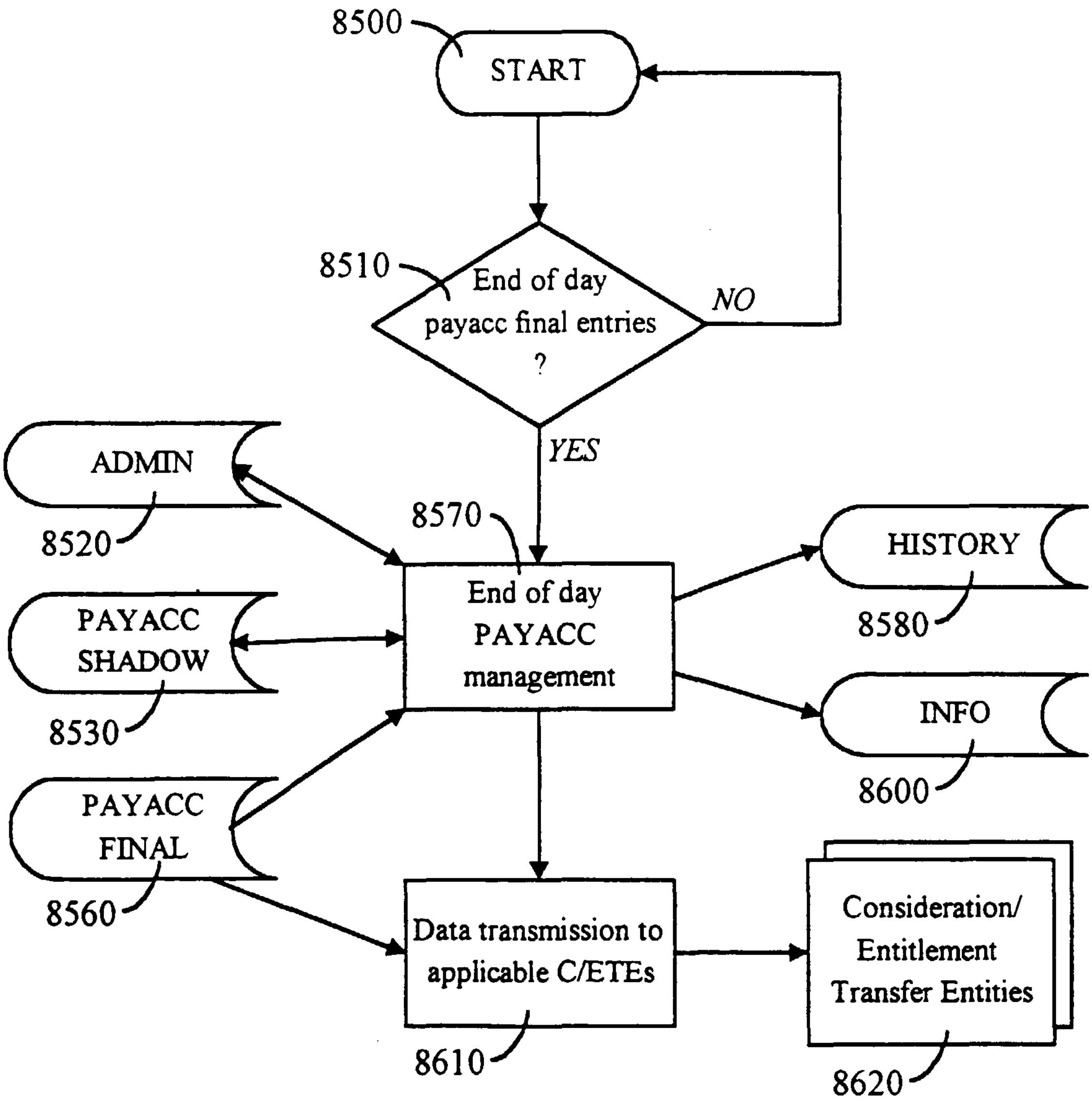
8500
START
8510
End of day
payacc final entries
?
NO
YES
ADMIN
8520
8570
End of day
PAYACC
management
HISTORY
8580
PAYACC
SHADOW
8530
INFO
8600
PAYACC
FINAL
8560
Data transmission to
applicable C/ETEs
8610
Consideration/
Entitlement
Transfer Entities
8620

Fig. 37

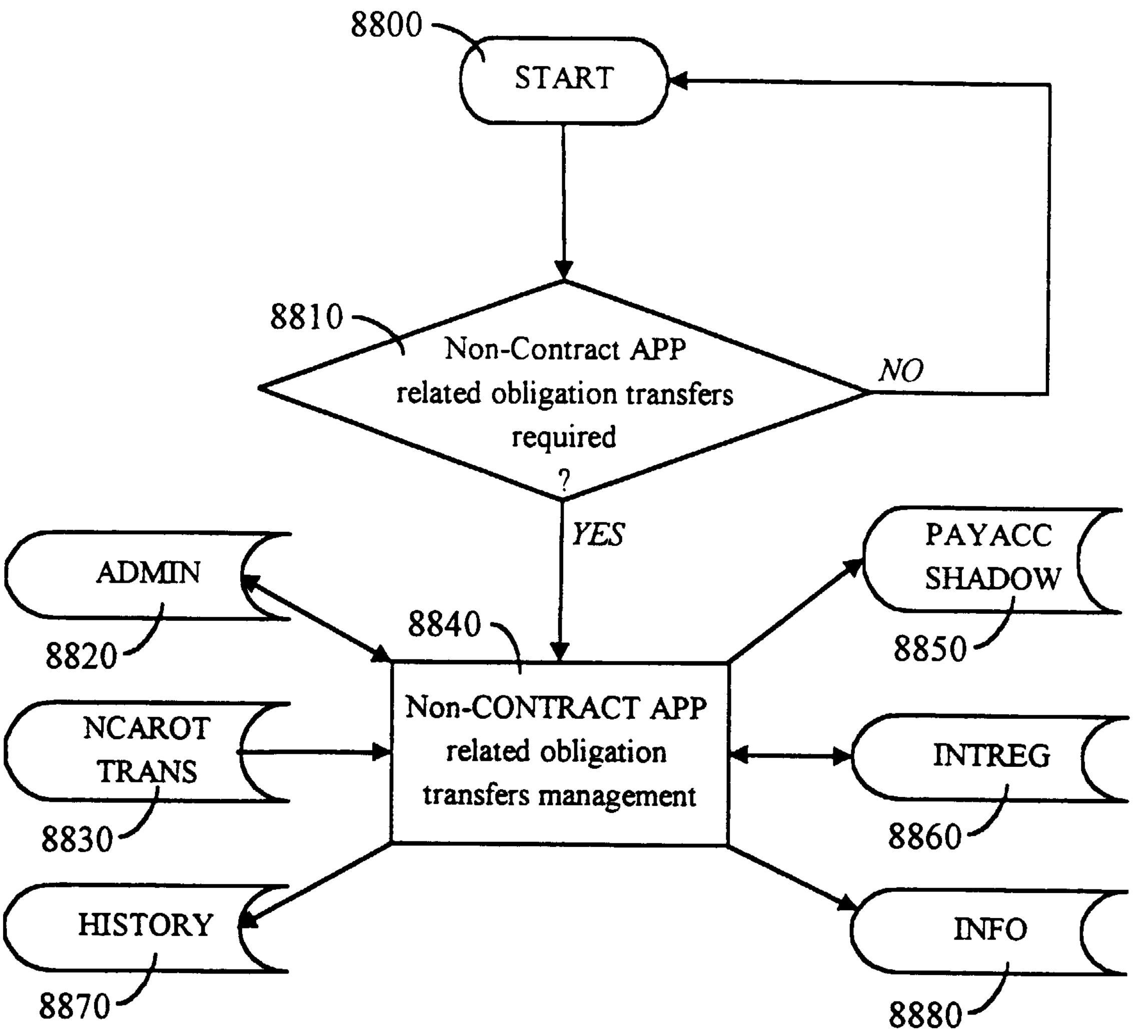
8800
START
8810
Non-Contract APP related obligation transfers required ?
NO
YES
ADMIN
8820
8840
Non-CONTRACT APP related obligation transfers management
PAYACC SHADOW
8850
NCAROT TRANS
8830
INTREG
8860
HISTORY
8870
INFO
8880

Fig. 38

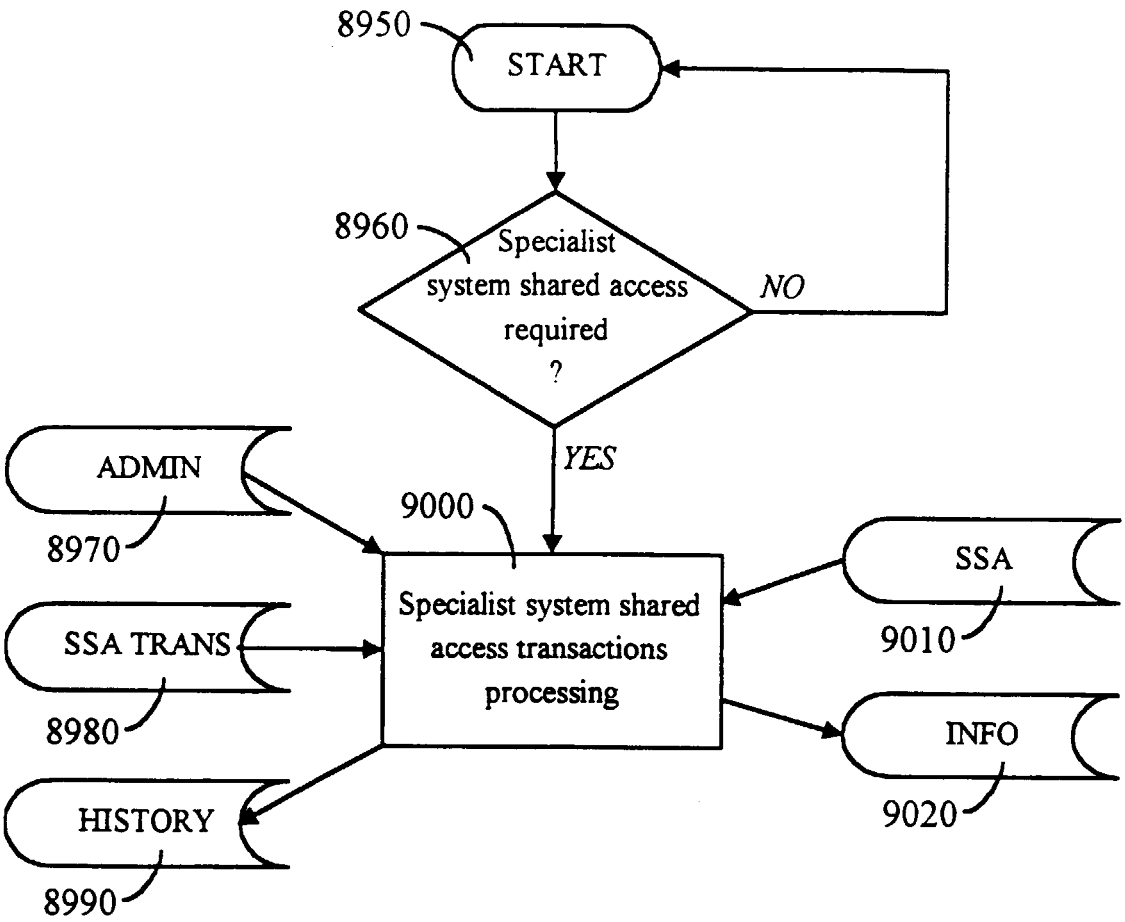
8950
START
8960
Specialist system shared access required ?
NO
YES
ADMIN
8970
9000
Specialist system shared access transactions processing
SSA
9010
SSA TRANS
8980
INFO
9020
HISTORY
8990

Fig. 39

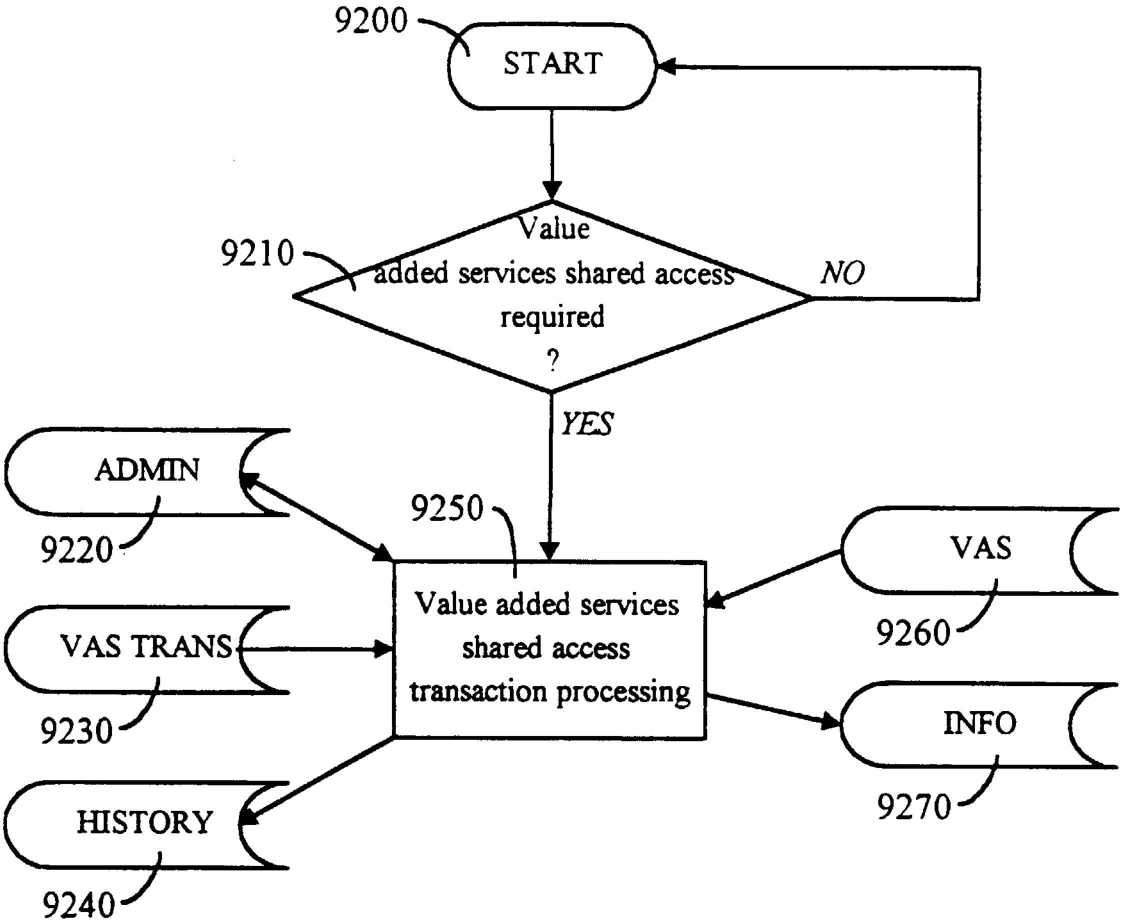
9200
START
9210
Value
added services shared access
required
?
NO
YES
ADMIN
9220
9250
VAS
Value added services
shared access
transaction processing
9260
VAS TRANS
9230
INFO
9270
HISTORY
9240

Fig. 40